# EUROPÄISCHE PATENTSCHRIFT

(11) **EP 3 825 595 B1**
(45) Veröffentlichungstag und Bekanntmachung des Hinweises auf die Patenterteilung: **01.12.2021**
(21) Anmeldenummer: 20204607.4
(22) Anmeldetag: 29.10.2020
(51) Int. Cl.: F16N 7/38, B26F 1/40, B26D 7/00

(54) **STANZMASCHINE MIT SCHMIERMITTELSYSTEM**
DIE-CUTTING MACHINE WITH LUBRICATING SYSTEM
MACHINE DE DÉCOUPE AVEC SYSTÈME DE LUBRIFICATION

(30) Priorität: 25.11.2019 DE 102019131800
(43) Veröffentlichungstag der Anmeldung: 26.05.2021
(73) Patentinhaber: Koenig & Bauer AG, 97080 Würzburg (DE)
(72) Erfinder: Torrent Portas, Sergi, 08820 El Prat de Llobregat (ES); Pilz, Christian, 01665 Diera-Zehren (DE)
(74) Vertreter: Koenig & Bauer AG

(56) Entgegenhaltungen:
- EP-A1- 1 854 629
- DE-A1- 10 318 671
- DE-A1-102010 024 778
- DE-A1-102016 223 798
- DE-B- 1 012 497
- Koenig & Bauer: "Ipress 106 PRO Ipress 106 K PRO", , 30. April 2018 (2018-04-30), Seiten 1-8, XP055789595, Gefunden im Internet: URL:https://www.convertec.se/sites/default /files/filer/2018-12/Ipress%20106%20PRO_0. pdf [gefunden am 2021-03-24] & Koenig & Bauer: "Open-House: Live-Präsentation der Digitalisierung von Geschäftsprozessen | Koenig & Bauer | we're on it.", , 12. Juni 2018 (2018-06-12), Seiten 7-8, XP055789593, Gefunden im Internet: URL:https://www.koenig-bauer.com/de/aktuel les/details/article/open-house-live-praese ntation-der-digitalisierung-von-geschaefts prozessen/ [gefunden am 2021-03-24]

## Beschreibung

Die Erfindung betrifft eine Stanzmaschine gemäß dem Oberbegriff des Anspruches 1.

Bei der Herstellung von Verpackungen werden bahn- oder bogenförmige Materialien verwendet. In mehreren Bearbeitungsschritten werden Bogen beispielsweise bedruckt, geprägt, gerillt, perforiert, gestanzt, geschnitten, geheftet, geklebt und beispielsweise zu Verpackungen gefaltet. Zur optimalen Ausnutzung der Fläche eines Bogens werden in der Regel mehrere gleiche oder unterschiedliche Exemplare, z. B. eines Plakats, einer Faltschachtel oder einer Verpackung, auf einen gemeinsamen Bogen gedruckt und anschließend gestanzt. Diese Exemplare werden als Nutzen bezeichnet.

Eine Bogenbearbeitungsmaschine kann verschiedene Bearbeitungsschritte wie beispielsweise Bedrucken, Schneiden, Prägen, Rillen, Stanzen, Perforieren, Kleben und/oder Heften umfassen. Häufig weisen solche Bogenbearbeitungsmaschinen auch Inspektionseinrichtungen auf. Üblicherweise werden Bogen in Bearbeitungsmaschinen mit formgebundenen Stanz- und Schneideinrichtungen bearbeitet und zurechtgeschnitten.

Eine solche Bearbeitungsmaschine ist beispielsweise als Stanz-, Schneid-, Perforier-, Präge- und/oder Rillmaschine ausgebildet. Wenn im Folgenden eine solche Bearbeitungsmaschine als Stanze und/oder Stanzmaschine bezeichnet wird, ist insbesondere auch eine Schneid-, Perforier-, Präge- und/oder Rillmaschine gemeint. Dabei gibt es bei formgebundenen Systemen neben Rotationsstanzen auch Flachstanzen, insbesondere Flachbettstanzen. In diesen werden durch eine sich zyklisch wiederholende Bewegung mehrere Bogen nacheinander bearbeitet. Bevorzugt werden die Bogen mit einem Transportsystem, bevorzugt Kettengreifersystem, weitestgehend horizontal durch die Bearbeitungsmaschine bewegt. Neben einem Stanzaggregat weist eine solche Maschine üblicherweise auch andere Aggregate wie z. B. ein Bogenanlageaggregat, ein Bogenauslageaggregat, ein Ausbrechaggregat, ein Bogeneinlageaggregat, ein Nutzentrennaggregat und ein Reststückauslageaggregat auf. Das Bogenanlageaggregat ist bevorzugt zur Übergabe von Bogen an das Transportsystem ausgebildet. Zusätzlich erfolgt eine Ausrichtung von Bogen beispielsweise in dem Bogenanlageaggregat.

Die EP 3 294 555 B1 betrifft ein Druckwerk einer nach dem Siebdruckverfahren bedruckenden Druckmaschine. Im Inneren eines Formzylinders ist eine Rakel angeordnet. Durch ein Antriebsmittel einer Antriebseinrichtung ist eine An- und Abstellbewegung der Rakel mechanisch unabhängig von einem rotatorischen Antrieb bewirkbar. Ein weiteres Antriebsmittel bewirkt eine Änderung des Rakelwinkels. Das weitere Antriebsmittel realisiert dabei ein Schwenken eines Hebelarmes über ein Getriebe, welcher Hebelarm den Rakelträger trägt und wodurch somit die Rakel geschwenkt wird.

Die EP 3 492 229 A1 zeigt eine Vorrichtung zum Bearbeiten einer digital bedruckten Papierbahn mit einem Perforierwerkzeug zum Perforieren der Papierbahn und mit einem Schneidwerkzeug zum Abschneiden von Druckbogen sowie einem Gegenwerkzeug. Das Schneidwerkzeug und Perforierwerkzeug weisen einen gemeinsamen Werkzeugträger auf, welcher in zwei Arbeitsstellungen für die Verwendung des Schneidwerkzeugs oder des Perforierwerkzeugs versetzbar ist. Der Werkzeugträger ist über einen Kurbelantrieb mit der Antriebsachse eines dritten Antriebsmotors verbunden. Der Kurbelantrieb wandelt die Drehbewegung des Antriebsmotors in eine Schwenkbewegung des Werkzeugträgers zwischen den beiden Arbeitsstellungen um.

Die DE 73 09 617 U1 lehrt eine bogenverarbeitende Maschine mit einem Stirnradgetriebe zum Antrieb von Stanztiegeln einer Stanzpresse und einem Fördergetriebe, welches die Umlaufgeschwindigkeit von Gliederketten anpasst.

Die DE 1 012 497 A lehrt eine Zentralschmieranlage zur Versorgung mehrerer Schmierstellen mit Schmiermittel. An eine Schmiermittelquelle sind zwei Ringleitungen mit parallel geschalteten Dosierventilen angeschlossen, die über ein durch den Schmiermitteldruck betätigtes Umschaltventil beaufschlagt werden. Zwischen dem letzten Dosierventil und dem Umschaltventil ist ein Druckregelventil geschalten, welches den Druck zum Umschalten des Umschaltventils regelt.

Die DE 103 18 671 A1 offenbart eine Zentralschmieranlage für Maschinen, Fahrzeuge, Bau- oder Landmaschinen zum Fördern von Schmierstoff aus einer Schmierstoffquelle an vorbestimmte Schmierstoffabnahmestellen. Ein Leitungsbruchwächter überwacht den Druck und detektiert einen Druckabfall innerhalb der Leitungen der Zentralschmieranlage.

Die EP 1 854 629 A1 lehrt ein Druckmaschinenschmiersystem zur Versorgung und Rückführung von Schmieröl und Fett zu verschiedensten Schmierstellen innerhalb einer Druckmaschine. Die Schmierstellen sind Gleit- und Wälzlagerstellen, um Zahnrad- und Kettentriebe, sowie Gelenk-, Führungs- und Steuerkurveneinrichtungen. Eine Sensoreinrichtung generiert indikative Informationen hinsichtlich des Ölverschleißzustandes.

Durch die DE 1 561 132 B ist ein Antrieb von Greiferketten einer Bogen bearbeitenden Maschine bekannt, welcher ein Kurvenscheibengetriebe umfasst.

Die DE 10 2010 024 778 A1 offenbart eine Bogenstanzmaschine mit einer Ablage- und Nutzentrennstation. Zum Trennen der Nutzen ist ein hubbewegliches Oberwerkzeug und ein mit diesem zusammenwirkendes hubbewegliches Unterwerkzeug vorgesehen. Mittels einer Koppelvorrichtung werden das Oberwerkzeug und das Unterwerkzeug temporär mechanisch verbunden.

Die Druckschrift "Ipress 106 PRO, Ipress 106 K PRO" der Koenig & Bauer AG (04/2018) zeigt eine Flachbettstanzmaschine mit einem Anlegeraggregat, einem Anlageaggregat, einem Formgebungsaggregat, einem Ausbrechaggregat, einem Nutzentrennaggregat und einem Auslageaggregat. Das Werkzeug des Formgebungsaggregats ist mittels eines Antriebs eines Antriebssystems angetrieben. Bestandteile des Antriebssystems sind innerhalb mindestens eines Gehäuses angeordnet.

Die DE 1 045 778 B betrifft einen Stanzautomat für bogenförmiges Material mit einer Anlagestelle, einer Arbeitsstelle, zwei Stellen zum Entfernen von Abfällen sowie einer Ablagestelle. Über Exzenter werden Stangen bewegt, welche eine Schablone eines unteren Rahmens der ersten Stelle zur Entfernung von Abfällen und einen Stempel des unteren Rahmens der zweiten Stelle zur Entfernung von Abfällen mittels verbundenen schwenkbaren Hebeln heben.

Der Erfindung liegt die Aufgabe zugrunde, eine Stanzmaschine mit einer Schmierung zumindest der beweglichen Bestandteile der Stanzmaschine zu schaffen, wobei Schmiermittel gespart wird.

Die Aufgabe wird erfindungsgemäß durch die Merkmale des Anspruches 1 gelöst. Die abhängigen Ansprüche zeigen vorteilhafte Weiterbildungen und/oder Ausführungen der gefundenen Lösung.

Die mit der Erfindung erzielbaren Vorteile bestehen insbesondere darin, dass die Bearbeitungsmaschine zumindest einen Antrieb aufweist, welcher über zumindest ein Getriebe mit zumindest einer Ausbrechantriebswelle verbunden ist. Die zumindest eine Ausbrechantriebswelle ist zumindest ein Ausbrechwerkzeug zumindest eines Ausbrechwerks zumindest eines Ausbrechaggregats der Bearbeitungsmaschine und/oder zumindest ein Nutzentrennwerkzeug zumindest eines Nutzentrennwerks zumindest eines Nutzentrennaggregats der Bearbeitungsmaschine antreibend ausgebildet. Zumindest ein nachgelagertes Getriebe ist auf vorteilhafte Weise nach dem zumindest einen Getriebe angeordnet. Das zumindest eine nachgelagerte Getriebe steht vorteilhafterweise mit der zumindest einen Ausbrechantriebswelle in Kontakt. Vorteilhafterweise ist das zumindest eine nachgelagerte Getriebe mit dem zumindest einen Ausbrechwerkzeug des zumindest einen Ausbrechaggregats und/oder mit dem zumindest einen Nutzentrennwerkzeug des zumindest einen Nutzentrennaggregats gekoppelt. Das zumindest eine nachgelagerte Getriebe ist vorteilhafterweise zumindest eine rotative Bewegung in zumindest eine wechselseitige Bewegung umwandelnd ausgebildet. Es wird zumindest ein Werkzeug der Bearbeitungsmaschine angetrieben. Auf vorteilhafte Weise wandelt das zumindest eine nachgelagerte Getriebe, welches nach dem zumindest einen Getriebe angeordnet ist, zumindest eine rotative Bewegung in zumindest eine wechselseitige Bewegung um.

Vorteilhafterweise ist das zumindest eine nachgelagerte Getriebe als Kurvenscheibengetriebe ausgebildet. Vorzugsweise ermöglicht dies eine platzsparende und/oder einfache Übertragung von Drehmoment und/oder Kraft. Vorzugsweise ermöglicht dies ein Antreiben des zumindest einen Werkzeugs, bevorzugt zumindest ein Ausbrechwerkzeug und/oder zumindest ein Nutzentrennwerkzeug, bei hohen Bearbeitungsgeschwindigkeiten von beispielsweise mindestens 5000 (fünftausend) Bogen pro Stunde, bevorzugt mindestens 7000 (siebentausend) Bogen pro Stunde, weiter bevorzugt mindestens 8000 (achttausend) Bogen pro Stunde. Bevorzugt wird die Genauigkeit der Bearbeitung von Bogen durch die Ausbildung als Kurvenscheibengetriebe erhöht, vorzugsweise da ein exaktes Abtasten der zumindest einen Kurvenscheibe ermöglicht wird und somit vorzugsweise das zu übertragende Drehmoment und/oder die zu übertragende Kraft entsprechend des vorliegenden Maschinentaktes eingestellt ist. Vorzugsweise wird der Verschleiß des zumindest einen nachgelagerten Getriebes beispielsweise aufgrund von Abnutzung durch die Ausbildung als Kurvenscheibengetriebe minimiert. Vorzugsweise ist die Ausbildung als Kurvenscheibengetriebe kostengünstig.

Auf vorteilhafte Weise sind das zumindest eine Ausbrechwerkzeug und das zumindest eine Nutzentrennwerkzeug über zumindest ein gemeinsames Übertragungselement mit der zumindest einen Ausbrechantriebswelle gekoppelt. Das zumindest eine Übertragungselement ist vorteilhafterweise zumindest eine wechselseitige Bewegung ausführend ausgebildet. Vorteilhafterweise sind das zumindest eine Ausbrechwerkzeug und das zumindest eine Nutzentrennwerkzeug über zumindest ein gemeinsames, vorzugsweise als oberes Übertragungselement ausgebildetes, Übertragungselement mit dem zumindest einen Antrieb gekoppelt. Auf vorteilhafte Weise wird dadurch ein Gleichlauf des zumindest einen Ausbrechwerkzeugs mit dem zumindest einen Nutzentrennwerkzeug gewährleistet. Vorzugsweise entfällt eine zusätzliche Synchronisierung der Werkzeuge miteinander. Bevorzugt werden Bewegungen, insbesondere die jeweilige Bearbeitung von Bogen, der einzelnen Werkzeuge miteinander durch die Koppelung synchronisiert. Vorzugsweise wird die Bewegung der Werkzeuge zusätzlich zu der Transportbewegung des Kettentransportsystems synchronisiert. Vorzugsweise wird die registergenaue Bearbeitung des zumindest einen Bogens, insbesondere durch das Ausbrechaggregat und das Nutzentrennaggregat, erhöht.

Zumindest ein Antriebssystem der Bearbeitungsmaschine umfasst den zumindest einen Antrieb und das zumindest eine Getriebe und vorteilhafterweise das zumindest eine nachgelagerte Getriebe. Auf vorteilhafte Weise ist das zumindest eine Antriebssystem, dadurch dass das zumindest eine Getriebe und das zumindest eine nachgelagerte Getriebe an dem zumindest einen Formgebungsaggregat angeordnet sind, platzsparend ausgebildet. Vorteilhafterweise ermöglicht dies eine kompakte Ausgestaltung des Antriebsstrangs.

Die zumindest eine wechselseitige Bewegung ist vorteilhafterweise auf das zumindest eine Werkzeug übertragbar und/oder wird auf das zumindest eine Werkzeug übertragen, wobei sich das zumindest eine Werkzeug wechselseitig und/oder linear bewegend ausgebildet ist. Auf vorteilhafte Weise ist das Antriebssystem mechanische Schwingungen lediglich entlang einer Transportrichtung erzeugend ausgebildet. Vorteilhafterweise ist die Verbindung des zumindest einen Antriebs mit dem zumindest einen Werkzeug der Bearbeitungsmaschine schwingungsdämpfend ausgebildet. Vorteilhafterweise ist die Verbindung des zumindest einen Antriebs mit dem zumindest einen Werkzeug der Bearbeitungsmaschine mechanische Schwingungen zumindest entlang einer Querrichtung dämpfend ausgebildet. Dadurch ist ein ruhiges und registergenaues Bearbeiten von Bogen gewährleistet.

Vorteilhafterweise steht zumindest die Verbindung des zumindest einen nachgelagerten Getriebes zu dem zumindest einen Ausbrechwerkzeug und/oder zu dem zumindest einen Nutzentrennwerkzeug unter Druckspannung. Vorteilhafterweise liegt zumindest ein Abtasthebel an zumindest einer Kurvenscheibe des nachgelagerten Getriebes dauerhaft an. Vorteilhafterweise überlagert sich zumindest eine Bewegung zumindest eines Übertragungselements mit einer erzeugten Kraft zumindest eines Spannelements, wodurch vorteilhafterweise ein Schließen des zumindest einen Ausbrechwerkzeugs und/oder des zumindest einen Nutzentrennwerkzeugs erleichtert ist.

Die Bearbeitungsmaschine ist als Stanzmaschine, insbesondere als Flachbettstanzmaschine, ausgebildet. Die Bearbeitungsmaschine umfasst zumindest ein zentrales Schmiermittelsystem. Das zumindest eine Schmiermittelsystem ist zumindest ein Schmiermittel von zumindest einer Quelle von Schmiermittel und/oder von zumindest einem Vorrat an Schmiermittel zu zumindest zwei Aggregaten führend ausgebildet. Vorteilhafterweise wird Schmiermittel an eine jeweilige Schmierstelle insbesondere innerhalb eines jeweiligen Aggregats entsprechend des Verbrauchs und/oder des Bedarfs an dieser jeweiligen Schmierstelle durch das zumindest eine Schmiermittelsystem geführt und/oder verteilt. Durch das zumindest eine zentrale Schmiermittelsystem wird die Wirtschaftlichkeit der Stanzmaschine erhöht. Insbesondere kann Schmiermittel eingespart werden. Aufgrund der Anordnung des zumindest einen Getriebes und des zumindest einen nachgelagerten Getriebes ist auf vorteilhafte Weise lediglich im Bereich dieser Getriebe, also an dem Formgebungsaggregat, eine von dem Schmiermittelsystem unabhängige Schmierung nötig. Weitere Getriebe und/oder sich bewegende Bestandteile des zumindest einen Antriebssystems und/oder der Stanzmaschine, welche sich außerhalb des zumindest einen Gehäuses befinden, weisen zumindest eine Schmierung mit Schmiermittel durch das zumindest eine Schmiermittelsystem auf. Die Kompaktheit der Stanzmaschine wird vorteilhafterweise erhöht, da beispielsweise zusätzliche Gehäuse für Schmierölbäder einzelner Bestandteile der Stanzmaschine entfallen. Auf vorteilhafte Weise sind somit die einzelnen Aggregate der Stanzmaschine besser zugänglich, beispielsweise für Wartungsarbeiten und/oder Reinigungsarbeiten.

Vorteilhafterweise weist die Bearbeitungsmaschine zumindest einen Anleger mit zumindest einem Transportmittel mit zumindest einem Antrieb und zumindest eine Anlage mit zumindest einem Erfassungssensor auf. Vorteilhafterweise umfasst die Bogenbearbeitungsmaschine zusätzlich zumindest eine Sensoreinrichtung mit zumindest zwei Sensoren, welche an einer Ausrichtposition von Bogen angeordnet sind.

Zumindest durch eine vorteilhafte Regelung und/oder Steuerung des zumindest einen Transportmittels, insbesondere in Abhängigkeit von zumindest einem Signal des zumindest einen Erfassungssensors, ist vorteilhafterweise eine flexible und/oder schnelle Reaktion auf Fehler beispielsweise der Bogenführung entlang des Transportweges und/oder der Bogenlage auf dem Transportweg gewährleistet.

Insbesondere können Lagefehler von Bogen im Anleger entstehen, beispielsweise wenn zumindest ein Bogen eines Anlegerstapels zu den weiteren Bogen verschoben ist und/oder wenn der Anlegerstapel eine von seiner für die Bearbeitungsmaschine bevorzugten Position abweichend angeordnet ist. Vorteilhafterweise ist zumindest eine Grobausrichtung und/oder zumindest eine Feinausrichtung von Bogen in der Anlage mögliche Lagefehler von Bogen korrigierend ausgebildet. Umfasst die Bearbeitungsmaschine in einer vorteilhaften Ausführung den zumindest einen Erfassungssensor und die zumindest eine Sensoreinrichtung, so ist der jeweilige Bogen auf vorteilhafte Weise in Abhängigkeit von der Erfassung durch den zumindest einen Erfassungssensor zumindest entsprechend der Transportrichtung grobausrichtbar und nach dieser durchgeführten Grobausrichtung in Abhängigkeit von der Erfassung durch die zumindest zwei Sensoren der Sensoreinrichtung feinausrichtbar. Vorteilhafterweise erfolgt zusätzlich eine Grobausrichtung des betreffenden Bogens bezüglich seiner Schräglage oder Lage orthogonal zu der Transportrichtung bei dessen Ankunft an der Ausrichtposition. Somit wird der Aufwand der Feinausrichtung durch die zusätzliche Grobausrichtung vor der Ausrichtposition vorteilhafterweise verringert.

Durch eine vorteilhafte Ausrichtung von Bogen durch das zumindest eine Transportmittel zumindest entsprechend der Transportrichtung wird vorteilhafterweise ein Ankunftszeitpunkt des betreffenden Bogens an einer Ausrichtposition sichergestellt, der einem Sollwert des Ankunftszeitpunkts entspricht. Vorteilhafterweise ist ein vollständiges Ausrichten des jeweiligen Bogens betreffend seiner Lage und/oder Position auf dem Transportweg in der dafür zur Verfügung stehenden Zeit durchführbar. Insbesondere ist ein vollständiges Ausrichten des jeweiligen Bogens betreffend seiner Lage und/oder Position auf dem Transportweg in der dafür zur Verfügung stehenden Zeit ohne eine Unterbrechung oder ein Anhalten der Bearbeitungsmaschine durchführbar.

Vorteilhafterweise ist eine positionsgenaue Zuführung eines jeweiligen, vorzugsweise zumindest eines, Bogens von einem Anlageaggregat zu zumindest einem den Bogen bearbeitenden Aggregat durch zumindest ein Zuführsystem gewährleistet. Vorteilhafterweise wird ein Bogen, vorzugsweise der zumindest eine Bogen, vor einer Übergabeposition ausgerichtet und in der Übergabeposition von dem zumindest einen Zuführsystem ausgerichtet an zumindest ein nachfolgendes Transportsystem übergeben.

Eine Positionierung des, bevorzugt zumindest einen, Bogens in einer Ausrichtposition, insbesondere an zumindest zwei Vordermarken, reduziert und/oder minimiert auf vorteilhafte Weise einen Lagefehler des Bogens. Der, bevorzugt zumindest eine, Bogen ist somit grobausgerichtet insbesondere bezüglich seiner Lage relativ zu zumindest einem Transportmittel, bevorzugt zumindest einem Greifer, des zumindest einen Zuführsystems. Somit wird der jeweilige, vorzugsweise der zumindest eine, Bogen vorteilhafterweise durch das zumindest eine Transportmittel insbesondere anschließend an die Positionierung in einem druckfreien Bereich des Bogens gehalten, wodurch ein gegebenenfalls vorhandenes Druckbild und/oder die Oberfläche des Bogens während des Haltens und/oder des Transports des Bogens durch das zumindest eine Transportmittel geschont wird.

Vorteilhafterweise erfolgt der Transport des Bogens von der Ausrichtposition zu einer Übergabeposition durch zumindest eine Bewegung des zumindest einen Transportmittels entlang eines Transportweges von Bogen, insbesondere durch zumindest ein Kurvengetriebe des Zuführsystems, weiter bevorzugt durch zumindest ein Doppelkurvengetriebe des Zuführsystems. Vorteilhafterweise ist das zumindest eine Kurvengetriebe mit zumindest einer Antriebswelle verbunden, welche durch einen insbesondere zentralen Antrieb der Bogenbearbeitungsmaschine angetrieben ist.

Vorteilhafterweise ist die zumindest eine Antriebswelle und zumindest ein dem zumindest einen Transportmittel nachfolgendes Halteelement eines Transportsystems bevorzugt über den insbesondere zentralen Antrieb der Bogenbearbeitungsmaschine angetrieben und/oder mechanisch miteinander verbunden, wodurch das zumindest eine Transportmittel und das zumindest eine ihm nachfolgende Halteelement des Transportsystems insbesondere zeitlich aufeinander abgestimmt und/oder abstimmbar sind. Dadurch dass das zumindest eine Transportmittel und das zumindest eine ihm nachfolgende Halteelement des Transportsystems insbesondere zeitlich aufeinander abgestimmt sind, wird auf vorteilhafte Weise eine Kollision der betreffenden Bestandteile während einer Bewegung des zumindest einen Transportmittels und/oder des zumindest einen Halteelements des Transportsystems, insbesondere aufgrund von beispielsweise elektrischen Fehlfunktionen, miteinander verhindert.

Auf vorteilhafte Weise wird der, vorzugsweise zumindest eine, Bogen während des Transports von der Ausrichtposition zu der Übergabeposition feinausgerichtet. Vorteilhafterweise erfolgt die Feinausrichtung zumindest bezüglich eines Lagefehlers des Bogens, bevorzugt zumindest bezüglich eines Lagefehlers des Bogens in einer Transportrichtung von Bogen und/oder bezüglich einer Schieflage des Bogens und/oder bezüglich eines seitlichen Lagefehlers insbesondere bei einer Verschiebung des Bogens orthogonal zu der Transportrichtung von Bogen.

Vorteilhafterweise weist das Zuführsystem zumindest zwei in Transportrichtung zueinander parallel angeordnete Kurvengetriebe an zumindest einer, bevorzugt gemeinsamen, Antriebswelle auf. Bevorzugt ist jedem Kurvengetriebe des Zuführsystems jeweils zumindest ein Stellantrieb zugeordnet. Vorteilhafterweise wird zumindest ein Stellantrieb zumindest für einen Ausgleich einer Schieflage des Bogens angesteuert und/oder geregelt. Vorteilhafterweise zusätzlich werden zumindest zwei Stellantriebe zumindest für einen Ausgleich eines Lagefehlers in Transportrichtung angesteuert und/oder geregelt.

Weitere Vorteile sind aus der nachfolgenden Beschreibung ersichtlich.

Ausführungsbeispiele der Erfindung sind in den Zeichnungen dargestellt und werden im Folgenden näher beschrieben.

Es zeigen:

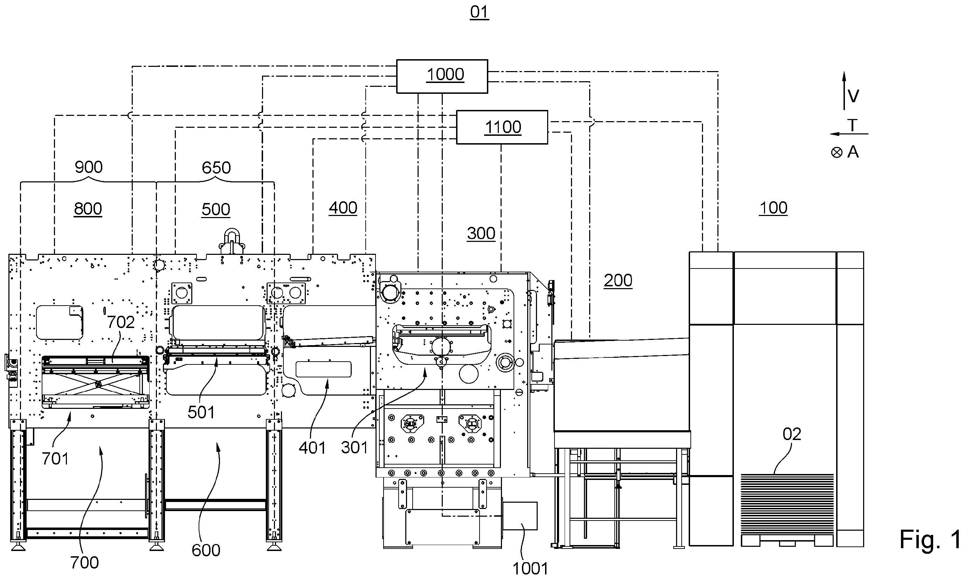

- Fig. 1: eine schematische Darstellung einer Bogenbearbeitungsmaschine;

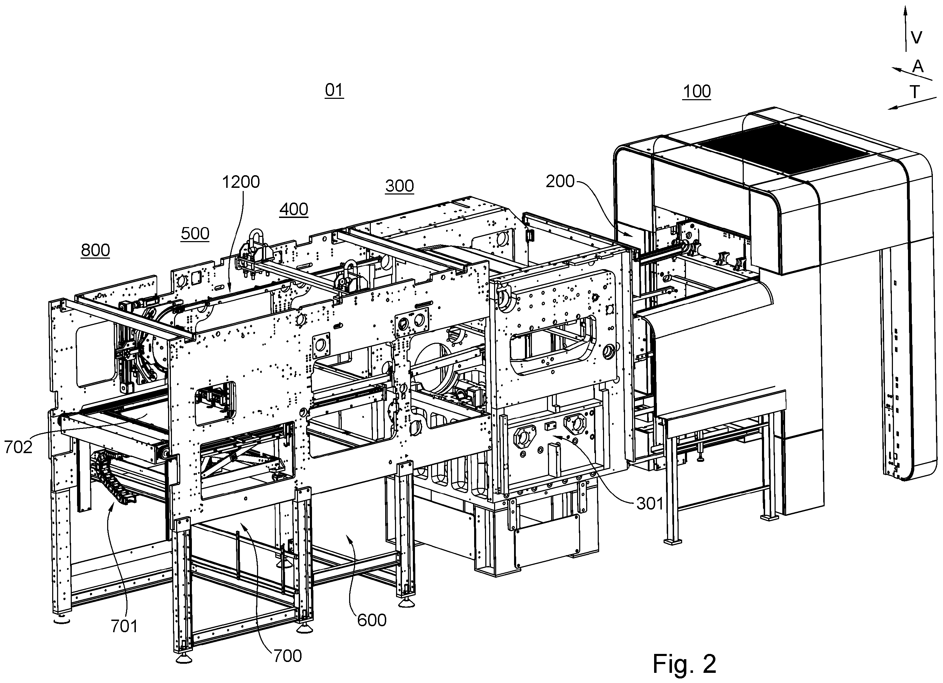

- Fig. 2: eine schematische perspektivische Darstellung einer Bogenbearbeitungsmaschine;

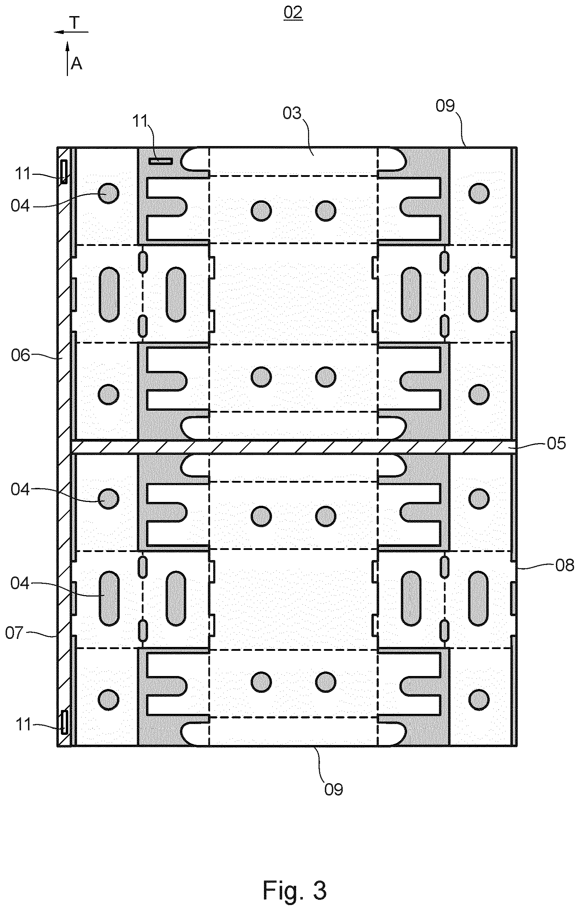

- Fig. 3: eine schematische Darstellung eines Bogens mit mehreren Nutzen;

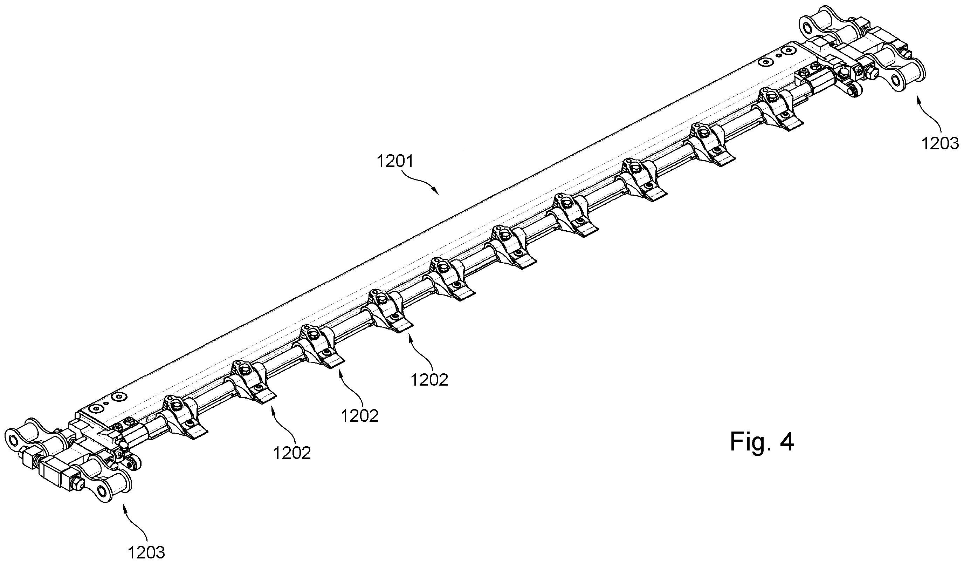

- Fig. 4: eine perspektivische Darstellung eines beispielhaften Greiferwagens eines Kettentransportsystems;

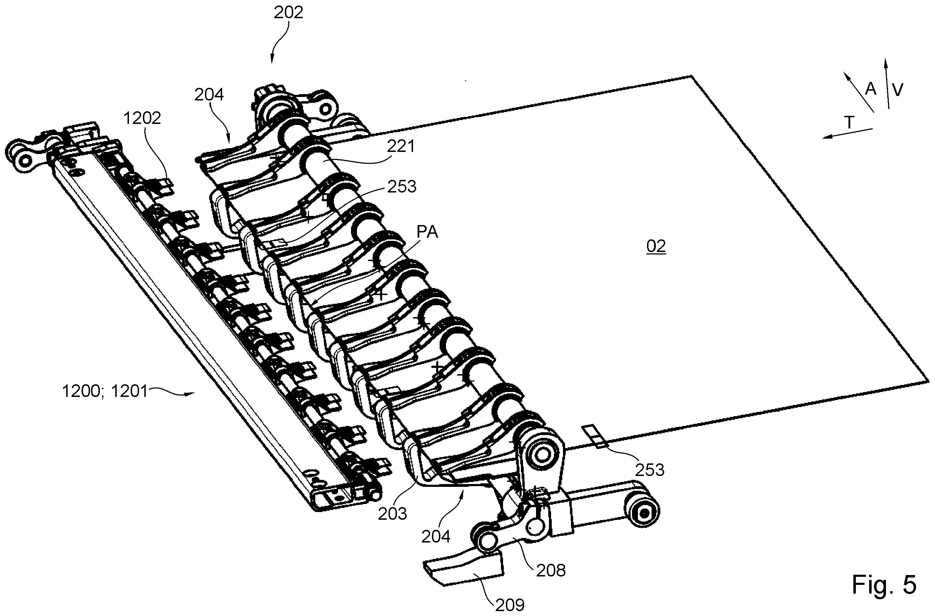

- Fig. 5: eine perspektivische Darstellung einer möglichen Ausführungsform eines Teils des Zuführsystems und eines Teils des in Transportrichtung nachfolgenden Transportsystems mit einem in der Ausrichtposition angeordneten Bogen;

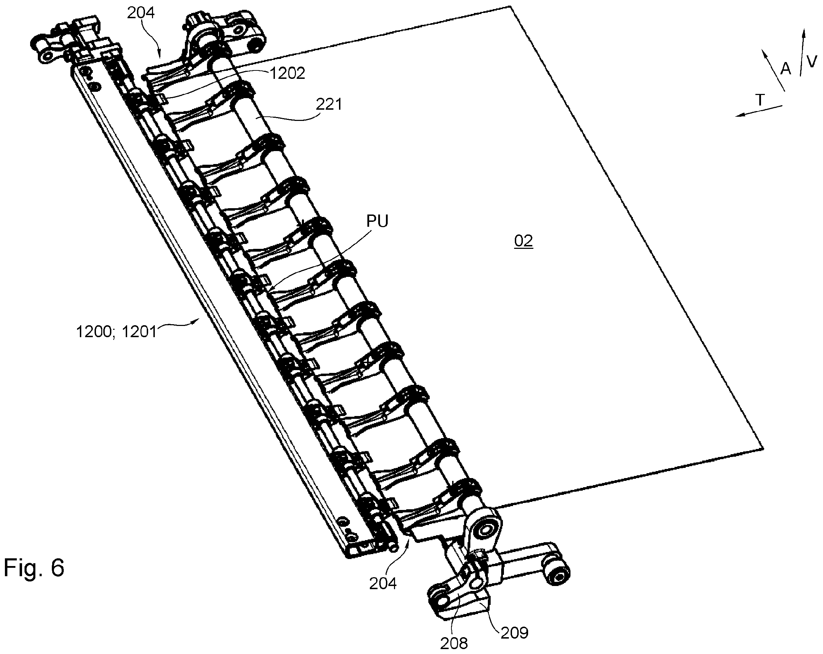

- Fig. 6: eine perspektivische Darstellung einer möglichen Ausführungsform eines Teils des Zuführsystems und eines Teils des in Transportrichtung nachfolgenden Transportsystems mit einem in der Übergabeposition angeordneten Bogen;

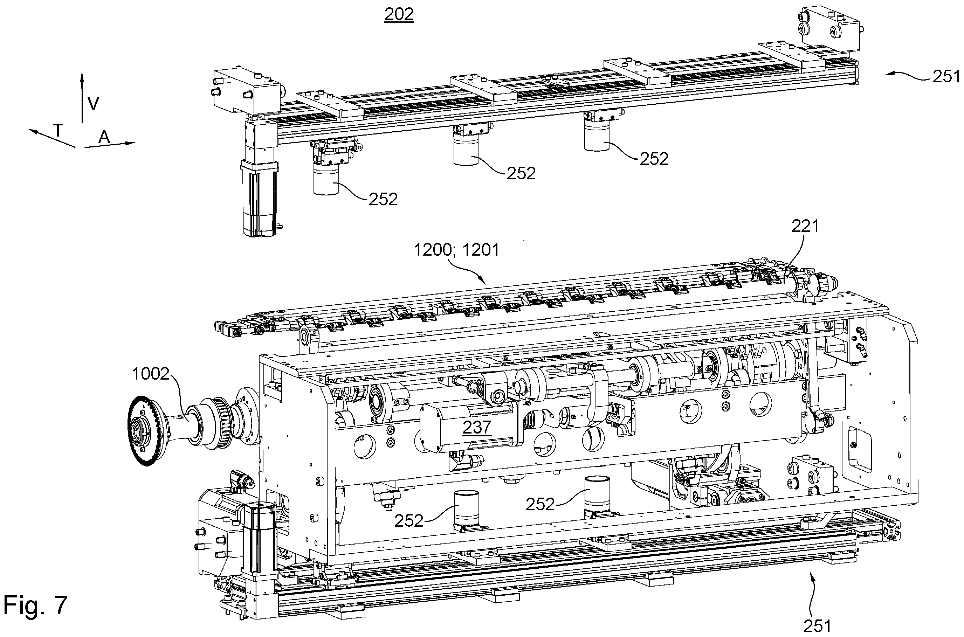

- Fig. 7: eine perspektivische Darstellung einer möglichen Ausführungsform des Zuführsystems mit zwei Sensoreinrichtungen;

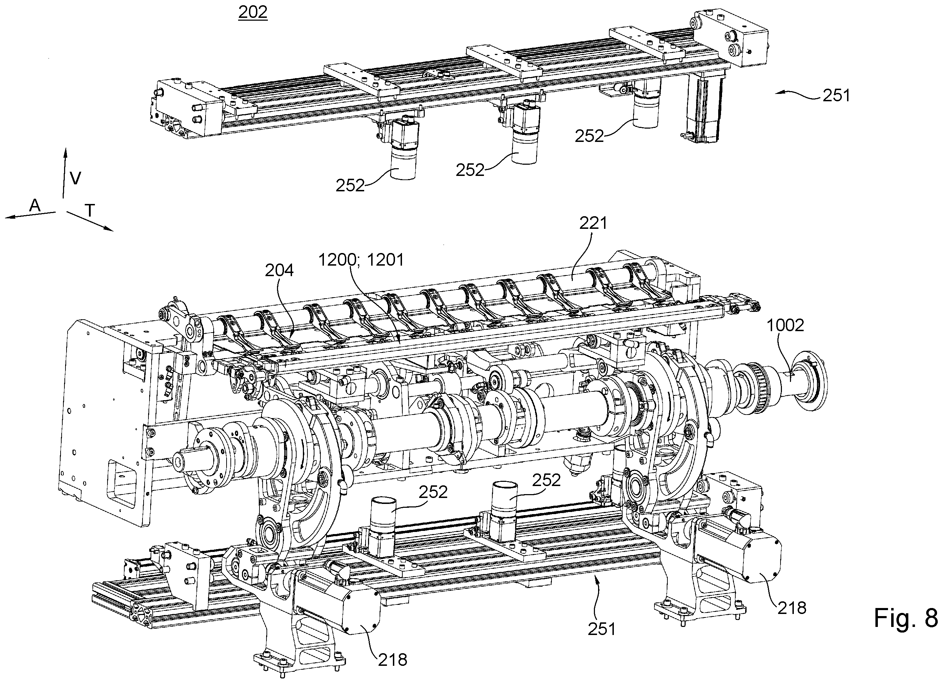

- Fig. 8: eine weitere perspektivische Darstellung der Ausführungsform aus Fig. 7;

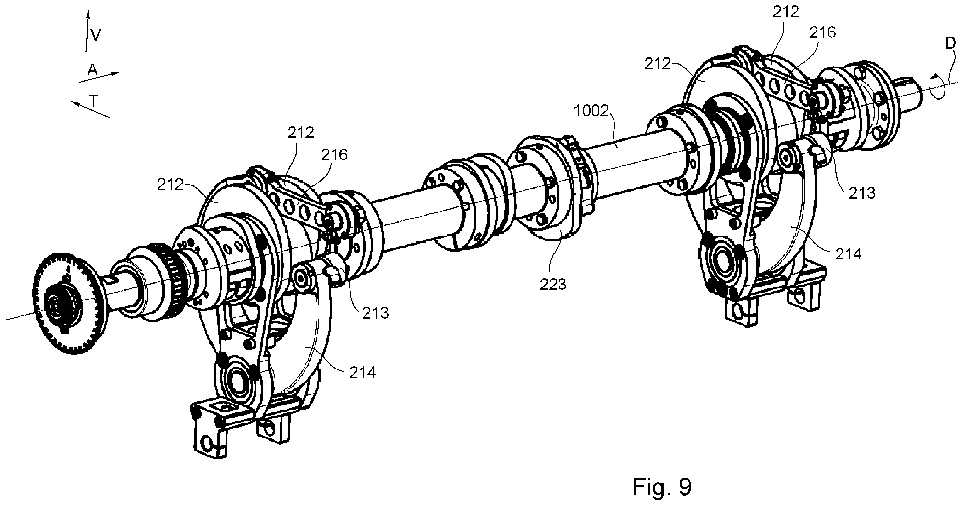

- Fig. 9: eine perspektivische Darstellung einer möglichen Ausführungsform einer Antriebswelle mit mehreren Kurvenscheiben;

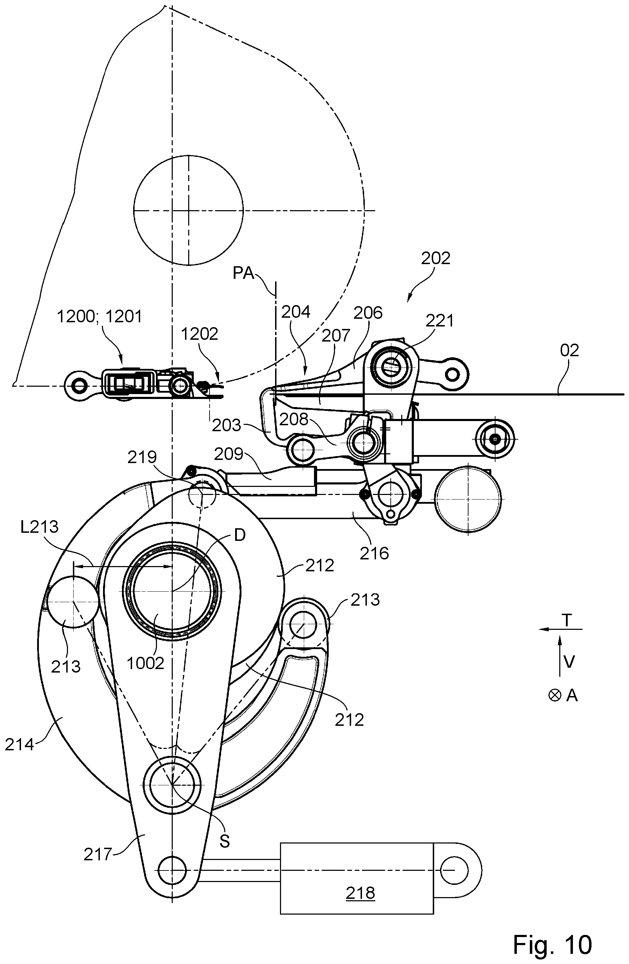

- Fig. 10: ein schematisches Zuführsystem mit einem der Transportbewegung zugeordneten Kurvengetriebe und einem in der Ausrichtposition angeordneten T ransportm ittel;

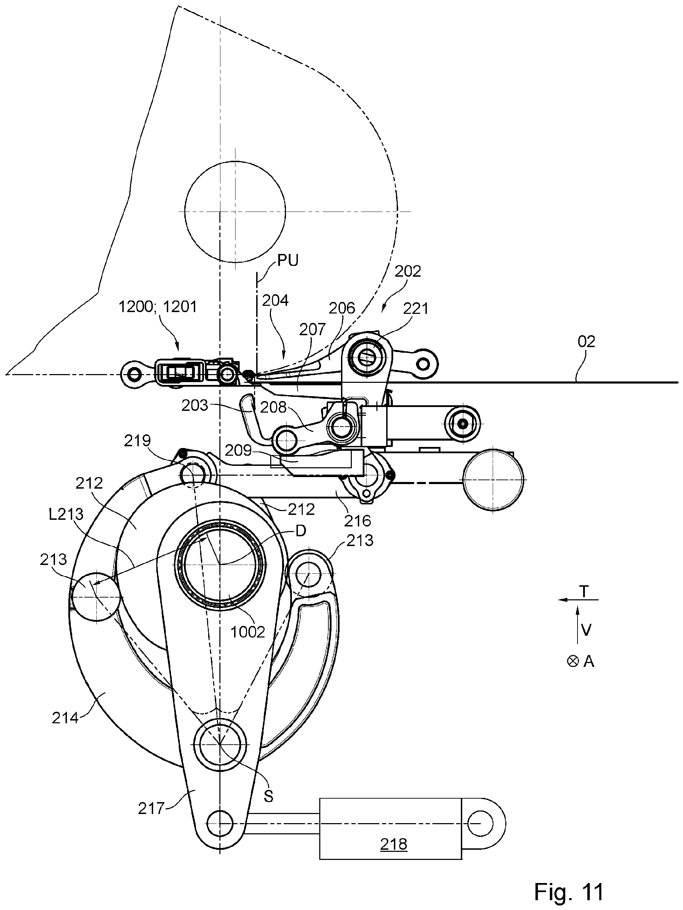

- Fig. 11: ein schematisches Zuführsystem mit einem der Transportbewegung zugeordneten Kurvengetriebe und einem in der Übergabeposition angeordneten Transportmittel;

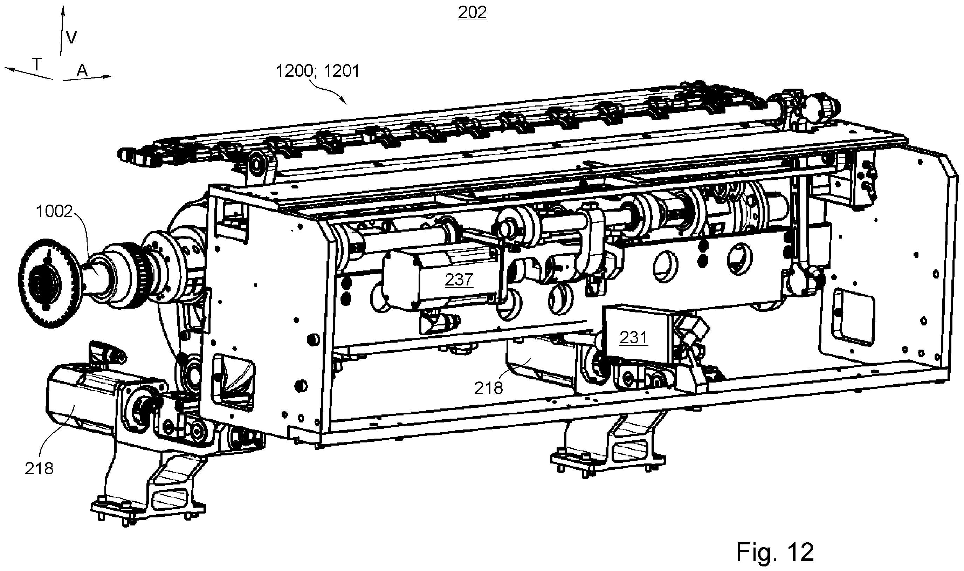

- Fig. 12: eine perspektivische Darstellung einer möglichen Ausführungsform eines Zuführsystems mit mehreren Stellantrieben;

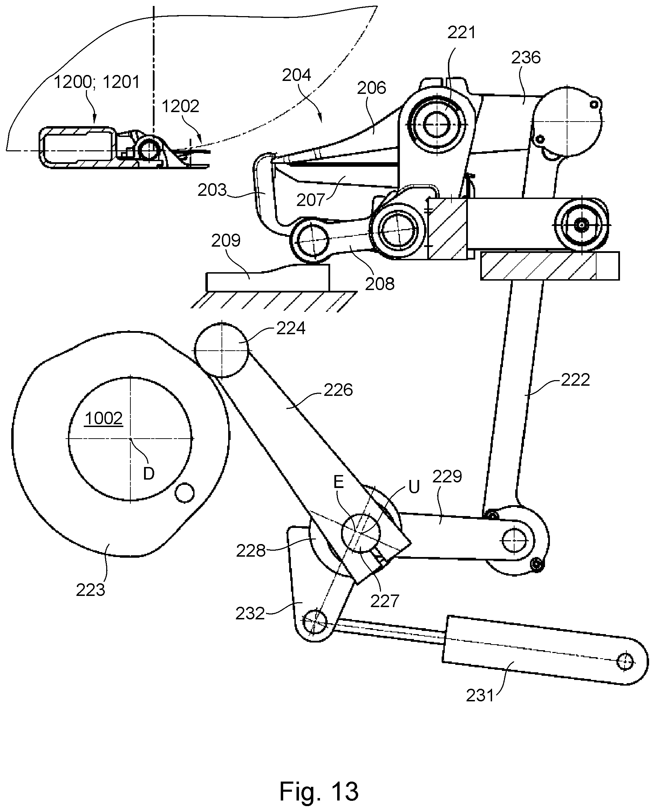

- Fig. 13: eine schematische Darstellung eines Zuführsystems mit einem Kurvengetriebe mit minimalem Abstand der Halteflächen der zumindest einen Halterung zueinander;

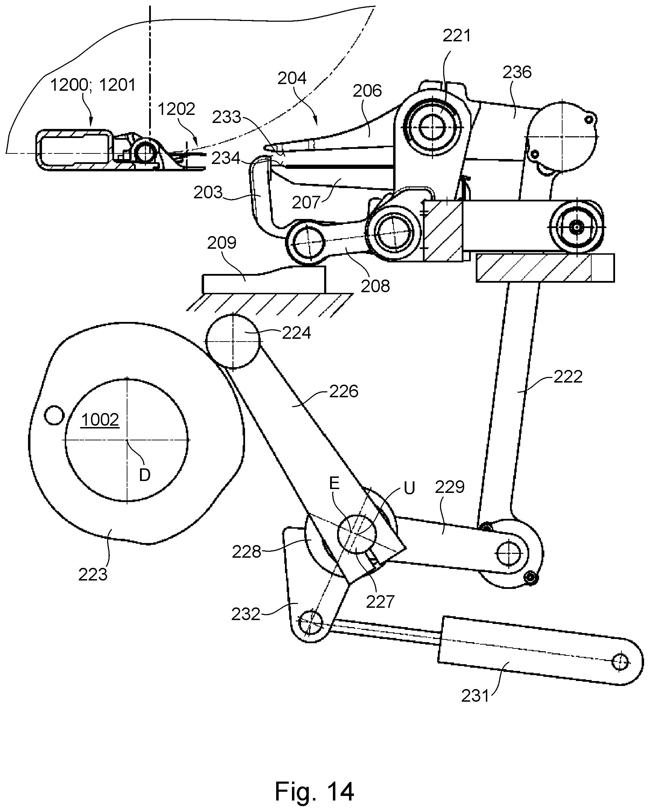

- Fig. 14: eine schematische Darstellung eines Zuführsystems mit einem Kurvengetriebe mit maximalem Abstand der Halteflächen der zumindest einen Halterung zueinander;

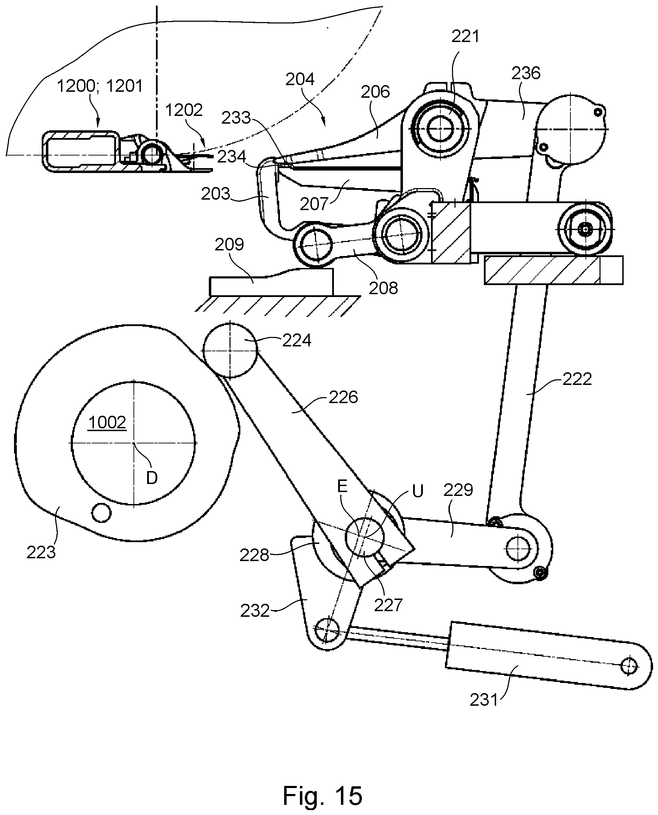

- Fig. 15: eine schematische Darstellung eines Zuführsystems mit einem Kurvengetriebe mit mittlerem Abstand der Halteflächen der zumindest einen Halterung zueinander für eine erste Dicke von Bogen in vertikaler Richtung;

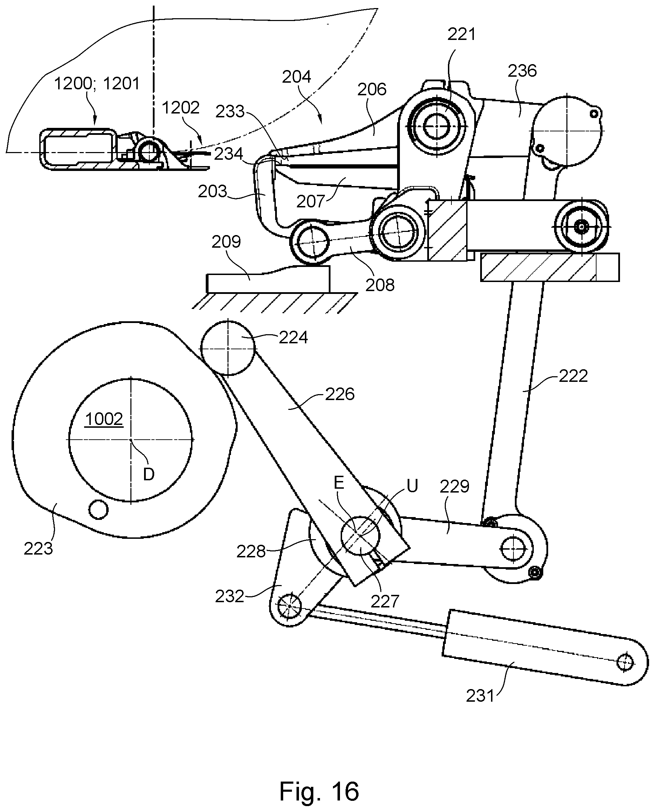

- Fig. 16: eine schematische Darstellung eines Zuführsystems mit einem Kurvengetriebe mit mittlerem Abstand der Halteflächen der zumindest einen Halterung zueinander für eine zweite Dicke von Bogen in vertikaler Richtung;

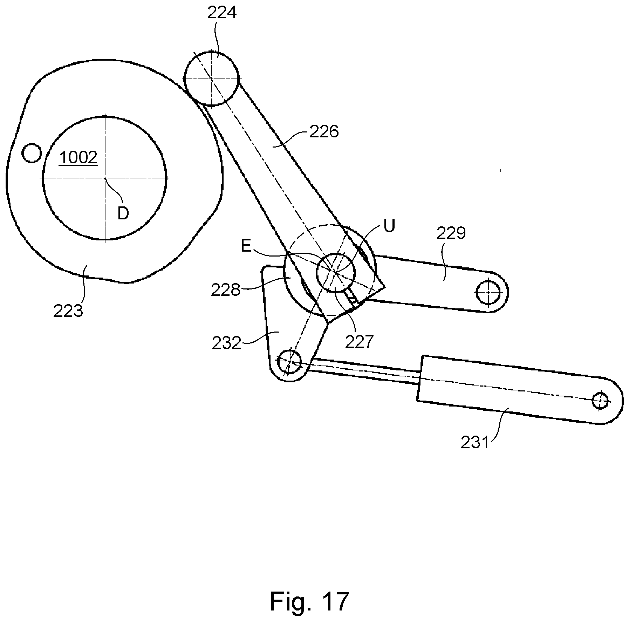

- Fig. 17: eine schematische Darstellung einer Verstellwelle mit einer darin exzentrisch angeordneten Übertragungswelle;

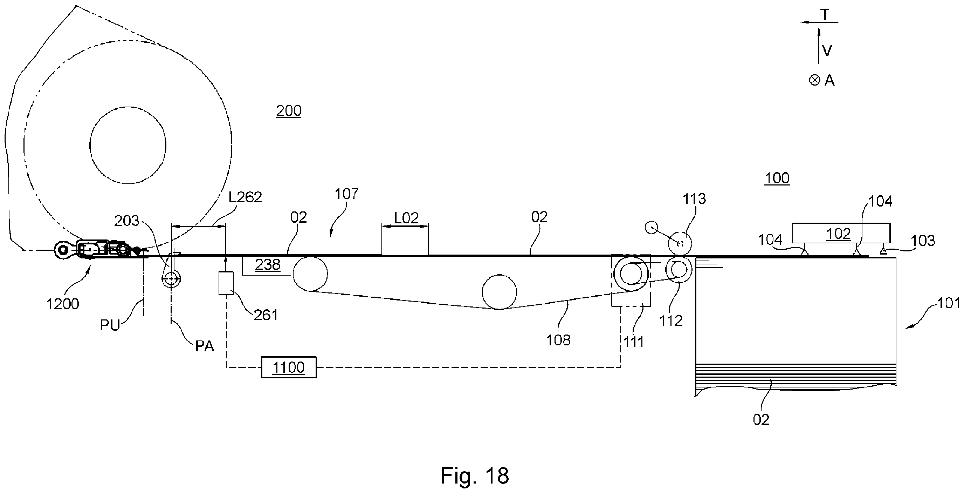

- Fig. 18: eine schematische Darstellung eines Anlegeraggregats und eines Anlageaggregats;

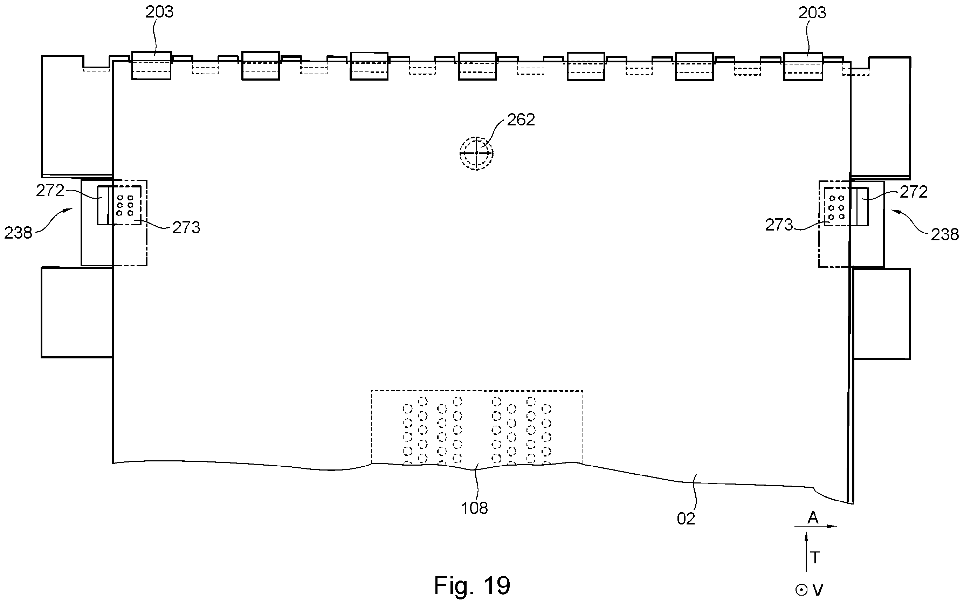

- Fig. 19: eine schematische Darstellung eines Teils eines Anlageaggregats in Draufsicht;

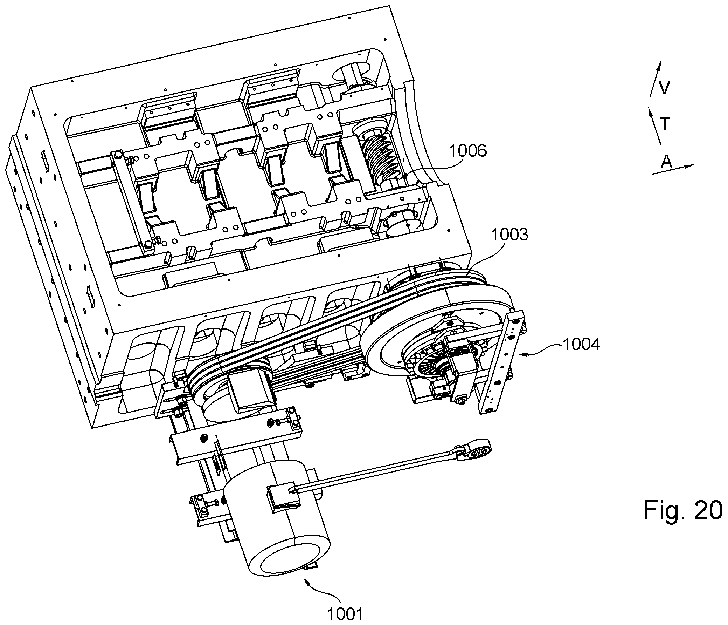

- Fig. 20: eine perspektivische Darstellung eines Antriebs der Bearbeitungsmaschine;

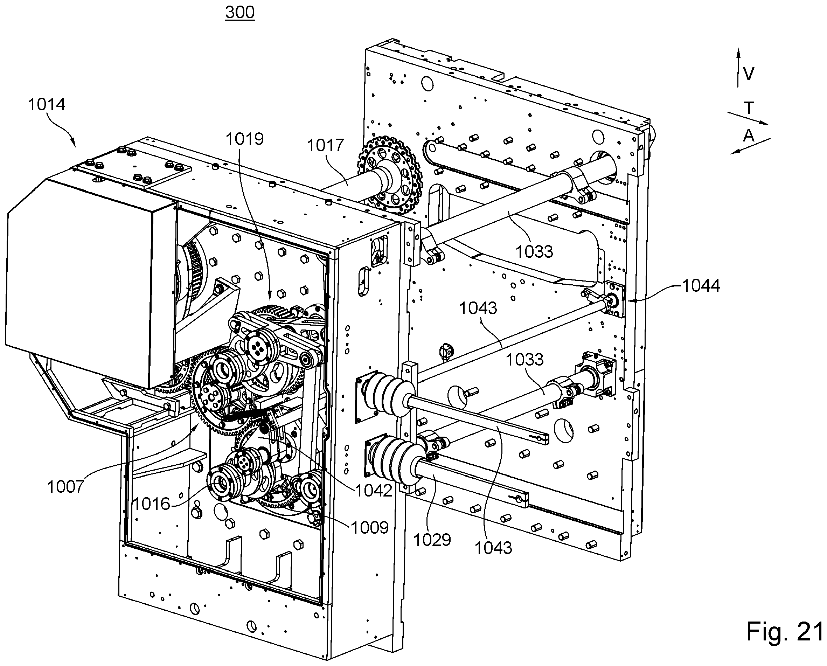

- Fig. 21: eine perspektivische Darstellung eines an einem Formgebungsaggregat angeordneten Antriebsgetriebes;

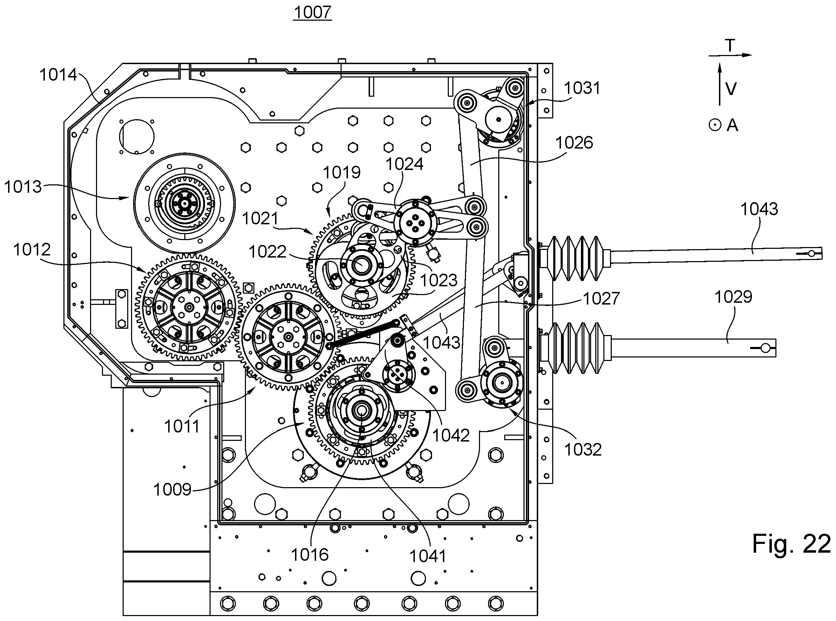

- Fig. 22: eine Darstellung eines Antriebsgetriebes;

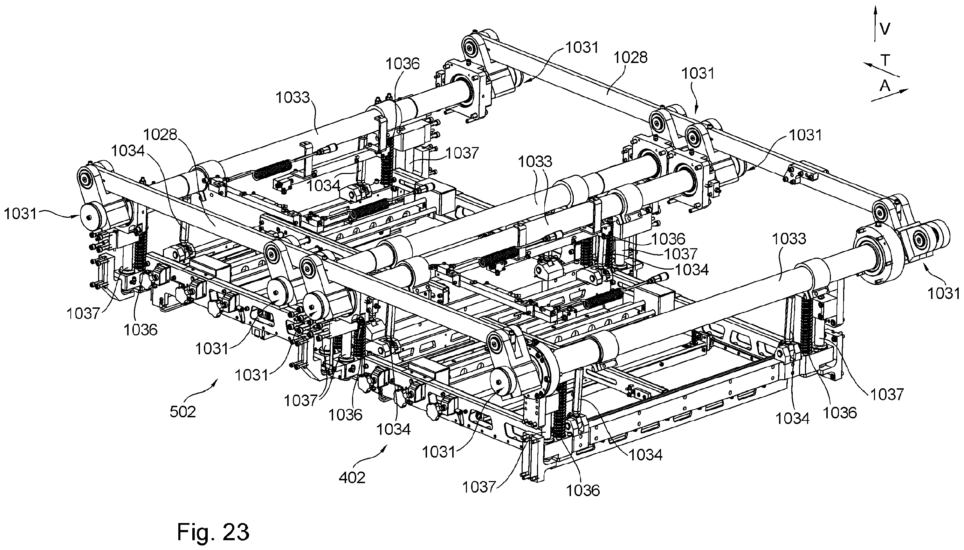

- Fig. 23: eine perspektivische Darstellung einer Verbindung eines oberen Ausbrechwerkzeugs und eines oberen Nutzentrennwerkzeugs zu einem antreibenden Getriebe;

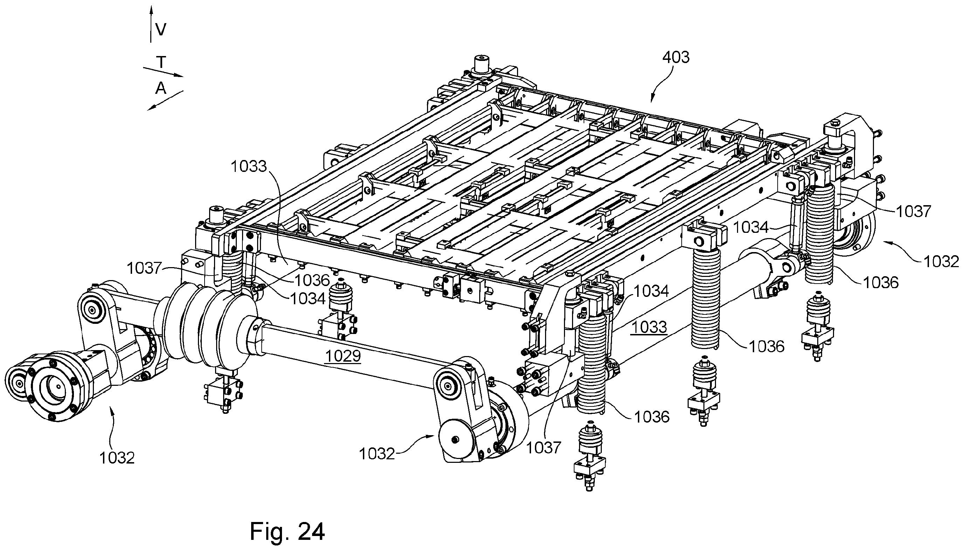

- Fig. 24: eine perspektivische Darstellung einer Verbindung eines unteren Ausbrechwerkzeugs zu einem antreibenden Getriebe;
- Fig. 25: eine perspektivische Darstellung eines Teils eines zentralen Schmiermittelsystems der Bearbeitungsmaschine.

Eine Bearbeitungsmaschine 01 ist als Bogenbearbeitungsmaschine 01, insbesondere als Stanzmaschine 01, weiter bevorzugt als Flachbettstanzmaschine 01, zur Bearbeitung von bogenförmigem Substrat 02 oder Bogen 02 ausgebildet. Im Vorangegangen und im Folgenden ist mit Bearbeitungsmaschine 01 und/oder Bogenbearbeitungsmaschine 01 auch Stanzmaschine 01 gemeint. Die Bearbeitungsmaschine 01 weist mindestens ein Aggregat 100; 200; 300; 400; 500; 600; 650; 700; 800; 900, bevorzugt eine Vielzahl von Aggregaten 100; 200; 300; 400; 500; 600; 650; 700; 800; 900 auf. Die Bearbeitungsmaschine 01, insbesondere die Bogenbearbeitungsmaschine 01, umfasst zumindest ein als Formgebungsaggregat 300 ausgebildetes Aggregat 300 zur Bearbeitung von Bogen 02.

Sofern nicht explizit unterschieden wird, soll hier vom Begriff des bogenförmigen Substrates 02, speziell des Bogens 02, grundsätzlich jedes flächig und in Abschnitten vorliegendes Substrat 02, also auch tafelförmig oder plattenförmig vorliegendes Substrat 02, also auch Tafeln bzw. Platten, umfasst sein. Das so definierte bogenförmige Substrat 02 bzw. der Bogen 02 ist beispielsweise aus Pappe und/oder Wellpappe, d. h. Pappbogen und/oder Wellpappbogen oder durch Bogen, Tafeln oder ggf. Platten aus Kunststoff, Pappe, Glas, Holz oder Metall gebildet. Weiter bevorzugt handelt es sich bei dem bogenförmigen Substrat 02 um Papier und/oder Karton, insbesondere um Papier- und/oder Kartonbogen. Insbesondere werden im Vorangegangenen und im Folgenden mit dem Begriff des Bogens 02 sowohl solche Bogen 02 bezeichnet, die noch nicht mittels zumindest eines Aggregats 300; 400; 500; 650 bearbeitet wurden, als auch solche Bogen 02, die bereits mittels zumindest eines Aggregats 300; 400; 500; 650 bearbeitet wurden und dabei gegebenenfalls in ihrer Form und/oder ihrer Masse verändert wurden.

Nach DIN 6730 (Feb. 2011) ist Papier ein flächiger, im Wesentlichen aus Fasern meist pflanzlicher Herkunft bestehender Werkstoff, der durch Entwässerung einer Faserstoffaufschwemmung auf einem Sieb gebildet wird. Dabei entsteht ein Faserfilz, der anschließend getrocknet wird. Die flächenbezogene Masse von Papier beträgt bevorzugt maximal 225 g/m² (zweihundertfünfundzwanzig Gramm pro Quadratmeter).

Nach DIN 6730 (Feb. 2011) ist Pappe ein flächiger, im wesentlicher aus Fasern pflanzlicher Herkunft bestehender Werkstoff, der durch Entwässerung einer Faserstoffaufschwemmung auf einem oder zwischen zwei Sieben gebildet wird. Das Fasergefüge wird verdichtet und getrocknet. Bevorzugt wird Pappe durch Zusammenkleben oder Zusammenpressen aus Zellstoff gefertigt. Bevorzugt ist Pappe als Vollpappe oder Wellpappe ausgebildet. Bevorzugt beträgt die flächenbezogene Masse von Pappe von über 225 g/m² (zweihundertfünfundzwanzig Gramm pro Quadratmeter). Wellpappe ist Pappe aus einer oder mehrerer Lagen eines gewellten Papiers, das auf eine Lage oder zwischen mehreren Lagen eines anderen bevorzugt glatten Papiers oder Pappe geklebt ist.

Der Begriff Karton bezeichnet im Vorangegangenen und im Folgenden ein bevorzugt einseitig gestrichenes papiernes Flächengebilde mit einer flächenbezogenen Masse von mindestens 150 g/m² (hundertfünfzig Gramm pro Quadratmeter) und maximal 600 g/m² (sechshundert Gramm pro Quadratmeter). Bevorzugt weist ein Karton eine hohe Festigkeit relativ zu Papier auf.

Bevorzugt weist ein zu verarbeitender Bogen 02 ein Flächengewicht von mindestens 70 g/m² (siebzig Gramm pro Quadratmeter) und/oder von maximal 700 g/m² (siebenhundert Gramm pro Quadratmeter), bevorzugt maximal 500 g/m² (fünfhundert Gramm pro Quadratmeter), weiter bevorzugt maximal 200 g/m² (zweihundert Gramm pro Quadratmeter) auf. Vorzugsweise weist ein zu verarbeitender Bogen 02 eine Dicke von maximal 1 cm (ein Zentimeter), bevorzugt maximal 0,7 cm (null Komma sieben Zentimeter), weiter bevorzugt maximal 0,5 cm (null Komma fünf Zentimeter), weiter bevorzugt maximal 0,3 cm (null Komma drei Zentimeter) auf.

Der Begriff Nutzen bezeichnet im Vorangegangenen und im Folgenden bevorzugt die Anzahl gleicher und/oder unterschiedlicher Objekte, die aus dem gleichen Werkstoffstück gefertigt werden und/oder auf einem gemeinsamen Trägermaterial, beispielsweise einem gemeinsamen Bogen 02, angeordnet sind. Ein Nutzen 03 ist vorzugsweise jener Bereich eines Bogens 02, welcher als ein Produkt der Bogenbearbeitungsmaschine 01, insbesondere als ein Zwischenprodukt zur Herstellung eines Endproduktes, ausgebildet ist und/oder beispielsweise zu einem gewünschten oder geforderten Endprodukt weiterverarbeitet wird und/oder weiterverarbeitbar ausgebildet ist. Bevorzugt ist hier das gewünschte oder geforderte Endprodukt, welches bevorzugt durch Weiterverarbeitung des jeweiligen Nutzens 03 erzeugt wird, eine Verpackung, insbesondere eine Faltschachtel.

Ein Reststück 04; 05; 06 ist im Vorangegangenen und im Folgenden jener Bereich eines Bogens 02, welcher keinem Nutzen 03 entspricht. Gesammelte Reststücke 04; 05; 06 werden bevorzugt als Abfall bezeichnet. Ein Reststück 04; 05; 06 ist vorzugsweise als Beschnitt und/oder Ausbruch ausgebildet und/oder entfernbar. Bevorzugt wird während des Betriebs der Bogenbearbeitungsmaschine 01 das zumindest eine Reststück 04; 05; 06 in zumindest einem Formgebungsaggregat 300 vorzugsweise durch zumindest einen Bearbeitungsschritt des jeweiligen Bogens 02 erzeugt, beispielsweise in zumindest einem Stanzvorgang. Bevorzugt wird während des Betriebs der Bogenbearbeitungsmaschine 01 das zumindest eine Reststück 04; 05; 06 aus dem jeweiligen Bogen 02 zumindest teilweise entfernt und somit insbesondere von den jeweiligen Nutzen 03 des Bogens 02 getrennt. Bevorzugt ist zumindest ein als Ausbrechaggregat 400 ausgebildetes Aggregat 400 zumindest einen erstes Reststück 04, insbesondere zumindest ein Abfallstück 04, entfernend ausgebildet und/oder zur Entfernung von zumindest einem Abfallstück 04 ausgebildet. Bevorzugt ist zumindest ein als Nutzentrennaggregat 500 ausgebildetes Aggregat 500 zumindest ein zweites Reststück 06; insbesondere zumindest eine Greiferkante 06, entfernend ausgebildet und/oder zur Entfernung von zumindest einer Greiferkante 06 ausgebildet. Beispielsweise umfasst ein Bogen 02 einen als Steg 05 ausgebildetes Reststück 05. Insbesondere sind durch den zumindest einen Steg 05 die Nutzen 03 voneinander beabstandet.

Der für den Transport eines Bogens 02 vorgesehene Raumbereich, den der Bogen 02 im Fall seiner Anwesenheit zumindest zeitweise einnimmt, ist der Transportweg. Der Transportweg wird zumindest in einem Abschnitt durch zumindest ein Bestandteil eines als Transportsystem 1200 ausgebildeten Systems 1200 festgelegt.

Eine Transportrichtung T ist eine für einen formgebenden Betriebszustand zumindest eines Formgebungsaggregates 300 der Bearbeitungsmaschine 01 vorgesehene Richtung T, in welche der Bogen 02 im Fall seiner Anwesenheit an jedem Punkt des Transportweges transportiert wird. Die insbesondere für einen Transport von Bogen 02 vorgesehene Transportrichtung T ist eine Richtung T, die bevorzugt zumindest im Wesentlichen und weiter bevorzugt vollständig horizontal orientiert ist. Zusätzlich oder alternativ weist die Transportrichtung T bevorzugt von einem ersten Aggregat 100 der Bearbeitungsmaschine 01 zu einem letzten Aggregat 800; 900 der Bearbeitungsmaschine 01. Insbesondere weist die Transportrichtung T von einem Aggregat 100, insbesondere einem Anlegeraggregat 100, einerseits zu einem Aggregat 600, insbesondere einem Auslageaggregat 600, andererseits. Zusätzlich oder alternativ weist die Transportrichtung T bevorzugt in eine Richtung, in der die Bogen 02 abgesehen von vertikalen Bewegungen oder vertikalen Komponenten von Bewegungen transportiert werden, insbesondere von einem ersten Kontakt mit einem dem Anlegeraggregat 100 nachgeordneten Aggregat 200; 300; 400; 500; 600; 650; 700; 800; 900 der Bearbeitungsmaschine 01 oder ersten Kontakt mit der Bearbeitungsmaschine 01 bis zu einem letzten Kontakt mit der Bearbeitungsmaschine 01. Die Transportrichtung T ist bevorzugt diejenige Richtung T, in der eine horizontale Komponente in eine Richtung weist, die von dem Anlegeraggregat 100 zu dem Auslageaggregat 600 orientiert ist. Bevorzugt zeigt die Transportrichtung T von einer Anlegerseite zu einer Auslageseite.

Die Anlegerseite entspricht bevorzugt der Stirnseite der Bogenbearbeitungsmaschine 01, bevorzugt der Seite, an der das zumindest eine Anlegeraggregat 100 angeordnet ist. Die der Anlegerseite gegenüberliegende Seite der Bogenbearbeitungsmaschine 01 entspricht bevorzugt der Auslageseite. Insbesondere ist an der Auslageseite das letzte Aggregat 800; 900 der Bogenbearbeitungsmaschine 01, bevorzugt das zumindest eine gemeinsame Aggregat 900 und/oder das zumindest eine Reststückauslageaggregat 800, angeordnet. Bevorzugt sind die Anlegerseite und die Auslageseite parallel zu einer Richtung A, insbesondere einer Querrichtung A, und einer Arbeitsbreite angeordnet.

Die Querrichtung A ist bevorzugt eine horizontal verlaufende Richtung A. Die Querrichtung A ist orthogonal zu der vorgesehenen Transportrichtung T der Bogen 02 und/oder orthogonal zu dem vorgesehenen Transportweg der Bogen 02 durch das zumindest eine Aggregat 100; 200; 300; 400; 500; 600; 650; 700; 800; 900 der Bearbeitungsmaschine 01 orientiert. Vorzugsweise ist die Querrichtung A von einer Bedienerseite der Bearbeitungsmaschine 01 zu einer Antriebsseite der Bearbeitungsmaschine 01 orientiert.

Eine vertikale Richtung V ist bevorzugt diejenige Richtung V, welche orthogonal zu einer Ebene aufgespannt durch die Transportrichtung T und die Querrichtung A angeordnet ist. Die vertikale Richtung V ist bevorzugt senkrecht von unten und/oder von einem Boden der Bearbeitungsmaschine 01 und/oder von einem untersten Bestandteil der Bearbeitungsmaschine 01 nach oben und/oder zu einem obersten Bestandteil der Bearbeitungsmaschine 01 und/oder zu einer obersten Abdeckung der Bearbeitungsmaschine 01 orientiert.

Die Bedienerseite der Bearbeitungsmaschine 01 ist bevorzugt diejenige Seite der Bearbeitungsmaschine 01 parallel zu der Transportrichtung T, von welcher einem Bediener zumindest teilweise und zumindest zeitweise Zugriff in die einzelnen Aggregate 100; 200; 300; 400; 500; 600; 650; 700; 800; 900 der Bearbeitungsmaschine 01 möglich ist, beispielsweise bei Wartungsarbeiten und/oder Wechsel von zumindest einem Formgebungswerkzeug.

Die Antriebsseite der Bearbeitungsmaschine 01 ist bevorzugt diejenige Seite der Bearbeitungsmaschine 01 parallel zu der Transportrichtung T, welche der Bedienerseite gegenüberliegt. Die Antriebsseite weist bevorzugt zumindest Teile, bevorzugt zumindest einen Großteil, eines Systems 1000, insbesondere eines Antriebssystems 1000 auf.

Die Arbeitsbreite ist im Vorangegangenen und im Folgenden die maximale Breite, die ein Bogen 02 aufweisen darf, um durch das zumindest eine Aggregat 100; 200; 300; 400; 500; 600; 650; 700; 800; 900, insbesondere die jeweiligen Aggregate 100; 200; 300; 400; 500; 600; 650; 700; 800; 900, der Bearbeitungsmaschine 01 transportiert werden zu können und/oder um noch mit dem zumindest einen Formgebungsaggregat 300 der Bearbeitungsmaschine 01 verarbeitet werden zu können, dies entspricht somit der maximalen mit dem zumindest einen Formgebungsaggregat 300 der Bearbeitungsmaschine 01 verarbeitbaren Breite des jeweiligen Bogens 02. Die Arbeitsbreite der Bearbeitungsmaschine 01, insbesondere Bogenbearbeitungsmaschine 01, beträgt bevorzugt zumindest 30 cm (dreißig Zentimeter), weiter bevorzugt zumindest 50 cm (fünfzig Zentimeter), noch weiter bevorzugt zumindest 80 cm (achtzig Zentimeter), noch weiter bevorzugt zumindest 120 cm (hundertzwanzig Zentimeter) und noch weiter bevorzugt zumindest 150 cm (hundertfünfzig Zentimeter).

Der zu bearbeitenden Bogen 02 weist bevorzugt eine Bogenbreite, bevorzugt parallel zur Querrichtung A, von mindestens 200 mm (zweihundert Millimeter), bevorzugt mindestens 300 mm (dreihundert Millimeter), weiter bevorzugt mindestens 400 mm (vierhundert Millimeter) auf. Die Bogenbreite beträgt vorzugsweise maximal 1.500 mm (tausendfünfhundert Millimeter), weiter bevorzugt maximal 1.300 mm (tausenddreihundert Millimeter), noch weiter bevorzugt maximal 1.060 mm (tausendsechzig Millimeter). Eine Bogenlänge, bevorzugt parallel zur Transportrichtung T, beträgt beispielsweise mindestens 150 mm (hundertfünfzig Millimeter), bevorzugt mindestens 250 mm (zweihundertfünfzig Millimeter), weiter bevorzugt mindestens 350 mm (dreihundertfünfzig Millimeter). Weiter beträgt eine Bogenlänge beispielsweise maximal 1.200 mm (tausendzweihundert Millimeter), bevorzugt maximal 1.000 mm (tausend Millimeter), weiter bevorzugt maximal 800 mm (achthundert Millimeter).

Ein Bogen 02 weist mehrere Kanten 07; 08; 09 auf. Insbesondere ist eine als Vorderkante 07 ausgebildete Kante 07 in Transportrichtung T am Bogen 02 vorne orientiert und parallel zur Querrichtung A angeordnet. Insbesondere ist die Vorderkante 07 diejenige Kante 07 des jeweiligen Bogens 02, die zum Transport des jeweiligen Bogens 02 bevorzugt durch zumindest einen Bestandteil der Bogenbearbeitungsmaschine 01, insbesondere durch zumindest ein Halteelement 1202 des Transportsystems 1200, fassbar ist und/oder an welcher zumindest ein Bestandteil der Bogenbearbeitungsmaschine 01, insbesondere durch zumindest ein Halteelement 1202 des Transportsystems 1200, den jeweiligen Bogen 02 fasst. Eine als Hinterkante 08 ausgebildete Kante 08 ist bevorzugt der Vorderkante 07 gegenüber liegend angeordnet. Weiter bevorzugt sind Vorderkante 07 und Hinterkante 08 parallel zueinander angeordnet. Insbesondere ist eine Hinterkante 08 in Transportrichtung T am Bogen 02 hinten orientiert und parallel zur Querrichtung A angeordnet. Weiter umfasst der Bogen 02 zwei als Seitenkanten 09 ausgebildete Kanten 09. Die zwei Seitenkanten 09 sind bevorzugt parallel zur Transportrichtung T angeordnet und orthogonal zur Querrichtung A angeordnet. Bevorzugt sind die Seitenkanten 09 bevorzugt jeweils orthogonal zur Vorderkante 07 und/oder zur Hinterkante 08 des Bogens 02 angeordnet.

Der Bogen 02 weist bevorzugt zumindest ein Druckbild auf. Das Druckbild beschreibt im Vorangegangen und im Folgenden eine Darstellung auf dem Bogen 02, welche der Summe aller Bildelemente entspricht, wobei die Bildelemente während zumindest einer Arbeitsstufe und/oder zumindest eines Druckvorgangs auf den Bogen 02, bevorzugt vor einer Bearbeitung durch die Bogenbearbeitungsmaschine 01, übertragen wurden und/oder übertragbar sind. Bevorzugt weist die Oberfläche des Bogens 02 zumindest einen unbedruckten Bereich, insbesondere unbedruckten Randbereich, auf. Insbesondere hält das zumindest eine Halteelement 1202 den Bogen 02 bevorzugt zumindest am unbedruckten Randbereich der Vorderkante 07 fest, welcher als Reststück 06 und/oder Greiferkante 06 ausgebildet ist.

Bevorzugt weist der Bogen 02 zumindest eine Druckmarke 11, bevorzugt zumindest zwei Druckmarken 11 auf. Eine Druckmarke 11 ist im Vorangegangenen und im Folgenden eine Marke beispielsweise zum Überprüfen eines Passers und/oder eines Registers und/oder bevorzugt zur Ausrichtung des Bogens 02 in Transportrichtung T und/oder Querrichtung A.

Unter einem Aggregat 100; 200; 300; 400; 500; 600; 650; 700; 800; 900 ist bevorzugt jeweils eine Gruppe von Einrichtungen zu verstehen, die funktionell zusammenwirken, insbesondere um einen bevorzugt in sich geschlossenen Bearbeitungsvorgang von zumindest einem Substrat 02 durchführen zu können. Vorzugsweise umfasst ein Aggregat 100; 200; 300; 400; 500; 600; 650; 700; 800; 900 jeweils einen Maschinenabschnitt der Bearbeitungsmaschine 01, welcher bevorzugt von weiteren Maschinenabschnitten zumindest teilweise räumlich trennbar angeordnet ist.

Ein System 1000; 1100; 1200 der Bearbeitungsmaschine 01 ist bevorzugt zumindest eine Einrichtung, welche mit zumindest einem Aggregat 100; 200; 300; 400; 500; 600; 650; 700; 800; 900, bevorzugt mit zumindest zwei voneinander verschiedenen Aggregaten 100; 200; 300; 400; 500; 600; 650; 700; 800; 900, der Bearbeitungsmaschine 01 zumindest zeitweise, insbesondere dauerhaft, in Kontakt steht und/oder in Wechselwirkung und/oder in Wirkverbindung treten kann.

Die Bearbeitungsmaschine 01 umfasst bevorzugt zumindest ein als Anlegeraggregat 100 ausgebildetes Aggregat 100. Bevorzugt ist das Anlegeraggregat 100 als Anleger 100, weiter bevorzugt als Bogenanleger 100, weiter bevorzugt als Bogenanlegeraggregat 100 ausgebildet. Bevorzugt ist das Anlegeraggregat 100 als das in Transportrichtung T erste Aggregat 100 der Bearbeitungsmaschine 01 ausgebildet. Bevorzugt ist das Anlegeraggregat 100 Bogen 02 auf den Transportweg der Bearbeitungsmaschine 01 zuführend ausgebildet und/oder Bogen 02 zu zumindest einem dem Anlegeraggregat 100 in Transportrichtung T nachgeordneten Aggregat 200; 300; 400; 500; 600; 650; 700; 800; 900 zuführend ausgebildet.

In Transportrichtung T nach dem zumindest einen Anlegeraggregat 100 ist bevorzugt zumindest ein als Anlageaggregat 200 ausgebildetes Aggregat 200 angeordnet. Bevorzugt ist das zumindest eine Anlageaggregat 200 zur Zuführung von Bogen 02, bevorzugt von einer sequenziellen Zuführung von Bogen 02, zu dem zumindest einen Formgebungsaggregat 300 ausgebildet. Bevorzugt weist das zumindest eine Anlageaggregat 200 zumindest eine Einrichtung zur Erfassung von Bogen 02 auf. Bevorzugt ist ein jeweiliger Bogen 02 durch das zumindest eine Anlageaggregat 200 betreffend seiner Lage in Transportrichtung T und/oder in Querrichtung A zumindest teilweise, bevorzugt vollständig, ausrichtbar.

In Transportrichtung T nach dem zumindest einen Anlegeraggregat 100 und bevorzugt nach dem zumindest einen Anlageaggregat 200 ist vorzugsweise zumindest ein als Formgebungsaggregat 300 ausgebildetes Aggregat 300 angeordnet. Bevorzugt weist das zumindest eine Formgebungsaggregat 300 zumindest ein Formgebungswerk 301 auf. Bevorzugt ist das Formgebungswerk 301 als Stanzwerk 301, weiter bevorzugt als Flachbettstanzwerk 301, ausgebildet. Das entsprechende Aggregat 300 ist dann bevorzugt als Stanzaggregat 300 und/oder Rillaggregat 300 und/oder Schneidaggregat 300 und/oder Stanze 300, weiterbevorzugt als Flachbettstanzaggregat 300 und/oder Flachbettstanze 300, ausgebildet.

Als Rillaggregat 300 wird im Vorangegangen und im Folgenden eine Einrichtung zur teilweise Durchtrennung und/oder Dickenreduzierung und/oder Abtragung des zu bearbeitenden Bogens 02, insbesondere des Verpackungsmaterials, bezeichnet. Insbesondere werden in das vorzugsweise papierhaltige oder kartonhaltige Verpackungsmaterial, insbesondere den Bogen 02, Kerben und/oder Rillungen eingebracht. Beispielsweise wird bei Wellpappe die oberste Schicht in zumindest einem Rillaggregat 300 durchtrennt. Insbesondere kann der Bogen 02, insbesondere das Verpackungsmaterial, so bevorzugt mit geringerem Kraftaufwand in eine bestimmte Form, z. B. dreidimensionale Form, geknickt und/oder gefaltet werden. Als Schneidaggregat 300 oder Stanzaggregat 300 wird bevorzugt eine Einrichtung zur Durchtrennung, bevorzugt vollständige Durchtrennung des Bogens 02, insbesondere des Verpackungsmaterials, an bestimmten Stellen bezeichnet. Insbesondere kann das zumindest eine Reststück 04; 05; 06, insbesondere das nicht benötigte Verpackungsmaterial, von den Nutzen 03 so anschließend leicht abgetrennt werden.

Das zumindest eine Formgebungswerk 301 umfasst bevorzugt zumindest ein oberes Formgebungswerkzeug, insbesondere zumindest ein oberes Stanzwerkzeug, und/oder zumindest ein unteres Formgebungswerkzeug, insbesondere zumindest ein unteres Stanzwerkzeug. Bevorzugt ist dem zumindest einen oberen Formgebungswerkzeug jeweils zumindest ein unteres Formgebungswerkzeug, bevorzugt genau ein unteres Formgebungswerkzeug, zugeordnet. Bevorzugt ist zumindest ein Formgebungswerkzeug bewegbar, bevorzugt in vertikaler Richtung V bewegbar, ausgebildet. Weiter bevorzugt ist jeweils zumindest ein oberes Formgebungswerkzeug und/oder jeweils zumindest ein unteres Formgebungswerkzeug in vertikaler Richtung V bewegbar ausgebildet. Bevorzugt ist das zumindest eine obere Formgebungswerkzeug und das zumindest eine untere Formgebungswerkzeug aufeinander und insbesondere auf den Nutzen 03 und/oder den Bogen 02 abgestimmt. Vorzugsweise, insbesondere wenn sowohl das zumindest eine obere Formgebungswerkzeug als auch das zumindest eine untere Formgebungswerkzeug bewegbar ausgebildet sind, so ist die Bewegung der jeweiligen Formgebungswerkzeuge bevorzugt zeitlich aufeinander abgestimmt und/oder abstimmbar. Bevorzugt weisen das jeweils obere Formgebungswerkzeug und das jeweils untere Formgebungswerkzeug während eines Stanzvorgangs eine gegenläufige Relativbewegung zueinander auf, sodass die Formgebungswerkzeuge in vertikaler Richtung V aufeinander zu und/oder voneinander weg relativ bewegt werden und/oder relativ bewegbar sind. Bevorzugt steht das zumindest eine obere Formgebungswerkzeug zumindest zeitweise, bevorzugt zumindest einmal pro Maschinenzyklus, weiter bevorzugt in einer geschlossenen Position des zumindest einen Formgebungswerks 301, in direktem Kontakt zu dem zumindest einen unteren Formgebungswerkzeug. Bevorzugt ist das zumindest eine obere Formgebungswerkzeug zu dem zumindest einen unteren Formgebungswerkzeug in einer geöffneten Position des Formgebungswerks 301 mit einem Abstand größer Null beabstandet.

Die Bearbeitungsmaschine 01 weist zumindest ein Antriebssystem 1000 auf. Bevorzugt steht das jeweilige Formgebungswerkzeug in Kontakt, bevorzugt in Wirkverbindung, zu dem zumindest einen Antriebssystem 1000 und/oder ist durch das Antriebssystem 1000 zumindest zeitweise, bevorzugt mit einer zyklischen Bewegung, antreibbar.

Ein Bogen 02, welcher durch das zumindest eine Formgebungsaggregat 300 bearbeitet ist, also welcher auf dem Transportweg in Transportrichtung T nach dem zumindest einen Formgebungsaggregat 300 angeordnet ist, weist bevorzugt mindestens einen Stanzeindruck auf. Der zumindest eine Stanzeindruck ist beispielsweise als Rille und/oder Riefe und/oder Prägung und/oder Schnitt und/oder Perforierung ausgebildet. Bevorzugt ist der zumindest eine Stanzeindruck, insbesondere wenn dieser als Perforierung und/oder Schnitt ausgebildet ist, zumindest teilweise den mindestens einen Nutzen 03 von mindestens einem Reststück 04; 05; 06 und/oder von mindestens einem weiteren Nutzen 03 des betreffenden Bogens 02 trennend ausgebildet. Vorzugsweise weist ein Bogen 02, welcher durch das zumindest eine Formgebungsaggregat 300 bearbeitet ist, also welcher auf dem Transportweg in Transportrichtung T nach dem zumindest einen Formgebungsaggregat 300 angeordnet ist, den zumindest einen Nutzen 03, bevorzugt mindestens zwei Nutzen 03, und mindestens ein Reststück 04; 05; 06 auf.

In Transportrichtung T nach dem zumindest einen Formgebungsaggregat 300, bevorzugt im Anschluss an das zumindest eine Formgebungsaggregat 300, weiter bevorzugt ohne ein weiteres Aggregat der Bearbeitungsmaschine 01 dazwischen, ist zumindest ein als Ausbrechaggregat 400 ausgebildetes Aggregat 400 angeordnet. Bevorzugt ist das zumindest eine Ausbrechaggregat 400 zum Entfernen des zumindest einen ersten Reststückes 04, bevorzugt zum Entfernen des zumindest einen Abfallstückes 04, von dem jeweiligen Bogen 02 ausgebildet. Das zumindest eine Ausbrechaggregat 400 weist zumindest ein Ausbrechwerk 401 auf.

Ein Bogen 02, welcher durch das zumindest eine Ausbrechaggregat 400 bearbeitet ist, also welcher auf dem Transportweg in Transportrichtung T nach dem zumindest einen Ausbrechaggregat 400 angeordnet ist, weist bevorzugt lediglich den zumindest einen Nutzen 03, insbesondere eine Vielzahl von Nutzen 03, und das zumindest eine zweite Reststück 06 auf. Beispielsweise weist der Bogen 02, welcher durch das zumindest eine Ausbrechaggregat 400 bearbeitet ist, zusätzlich den zumindest einen Steg 05 auf.

Dem zumindest einen Formgebungsaggregat 300, insbesondere dem zumindest einen Stanzaggregat 300, ist bevorzugt zumindest ein als Nutzentrennaggregat 500 ausgebildetes Aggregat 500 in Transportrichtung T nachgeordnet. Bei Anwesenheit des zumindest einen Ausbrechaggregats 400 ist das zumindest eine Nutzentrennaggregat 500 auch dem zumindest einen Ausbrechaggregat 400 in Transportrichtung T nachgeordnet angeordnet. Das zumindest eine Nutzentrennaggregat 500 weist zumindest ein Nutzentrennwerk 501 zur Trennung der Nutzen 03 und des zumindest einen verbleibenden Reststücks 05; 06 voneinander auf.

Weiter weist die Bogenbearbeitungsmaschine 01 bevorzugt zumindest ein Aggregat 600, insbesondere Auslageaggregat 600 zur Auslage und Stapelung der Nutzen 03, weiter bevorzugt Auslage 600, auf. Im Transportweg der Bogen 02 ist das zumindest eine Auslageaggregat 600 dem zumindest einen Stanzaggregat 300 und weiter bevorzugt dem zumindest einen Nutzentrennaggregat 500 und/oder dem zumindest einen Ausbrechaggregat 400 nachgeordnet. In einer bevorzugten Ausführungsform umfasst das zumindest eine Nutzentrennaggregat 500 das zumindest eine Auslageaggregat 600, wobei bevorzugt die beiden Aggregate 500; 600 als gemeinsames Aggregat 650 ausgebildet sind.

Weiter weist die Bogenbearbeitungsmaschine 01 bevorzugt das zumindest eine, bevorzugt als Bogeneinlageaggregat 700, ausgebildete Aggregat 700 auf. Bevorzugt ist das zumindest eine Bogeneinlageaggregat 700 dem zumindest einen Nutzentrennaggregat 500 zugeordnet und weiter bevorzugt dem zumindest einen Nutzentrennaggregat 500 in der Transportrichtung T nachgeordnet angeordnet. Durch das zumindest eine Bogeneinlageaggregat 700 wird bevorzugt zur Erhöhung der Stabilität zumindest ein Bogen 02, bevorzugt zumindest ein unbearbeiteter Bogen 02, in einen Stapel von Bogen 02 und/oder, vorzugsweise voneinander getrennten, Nutzen 03 eingeführt. Insbesondere weist die Bogenbearbeitungsmaschine 01 das Bogeneinlageaggregat 700 zur Einlage eines Bogens 02 in einen Stapel von Nutzen 03 auf. Bevorzugt umfasst das Bogeneinlageaggregat 700 zumindest eine Bogenablageeinrichtung 701. Weiter umfasst das zumindest eine Bogenablageaggregat 700 zumindest eine Bogenkassette 702, insbesondere Zwischenbogenkassette 702, zur Speicherung von, bevorzugt unbearbeiteten, Bogen 02. Das Bogeneinlageaggregat 700 kann auch dem gemeinsamen Aggregat 650 nachgeordnet angeordnet sein.

Weiter weist die Bogenbearbeitungsmaschine 01, bevorzugt zumindest ein als Reststückauslageaggregat 800, ausgebildetes Aggregat 800 zum Sammeln von Reststücken 05; 06 auf. Insbesondere ist das zumindest eine Reststück 05; 06 von dem zumindest einen, bevorzugt von sämtlichen, Nutzen 03 getrennt. Das zumindest eine Reststückauslageaggregat 800 ist bevorzugt dem Nutzentrennaggregat 700 in Transportrichtung T nachgeordnet. Weiter bevorzugt ist das zumindest eine Reststückauslageaggregat 800 dem zumindest einen Auslageaggregat 600 nachgeordnet. In einer bevorzugten Ausführungsform ist das zumindest eine Reststückauslageaggregat 800 von dem zumindest einen Bogeneinlageaggregat 700 umfasst und sind diese als ein gemeinsames Aggregat 900 ausgebildet.

Bevorzugt steht das zumindest eine Antriebssystem 1000 in Wirkverbindung mit zumindest einem System 1100, insbesondere einem Steuerungssystem 1100, und/oder dem zumindest einen Transportsystem 1200.

Das zumindest eine Antriebssystem 1000 weist bevorzugt zumindest einen Taktgeber und/oder Winkellagegeber auf, weiter bevorzugt genau einen Taktgeber und/oder Winkellagegeber. Der zumindest eine Taktgeber und/oder Winkellagegeber ist vorzugsweise einen Leitwert, beispielsweise einen virtuellen Leitwert und/oder einen Leitwert in Form von Impulsen, erzeugend ausgebildet, worüber Bewegungen von Bestandteilen der Bearbeitungsmaschine 01 aufeinander abstimmbar sind und/oder abgestimmt sind.

Weiter weist die zumindest eine Bogenbearbeitungsmaschine 01 zumindest ein als Transportsystem 1200 ausgebildetes System 1200 auf. Das zumindest eine Transportsystem 1200 führt die Bogen 02, vorzugsweise durchgängig haltend, durch die Bogenbearbeitungsmaschine 01 und insbesondere zumindest durch die Aggregate 300; 400; 500; 650. Insbesondere werden die Bogen 02 bevorzugt zumindest weitestgehend horizontal in Transportrichtung T durch die Bogenbearbeitungsmaschine 01 geführt. Das Transportsystem 1200 ist bevorzugt als Kettentransportsystem 1200 und weiter bevorzugt als Kettengreifersystem 1200 ausgebildet. Insbesondere umfasst das zumindest eine Kettentransportsystem 1200 zumindest eine Führungseinrichtung 1203, wobei die zumindest eine Führungseinrichtung 1203 bevorzugt als zumindest eine Kette 1203 ausgebildet ist. Insbesondere ist die zumindest eine Führungseinrichtung 1203 zumindest teilweise, bevorzugt vollständig, außerhalb des Transportweges angeordnet. Bevorzugt ist das Kettengreifersystem 1200 mit zumindest einem, bevorzugt mehreren, Wagen 1201, insbesondere Greiferwagen 1201, ausgebildet. Insbesondere hält die zumindest eine Führungseinrichtung 1203 den zumindest einen Greiferwagen 1201, bevorzugt alle Greiferwagen 1201, und legt die Position des zumindest einen Greiferwagens 1201 im zumindest einen Transportsystem 1200 fest. Insbesondere weist der jeweilige Greiferwagen 1201 während der Bogenführung eine in Transportrichtung T durch die zumindest eine Führungseinrichtung 1203 vorgegebene Position auf. An jedem Wagen 1201 ist bevorzugt das zumindest eine Halteelement 1202, insbesondere der zumindest eine Greifer 1202, angeordnet. Insbesondere weist jeder Greiferwagen 1201, bevorzugt in gleichen Abständen zueinander, über die Arbeitsbreite in Querrichtung A mehrere Halteelemente 1202, bevorzugt Greifer 1202, auf. Das zumindest eine Halteelement 1202 wird bevorzugt von einer offenen Position in eine geschlossene Position zum Greifen eines Bogens 02 überführt. Bevorzugt wird ein Bogen 02 von dem zumindest einen Halteelement 1202 an der Übergabeposition des zumindest einen Anlageaggregats 200 erfasst. Bevorzugt wird zur Ablage des zumindest einen zweiten Reststücks 06, bevorzugt in dem zumindest einen Reststückauslageaggregat 800, das zumindest eine Halteelement 1202 bevorzugt von einer geschlossenen Position in eine offene Position überführt. Bevorzugt weist das Kettengreifersystem 1200 eine zyklische und/oder periodische Bewegung zum Bogentransport durch die Aggregate 300; 400; 500; 650 auf. Insbesondere ist die Bewegung so periodisch und/oder zyklisch ausgebildet, dass während des Bearbeitungsschritts in einem der Aggregate 300; 400; 500; 650 der Bogen 02 und/oder der Greiferwagen 1201, insbesondere der Kettengreiferwagen 1201 still steht. Insbesondere ist der zumindest eine Kettengreiferwagen 1201 und/oder der Bogen 02 zwischen den einzelnen Bearbeitungsschritten in Bewegung. Über das Steuerungssystem 1100 und das Antriebssystem 1000 ist, das Transportsystem 1200 mit den Transportmitteln der einzelnen Aggregate gekoppelt und synchronisiert.

Das zumindest eine Antriebssystem 1000 umfasst zumindest einen Antrieb 1001. Beispielsweise ist der zumindest eine Antrieb 1001 als zentraler Antrieb der Bearbeitungsmaschine 01 ausgebildet. Vorzugsweise weist das Antriebssystem 1000 einen als Zentralantrieb ausgebildeten Antrieb 1001 auf. Der zumindest eine Antrieb 1001 ist bevorzugt zur Übertragung von Drehmoment und/oder von linearer Bewegung auf zumindest einen Bestandteil zumindest eines Aggregates 100; 200; 300; 400; 500; 600; 650; 700; 800; 900, beispielsweise zumindest ein Transportmittel 103; 104; 108; 204, und/oder auf zumindest einen Bestandteil des Transportsystems 1200 ausgebildet. Bevorzugt ist der zumindest eine Antrieb 1001 zur Übertragung von Drehmoment und/oder von linearer Bewegung auf zumindest zwei voneinander verschiedene Bestandteile eines selben Aggregates 100; 200; 300; 400; 500; 600; 650; 700; 800; 900 und/oder zweier voneinander verschiedener Aggregate 100; 200; 300; 400; 500; 600; 650; 700; 800; 900 und/oder auf zumindest einen Bestandteil des Transportsystems 1200 ausgebildet. Der zumindest eine Antrieb 1001 steht bevorzugt in Kontakt und/oder in Wirkverbindung zu zumindest einem zumindest zeitweise zu bewegenden Bestandteil zumindest eines Aggregates 100; 200; 300; 400; 500; 600; 650; 700; 800; 900 und/oder zu zumindest einem Bestandteil des Transportsystems 1200. Der zumindest eine Antrieb 1001 des zumindest einen Antriebssystems 1000 ist bevorzugt mit zumindest einem zu bewegenden Bestandteil zumindest eines Aggregates 100; 200; 300; 400; 500; 600; 650; 700; 800; 900, bevorzugt mit allen durch den jeweiligen Antrieb 1001 zu bewegenden Bestandteilen des jeweiligen Aggregates 100; 200; 300; 400; 500; 600; 650; 700; 800; 900 oder der jeweiligen Aggregate 100; 200; 300; 400; 500; 600; 650; 700; 800; 900, und/oder mit zumindest einem zu bewegenden Bestandteil des Transportsystems 1200 derart verknüpft und/oder verknüpfbar, dass der jeweilige zu bewegende Bestandteil, bevorzugt alle jeweiligen durch den Antrieb 1001 zu bewegenden Bestandteile, aufeinander abgestimmt betreibbar sind und/oder betrieben werden.

Bevorzugt ist das zumindest eine Antriebssystem 1000 zyklische und/oder periodische Bewegungen auf zumindest einen Bestandteil zumindest eines Aggregates 100; 200; 300; 400; 500; 600; 650; 700; 800; 900 und/oder des Transportsystems 1200 aufgrund des zumindest einen Antriebs 1001 übertragend ausgebildet.

In einer bevorzugten Ausführung umfasst das zumindest eine Antriebssystem 1000 genau einen Antrieb 1001, welcher vorzugsweise mit voneinander verschiedenen Bestandteilen von voneinander verschiedenen Aggregaten 100; 200; 300; 400; 500; 600; 650; 700; 800; 900 und/oder mit zumindest einem Bestandteil des Transportsystems 1200 verknüpft ist.

Bevorzugt ist der zumindest eine Antrieb 1001 des Antriebsystems 1000 als Elektromotor, weiter bevorzugt als Servomotor, ausgebildet.

Bevorzugt weist die Bogenbearbeitungsmaschine 01 zumindest ein System 1100, insbesondere zumindest ein Steuerungssystem 1100, zur Steuerung und/oder zur Regelung auf. Das zumindest eine Steuerungssystem 1100 steht beispielsweise in Wirkverbindung mit den Aggregaten 100; 200; 300, 400; 500; 600; 650; 700; 800; 900 und dem zumindest einen Antrieb 1001. Die mehreren Aggregate 100; 200; 300; 400; 500; 600; 650; 700; 800; 900 stehen bevorzugt über das zumindest eine Steuerungssystem 1100 miteinander in Wirkverbindung und sind aufeinander abstimmbar und/oder können aufeinander abgestimmt werden. Die Bogenbearbeitungsmaschine 01 umfasst mehrere Sensoren, wobei deren Eingangssignale im zumindest einen Steuerungssystem 1100 erfasst und verarbeitet werden. Beispielsweise wird über das zumindest eine Steuerungssystem 1100 zumindest ein Ausgangssignal erzeugt, welches zumindest einen Bestandteil eines Aggregats 100; 200; 300, 400; 500; 600; 650; 700; 800; 900 steuert und/oder regelt und/oder mit einem Bestandteil eines Aggregats 100; 200; 300; 400; 500; 600; 650; 700; 800; 900 steuernd und/oder regelnd verbunden ist. Beispielsweise kann über das zumindest eine Steuerungssystem 1100 der zumindest eine Antrieb 1001 des zumindest einen Antriebssystems 1000 und/oder eine Ausrichtung von Bogen 02 und/oder eine Zufuhr von Bogen 02 in die Bearbeitungsmaschine 01 und/oder eine Bogeneinlage in den zumindest einen Auslagestapel gesteuert und/oder geregelt werden. Ein Bediener kann beispielsweise über einen mit dem zumindest einen Steuerungssystem 1100 in Wirkverbindung stehenden Leitstand zumindest teilweise in die Betriebsweise der Bogenbearbeitungsmaschine 01 eingreifen.

Bevorzugt umfasst das zumindest eine Anlageaggregat 200 zumindest ein vorzugsweise als zumindest eine Transportrolle und/oder zumindest eine Transportbürste ausgebildetes Transportmittel. Bevorzugt werden Bogen 02 mittels des zumindest einen vorzugsweise als zumindest eine Transportrolle und/oder zumindest eine Transportbürste ausgebildeten Transportmittels des zumindest einen Anlageaggregates 200 in Transportrichtung T entlang des Transportweges von Bogen 02 hin zu einer Ausrichtposition PA transportiert.

Bevorzugt weist das Anlageaggregat 200 zumindest ein Zuführsystem 202 auf. Vorzugsweise ist das Anlageaggregat 200 dem zumindest einen Formgebungsaggregat 300 vorgeordnet. Bevorzugt ist das Anlageaggregat dem zumindest einen Anlegeraggregat 100 nachgeordnet. Bevorzugt ist das zumindest eine Zuführsystem 202 dem bevorzugt als Bogenanleger 100 ausgebildetem Anlegeraggregat 100 nachgeordnet. Das zumindest eine Zuführsystem 202 umfasst bevorzugt zumindest einen Anschlag 203, bevorzugt zumindest zwei Anschläge 203, welcher bevorzugt zumindest zeitweise innerhalb der Ebene des Transportweges an der Ausrichtposition PA angeordnet ist. Bevorzugt umfasst das zumindest eine Zuführsystem 202 zumindest ein bevorzugt als Übergabemittel 204 und/oder Haltemittel 204 ausgebildetes Transportmittel 204. Bevorzugt umfasst das zumindest eine Zuführsystem 202 das zumindest eine bevorzugt als Übergabemittel 204 und/oder Haltemittel 204 ausgebildete Transportmittel 204, welches Bogen 02 bevorzugt sequenziell von der Ausrichtposition PA zu einer Übergabeposition PU transportierend ausgebildet ist, wobei die Übergabeposition PU entlang des Transportweges in Transportrichtung T nach der Ausrichtposition PA angeordnet ist. An der Übergabeposition PU ist ein jeweiliger, vorzugsweise der zumindest eine, Bogen 02 bevorzugt an das zumindest eine Transportsystem 1200 der Bearbeitungsmaschine 01 übergebbar und/oder wird übergeben, insbesondere wenn sich zumindest ein Halteelement 1202 des Transportsystems 1200 zum Zeitpunkt der Übergabe in der Übergabeposition PU befindet. Bevorzugt wird der zumindest eine Bogen 02 an der Übergabeposition PU an das zumindest eine Halteelement 1202 des Transportsystems 1200 übergeben, bevorzugt durch das zumindest eine Transportmittel 204 des Zuführsystems 202.

Bevorzugt zusätzlich oder alternativ weist das zumindest eine Anlageaggregat 200 zumindest eine Einrichtung zur Erfassung von Bogen 02, insbesondere zumindest eine Sensoreinrichtung 251, auf. Die zumindest eine Sensoreinrichtung 251 umfasst bevorzugt zumindest einen Sensor 252, weiter bevorzugt zumindest zwei Sensoren 252, weiter bevorzugt zumindest drei Sensoren 252. Die zumindest eine Sensoreinrichtung 251 umfasst bevorzugt zumindest einen Sensor 252, weiter bevorzugt zumindest zwei Sensoren 252, weiter bevorzugt genau zwei Sensoren 252, welche in Transportrichtung T nebeneinander, also in Querrichtung A hintereinander, angeordnet sind. Bevorzugt ist der zumindest eine Sensor 252, bevorzugt die zumindest zwei Sensoren 252, außerhalb des Transportweges von Bogen 02 angeordnet und auf den Transportweg von Bogen 02 gerichtet. Bevorzugt ist der zumindest eine Sensor 252, bevorzugt die zumindest zwei Sensoren 252, wahlweise zumindest eine Druckmarke 11 und/oder zumindest eine Kante 07; 08; 09 von Bogen 02, vorzugsweise des zumindest einen Bogens 02, erfassend ausgebildet. Bevorzugt ist ein jeweiliger Sensor 252 der Sensoreinrichtung 251, bevorzugt jeder Sensor 252 der zumindest zwei Sensoren 252, wahlweise zumindest eine Druckmarke 11 des zumindest einen Bogens 02 und/oder zumindest eine Kante 07; 08; 09 des zumindest einen Bogens 02 erfassend ausgebildet. Bevorzugt ist ein jeweiliger Sensor 252 der Sensoreinrichtung 251, vorzugsweise der zumindest eine Sensor 252, weiter bevorzugt jeder Sensor 252 der zumindest zwei Sensoren 252, vorzugsweise wahlweise zumindest eine Druckmarke 11 eines jeweiligen, vorzugsweise des zumindest einen Bogens 02 und/oder zumindest eine Kante 07; 08; 09 des jeweiligen, vorzugsweise des zumindest einen, Bogens 02, insbesondere die Vorderkante 07 des jeweiligen Bogens 02 und/oder zumindest eine parallel zu der Transportrichtung T angeordnete Seitenkante 09 des jeweiligen Bogens 02, zumindest teilweise, bevorzugt in zumindest einem Erfassungsbereich 253 erfassend ausgebildet, weiter bevorzugt in einem Erfassungsbereich 253, welcher eine Fläche von maximal 10 % einer jeweiligen Oberseite und/oder Unterseite des jeweiligen, vorzugsweise des zumindest einen, Bogens 02 aufweist. Der Erfassungsbereich 253 eines Sensors 252 ist vorzugsweise diejenige Fläche innerhalb der Ebene des Transportweges, welcher durch den betreffenden Sensor 252, vorzugsweise durch den zumindest einen Sensor 252, weiter bevorzugt durch den zumindest einen Sensor 252 der zumindest zwei Sensoren 252, zumindest zeitweise erfassbar ist und/oder erfasst ist. Vorzugsweise weist der Erfassungsbereich 253 in Transportrichtung T mindestens 10 mm (zehn Millimeter), bevorzugt mindestens 15 mm (fünfzehn Millimeter), weiter bevorzugt mindestens 20 mm (zwanzig Millimeter), und/oder maximal 40 mm (vierzig Millimeter), bevorzugt maximal 30 mm (dreißig Millimeter), auf.

Die wahlweise Erfassung von zumindest einer Kante 07; 08; 09 und/oder zumindest einer Druckmarke 11 beschreibt im Vorangegangenen und im Folgenden bevorzugt, dass die zumindest eine Sensoreinrichtung 251 der Bogenbearbeitungsmaschine 01, bevorzugt mindestens einer der zumindest zwei Sensoren 252, weiter bevorzugt die zumindest zwei Sensoren 252, zumindest zwei, vorzugsweise zumindest drei, voneinander unterscheidbare Betriebszustände aufweist. In einem, beispielsweise ersten, bevorzugten Betriebszustand ist die zumindest eine Sensoreinrichtung 251, bevorzugt mindestens einer der zumindest zwei Sensoren 252, weiter bevorzugt die zumindest zwei Sensoren 252, die zumindest eine Druckmarke 11 erfassend ausgebildet. In einem, beispielsweise zweiten, Betriebszustand ist die zumindest eine Sensoreinrichtung 251, bevorzugt mindestens einer der zumindest zwei Sensoren 252, weiter bevorzugt die zumindest zwei Sensoren 252, die zumindest eine Kante 07; 08; 09 erfassend ausgebildet. In einem, beispielsweise dritten, Betriebszustand ist die zumindest eine Sensoreinrichtung 251, bevorzugt mindestens einer der zumindest zwei Sensoren 252, weiter bevorzugt die zumindest zwei Sensoren 252, die zumindest eine Druckmarke 11 und die zumindest eine Kante 07; 08; 09 erfassend ausgebildet. Vorzugsweise kann zumindest für den vorliegenden Druckauftrag, bevorzugt für den zumindest einen Bogen 02, weiter bevorzugt für jeden einzelnen Bogen 02, zwischen den zumindest zwei, vorzugsweise zumindest drei, Betriebszuständen gewählt werden. Insbesondere ist die zumindest eine Sensoreinrichtung 251, bevorzugt mindestens einer der zumindest zwei Sensoren 252, weiter bevorzugt die zumindest zwei Sensoren 252, sowohl in dem ersten Betriebszustand, also die zumindest eine Druckmarke 11 erfassend, als auch in dem zweiten Betriebszustand, also die zumindest eine Kante 07; 08; 09 erfassend, als auch in dem dritten Betriebszustand, also sowohl Druckmarke 11 als auch Kante 07; 08; 09 erfassend, betreibbar und/oder wird entweder in dem ersten Betriebszustand oder dem zweiten Betriebszustand oder dem dritten Betriebszustand betrieben.

Bevorzugt ist die zumindest eine Sensoreinrichtung 251 zumindest ein Signal erzeugend ausgebildet, welches durch das zumindest eine Steuerungssystem 1100 verarbeitet wird und/oder verarbeitbar ist. Bevorzugt ist, insbesondere aufgrund des zumindest einen Signals der zumindest einen Sensoreinrichtung 251 und/oder aufgrund zumindest eines Signals des zumindest einen Steuerungssystems 1100, das zumindest eine Anlageaggregat 200 den jeweiligen zumindest einen Bogen 02 betreffend seiner Lage in Transportrichtung T und/oder in Querrichtung A zumindest teilweise, bevorzugt vollständig, ausrichtend ausgebildet. Bevorzugt ist ein jeweiliger Bogen 02, bevorzugt der zumindest eine Bogen 02, durch das zumindest eine Anlageaggregat 200 betreffend seiner Lage in Transportrichtung T und/oder in Querrichtung A zumindest teilweise, bevorzugt vollständig, ausrichtbar. Bevorzugt ist zur Ausrichtung des zumindest einen Bogens 02 durch das zumindest eine Zuführsystem 202 das zumindest eine Signal der zumindest einen Sensoreinrichtung 251 und/oder das zumindest eine Signal des zumindest einen Steuerungssystems 1100 verarbeitbar und/oder wird verarbeitet.

Bevorzugt ist das Zuführsystem 202 für eine Zuführung von Bogen 02 zu einem in Transportrichtung T nachgeordnetem Aggregat 300; 400; 500; 600; 650; 700; 800; 900, insbesondere dem Formgebungsaggregat 300, ausgebildet. Zusätzlich wird ein Bogen 02, bevorzugt der zumindest eine Bogen 02, bevorzugt durch das Zuführsystem 202 zumindest teilweise ausgerichtet, sodass der Bogen 02 durch die in Transportrichtung T nachfolgenden Aggregate 300; 400; 500; 600; 650; 700; 800; 900 passgenau bearbeitet wird und/oder bearbeitbar ist.

Ein in dem Anlageaggregat 200 transportierter Bogen 02, bevorzugt der zumindest eine Bogen 02, wird bevorzugt zu der Ausrichtposition PA transportiert. Die Ausrichtposition PA ist vorzugsweise festgelegt durch den zumindest einen Anschlag 203, insbesondere die mindestens zwei Anschläge 203, welcher bevorzugt jeweils als Vordermarke 203 ausgebildet ist. Vorzugsweise ist die Ausrichtposition PA durch die zumindest zwei zu der Transportrichtung T horizontal und parallel nebeneinander angeordneten Vordermarken 203 festgelegt. Die zumindest zwei Vordermarken 203 sind bevorzugt in Transportrichtung T parallel nebeneinander und zueinander beabstandet angeordnet. Bevorzugt umfasst das Zuführsystem 202 in Transportrichtung T die zumindest zwei parallel zueinander angeordneten Vordermarken 203, welche den zumindest einen Bogen 02 in der Ausrichtposition PA grobausrichtend ausgebildet sind. Beispielsweise sind die zumindest zwei Vordermarken 203 als Grobausrichtmittel ausgebildet. Vorteilhafterweise werden dadurch größere Zuführfehler, beispielsweise eine Abweichung der Lage des Bogens 02 von dessen Soll-Lage von mehr als 10%, bevorzugt mehr als 15%, bevorzugt mehr als 20%, weiter bevorzugt von mehr als 30%, korrigiert.

Eine Grobausrichtung beschreibt bevorzugt eine Ausrichtung von Bogen 02, wobei der zumindest eine Bogen 02 nach erfolgter Grobausrichtung weiterhin in seiner Lage von einer Referenz abweicht. Vorzugsweise wird eine Abweichung eines vermessenen Wertes, bevorzugt der Lage, der Bogen 02, bevorzugt des zumindest einen Bogens 02, von dessen Referenz bei einer Grobausrichtung auf maximal 8 mm (acht Millimeter), bevorzugt maximal 5 mm (fünf Millimeter), weiter bevorzugt maximal 4 mm (vier Millimeter), weiter bevorzugt maximal 3 mm (drei Millimeter), reduziert.

Bevorzugt zusätzlich umfasst das Zuführsystem 202 zumindest einen Stellantrieb 218, welcher Bogen 02 feinausrichtend ausgebildet ist. Vorzugsweise umfasst das Zuführsystem 202 zumindest zwei Stellantriebe 218. Beispielsweise ist der zumindest eine Stellantrieb 218 als Feinausrichtmittel ausgebildet. Das Zuführsystem 202 umfasst bevorzugt in Transportrichtung T zumindest zwei parallel zueinander angeordnete Vordermarken 203, welche den zumindest einen Bogen 02 in der Ausrichtposition PA grobausrichtend ausgebildet sind, und den zumindest einen Stellantrieb 218, welcher Bogen 02 feinausrichtend ausgebildet ist.

Eine Feinausrichtung beschreibt bevorzugt eine Ausrichtung von Bogen 02, wobei der zumindest eine Bogen 02 nach erfolgter Feinausrichtung bevorzugt lediglich minimal, bevorzugt nicht, in seiner Lage von einer Referenz abweicht. Vorzugsweise wird eine Abweichung eines vermessenen Wertes, bevorzugt der Lage, der Bogen 02, bevorzugt des zumindest einen Bogens 02, von dessen Referenz bei einer Feinausrichtung auf maximal 1 mm (ein Millimeter), bevorzugt maximal 0,5 mm (null Komma fünf Millimeter), weiter bevorzugt maximal 0,1 mm (null Komma ein Millimeter), weiter bevorzugt maximal 0,05 mm (null Komma null fünf Millimeter), weiter bevorzugt maximal 0,01 mm (null Komma null ein Millimeter), weiter bevorzugt maximal 0,005 mm (null Komma null null fünf Millimeter), reduziert.

Zumindest zeitweise ist die zumindest eine Vordermarke 203, bevorzugt die zumindest zwei Vordermarken 203, jeweils in den Transportweg von Bogen 02 hineinragend ausgebildet und/oder ragen hinein. Bevorzugt ist die zumindest eine Vordermarke 203, bevorzugt die zumindest zwei Vordermarken 203, zumindest zeitweise in den Transportweg von Bogen 02 ragend angeordnet. Bevorzugt ist zumindest ein Teil der zumindest einen Vordermarke 203 zumindest zeitweise innerhalb der Ebene des Transportweges an der Ausrichtposition PA angeordnet. Somit bildet die zumindest eine Vordermarke 203, bevorzugt die zumindest zwei Vordermarken 203, bevorzugt zumindest zeitweise eine Sperre in Transportrichtung T für entlang des Transportweges transportierte Bogen 02, sodass bevorzugt diese Bogen 02 in Transportrichtung T an der Position der betreffenden zumindest einen Vordermarke 203 zumindest zeitweise in ihrer Bewegung behindert werden. Bevorzugt zusätzlich ist die zumindest eine Vordermarke 203, bevorzugt die zumindest zwei Vordermarken 203, zumindest zeitweise außerhalb des Transportweges von Bogen 02 schwenkbar und/oder geschwenkt und/oder schwenkend ausgebildet und/oder werden geschwenkt. Bevorzugt ist der zumindest eine Teil der zumindest einen Vordermarke 203, welcher zumindest zeitweise innerhalb der Ebene des Transportweges in der Ausrichtposition PA angeordnet ist, bevorzugt zumindest zeitweise aus der Ebene des Transportweges in der Ausrichtposition PA schwenkbar und/oder geschwenkt. Die zumindest eine Vordermarke 203, bevorzugt die zumindest zwei Vordermarken 203, ragt bevorzugt zumindest zeitweise in den Transportweg von Bogen 02 und wird bevorzugt zumindest zeitweise außerhalb des Transportweges von Bogen 02 geschwenkt.

Bevorzugt sind die zumindest zwei in Transportrichtung T zueinander parallel nebeneinander angeordnete Vordermarken 203, bevorzugt zumindest vier, weiter bevorzugt zumindest acht, weiter bevorzugt alle in Transportrichtung T zueinander parallel nebeneinander angeordnete Vordermarken 203, über zumindest eine Welle miteinander verbunden. Bevorzugt ist die Welle der Vordermarken 203 außerhalb des Transportweges von Bogen 02, insbesondere in vertikaler Richtung V unterhalb des Transportweges von Bogen 02, angeordnet. Bevorzugt ist die zumindest eine Vordermarke 203, bevorzugt über die zumindest eine Welle der Vordermarken 203, mit zumindest einem Rollenhebel 208 verbunden. Beispielsweise weist das Zuführsystem 202 der Bogenbearbeitungsmaschine 01 zumindest zwei den zumindest zwei Vordermarken 203 zugeordnete Rollenhebel 208 auf. Bevorzugt ist die jeweilige, vorzugsweise die zumindest eine, Vordermarke 203 und der zumindest eine Rollenhebel 208 vorzugsweise zumindest in und/oder entgegen der Transportrichtung T beweglich ausgebildet. Vorzugsweise ist dem jeweiligen Rollenhebel 208 jeweils zumindest eine Profilkurve 209 zugeordnet, welche bevorzugt in ihrer Lage insbesondere in Transportrichtung T fixiert ist. Vorzugsweise weist die jeweilige, vorzugsweise die zumindest eine, Profilkurve 209 insbesondere entlang der Transportrichtung T eine unterschiedliche Höhe in vertikaler Richtung V auf. Bevorzugt ist der jeweilige, vorzugsweise der zumindest eine, Rollenhebel 208 entlang der Oberfläche der ihm zugeordneten Profilkurve 209 vorzugsweise zumindest in und/oder entgegen der Transportrichtung T, insbesondere im Falle einer Bewegung des Rollenhebels 208 in und/oder entgegen der Transportrichtung T, abrollend ausgebildet.

Vorzugsweise umfasst das Zuführsystem 202 das zumindest eine bevorzugt als Übergabemittel 204 und/oder als Haltemittel 204 ausgebildete Transportmittel 204. Bevorzugt ist das zumindest eine Transportmittel 204 zumindest ein Greifer 204. Bevorzugt weist das Zuführsystem 202 zumindest zwei zueinander beabstandete Transportmittel 204 auf, weiter bevorzugt zumindest vier, weiter bevorzugt zumindest acht, beispielsweise elf, insbesondere eine Vielzahl an zueinander beabstandeten Transportmitteln 204, welche bevorzugt in Transportrichtung T horizontal nebeneinander, also in Querrichtung A hintereinander, angeordnet sind. Vorzugsweise sind die einzelnen Transportmittel 204 über zumindest eine Welle 221, insbesondere zumindest eine Greiferwelle 221, miteinander verbunden und/oder sind die einzelnen Transportmittel 204 jeweils an der zumindest einen Greiferwelle 221 befestigt. Bevorzugt ist das zumindest eine Transportmittel 204 an der zumindest einen Greiferwelle 221 befestigt. Vorzugsweise sind eine Vielzahl von zueinander in Querrichtung A beabstandeten Greifern 204 an der zumindest einen Greiferwelle 221 befestigt und/oder über die zumindest eine Greiferwelle 221 miteinander verbunden.

Vorzugsweise weist das zumindest eine Transportmittel 204 zumindest ein Übergabeelement 206; 207 auf. Bevorzugt weist das zumindest eine Transportmittel 204 jeweils zumindest eine obere Halterung 206 und/oder zumindest eine untere Halterung 207 auf. Bevorzugt ist die obere Halterung 206 als oberes Übergabeelement 206, beispielsweise als eine obere Hälfte des Greifers 204, ausgebildet. Vorzugsweise ist die obere Halterung 206 zumindest hauptsächlich in vertikaler Richtung V oberhalb der Ebene des Transportweges an der Position des Transportmittels 204 angeordnet. Bevorzugt ist die untere Halterung 207 als unteres Übergabeelement 207, beispielsweise als untere Hälfte des Greifers 204, ausgebildet. Vorzugsweise ist die untere Halterung 207 zumindest hauptsächlich in vertikaler Richtung V unterhalb der Ebene des Transportweges an der Position des Transportmittels 204 angeordnet. Vorzugsweise weist die zumindest eine obere Halterung 206 jeweils eine obere Haltefläche 233 auf, welche demjenigen Bereich der oberen Halterung 206 entspricht, welcher zumindest zeitweise in direkten Kontakt zu einem zu transportierenden Bogen 02 tritt und/oder welcher der jeweiligen, vorzugsweise der zumindest einen, unteren Halterung 207 zugewandt ist, also in vertikaler Richtung V nach unten an der betreffenden oberen Halterung 206 angeordnet ist, und/oder welcher an der Ausrichtposition PA in vertikaler Richtung V von oben kommend innerhalb der Ebene des Transportweges zumindest zeitweise anordenbar ist und/oder angeordnet ist. Vorzugsweise weist die zumindest eine untere Halterung 207 jeweils eine untere Haltefläche 234 auf, welche demjenigen Bereich der unteren Halterung 207 entspricht, welcher zumindest zeitweise in direkten Kontakt zu einem zu transportierenden Bogen 02 tritt und/oder welcher der jeweiligen, vorzugsweise der zumindest einen, oberen Halterung 206 zugewandt ist, also in vertikaler Richtung V nach oben an der betreffenden unteren Halterung 207 angeordnet ist, und/oder welcher an der Ausrichtposition PA in vertikaler Richtung V von unten kommend innerhalb der Ebene des Transportweges zumindest zeitweise anordenbar ist und/oder angeordnet ist.

Bevorzugt ist das zumindest eine jeweilige Übergabeelement 206; 207, vorzugsweise die zumindest eine obere Halterung 206 und/oder die zumindest eine untere Halterung 207 des Transportmittels 204 einen jeweiligen, vorzugsweise den zumindest einen, Bogen 02 in einem Randbereich und/oder außerhalb des zumindest einen Druckbildes des Bogens 02 zumindest zeitweise erfassend ausgebildet. Beispielsweise ergreift das zumindest eine Transportmittel 204 den zumindest einen Bogen 02 in einem Randbereich und/oder außerhalb des zumindest einen Druckbildes, bevorzugt mittels der zumindest einen oberen Halterung 206 und der zumindest einen unteren Halterung 207.

Bevorzugt ist das zumindest eine als Übergabemittel 204 und/oder als Haltemittel 204 ausgebildete Transportmittel 204 Bogen 02 sequenziell transportierend ausgebildet, insbesondere von der Ausrichtposition PA zu der Übergabeposition PU. Bevorzugt weist das insbesondere als Übergabemittel 204 und/oder als Haltemittel 204 ausgebildete Transportmittel 204 eine Geradführung und/oder Linearführung auf. Bevorzugt ist das zumindest eine Transportmittel 204 bevorzugt horizontal entlang des Transportweges in Transportrichtung T und/oder entgegen der Transportrichtung T bewegbar und/oder bewegt und/oder wird bewegt. Bevorzugt ist das zumindest eine Transportmittel 204 bevorzugt von der Ausrichtposition PA zu der Übergabeposition PU und/oder zurück sich bewegend und/oder bewegbar und/oder bewegt ausgebildet. Vorzugsweise weist das zumindest eine Transportmittel 204 bei dessen Bewegung von der Ausrichtposition PA zu der Übergabeposition PU und vorzugsweise zusätzlich zurück von der Übergabeposition PU zu der Ausrichtposition PA eine geradlinige Bewegung auf, vorzugsweise eine Vorwärtsbewegung und/oder Rückbewegung in horizontaler Ebene, bevorzugt in einer Ebene aufgespannt durch die Transportrichtung T und die Querrichtung A. Vorzugsweise vollzieht das zumindest eine Transportmittel 204 des Zuführsystems 202 einen ebenen Transport von Bogen 02. Bevorzugt erfolgt die Übergabe des zumindest einen Bogens 02 an das dem Zuführsystem 202 nachfolgende Transportsystem 1200, vorzugsweise die Übergabe des zumindest einen Bogens 02 von dem zumindest einen Transportmittel 204 des Zuführsystems 202 an das zumindest eine Halteelement 1202 des Transportsystems 1200, in einer horizontalen Ebene, bevorzugt in einer Ebene aufgespannt durch die Transportrichtung T und die Querrichtung A.

Vorzugsweise ist zumindest ein Bestandteil des Zuführsystems 202, insbesondere zumindest das zumindest eine als Übergabemittel 204 und/oder als Haltemittel 204 ausgebildete, bevorzugt als Greifer 204 ausgebildete, Transportmittel 204, in Transportrichtung T und/oder in Querrichtung A zumindest teilweise bewegbar und/oder bewegt. Vorzugsweise weist das Zuführsystem 202 zumindest einen Lagerpunkt S auf, um welchen bevorzugt zumindest ein Verbindungspunkt 219 schwenkend und/oder schwenkbar angeordnet ist, wobei der Verbindungspunkt 219 bevorzugt mit dem zumindest einen Transportmittel 204 verbunden ist. Vorzugsweise ist der zumindest eine Verbindungspunkt 219 in Abhängigkeit von einer Rotation einer vorzugsweise als Anlageantriebswelle 1002 ausgebildeten Antriebswelle 1002 um den zumindest einen Lagerpunkt S schwenkend und/oder schwenkbar angeordnet.

Bevorzugt ist die zumindest eine Antriebswelle 1002 mit dem zumindest einen Antrieb 1001 des Antriebssystems 1000 verbunden und/oder durch den zumindest einen Antrieb 1001 zumindest zeitweise, bevorzugt dauerhaft, angetrieben. Das zumindest eine Antriebssystem 1000 weist bevorzugt den zumindest einen Taktgeber und/oder Winkellagegeber und/oder zumindest einen Drehgeber auf, weiter bevorzugt genau einen Taktgeber und/oder Winkellagegeber und/oder Drehgeber. Bevorzugt ist die zumindest eine Antriebswelle 1002 als Eintourenwelle 1002 ausgebildet und vollzieht pro Maschinenzyklus genau eine vollständige Rotation um 360° um eine Rotationsachse D der Antriebswelle 1002.

Vorzugsweise weist das Zuführsystem 202 zumindest ein Getriebe, bevorzugt zumindest ein Kurvengetriebe, auf, vorzugsweise um die Bewegung in und/oder entgegen der Transportrichtung T und vorzugsweise zusätzlich oder alternativ in und/oder entgegen Querrichtung A durchzuführen. Bevorzugt umfasst das zumindest eine Zuführsystem 202 der Bogenbearbeitungsmaschine 01 das zumindest eine Kurvengetriebe, bevorzugt zur zumindest teilweisen Übertragung einer Bewegung von der Antriebswelle 1002 auf das zumindest eine Übergabemittel 204 des Zuführsystems 202. Bevorzugt ist die zumindest eine Antriebswelle 1002, vorzugsweise durch deren Drehbewegung, bevorzugt aufgrund des zumindest einen Antriebs 1001, eine bevorzugt kontinuierliche Bewegung, beispielsweise einen festen Hub, des Kurvengetriebes erzeugend ausgebildet. Bevorzugt zusätzlich oder alternativ umfasst das zumindest eine Zuführsystem 202 zumindest einen von der Antriebswelle 1002, bevorzugt von dem zumindest einen Antrieb 1001, unabhängigen Stellantrieb 218. Vorzugsweise ist der zumindest eine Stellantrieb 218 mechanisch unabhängig, bevorzugt mechanisch entkoppelt, von der Antriebswelle 1002, bevorzugt dem zumindest einen Antrieb 1001.

Bevorzugt umfasst das zumindest eine Zuführsystem 202 der Bogenbearbeitungsmaschine 01 das zumindest eine Kurvengetriebe. Vorzugsweis weist das zumindest eine Zuführsystem 202 zumindest zwei Kurvengetriebe auf. Bevorzugt weist das zumindest eine Kurvengetriebe zumindest eine Kurvenscheibe 212; 223 auf.

Vorzugsweise weist zumindest eines der Kurvengetriebe zumindest eine Kurvenscheibe 212 auf. Bevorzugt ist das zumindest eine Kurvengetriebe jeweils als Kurvenscheibengetriebe, bevorzugt mit zumindest einer Kurvenscheibe 212, ausgebildet. Bevorzugt umfasst das zumindest eine Kurvengetriebe jeweils die zumindest eine Kurvenscheibe 212 und eine Rotationsachse D der zumindest einen Kurvenscheibe 212. Bevorzugt ist das Kurvengetriebe mit der zumindest einen Antriebswelle 1002 verbunden. Bevorzugt ist das zumindest eine Kurvengetriebe durch den zumindest einen Antrieb 1001, vorzugsweise über die zumindest eine Antriebswelle 1002, bevorzugt kontinuierlich angetrieben. Die Rotationsachse D der Antriebswelle 1002 ist bevorzugt identisch zu der Rotationsachse D der zumindest einen Kurvenscheibe 212 des zumindest einen Kurvengetriebes. Bevorzugt ist die zumindest eine Kurvenscheibe 212 konzentrisch um die zumindest eine Antriebswelle 1002 angeordnet. Vorzugsweise vollzieht somit die zumindest eine Kurvenscheibe 212 des zumindest einen Kurvengetriebes jeweils eine vollständige Rotation um die Rotationsachse D pro Maschinenzyklus. Bevorzugt umfasst das zumindest eine Kurvengetriebe zumindest zwei Kurvenscheiben 212, bevorzugt jeweils genau zwei Kurvenscheiben 212.

Bevorzugt ist der zumindest eine Antrieb 1001 der zumindest einen Antriebswelle 1002 des Kurvengetriebes mit zumindest einem Antrieb des dem Zuführsystem 202 in Transportrichtung T von Bogen 02 nachgeordneten Transportsystems 1200 mechanisch verbunden. Beispielsweise weisen die Antriebswelle 1002 und das dem Zuführsystem 202 in Transportrichtung T von Bogen 02 nachgeordnete Transportsystem 1200 einen gemeinsamen Antrieb 1001 auf, mit welchem sie bevorzugt über beispielsweise voneinander verschiedene Getriebe verbunden sind. Bevorzugt ist der Bewegungsablauf des Zuführsystems 202 zumindest teilweise mit dem Bewegungsablauf des in Transportrichtung T von Bogen 02 nachgeordneten Transportsystems 1200 gekoppelt und/oder aufeinander abgestimmt.

Bevorzugt ist an der zumindest einen Kurvenscheibe 212 jeweils zumindest ein Abtastelement 213 anliegend angeordnet und/oder liegt an. Bevorzugt ist das zumindest eine Abtastelement 213 jeweils als Rolle ausgebildet. Vorzugsweise ist das jeweilige, vorzugsweise das zumindest eine, Abtastelement 213 zumindest einem Antriebshebel 214 zugeordnet. Bevorzugt umfasst das Zuführsystem 202 den der jeweiligen, vorzugsweise der zumindest einen, Kurvenscheibe 212 zugeordneten zumindest einen Antriebshebel 214. Das zumindest eine Abtastelement 213 des zumindest einen Antriebshebels 214 ist bevorzugt an jeweils einer Kurvenscheibe 212 des jeweiligen, vorzugsweise zumindest einen, Kurvengetriebes dauerhaft spielfrei anliegend ausgebildet. Insbesondere während das Abtastelement 213 spielfrei an der zumindest einen Kurvenscheibe 212 anliegt, weist vorzugsweise der Schwerpunkt des zumindest einen Abtastelements 213 zu der Rotationsachse D der Antriebswelle 1002 einen Abstand L213 auf, welcher sich vorzugsweise während einer Rotation der zumindest einen Kurvenscheibe 212 um deren Rotationsachse D verändert. Der zumindest eine Antriebshebel 214 weist vorzugsweise jeweils den zumindest einen Lagerpunkt S auf. Der zumindest eine Lagerpunkt S ist bevorzugt als Schwenkpunkt S des Antriebshebels 214 und/oder als Schwenkachse S des Antriebshebels 214 ausgebildet. Die Schwenkachse S ist vorzugsweise parallel zu der Querrichtung A orientiert. Vorzugsweise ist das zumindest eine Abtastelement 213 an einer zu dem Lagerpunkt S beabstandeten Position entlang des Antriebhebels 214 angeordnet und um den Lagerpunkt S schwenkend und/oder schwenkbar ausgebildet.

Vorzugsweise ist das zumindest eine Abtastelement 213 über den zumindest einen Antriebshebel 214 mit dem zumindest einen Transportmittel 204 verbunden. Bevorzugt ist der zumindest eine Antriebshebel 214 jeweils über zumindest eine Koppel 216 mit dem zumindest einen Transportmittel 204 verbunden. Vorzugsweise weisen der zumindest eine Antriebshebel 214 und die zumindest eine Koppel 216 den zumindest einen Verbindungspunkt 219 zueinander auf. Vorzugsweise ist der zumindest eine Verbindungspunkt 219 jeweils zu dem zumindest einen Abtastelement 213 und/oder zu dem Lagerpunkt S entlang des Antriebshebels 214 beabstandet positioniert und bevorzugt um den Lagerpunkt S schwenkend und/oder schwenkbar ausgebildet.

Bevorzugt ist der zumindest eine Antriebshebel 214 zumindest eine Rotationsbewegung des Kurvengetriebes durch das zumindest Abtastelement 213 abtastend ausgebildet. Bevorzugt zusätzlich oder alternativ ist der zumindest eine Antriebshebel 214 die zumindest eine Rotationsbewegung des Kurvengetriebes in zumindest eine lineare Bewegung des Übergabemittels 204 überführend ausgebildet. Bevorzugt ist der zumindest eine Antriebshebel 214 die zumindest eine Rotationsbewegung des Kurvengetriebes auf den Verbindungspunkt 219 übertragend ausgebildet, wodurch bevorzugt die zumindest eine zugeordnete Koppel 216 bevorzugt in zumindest eine vorzugsweise zumindest hauptsächlich lineare Bewegung versetzt wird, bevorzugt mit einer Hauptkomponente der Bewegungsrichtung in und/oder entgegen der Transportrichtung T.

Bevorzugt ist zumindest ein Kurvengetriebe der Kurvengetriebe des Zuführsystems 202 als Doppelkurvengetriebe, bevorzugt mit jeweils zumindest zwei Kurvenscheiben 212, ausgebildet. Bevorzugt ist das zumindest eine Kurvengetriebe als Doppelkurvengetriebe, bevorzugt mit jeweils zumindest zwei Kurvenscheiben 212, ausgebildet. Vorzugsweise sind die zumindest zwei Kurvenscheiben 212 des zumindest einen Doppelkurvengetriebes in Querrichtung A hintereinander angeordnet. Bevorzugt ist an jeder der zumindest zwei Kurvenscheiben 212 des Doppelkurvengetriebes jeweils zumindest ein Abtastelement 213 spielfrei anliegend, insbesondere dauerhaft spielfrei anliegend, angeordnet. Vorzugsweise sind die zumindest zwei Abtastelemente 213 des Doppelkurvengetriebes an einem gemeinsamen Antriebshebel 214 angeordnet. Bevorzugt sind die zumindest zwei Abtastelemente 213 des Doppelkurvengetriebes an einem gemeinsamen Antriebshebel 214 mit dem Lagerpunkt S dazwischen angeordnet. Das zumindest eine Abtastelement 213 des zumindest einen Antriebshebels 214 ist bevorzugt an jeweils einer Kurvenscheibe 212 des jeweiligen, vorzugsweise zumindest einen, Kurvengetriebes dauerhaft spielfrei anliegend ausgebildet. Bevorzugt ist das jeweilige, vorzugsweise das zumindest eine, Abtastelement 213 ohne eine Federung dauerhaft spielfrei an der jeweiligen, vorzugsweise zumindest einen, Kurvenscheibe 212 anliegend ausgebildet. Bevorzugt liegt jeweils ein Abtastelement 213 der zumindest zwei Abtastelemente 213 eines Antriebshebels 214 an jeweils einer Kurvenscheibe 212 des Doppelkurvengetriebes dauerhaft spielfrei an. Vorzugsweise ist das jeweils zumindest eine weitere Abtastelement 213 als Andrückelement des jeweiligen zumindest einen anderen Abtastelements 213 ausgebildet. Vorzugsweise ist der Abstand L213 von dem jeweiligen, vorzugsweise dem zumindest einen, Abtastelement 213 zu der Rotationsachse D der Antriebswelle 1002 für das einer ersten Kurvenscheibe 212 zugeordnete Abtastelement 213 verschieden von dem Abstand L213 für das einer zweiten Kurvenscheibe 212 zugeordnete Abtastelement 213 des selben Kurvengetriebes.

Vorzugsweise weist die zumindest eine Kurvenscheibe 212 jeweils zumindest zwei, bevorzugt zumindest drei, weiter bevorzugt zumindest vier, Bereiche auf, wobei aneinander angrenzende Bereiche voneinander verschiedene Radien aufweisen. Bevorzugt weist die zumindest eine Kurvenscheibe 212 zu ihrer Rotationsachse D entlang ihres Umfangs zumindest zwei voneinander verschiedene Radien auf. Beispielsweise weist die zumindest eine Kurvenscheibe 212 jeweils entlang ihres Umfangs zumindest eine Vertiefung und/oder zumindest eine Erhöhung und/oder zumindest eine Nocke gegenüber den umliegenden Bereichen auf. Bevorzugt ist eine Kurvenfunktion des Umfangs der zumindest einen Kurvenscheibe 212 in allen Punkten entlang ihrer Bogenlänge stetig, bevorzugt stetig differenzierbar. Bevorzugt ist die Kurvenfunktion der zumindest einen Kurvenscheibe 212 jeweils einem Bewegungsprofil des zumindest einen Transportmittels 204, welches Bogen 02 an das dem Zuführsystem 202 in Transportrichtung T nachgeordnetes Transportsystem 1200 übergebend ausgebildet ist, entsprechend ausgebildet. Vorzugsweise entspricht die Kurvenfunktion, bevorzugt jeweils zumindest ein Bereich, der zumindest einen Kurvenscheibe 212 einer Bewegung des zumindest einen Transportmittels 204 von der Ausrichtposition PA zu der Übergabeposition PU und umgekehrt, sowie der Verweilzeit des zumindest einen Transportmittels 204 in der Ausrichtposition PA und/oder in der Übergabeposition PU.

Vorzugsweise sind die zumindest zwei Kurvenscheiben 213 des Doppelkurvengetriebes zumindest um einen Drehwinkel zueinander verschoben. Vorzugsweise sind die zumindest zwei Kurvenscheiben 213 des Doppelkurvengetriebes zumindest um einen Drehwinkel zueinander verschoben, sodass bevorzugt die gemeinsame Projektion der zumindest zwei Kurvenscheiben 213 eines Doppelkurvengetriebes in eine Ebene aufgespannt durch die Transportrichtung T und die vertikale Richtung V eine größere Fläche aufweist als die Projektion von einer einzelnen der zumindest zwei Kurvenscheiben 213 in dieselbe Ebene. Bevorzugt ist zumindest eine Kurvenscheibe 213 des Doppelkurvengetriebes als Federersatz für den zumindest einen Antriebshebel 214 ausgebildet, sodass jeweils zumindest ein, bevorzugt jedes, Abtastelement 213 des Antriebshebels 214 an jeweils einer Kurvenscheibe 213 des Doppelkurvengetriebes dauerhaft spielfrei anliegt.

Bevorzugt weist das Abtastelement 213 zu der Rotationsachse D der Antriebswelle 1002 einen minimalen Abstand L213 auf, wenn der Radius der zugeordneten Kurvenscheibe 212 in dem Bereich, welcher zu diesem Zeitpunkt dem betreffenden Abtastelement 213 zugewandt ist, minimal ist. Bevorzugt weist das Abtastelement 213 zu der Rotationsachse D der Antriebswelle 1002 einen maximalen Abstand L213 auf, wenn der Radius der zugeordneten Kurvenscheibe 212 in dem Bereich, welcher zu diesem Zeitpunkt dem betreffenden Abtastelement 213 zugewandt ist, maximal ist. Vorzugsweise ist der zumindest eine Antriebshebel 214 um seinen Lagerpunkt S schwenkend ausgebildet. Bevorzugt ist der zumindest eine Antriebshebel 214 entsprechend des Abstands L213 des zumindest einen Abtastelements 213 zu der Rotationsachse D der Antriebswelle 1002 um seinen Lagerpunkt S schwenkend ausgebildet.

Durch das Abtasten des Umfangs der zumindest einen Kurvenscheibe 212 mit dem zumindest einen Abtastelement 213, insbesondere einem Abrollen des bevorzugt als Rolle ausgebildeten Abtastelements 213 auf der jeweiligen Kurvenscheibe 212, wird der zumindest eine zugeordnete Antriebshebel 214 um dessen Lagerpunkt S geschwenkt. Bevorzugt wird der Antriebshebel 214 durch das Profil der zumindest einen Kurvenscheibe 212 von seiner bisherigen Position um seinen Lagerpunkt S ausgelenkt. Ebenso schwenkt somit der Verbindungspunkt 219 um den Lagerpunkt S. Die zumindest eine mit dem Verbindungspunkt 219 verbundene Koppel 216 wird bewegt, wobei bevorzugt die jeweilige Bewegungsrichtung eine größte Komponente ihrer Orientierung in und/oder entgegen der Transportrichtung T aufweist. Das zumindest eine Transportmittel 204 wird somit bevorzugt entlang dessen Linearführung in und/oder entgegen der Transportrichtung T bewegt. Vorzugsweise wird das zumindest eine Transportmittel 204 in und/oder entgegen der Transportrichtung T durch ein Schwenken des zumindest einen Antriebshebels 214 um dessen Lagerpunkt S bewegt und/oder ist sich bewegend ausgebildet. Vorzugsweise wird das zumindest eine Transportmittel 204 in und/oder entgegen der Transportrichtung T durch das Profil der zumindest einen Kurvenscheibe 212 bewegt und/oder ist sich bewegend ausgebildet.

Der Lagerpunkt S des zumindest einen Antriebshebels 214 weist bevorzugt zu der Rotationsachse D der Antriebswelle 1002 und/oder der Rotationsachse D der zumindest einen Kurvenscheibe 212 einen konstanten Abstand auf.

Bevorzugt sind der Lagerpunkt S und die Rotationsachse D relativ zueinander verstellbar und/oder verstellt und/oder verstellend ausgebildet und/oder werden relativ zueinander verstellt. Weiter bevorzugt sind der Lagerpunkt S und die Rotationsachse D relativ zueinander schwenkbar und/oder geschwenkt und/oder schwenkend ausgebildet und/oder werden vorzugsweise relativ zueinander geschwenkt. Vorzugsweise verändert das relative Schwenken des Lagerpunkts S und der Rotationsachse D zueinander, bevorzugt ein Schwenken des Lagerpunkts S um die Rotationsachse D, eine relative Position des Lagerpunkts S und der Rotationsachse D zueinander. Eine relative Position des zumindest einen Transportmittels 204 ist bevorzugt durch das relative Verstellen, bevorzugt Schwenken, des Lagerpunkts S und der Rotationsachse D, weiter bevorzugt ein Schwenken des Lagerpunkts S um die Rotationsachse D, zueinander veränderbar und/oder verändert ausgebildet und/oder wird verändert.

Das zumindest eine Zuführsystem 202 umfasst bevorzugt den zumindest einen Stellantrieb 218. Das Zuführsystem 202 umfasst bevorzugt jeweils zumindest zwei in Transportrichtung T zueinander parallel angeordnete Kurvengetriebe an der zumindest einen Antriebswelle 1002 und/oder bevorzugt zumindest einen, bevorzugt zwei, von der Antriebswelle 1002 unabhängigen Stellantrieb 218, welcher vorzugsweise jeweils einem der Kurvengetriebe zugeordnet ist. Der zumindest eine Stellantrieb 218 ist bevorzugt als Handrad oder mechanischer Antrieb oder elektrischer Antrieb, bevorzugt als Aktor und/oder Elektromotor, ausgebildet. Bevorzugt ist der zumindest eine Stellantrieb 218 unabhängig, vorzugsweise mechanisch unabhängig, weiter bevorzugt mechanisch entkoppelt, von dem zumindest einen Antrieb 1001, insbesondere unabhängig von dem Antriebssystem 1000 der Bearbeitungsmaschine 01. Bevorzugt ist der zumindest eine Stellantrieb 218 in das zumindest eine Kurvengetriebe des Zuführsystems 202, insbesondere in jeweils ein ihm zugeordnetes Kurvengetriebe, eingreifend ausgebildet und/oder greift in diese ein.

Vorzugsweise ist der zumindest eine Stellantrieb 218 über zumindest einen Schwenkhebel 217 mit dem Lagerpunkt S des zumindest einen Antriebshebels 214 verbunden. Bevorzugt ist der Schwenkhebel 217 um die Rotationsachse D der Antriebswelle 1002 schwenkend angeordnet. Vorzugsweise ist der zumindest eine Stellantrieb 218 den zumindest einen Schwenkhebel 217 um die Rotationsachse D der Antriebswelle 1002 schwenkend ausgebildet.

Vorzugsweise ist der zumindest eine Stellantrieb 218 den Lagerpunkt S relativ zu der Rotationsachse D verstellend, bevorzugt schwenkend ausgebildet. Bevorzugt ist der zumindest eine Stellantrieb 218 den Lagerpunkt S des zumindest einen Antriebshebels 214 relativ zu der Rotationsachse D der Antriebswelle 1002 und/oder der Rotationsachse D der zumindest einen Kurvenscheibe 212 verstellend, bevorzugt schwenkend, ausgebildet und/oder verstellt, bevorzugt schwenkt, diese relativ zueinander. Der Lagerpunkt S und die Rotationsachse D sind bevorzugt durch den zumindest einen Stellantrieb 218 relativ zueinander schwenkbar und/oder geschwenkt und/oder schwenkend angeordnet und/oder werden geschwenkt. Bevorzugt sind der Lagerpunkt S und die Rotationsachse D in Abhängigkeit von einer Erfassung des jeweiligen, bevorzugt des zumindest einen, Bogens 02 durch die zumindest eine Sensoreinrichtung 251 relativ zueinander schwenkbar und/oder geschwenkt angeordnet und/oder werden geschwenkt. Bevorzugt ist der Lagerpunkt S um die Rotationsachse D schwenkend angeordnet. Weiter bevorzugt weist der zumindest eine Lagerpunkt S eine fixierte relative Position zu dem zumindest einen Schwenkhebel 217 auf und ist bevorzugt zusammen mit dem betreffenden zumindest einen Schwenkhebel 217 um die Rotationsachse D schwenkend und/oder schwenkbar und/oder geschwenkt angeordnet.

Bevorzugt ist aufgrund der Steuerung und/oder Regelung des zumindest einen Stellantriebs 218 eine Bewegung übertragen von der zumindest einen Antriebswelle 1002 auf das zumindest eine Übergabemittel 204 zumindest zeitweise durch eine Bewegung übertragen von dem zumindest einen Stellantrieb 218 überlagerbar und/oder überlagert. Bevorzugt ist aufgrund der Steuerung und/oder Regelung des zumindest einen Stellantriebs 218 eine Bewegung, welche von der zumindest einen Antriebswelle 1002 auf das zumindest eine Übergabemittel 204 übertragen wird und/oder ist, zumindest zeitweise durch eine Bewegung, welche von dem zumindest einen Stellantrieb 218 auf das zumindest eine Übergabemittel 204 übertragen wird und/oder ist, überlagerbar und/oder überlagert. Bevorzugt ist durch eine Bewegung des zumindest einen Stellantriebs 218 eine Bewegung übertragen von der zumindest einen Antriebswelle 1002 auf das zumindest eine Übergabemittel 204 überlagert und somit ist bevorzugt zumindest ein Lagefehler des jeweiligen Bogens 02, vorzugsweise des zumindest einen Bogens 02 der Bogen 02, ausgleichbar und/oder wird ausgeglichen. Bevorzugt ist der zumindest eine Stellantrieb 218 in eine Bewegung übertragen von der zumindest einen Antriebswelle 1002, bevorzugt erzeugt durch den zumindest einen Antrieb 1001, auf das zumindest eine Transportmittel 204 eingreifend, bevorzugt diese verändernd, weiter bevorzugt diese Bewegung überlagernd, ausgebildet und/oder greift ein.

Bevorzugt transportiert das zumindest eine Transportmittel 204 Bogen 02 von der Ausrichtposition PA zu der Übergabeposition PU. Vorzugsweise ist der Transportweg des zumindest einen Bogens 02 horizontal. Bevorzugt erfolgt die Transportbewegung des zumindest einen Transportmittels 204, insbesondere von der Ausrichtposition PA zu der Übergabeposition PU, in einer Ebene, bevorzugt aufgespannt durch die Transportrichtung T und die Querrichtung A, weiter bevorzugt horizontal. Die Bogenbearbeitungsmaschine 01 umfasst vorzugsweise das zumindest eine dem zumindest einen Zuführsystem 202 in Transportrichtung T nachgeordnete Transportsystem 1200, bevorzugt mit den zumindest zwei orthogonal zu der Transportrichtung T zueinander beabstandeten Halteelementen 1202. Das jeweilige Halteelement 1202 des Transportsystems 1200 ist bevorzugt zu jeweils einem zugeordneten Übergabeelement 206; 207 des Transportmittels 204 in der Übergabeposition PU jeweils mit einem ersten Abstand in Transportrichtung T zueinander beabstandet. Jeweils eines der zumindest zwei Halteelemente 1202 ist vorzugsweise zu jeweils einem zugeordneten Übergabeelement 206; 207 in der Übergabeposition PU mit einem ersten Abstand in Transportrichtung T beabstandet.

Durch ein Verstellen, bevorzugt Schwenken, des Lagerpunkts S und der Rotationsachse D relativ zueinander ist bevorzugt das eine Halteelement 1202 der zumindest zwei Halteelemente 1202 zu dem zugeordneten Übergabeelement 206; 207 in der Übergabeposition PU mit einem zweiten Abstand beabstandet. Durch ein Verstellen des Lagerpunkts S des zumindest einen Antriebshebels 214 und der Rotationsachse D relativ zueinander sind bevorzugt das jeweilige Halteelement 1202 des Transportsystems 1200 zu dem jeweiligen zugeordneten Übergabeelement 206; 207 in der Übergabeposition PU mit einem zweiten Abstand in Transportrichtung T zueinander beabstandet. Insbesondere unterscheidet sich der zweite Abstand für zwei in Querrichtung A zueinander beabstandete Halteelemente 1202 des Transportsystems 1200 zu dem jeweiligen zugeordneten Übergabeelement 206; 207. Vorzugsweise unterscheidet sich der zweite Abstand zweier in Querrichtung A zueinander beabstandeter Halteelemente 1202 insbesondere dann, wenn die Greiferwelle 221 nicht parallel zu der Querrichtung A angeordnet ist und/oder in einer Richtung angeordnet ist, welche sich von der Querrichtung A unterscheidet. Vorzugsweise ist der jeweilige zweite Abstand von dem ersten Abstand verschieden.

Der Lagerpunkt S und die Rotationsachse D werden bevorzugt durch den zumindest einen Stellantrieb 218, insbesondere mindestens durch den zumindest einen dem Transport von Bogen 02 zugeordneten Stellantrieb 218, weiter bevorzugt durch den zumindest einen in das zumindest eine Kurvengetriebe eingreifenden Stellantrieb 218, relativ zueinander verstellt und/oder sind relativ zueinander verstellbar. Bevorzugt werden der Lagerpunkt S und die Rotationsachse D in Abhängigkeit von der Erfassung des vorzugsweise zumindest einen, jeweiligen Bogens 02 durch die Sensoreinrichtung 251, insbesondere durch den zumindest einen Sensor 252, bevorzugt die zumindest zwei Sensoren 252, der Sensoreinrichtung 251, relativ zueinander verstellt und/oder sind relativ zueinander verstellbar. Bevorzugt ist das zumindest eine Transportmittel 204 in Abhängigkeit von der Erfassung durch die zumindest eine Sensoreinrichtung 251 in Transportrichtung T und/oder Querrichtung A verstellbar und/oder verstellend und/oder wird verstellt.

Bevorzugt tastet der zumindest eine Antriebshebel 214 die zumindest eine Rotationsbewegung des zumindest einen Kurvengetriebes durch das zumindest eine Abtastelement 213 ab. Bevorzugt zusätzlich oder alternativ überführt der zumindest eine Antriebshebel 214 vorzugsweise die zumindest eine Rotationsbewegung des zumindest einen Kurvengetriebes in zumindest eine lineare Bewegung des zumindest einen Übergabemittels 204.

Bevorzugt weist der Bogen 02, bevorzugt der zumindest eine Bogen 02, die zumindest eine Druckmarke 11, bevorzugt zumindest zwei Druckmarken 11 auf, weiter bevorzugt zumindest drei Druckmarken 11 auf. Eine Druckmarke 11 ist im Vorangegangenen und im Folgenden eine Marke beispielsweise zum Überprüfen eines Passers und/oder eines Registers und/oder bevorzugt zur Ausrichtung des Bogens 02 in Transportrichtung T und/oder Querrichtung A. Die zumindest eine Druckmarke 11 ist bevorzugt als eine Marke zum Überprüfen eines Passers, vorzugsweise als Element zur Farbsteuerung, bevorzugt zur zonalen Farbmessung, und/oder zum Überprüfen eines Registers und/oder bevorzugt zur Ausrichtung, insbesondere einer der Ausrichtung zugrunde gelegten Lagebestimmung, des zumindest einen Bogens 02 in Transportrichtung T und/oder in Querrichtung A ausgebildet.

Vorzugsweise weist der zumindest eine Bogen 02 zumindest ein Element zur Farbsteuerung, bevorzugt mindestens zwei Elemente, weiter bevorzugt mindestens vier Elemente, weiter bevorzugt zumindest so viele Elemente wie zur Erzeugung des Druckbildes verwendete Druckfarben, auf. Vorzugsweise wird als Druckfarbe mindestens eine, vorzugsweise mindestens zwei, weiter bevorzugt mindestens drei, weiter bevorzugt mindestens vier, der Farben Schwarz und/oder Gelb und/oder Rot und/oder Blau und/oder Grün und/oder Cyan und/oder Magenta und/oder Sonderfarben verwendet und/oder ist in mindestens einem Druckbild des zumindest einen Bogens 02 enthalten. Vorzugsweise weist das zumindest eine Element zur Farbsteuerung jeweils eine Druckfarbe auf. Bevorzugt ist das zumindest eine Element zur Farbsteuerung zu einer zonalen Farbmessung ausgebildet, bevorzugt mindestens einer Messung der Farbdichte, beispielsweise der optischen Farbdichte und/oder der spektralen Farbdichte, beispielsweise durch Densitometrie, und/oder einer Messung mindestens eines Spektralwerts, beispielsweise durch Spektralfotometrie, und/oder einer Messung der Flächendeckung der vorzugsweise einzelnen gedruckten Druckfarben. Vorzugsweise ist die zumindest eine Sensoreinrichtung 251 und/oder mindestens ein Sensor 252 das zumindest eine Element zur Farbsteuerung auswertend und/oder erfassend ausgebildet.

Vorzugsweise weist der zumindest eine Bogen 02 zumindest einen Druckkontrollstreifen, auch Farbmessstreifen genannt, auf. Vorzugsweise weist der zumindest eine Druckkontrollstreifen das zumindest eine Element zur Farbsteuerung, weiter bevorzugt zumindest zwei Elemente zur Farbsteuerung, weiter bevorzugt zumindest vier Elemente zur Farbsteuerung, bevorzugt Elemente zur Farbsteuerung für Volltöne und/oder Rastertöne und/oder Graubalance und/oder Vollton-Übereinanderdruck, auf. Der zumindest eine Druckkontrollstreifen weist vorzugsweise zumindest ein Element zur Farbsteuerung und/oder mindestens ein, bevorzugt mindestens zwei, weiter bevorzugt mindestens vier, Druckregisterelement, beispielsweise mindestens ein zur Einstellung von zumindest einem Druckwerk verwendetes Registerelement, und/oder zumindest eine, bevorzugt zumindest zwei, Druckmarke 11, bevorzugt zumindest eine Druckmarke 11 zumindest zur Ausrichtung des zumindest einen Bogens 02 in der Bogenbearbeitungsmaschine 01, beispielsweise in dem zumindest einen Zuführsystem 202, auf. Das zumindest eine Druckregisterelement ist vorzugsweise zum Überprüfen eines Passers und/oder eines Registers ausgebildet. Vorzugsweise sind das zumindest eine Element zur Farbsteuerung und das mindestens eine Druckregisterelement und die zumindest eine Druckmarke 11 voneinander verschiedene Elemente des zumindest einen Druckkontrollstreifens. Beispielsweise alternativ ist die zumindest eine Druckmarke 11 sowohl zur Ausrichtung des Bogens 02 in Transportrichtung T und/oder Querrichtung A als auch als mindestens ein Element zur Farbsteuerung und/oder als Druckregisterelement, beispielsweise zum Überprüfen eines Passers und/oder eines Registers, ausgebildet.

Bevorzugt ist der zumindest eine Druckkontrollstreifen in einem Bereich außerhalb des zumindest einen Druckbildes und/oder in einem Randbereich des zumindest einen Bogens 02 und/oder vorzugsweise im Bereich der Vorderkante 07 und/oder bevorzugt zu der Vorderkante 07 beabstandet auf dem zumindest einen Bogen 02 positioniert. Beispielsweise alternativ ist der zumindest eine Druckkontrollstreifen in mindestens ein Druckbild des zumindest einen Bogens 02 integriert.

Vorzugsweise wird der zumindest eine Bogen 02 so der Bogenbearbeitungsmaschine 01 zugeführt, dass die zumindest eine Druckmarke 11 und/oder der zumindest eine Druckkontrollstreifen bevorzugt in Transportrichtung T vorne und/oder vorzugsweise im Bereich der Vorderkante 07 und/oder bevorzugt zu der Vorderkante 07 beabstandet und/oder auf der Oberseite und/oder auf der Unterseite auf dem zumindest einen Bogen 02 positioniert ist.

Bevorzugt ist die zumindest eine Druckmarke 11, bevorzugt die zumindest zwei Druckmarken 11, in dem zumindest einen Druckkontrollstreifen integriert. Beispielsweise sind zumindest zwei Druckmarken 11 in dem zumindest einen Druckkontrollstreifen integriert, wobei die zumindest zwei Druckmarken 11 vorzugsweise zueinander beabstandet angeordnet sind und/oder wobei vorzugsweise zumindest ein Element zur Farbsteuerung zwischen den zumindest zwei Druckmarken 11 angeordnet ist und/oder wobei die zumindest zwei Druckmarken 11 vorzugsweise zueinander symmetrisch bezüglich einer Symmetrieachse des Druckkontrollstreifens angeordnet sind. Vorzugsweise wird durch die Integration der zumindest einen Druckmarke 11 in den zumindest einen Druckkontrollstreifen Platz auf dem Bogen 02 gespart und/oder zusätzliche Druckmarken 11 zusätzlich zu dem zumindest einen Druckkontrollstreifen eingespart. Beispielsweise ist die zumindest eine Druckmarke 11 von zumindest einem unbedruckten und/oder andersfarbigen, beispielsweise weißen, und/oder einfarbigen Bereich umgeben, insbesondere wenn die zumindest eine Druckmarke 11 in dem zumindest einen Druckkontrollstreifen integriert ist. Dadurch erhöht sich vorzugsweise der Kontrast und/oder es folgt eine einfachere Erkennung der zumindest einen Druckmarke 11 gegenüber einer Druckmarke 11, welche nicht von einem unbedruckten und/oder andersfarbigen Bereich umgeben ist.

Bevorzugt weist der jeweilige, bevorzugt der zumindest eine, Bogen 02 die zumindest eine Druckmarke 11 in einem Bereich außerhalb des zumindest einen Druckbildes auf. Bevorzugt weist der zumindest eine Bogen 02 zumindest zwei Druckmarken 11 auf, welche entlang der Vorderkante 07 des zumindest einen Bogens 02 vorzugsweise parallel zueinander, also in Transportrichtung T nebeneinander, und/oder zueinander beabstandet und/oder, bevorzugt zusätzlich, zu der Vorderkante 07 beabstandet angeordnet sind. Bevorzugt weist ein jeweiliger Bogen 02, bevorzugt der zumindest eine Bogen 02, zumindest zwei Druckmarken 11 auf, welche entlang der Vorderkante 07 des Bogens 02 parallel zueinander und zueinander beabstandet und bevorzugt zusätzlich zu der Vorderkante 07 beabstandet angeordnet sind. Beispielsweise ist die zumindest eine Druckmarke 11 mindestens 5 mm (fünf Millimeter), bevorzugt mindestens 10 mm (zehn Millimeter), und/oder maximal 20 mm (zwanzig Millimeter), bevorzugt maximal 15 mm (fünfzehn Millimeter), zu der zumindest einen Kante 07; 09 des zumindest einen Bogens 02, bevorzugt zu der Vorderkante 07, beabstandet. Bevorzugt weist ein jeweiliger Bogen 02, bevorzugt der zumindest eine Bogen 02, zumindest eine weitere Druckmarke 11 auf, welche zu zumindest einer Seitenkante 09 des Bogens 02 einen geringeren Abstand aufweist als zu dessen Vorderkante 07.

Beispielsweise alternativ oder zusätzlich ist die zumindest eine Druckmarke 11 als zumindest ein Teil des mindestens einen Druckbildes ausgebildet. Beispielsweise weist das mindestens eine Druckbild dabei zumindest ein von dessen Umgebung unterscheidbares Element auf, welches vorzugsweise als Druckmarke 11 fungiert. Durch das zumindest eine Element liegt vorzugsweise ein Kontrast im Druckbild vor, welcher durch die zumindest eine Sensoreinrichtung 251 auswertbar ist und/oder ausgewertet wird. Insbesondere ist dabei der Erfassungsbereich 253 des zumindest einen Sensors 252, beispielsweise der zumindest zwei Sensoren 252, auf das zumindest eine Druckbild, insbesondere das zumindest eine von dessen Umgebung unterscheidbare Element des Druckbildes, gerichtet. Vorzugsweise ist die zumindest eine Sensoreinrichtung 251, bevorzugt mindestens ein Sensor 252 der zumindest zwei Sensoren 252, die zumindest eine Druckmarke 11 erfassend ausgebildet und/oder erfasst diese, wobei die zumindest eine Druckmarke 11 als zumindest ein von dessen Umgebung unterscheidbares Element des zumindest einen Druckbildes des zumindest einen Bogens 02 ausgebildet ist.

Vorzugsweise weist der zumindest eine Bogen 02 mindestens die zumindest eine, weiter bevorzugt mindestens zwei, weiter bevorzugt mindestens vier, Druckmarken 11 auf. Beispielsweise weist der zumindest eine Bogen 02 die zumindest eine Druckmarke 11 in einem Bereich außerhalb des zumindest einen Druckbildes und/oder in einem Randbereich des zumindest einen Bogens 02 im Bereich der Vorderkante 07 und/oder bevorzugt zu der als Vorderkante 07 ausgebildeten Kante 07 des zumindest einen Bogens 02 beabstandet auf. Beispielsweise weist der zumindest eine Bogen 02 zumindest eine Druckmarke 11 je verwendeter Druckfarbe und/oder je verwendetem Druckwerk, beispielsweise Druckwerk der Bearbeitungsmaschine 01 oder Druckwerk einer der Bearbeitungsmaschine 01 vorgeordneten Druckmaschine, auf. Beispielsweise weist die Bearbeitungsmaschine 01 zumindest ein, bevorzugt zumindest zwei, weiter bevorzugt zumindest vier, den zumindest einen Bogen 02 bedruckende Druckwerke auf. Vorzugsweise ist das zumindest eine Druckwerk vor dem zumindest einen Formgebungsaggregat 300, weiter bevorzugt vor dem zumindest einen Anlageaggregat 200 angeordnet.

Bevorzugt weist die zumindest eine Druckmarke 11 zumindest ein zweidimensionales Element auf, bevorzugt zumindest ein linienförmiges Element. Beispielsweise ist die zumindest eine Druckmarke 11 jeweils als Balken und/oder Kreuz und/oder Rechteck und/oder QR-Code ausgebildet. Bevorzugt weist ein Bogen 02, bevorzugt der zumindest eine Bogen 02, für vorzugsweise jede Druckfarbe, mit welcher der jeweilige Bogen 02 zumindest teilweise bedruckt ist, zumindest eine Druckmarke 11 auf. Alternativ ist eine jeweilige Druckmarke 11 aus vorzugsweise zumindest zwei, bevorzugt allen, verwendeten Druckfarben zusammengesetzt. Die zumindest eine Druckmarke 11 ist bevorzugt als Rechteck, weiter bevorzugt als Quadrat, ausgebildet. Beispielsweise alternativ ist die zumindest eine Druckmarke 11 als Punkt oder Kreis ausgebildet. Vorzugsweise erfolgt eine einfache und schnelle Auswertung der zumindest einen Druckmarke 11, wenn diese zumindest eine gerade Kante oder Seite aufweist, insbesondere wenn diese als Rechteck und/oder Quadrat ausgebildet ist. Bevorzugt ist die zumindest eine Druckmarke 11 mit Druckfarbe, beispielsweise schwarz, gefüllt. Vorzugsweise ist zumindest eine Seite und/oder Achse der zumindest einen Druckmarke 11 parallel zu der Vorderkante 07 des zumindest einen Bogens 02 und/oder parallel zu der Querrichtung A angeordnet. Vorzugsweise ist zumindest eine Seite und/oder Achse der zumindest einen Druckmarke 11 parallel zu der Seitenkante 09 des zumindest einen Bogens 02 und/oder parallel zu der Transportrichtung T angeordnet. Ist die zumindest eine Druckmarke 11 beispielsweise als Rechteck, bevorzugt Quadrat, ausgebildet, ist vorzugsweise jeweils zumindest eine Seite parallel zu der Transportrichtung T und zumindest eine Seite parallel zu der Querrichtung A angeordnet. Ist die zumindest eine Druckmarke 11 beispielsweise als Kreuz ausgebildet, so ist bevorzugt jeweils zumindest eine Achse, beispielsweise die Längsachse, parallel zu der Transportrichtung T und zumindest eine Achse, beispielsweise die Querachse, parallel zu der Querrichtung A angeordnet. Vorzugsweise ermöglicht die zumindest eine Druckmarke 11 eine Mehrzahl von Messpunkten, welche zur Auswertung einer Lageinformation des zumindest einen Bogens 02 herangezogen werden können. Vorzugsweise erhöht die Anordnung der zumindest einen Druckmarke 11 und/oder die Ausbildung als Rechteck, bevorzugt Quadrat, und/oder die Ausbildung als Kreuz die Genauigkeit der Auswertung der zumindest einen Druckmarke 11. Vorzugsweise weist die zumindest eine Druckmarke 11 eine Fläche von mindestens 1,5 mm² (eins Komma fünf Quadratmillimeter), weiter bevorzugt mindestens 1,8 mm² (eins Komma acht Quadratmillimeter), weiter bevorzugt mindestens 1,9 mm² (eins Komma neun Quadratmillimeter), weiter bevorzugt mindestens 2,5 mm² (zwei Komma fünf Quadratmillimeter) auf. Vorzugsweise weist die zumindest eine Druckmarke 11 eine Fläche von maximal 25 mm² (fünfundzwanzig Quadratmillimeter), weiter bevorzugt maximal 22 mm² (zweiundzwanzig Quadratmillimeter), weiter bevorzugt von maximal 20 mm² (zwanzig Quadratmillimeter), weiter bevorzugt von maximal 17 mm² (siebzehn Quadratmillimeter), auf. Vorzugsweise ist dadurch eine optimale Erfassung der zumindest einen Druckmarke 11 möglich, da eine Unschärfe der Randbereiche der Druckmarke 11 minimiert wird und/oder da die Fläche einen ausreichenden Kontrast gegenüber ihrer Umgebung erzeugt.

Die zumindest eine Druckmarke 11 ist bevorzugt so ausgebildet, dass vorzugsweise die Lage des zumindest einen Bogens 02 in Transportrichtung T und/oder in Querrichtung A durch die zumindest eine Druckmarke 11 bestimmt ist und/oder bestimmbar ist und/oder bestimmt wird. Bevorzugt ist sowohl die Lage des zumindest einen Bogens 02 in Transportrichtung T als auch in Querrichtung A durch die zumindest eine Druckmarke 11 bestimmt und/oder bestimmbar und/oder wird bestimmt. Weiter bevorzugt ist die Lage des zumindest einen Bogens 02 in Transportrichtung T und/oder in Querrichtung A durch zumindest zwei Druckmarken 11, weiter bevorzugt durch maximal vier Druckmarken 11, weiter bevorzugt durch zwei Druckmarken 11, bestimmt und/oder bestimmbar und/oder wird bestimmt, welche zumindest zwei Druckmarken 11 bevorzugt in einem Bereich entlang der Vorderkante 07 des zumindest einen Bogens 02 auf dem zumindest einen Bogen 02 positioniert sind und/oder welche zumindest zwei Druckmarken 11 bevorzugt in Transportrichtung T parallel nebeneinander auf dem zumindest einen Bogen 02 positioniert sind und/oder welche zumindest zwei Druckmarke 11 in dem zumindest einen Druckkontrollstreifen integriert sind. Beispielsweise sind die zumindest zwei Druckmarken 11 ausreichend und/oder es ist neben den zumindest zwei Druckmarken 11 vorzugsweise keine weitere Druckmarke 11, beispielsweise seitliche Druckmarke 11, notwendig, um die Lage des zumindest einen Bogens 02 insbesondere in Querrichtung A zu bestimmen.

Ein Abstand zwischen zwei Flächen oder zwischen zwei Punkten oder zwischen einer Fläche und einem Punkt oder zwischen einer Richtung und einem weiteren Element beschreibt im Vorangegangenen und im Folgenden die kürzeste Verbindung zwischen diesen beiden Elementen.

Ein durch das Anlageaggregat 200 zu transportierender Bogen 02, bevorzugt der zumindest eine Bogen 02, weist beispielsweise bei seiner Ankunft an der Ausrichtposition PA zumindest einen Lagefehler auf. Der Lagefehler eines Bogens 02 beschreibt dabei eine Abweichung seiner Positionierung entlang des Transportweges relativ zu einer Soll-Positionierung. Dies ist beispielsweise der Fall für einen Lagefehler in Transportrichtung T, wenn der Zeitpunkt des tatsächlichen Eintreffens der Vorderkante 07 und/oder zumindest einer Druckmarke 11 des Bogens 02 an der Ausrichtposition PA von einem erwarteten und/oder geforderten Zeitpunkt des Eintreffens der Vorderkante 07 und/oder zumindest einer Druckmarke 11 des Bogens 02 abweicht. Trifft ein Bogen 02 beispielsweise zu einem späteren Zeitpunkt als erwartet und/oder gefordert an der Ausrichtposition PA ein, so befindet sich seine Vorderkante 07 und/oder die betreffende zumindest eine Druckmarke 11 zu dem erwarteten und/oder geforderten Zeitpunkt in Transportrichtung T vor deren erwarteter und/oder geforderter Position. Beispielsweise liegt ein Lagefehler des Bogens 02 ebenfalls bei einer Schieflage des Bogens 02 vor. Bei einer Schieflage des Bogens 02 weist beispielsweise dessen Vorderkante 07 zu der Querrichtung A einen Winkel von größer 0° (null Grad) auf und/oder weisen dessen Seitenkanten 09 zu der Transportrichtung T einen Winkel von größer 0° (null Grad) auf. Bei einer Schieflage des Bogens 02 weisen zumindest zwei entlang der Vorderkante 07 des Bogens 02 parallel und beabstandet zueinander angeordnete Druckmarken 11 voneinander unterschiedliche Koordinaten entlang der Transportrichtung T auf. Somit ist zumindest eine der betreffenden Druckmarken 11 in Transportrichtung T vor der jeweiligen, zumindest einen weiteren Druckmarke 11 angeordnet. Ein insbesondere seitlicher Lagefehler liegt auch vor, wenn der Bogen 02 in Querrichtung A zu seiner erwarteten und/oder geforderten Position verschoben angeordnet ist.

Ein jeweiliger Bogen 02, bevorzugt der zumindest eine Bogen 02, wird bevorzugt durch die zumindest zwei in Transportrichtung T von Bogen 02 horizontal parallel zueinander angeordnete Vordermarken 203 grobausgerichtet. Die Grobausrichtung beschreibt eine Reduzierung des Lagefehlers relativ zu der erwarteten und/oder geforderten Positionierung des Bogens 02 aufgrund des Anstoßens des Bogens 02 an den zumindest zwei Vordermarken 203 in der Ausrichtposition PA. Vorzugsweise ist ein Bogen 02 während der Grobausrichtung zumindest in vertikaler Richtung V fixiert, insbesondere durch das zumindest eine Transportmittel 204.

Bevorzugt zusätzlich oder alternativ wird ein jeweiliger, bevorzugt der zumindest eine, Bogen 02 durch das relative Verstellen des Lagerpunkts S und der Rotationsachse D zueinander feinausgerichtet. Vorzugsweise ist das zumindest eine Zuführsystem 202 den zumindest einen Bogen 02 durch das relative Verstellen des Lagerpunkts S und der Rotationsachse D zueinander feinausrichtend ausgebildet. Weiter bevorzugt zusätzlich oder alternativ wird der jeweilige, bevorzugt der zumindest eine, Bogen 02 durch das relative Verstellen, bevorzugt Schwenken, des Lagerpunkts S und der Rotationsachse D zueinander bevorzugt feinausgerichtet. Durch die Feinausrichtung des Bogens 02 ist eine registerhaltige Übergabe des Bogens 02 in der Übergabeposition PU an das zumindest eine Halteelement 1202 des Transportsystems 1200 gewährleistet. Vorzugsweise wird die relative Lage des zumindest einen Transportmittels 204 während der Ausrichtung des Bogens 02 verändert. Bevorzugt befindet sich ein feinausgerichteter Bogen 02 in dessen erwarteter und/oder geforderten Position zu dem erwarteten und/oder geforderten Zeitpunkt, bevorzugt lediglich mit minimaler Abweichung der Lage zur erwarteten und/oder geforderten Position, weiter bevorzugt ohne eine Abweichung der Lage.

Bevorzugt ist eine Positionsverlagerung des Lagerpunkts S relativ zu der Rotationsachse D zumindest einen Lagefehler des zumindest einen Bogens 02 ausgleichend ausgebildet und/oder gleicht diesen aus. Zum Ausgleich eines Lagefehlers des zumindest einen Bogens 02 sind vorzugsweise der Lagerpunkt S und die Rotationsachse D relativ zueinander bewegbar und/oder sich bewegend und/oder verstellbar und/oder verstellt und/oder verstellend ausgebildet. Bevorzugt wird der zumindest eine Antriebshebel 214 durch eine zumindest teilweise Rotation der zumindest einen Kurvenscheibe 212 ausgelenkt, vorzugsweise um dessen Lagerpunkt S geschwenkt. Bevorzugt ist das Auslenken des zumindest einen Antriebshebels 214 aufgrund der zumindest teilweisen Rotation der zumindest einen Kurvenscheibe 212 das zumindest eine Transportmittel 204 in und/oder entgegen der Transportrichtung T bewegend ausgebildet. Durch eine Positionsverlagerung des Lagerpunkts S des zumindest einen Antriebshebels 214 und der Rotationsachse D der zumindest einen Kurvenscheibe 212 relativ zueinander ist bevorzugt zusätzlich zu einem Auslenken des zumindest einen Antriebshebels 214 aufgrund einer zumindest teilweisen Rotation der zumindest einen Kurvenscheibe 212 zumindest ein Lagefehler des jeweiligen Bogens 02, insbesondere zumindest ein Lagefehler der Vorderkante 07 und/oder zumindest einer Druckmarke 11 in Transportrichtung T und/oder bei einer Schieflage des jeweiligen Bogens 02, ausgleichbar und/oder ausgeglichen und/oder wird ausgeglichen. Bevorzugt ist das zumindest eine Kurvengetriebe durch das Antriebssystem 1000, bevorzugt mittels des zumindest einen Antriebs 1001, weiter bevorzugt mittels der zumindest einen Antriebswelle 1002, bevorzugt kontinuierlich angetrieben. Der zumindest eine Stellantrieb 218 verstellt bevorzugt die Position des Lagerpunkts S relativ zu der Position der Rotationsachse D bevorzugt bei aufrechterhaltener Betriebssituation des Kurvengetriebes durch das Antriebssystem 1000. Der zumindest eine Stellantrieb 218 verstellt bevorzugt die Position des Lagerpunkts S relativ zu der Position der Rotationsachse D bevorzugt während die zumindest eine Kurvenscheibe 212 durch die zumindest eine Antriebswelle 1002, bevorzugt durch den zumindest einen Antrieb 1001, angetrieben wird, bevorzugt rotiert wird.

Bevorzugt umfasst das zumindest eine Zuführsystem 202 zumindest zwei Kurvengetriebe. Vorzugsweise umfasst das zumindest eine Zuführsystem 202 jeweils zumindest zwei in Transportrichtung T zueinander parallel angeordnete Kurvengetriebe an der zumindest einen Antriebswelle 1002. Bevorzugt erfolgt durch die zumindest zwei Kurvengetriebe ein paralleles Abgreifen des Antriebsmoments von der zumindest einen Antriebswelle 1002. Zusätzlich oder alternativ umfasst das zumindest eine Zuführsystem 202 bevorzugt zumindest zwei von der Antriebswelle 1002 unabhängige Stellantriebe 218, welche bevorzugt jeweils einem der Kurvengetriebe zugeordnet sind. Bevorzugt zusätzlich oder alternativ umfasst das zumindest eine Zuführsystem 202 die zumindest zwei Stellantriebe 218, welche bevorzugt unabhängig von dem zumindest einen Antrieb 1001 betrieben sind. Bevorzugt sind die zumindest zwei Stellantriebe 218 jeweils in eines der zumindest zwei Kurvengetriebe eingreifend, bevorzugt den Lagerpunkt S relativ zu der Rotationsachse D verstellend, ausgebildet.

Zumindest ein Stellantrieb 218 wird bevorzugt zumindest bei einem Ausgleich einer Schieflage des Bogens 02 angesteuert und/oder geregelt. Bevorzugt erzeugt der zumindest eine Stellantrieb 218 eine größere relative Verlagerung des Lagerpunkts S und der Rotationsachse D zueinander als ein weiterer Stellantrieb 218, welcher bevorzugt zu dem selben Zeitpunkt angesteuert und/oder geregelt wird. Vorzugsweise ist der zumindest eine Stellantrieb 218 zumindest bei einem Ausgleich einer Schieflage des Bogens 02 ansteuerbar und/oder angesteuert und/oder regelbar und/oder geregelt ausgebildet.

Bevorzugt zusätzlich oder alternativ sind zumindest zwei Stellantriebe 218 zumindest bei einem Ausgleich eines Lagefehlers in Transportrichtung T ansteuerbar und/oder angesteuert und/oder regelbar und/oder geregelt ausgebildet und/oder werden angesteuert und/oder werden geregelt. Bevorzugt erzeugen die zumindest zwei Stellantriebe 218 jeweils eine gleichwertige relative Verlagerung des Lagerpunkts S und der Rotationsachse D zueinander.

Vorzugsweise wird der Bogen 02 zum Ausgleich eines seitlichen Lagefehlers seitlich, vorzugsweise in Querrichtung A, feinausgerichtet. Bei einer seitlichen Feinausrichtung des Bogens 02 orthogonal zu der Transportrichtung T, insbesondere und/oder in Querrichtung A, wird bevorzugt zumindest das zumindest eine Transportmittel 204 des Zuführsystems 202 über zumindest einen, bevorzugt von der zumindest einen Antriebswelle 1002, weiter bevorzugt von dem zumindest einen Antrieb 1001, unabhängigen, Stellantrieb 237 der seitlichen Ausrichtung horizontal und orthogonal zu der Transportrichtung T verstellt. Beispielsweise wird dabei die zumindest eine Koppel 216 in Querrichtung A an deren Anbindung an das zumindest eine Transportmittel 204 in Querrichtung A aus deren bisheriger Position verstellt, während der Verbindungspunkt 219 in Querrichtung A bevorzugt an dessen Position verbleibt. Beispielsweise weist die zumindest eine Koppel 216 dazu zumindest ein Pendellager auf. Vorzugsweise wird der jeweilige Bogen 02 in Abhängigkeit von der bevorzugt wahlweisen Erfassung der zumindest einen Druckmarke 11, bevorzugt der zumindest einen seitlichen Druckmarke 11, und/oder der zumindest einen Seitenkante 09 des Bogens 02 horizontal und orthogonal zu der Transportrichtung T verstellt. Der zumindest eine Stellantrieb 237 der seitlichen Ausrichtung ist bevorzugt als Handrad oder mechanischer Antrieb oder elektrischer Antrieb, bevorzugt als Aktor und/oder Linearmotor und/oder Elektromotor, ausgebildet. Vorzugsweise bei einer seitlichen Ausrichtung des zumindest einen Bogens 02 der Bogen 02 ist das Steuerungssystem 1100 und/oder die zumindest eine Sensoreinrichtung 251 den zumindest einen Stellantrieb 237 der seitlichen Ausrichtung vorzugsweise in Abhängigkeit von der zumindest einen Sensoreinrichtung 251, insbesondere von der Erfassung des Bogens 02 durch die zumindest eine Sensoreinrichtung 251, ansteuernd ausgebildet.

Durch eine Verstellung der zumindest einen Koppel 216 in Querrichtung A wird bevorzugt der Weg des Bogens 02, welchen dieser von der Ausrichtposition PA bis hin zu der Übergabeposition PU entlang des Transportweges zurücklegt, zumindest teilweise insbesondere an dem Ort der verstellten Koppel 216 verkürzt.

Bevorzugt zusätzlich oder alternativ umfasst das zumindest eine Anlageaggregat 200 zumindest eine Zieheinrichtung 238 für eine seitliche Ausrichtung von Bogen 02. Bevorzugt erfasst zumindest eine bevorzugt als Saugplatte 273 ausgebildete Unterlage der zumindest einen Zieheinrichtung 238 den betreffenden Bogen 02, welcher seitlich auszurichten ist. Vorzugsweise wird der betreffende Bogen 02 gegen zumindest einen Seitenanschlag 272 der zumindest einen Zieheinrichtung 238 bewegt, bevorzugt gezogen, insbesondere durch die zumindest eine Saugplatte 273. Bevorzugt ist der zumindest eine Seitenanschlag 272 an die Formatbreite des Bogens 02 angepasst. Vorzugsweise wird der betreffende Bogen 02 während der seitlichen Bewegung zu dem zumindest einen Seitenanschlag 272 lediglich bezüglich der Querrichtung A bewegt. Vorzugsweise ist zu beiden Seiten des Transportweges jeweils zumindest ein Seitenanschlag 272 positioniert. Vorzugsweise ist die Zieheinrichtung 238 so ausgebildet, dass der betreffende Bogen 02 in und/oder entgegen der Querrichtung A bewegt wird und/oder bewegbar ist. Vorzugsweise wird der betreffende Bogen 02 durch die zumindest eine Zieheinrichtung 238 bezüglich der Querrichtung A zumindest grobausgerichtet.

Das zumindest eine Zuführsystem 202 der Bogenbearbeitungsmaschine 01 umfasst bevorzugt das zumindest eine insbesondere als Haltemittel 204, bevorzugt als Greifer 204, ausgebildete Transportmittel 204 mit jeweils der zumindest einen oberen Halterung 206 und jeweils der zumindest einen unteren Halterung 207. Die zumindest eine Haltefläche 233; 234 zumindest einer Halterung 206; 207, bevorzugt zumindest der zumindest einen oberen Halterung 206, ist vorzugsweise um die zumindest eine bevorzugt als eine Schwenkachse 221 ausgebildete Greiferwelle 221 der betreffenden Halterung 206; 207, bevorzugt der zumindest einen oberen Halterung 206, zumindest zeitweise schwenkend und/oder schwenkbar und/oder geschwenkt ausgebildet. Bevorzugt schwenkt die zumindest eine Haltefläche 233; 234 zumindest einer Halterung 206; 207 vorzugsweise zumindest zeitweise um die zumindest eine Schwenkachse 221 der betreffenden Halterung 206; 207 und/oder ist darum schwenkbar. Bevorzugt ist die zumindest eine untere Halterung 207 starr innerhalb des zumindest einen Zuführsystems 202 angeordnet und die zumindest eine obere Halterung 206 um die Schwenkachse 221 schwenkend und/oder schwenkbar angeordnet.

Vorzugsweise ist das zumindest eine Haltemittel 204, insbesondere das zumindest eine Transportmittel 204, bevorzugt der zumindest eine Greifer 204, jeweils in zumindest drei Zuständen anordenbar und/oder angeordnet. Das zumindest eine Transportmittel 204 weist vorzugsweise einen minimal geschlossenen Zustand und einen maximal geschlossenen Zustand und zumindest einen mittleren Zustand auf und/oder ist in diesen Zuständen angeordnet und/oder anordenbar. Bevorzugt weist die zumindest eine obere Halterung 206 zu der zumindest einen unteren Halterung 207 in dem minimal geschlossenen Zustand einen maximalen Abstand, in dem maximal geschlossenen Zustand einen minimalen Abstand und in dem zumindest einen mittleren Zustand zumindest einen mittleren Abstand auf.

Ein minimal geschlossener Zustand des zumindest einen Haltemittels 204, insbesondere des zumindest einen Transportmittels 204, entspricht bevorzugt einem maximalen Abstand zwischen zumindest einer oberen Haltefläche 233 der zumindest einen jeweiligen oberen Halterung 206 und zumindest einer unteren Haltefläche 234 der der jeweiligen oberen Halterung 206 zugeordneten unteren Halterung 207. Der minimal geschlossene Zustand des zumindest einen Haltemittels 204 entspricht bevorzugt einem maximal geöffneten Zustand des Haltemittels 204. Bevorzugt ist der Abstand der zumindest einen oberen Haltefläche 233 zu der zumindest einen zugeordneten unteren Haltefläche 234 in dem minimal geschlossenen Zustand des zumindest einen Transportmittels 204, bevorzugt Haltemittels 204, jeweils vorzugsweise mindestens größer als die doppelte Dicke eines zu transportierenden Bogens 02. Bevorzugt ist der Abstand der zumindest einen oberen Haltefläche 233 zu der zumindest einen zugeordneten unteren Haltefläche 234 in dem minimal geschlossenen Zustand des zumindest einen Haltemittels 204 jeweils vorzugsweise mindestens größer als die doppelte Dicke eines zu transportierenden Bogens 02, sodass der jeweilige Bogen 02, insbesondere die Vorderkante 07 des Bogens 02, bevorzugt in seiner Lage in Transportrichtung T und/oder in Querrichtung A und/oder in vertikaler Richtung V bevorzugt zumindest teilweise beweglich ist.

Ein maximal geschlossener Zustand des zumindest einen Haltemittels 204 entspricht bevorzugt einem minimalen Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207. Bevorzugt ist der Abstand der zumindest einen oberen Haltefläche 233 zu der zumindest einen zugeordneten unteren Haltefläche 234 in dem maximal geschlossenen Zustand des zumindest einen Transportmittels 204, vorzugsweise Haltemittels 204, jeweils vorzugsweise höchstens so groß wie die Dicke eines zu transportierenden Bogens 02. Bevorzugt ist der Abstand der zumindest einen oberen Haltefläche 233 zu der zumindest einen zugeordneten unteren Haltefläche 234 in dem maximal geschlossenen Zustand des zumindest einen Haltemittels 204 jeweils vorzugsweise höchstens so groß wie die Dicke eines zu transportierenden Bogens 02, sodass der jeweilige Bogen 02, insbesondere die Vorderkante 07 des Bogens 02, bevorzugt in seiner Lage in Transportrichtung T und/oder in Querrichtung A und/oder in vertikaler Richtung V bevorzugt vollständig fixiert ist.

Zumindest ein mittlerer Zustand des zumindest einen Haltemittels 204 entspricht bevorzugt zumindest einem mittleren Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207. Vorzugsweise ist der jeweilige Bogen 02 bei einem mittleren Zustand des zumindest einen Haltemittels 204 zumindest teilweise, bevorzugt zumindest teilweise in vertikaler Richtung V, weiter bevorzugt vollständig in vertikaler Richtung V, in seiner Lage fixiert. Vorzugsweise ist der jeweilige Bogen 02 bei einem mittleren Zustand des zumindest einen Haltemittels 204 zumindest teilweise, bevorzugt zumindest in Transportrichtung T und/oder Querrichtung A, bewegbar und/oder sich bewegend ausgebildet. Vorzugsweise unterscheidet sich der zumindest eine mittlere Zustand des zumindest einen Transportmittels 204, vorzugsweise des zumindest einen Haltemittels 204, sowohl von dem maximal geschlossenen Zustand als auch von dem minimal geschlossenen Zustand des zumindest einen Transportmittels 204.

Der Zustand des zumindest einen Haltemittels 204 ist bevorzugt abhängig von der Rotation der Antriebswelle 1002 um deren Rotationsachse D. Vorzugsweise ändert sich der Zustand des zumindest einen Haltemittels 204 innerhalb eines Maschinenzyklus zumindest einmal. Bevorzugt weist das zumindest eine Haltemittel 204, vorzugsweise das zumindest eine bevorzugt als Haltemittel 204 ausgebildete Transportmittel 204, während eines Maschinenzyklus zumindest einmal den minimal geschlossenen Zustand und zumindest einmal den maximal geschlossenen Zustand und zumindest einmal den zumindest einen mittleren Zustand auf. Bevorzugt treten die zumindest drei Zustände, der maximal geschlossene Zustand, der minimal geschlossene Zustand und der zumindest eine mittlere Zustand, während eines Maschinenzyklus auf.

Bevorzugt weist das zumindest eine Transportmittel 204 zumindest zeitweise in der Ausrichtposition PA, vorzugsweise zumindest während einer Grobausrichtung von Bogen 02 und/oder vorzugsweise während einer seitlichen Ausrichtung von Bogen 02, den zumindest einen mittleren Zustand, bevorzugt den zumindest einen mittleren Abstand der zumindest einen oberen Halterung 206 zu der zumindest einen unteren Halterung 207 und/oder den zumindest einen mittleren Abstand der Halteflächen 233; 234 zueinander, auf. Bevorzugt weist das zumindest eine Transportmittel 204 den maximal geschlossenen Zustand, bevorzugt den minimalen Abstand der zumindest einen oberen Halterung 206 zu der zumindest einen unteren Halterung 207 und/oder den minimalen Abstand der Halteflächen 233; 234 zueinander, zumindest zeitweise in der Ausrichtposition PA, bevorzugt nach der Anordnung in dem zumindest einen mittleren Zustand, weiter bevorzugt zumindest während einer Erfassung des zumindest einen Bogens 02 durch die zumindest eine Sensoreinrichtung 251, auf. Bevorzugt weist das zumindest eine Transportmittel 204 den maximal geschlossenen Zustand zumindest während dessen Bewegung von der Ausrichtposition PA zu der Übergabeposition PU auf. Bevorzugt weist das zumindest eine Transportmittel 204 den minimal geschlossenen Zustand, bevorzugt den maximalen Abstand der zumindest einen oberen Halterung 206 zu der zumindest einen unteren Halterung 207 und/oder den maximalen Abstand der Halteflächen 233; 234 zueinander, zumindest während dessen Bewegung von der Übergabeposition PU zu der Ausrichtposition PA, vorzugsweise zumindest während der Rückführung des zumindest einen Transportmittels 204 an die Ausrichtposition PA, auf.

An der Ausrichtposition PA weist vorzugsweise das zumindest eine Haltemittel 204, bevorzugt das zumindest eine Transportmittel 204, bevorzugt zumindest zeitweise zu einer Grobausrichtung von Bogen 02 den zumindest einen mittleren Zustand, insbesondere einen mittleren Abstand der Halteflächen 233; 234 zueinander, auf. Das zumindest eine Haltemittel 204, bevorzugt das zumindest eine Transportmittel 204, wird bevorzugt an der Ausrichtposition PA zumindest zeitweise bei der Grobausrichtung von Bogen 02 mit dem zumindest einen mittleren Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207, bevorzugt in dem zumindest einen mittleren Zustand, angeordnet. Bevorzugt entspricht der zumindest eine mittlere Zustand einem Niederhalten von Bogen 02, insbesondere der Vorderkante 07 des Bogens 02, welches den jeweiligen Bogen 02, insbesondere der Vorderkante 07 des Bogens 02, in vertikaler Richtung V zumindest teilweise, bevorzugt vollständig, fixiert und/oder welches lediglich eine Bewegung des jeweiligen, bevorzugt des zumindest einen, Bogens 02, insbesondere der Vorderkante 07 des Bogens 02, in Transportrichtung T und/oder Querrichtung A, bevorzugt in horizontaler Ebene, gestattet. Bevorzugt ist das zumindest eine Transportmittel 204 zumindest zeitweise, bevorzugt zumindest während einer Grobausrichtung des zumindest einen Bogens 02 und/oder während einer seitlichen Ausrichtung des zumindest einen Bogens 02, in dem zumindest einen mittleren Zustand angeordnet, bevorzugt in diesem fixiert, weiter bevorzugt in diesem festgestellt.

Bevorzugt ist der Abstand der zumindest einen oberen Halterung 206 und der zumindest einen unteren Halterung 207 zueinander in dem zumindest einen mittleren Zustand des zumindest einen Transportmittels 204 vorzugsweise größer als die Dicke des zumindest einen, bevorzugt zu transportierenden, Bogens 02. Bevorzugt ist der Abstand der zumindest einen oberen Halterung 206 und der zumindest einen unteren Halterung 207 zueinander, bevorzugt der Abstand der zumindest einen oberen Haltefläche 233 zu der zumindest einen zugeordneten unteren Haltefläche 234, in dem zumindest einen mittleren Zustand des Haltemittels 204, bevorzugt des zumindest einen Transportmittels 204, jeweils vorzugsweise zumindest größer als die Dicke eines zu transportierenden Bogens 02, bevorzugt eineinhalbfach, weiter bevorzugt zumindest doppelt so groß, wie die Dicke eines zu transportierenden Bogens 02. Bevorzugt ist der zumindest eine mittlere Abstand der zumindest einen oberen Haltefläche 233 zu der zumindest einen zugeordneten unteren Haltefläche 234 jeweils zumindest größer als die Dicke eines zu transportierenden Bogens 02, bevorzugt eineinhalbfach, weiter bevorzugt zumindest doppelt so groß, wie die Dicke eines zu transportierenden Bogens 02.

Bevorzugt ist der zumindest eine mittlere Zustand, vorzugsweise der zumindest eine mittlere Abstand zwischen der zumindest einen oberen Haltefläche 233 der zumindest einen oberen Halterung 206 und der zumindest einen unteren Haltefläche 234 der der zumindest einen oberen Halterung 206 zugeordneten unteren Halterung 207, an eine maximale Dicke von Bogen 02 angepasst und/oder entsprechend einer maximalen Dicke der zu transportierenden Bogen 02 eingestellt. Bevorzugt wird der zumindest eine mittlere Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207 an eine maximale Dicke von Bogen 02 angepasst, insbesondere welche von der Bogenbearbeitungsmaschine 01 bevorzugt zu diesem Zeitpunkt zumindest teilweise transportiert werden und/oder bevorzugt zu diesem Zeitpunkt innerhalb des Zuführsystems 202 angeordnet sind. Bevorzugt wird der zumindest eine mittlere Zustand, bevorzugt der zumindest eine mittlere Abstand, zumindest einmal für jeden Bearbeitungsauftrag eingestellt und/oder ist entsprechend des vorliegenden Bearbeitungsauftrages eingestellt.

Die zumindest eine schwenkbare Haltefläche 233; 234, bevorzugt die zumindest eine Haltefläche 233 der oberen Halterung 206, steht bevorzugt mit der zumindest einen Antriebswelle 1002, bevorzugt mit dem zumindest einen Antrieb 1001,, insbesondere über zumindest ein Getriebe, in Wirkverbindung. Bevorzugt steht die zumindest eine schwenkbare Haltefläche 233; 234, bevorzugt die zumindest eine Haltefläche 233 der oberen Halterung 206, mit zumindest einem als Kurvenscheibe 223 ausgebildeten Öffnungselement 223 über zumindest einen Abtasthebel 226 in Wirkverbindung. Bevorzugt ist zumindest ein Abtastelement 224 des zumindest einen Abtasthebels 226 an der zumindest einen Kurvenscheibe 223 dauerhaft spielfrei anliegend ausgebildet. Vorzugsweise ist das zumindest eine Abtastelement 224 aufgrund zumindest einer Feder, bevorzugt Druckfeder, an dem Abtasthebel 226 und/oder einer Vorspannung des Abtasthebels 226 dauerhaft spielfrei an der zumindest einen Kurvenscheibe 223 anliegend ausgebildet. Das zumindest eine Abtastelement 224 ist bevorzugt als Rolle ausgebildet und/oder an der zumindest einen Kurvenscheibe 223 abrollend ausgebildet. Vorzugsweise weist zumindest eines der Kurvengetriebe des Zuführsystems 202 die zumindest eine Kurvenscheibe 223 auf. Beispielsweise ist das zumindest eine Kurvengetriebe, welches die zumindest eine Kurvenscheibe 223 aufweist, von dem Kurvengetriebe, welches zur Übertragung der Bewegung in und/oder entgegen der Transportrichtung T des zumindest einen Transportmittels 204 ausgebildet ist, verschieden. Bevorzugt ist das das zumindest eine Kurvengetriebe, welches die zumindest eine Kurvenscheibe 223 aufweist, den Zustand des zumindest einen Transportmittels 204 einstellend ausgebildet.

Die zumindest eine Kurvenscheibe 223 ist bevorzugt an der zumindest einen Antriebswelle 1002 angeordnet und um deren Rotationsachse D drehend ausgebildet, insbesondere drehend zusammen mit der betreffenden Antriebswelle 1002. Bevorzugt ist die zumindest eine Kurvenscheibe 223 konzentrisch um die zumindest eine Antriebswelle 1002 angeordnet. Bevorzugt weist die zumindest eine schwenkbare Haltefläche 233; 234, bevorzugt die zumindest eine Haltefläche 233 der oberen Halterung 206, den jeweiligen Zustand entsprechend dem Drehwinkel der Antriebswelle 1002 und somit dem Drehwinkel der zumindest einen Kurvenscheibe 223 um die Rotationsachse D auf. Bevorzugt ist der Zustand des zumindest einen Transportmittels 204, bevorzugt der Abstand der zumindest einen oberen Halterung 206 zu der zumindest einen unteren Halterung 207 des zumindest einen Transportmittels 204, über die zumindest eine Kurvenscheibe 223 eingestellt und/oder einstellbar und/oder wird eingestellt. Bevorzugt ist das zumindest eine Kurvengetriebe, bevorzugt die zumindest eine Kurvenscheibe 223, vorzugsweise durch Rotation der zumindest einen Antriebswelle 1002 und/oder aufgrund des zumindest einen Antriebs 1001, den Zustand, vorzugsweise den maximal geschlossenen Zustand und den minimal geschlossenen Zustand und den zumindest einen mittleren Zustand, des zumindest einen Transportmittels 204 einstellend ausgebildet und/oder stellt diesen ein.

Vorzugsweise ist und/oder wird der zumindest eine Abtasthebel 226 über zumindest eine Übertragungswelle 227 mit der Schwenkachse 221 der betreffenden Halterung 206; 207, bevorzugt der zumindest einen oberen Halterung 206, gekoppelt. Weiter bevorzugt ist und/oder wird der zumindest eine Abtasthebel 226 über zumindest eine Übertragungswelle 227 mit der Schwenkachse 221 der betreffenden Halterung 206; 207, bevorzugt der zumindest einen oberen Halterung 206, gekoppelt, wobei die zumindest eine Übertragungswelle 227 exzentrisch in zumindest einer Verstellwelle 228 angeordnet ist. Vorzugsweise steht die zumindest eine Übertragungswelle 227 über den zumindest einen Abtasthebel 226 in Wirkverbindung mit der zumindest einen Kurvenscheibe 223 und/oder der zumindest einen Antriebswelle 1002. Vorzugsweise steht die zumindest eine Übertragungswelle 227 über zumindest eine Koppel 222 und/oder zumindest einen Übertragungshebel 229, bevorzugt über sowohl zumindest eine Koppel 222 und zumindest einen Übertragungshebel 229, in Wirkverbindung mit der zumindest einen Schwenkachse 221.

Der Abtasthebel 226 ist bevorzugt schwenkend um die Rotationsachse U der zumindest einen Übertragungswelle 227 angeordnet. Vorzugsweise ist der zumindest eine Übertragungshebel 229 mit der Übertragungswelle 227 verbunden und schwenkend um deren Rotationsachse U angeordnet. Die zumindest eine Koppel 222 ist vorzugsweise mit dem zumindest einen Übertragungshebel 229 verbunden. Vorzugsweise weist die Koppel 222 im Falle des Schwenkens des Übertragungshebels 229 eine zumindest teilweise Bewegung, bevorzugt eine zumindest hauptsächlich lineare Bewegung, mit einer Hauptkomponente in und/oder entgegen der vertikalen Richtung V auf. Beispielsweise ist die zumindest eine Koppel 222 über zumindest einen Verbindungshebel 236 und/oder zumindest eine Lagerung mit der zumindest einen Schwenkachse 221 verbunden. Im Falle einer zumindest teilweisen linearen Bewegung der zumindest einen Koppel 222 wird die bevorzugt als Greiferwelle 221 ausgebildete Schwenkachse 221, bevorzugt über den zumindest einen Verbindungshebel 236, in eine zumindest teilweise Rotation und/oder ein zumindest teilweises Schwenken versetzt. Vorzugsweise erzeugt die zumindest teilweise Rotation und/oder das zumindest teilweise Schwenken der Greiferwelle 221 eine Zustandsänderung des zumindest einen Haltemittels 204.

Die zumindest eine Kurvenscheibe 223 weist bevorzugt zumindest drei Bereiche auf, wobei aneinander angrenzende Bereiche voneinander verschiedene Radien aufweisen. Aufgrund der voneinander verschiedenen Radien der einzelnen Bereiche der zumindest einen Kurvenscheibe 223 ist der Abstand der Rotationsachse D der Antriebswelle 1002 zu dem Schwerpunkt des zugeordneten zumindest einen Abtastelements 224 in Abhängigkeit des vorliegenden Drehwinkels der Antriebswelle 1002 und/oder Kurvenscheibe 223 für die jeweiligen Bereiche zumindest teilweise verändert. Bevorzugt weist die zumindest eine Kurvenscheibe 223 zu der Rotationsachse D der Antriebswelle 1002 entlang ihres Umfangs zumindest drei voneinander verschiedene Radien auf. Bevorzugt ist eine Kurvenfunktion des Umfangs der zumindest einen Kurvenscheibe 223 in allen Punkten entlang ihrer Bogenlänge stetig, bevorzugt stetig differenzierbar. Beispielsweise weist die zumindest eine Kurvenscheibe 223 jeweils entlang ihres Umfangs zumindest eine Vertiefung und/oder zumindest eine Erhöhung und/oder zumindest eine Nocke gegenüber den umliegenden Bereichen auf.

Vorzugsweise korrelieren die jeweiligen Bereiche der zumindest einen Kurvenscheibe 223 mit jeweils einem Zustand des zumindest einen Haltemittels 204, bevorzugt des zumindest einen Transportmittels 204. Vorzugsweise ist das zumindest eine Abtastelement 224 bei dem minimal geschlossenen Zustand des zumindest einen Haltemittels 204 an dem Bereich der Kurvenscheibe 223 angeordnet, welcher einen maximalen Radius aufweist. Bevorzugt ist das zumindest eine Abtastelement 224 bei dem maximal geschlossenen Zustand des zumindest einen Haltemittels 204 an dem Bereich der Kurvenscheibe 223 angeordnet, welcher einen minimalen Radius aufweist. Bevorzugt ist das zumindest eine Abtastelement 224 bei dem zumindest einen mittleren Zustand des zumindest einen Haltemittels 204 an dem Bereich der Kurvenscheibe 223 angeordnet, welcher einen mittleren Radius aufweist. Bevorzugt entspricht der minimale Radius der zumindest einen Kurvenscheibe 223 dem minimalen Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207. Bevorzugt entspricht der maximale Radius der zumindest einen Kurvenscheibe 223 dem maximalen Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207. Bevorzugt entspricht zumindest ein mittlerer Radius der zumindest einen Kurvenscheibe 223 dem mittleren Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207.

Die zumindest eine Kurvenscheibe 223 weist bevorzugt zumindest einen Bereich auf, welcher einer Phase einer Transportbewegung zumindest des zumindest einen Haltemittels 204 von der Ausrichtposition PA zu der entlang der Transportrichtung T von Bogen 02 nachgeordneten Übergabeposition PU entspricht. Bevorzugt zusätzlich ist in diesem Bereich, insbesondere wenn das zumindest eine Abtastelement 224 an diesem Bereich der zumindest einen Kurvenscheibe 223 angeordnet ist, der Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207 minimal. Vorzugsweise ist dadurch der Zustand des zumindest einen Haltemittels 204 während der Transportbewegung zumindest des zumindest einen Haltemittels 204 von der Ausrichtposition PA zu der entlang der Transportrichtung T von Bogen 02 nachgeordneten Übergabeposition PU unverändert und/oder gleichbleibend.

Vorzugsweise ist der zumindest eine mittlere Zustand des zumindest einen Haltemittels 204 einstellbar und/oder eingestellt und/oder wird eingestellt, bevorzugt in Abhängigkeit von der Dicke in vertikaler Richtung V von den zu transportierenden Bogen 02, bevorzugt dem zumindest einen Bogen 02. Bevorzugt ist der zumindest eine mittlere Zustand über die Position der Rotationsachse U der zumindest einen Übertragungswelle 227 eingestellt, vorzugsweise wenn der entsprechende Bereich der zumindest einen Kurvenscheibe 223 für den mittleren Zustand des zumindest einen Haltemittels 204 in Kontakt zu dem zumindest einen Abtastelement 224 steht.

Vorzugsweise weist das zumindest eine Zuführsystem 202 die zumindest eine Verstellwelle 228 auf. Die zumindest eine Übertragungswelle 227 ist bevorzugt exzentrisch in der zumindest einen Verstellwelle 228 angeordnet. Somit weist die Rotationsachse U der zumindest einen Übertragungswelle 227 einen Abstand größer Null zu einer Rotationsachse E der Verstellwelle 228 auf. Der Abstand der Rotationsachse E der Verstellwelle 228 zu der Rotationsachse U der zumindest einen Übertragungswelle 227 ist bevorzugt abhängig von dem maximalen Verstellweg der Dicke der zu transportierenden Bogen 02. Vorzugsweise ist der Drehwinkel, in welchem die Rotationsachse U der zumindest einen Übertragungswelle 227 relativ zu der Rotationsachse E der zumindest einen Verstellwelle 228 angeordnet ist, einstellbar und/oder eingestellt. Bevorzugt beträgt der Drehwinkel der Rotationsachse U der zumindest einen Übertragungswelle 227 bezüglich der Rotationsachse E der zumindest einen Verstellwelle 228 maximal 90° (neunzig Grad), bevorzugt maximal 75° (fünfundsiebzig Grad), weiter bevorzugt maximal 60° (sechzig Grad), weiter bevorzugt maximal 45° (fünfundvierzig Grad), weiter bevorzugt maximal 35° (fünfunddreißig Grad).

Vorzugsweise weist das zumindest eine Zuführsystem 202 zumindest einen Stellantrieb 231 auf. Vorzugsweise weist das zumindest eine Zuführsystem 202 zusätzlich, insbesondere zusätzlich zu der zumindest einen Antriebswelle 1002 und/oder dem zumindest einen Antrieb 1001 des Antriebsystems 1000, zumindest einen Stellantrieb 231 auf. Der zumindest eine Stellantrieb 231 ist bevorzugt als Handrad oder mechanischer Antrieb oder elektrischer Antrieb, bevorzugt als Aktor und/oder Linearmotor und/oder Elektromotor, ausgebildet. Der zumindest eine Stellantrieb 231 ist bevorzugt zumindest zeitweise in die Wirkverbindung zwischen der zumindest einen Kurvenscheibe 223 und die zumindest eine schwenkbare Haltefläche 233; 234 eingreifend ausgebildet und/oder welcher zumindest zeitweise in die Wirkverbindung zwischen der zumindest einen Kurvenscheibe 223 und der zumindest einen schwenkbaren Haltefläche 233; 234 eingreift. Vorzugsweise ist der zumindest eine Stellantrieb 231 unabhängig von der zumindest einen Antriebswelle 1002 und/oder dem zumindest einen Antrieb 1001 des Antriebsystems 1000, bevorzugt mechanisch unabhängig. Bevorzugt ist der zumindest eine Stellantrieb 231 den zumindest einen mittleren Zustand des zumindest einen Transportmittels 204, bevorzugt den zumindest einen mittleren Abstand der zumindest einen oberen Halterung 206 und der zumindest einen unteren Halterung 207 zueinander, einstellend, bevorzugt verstellend, ausgebildet und/oder stellt diesen ein. Bevorzugt ist der zumindest eine Stellantrieb 231 den zumindest einen mittleren Zustand des zumindest einen Transportmittels 204 verändernd ausgebildet und/oder verändert diesen. Bevorzugt ist der zumindest eine Stellantrieb 231 den zumindest einen mittleren Zustand des zumindest einen Transportmittels 204 in Abhängigkeit von der Dicke des zumindest einen, bevorzugt zu transportierenden, Bogens 02 einstellend und/oder verstellend und/oder verändernd ausgebildet und/oder stellt diesen ein und/oder verstellt diesen und/oder verändert diesen.

Die Rotationsachse U der zumindest einen Übertragungswelle 227 und die Rotationsachse E der zumindest einen Verstellwelle 228 werden bevorzugt durch den zumindest einen Stellantrieb 231 relativ zueinander verstellt. Der zumindest eine Stellantrieb 231 ist bevorzugt die Rotationsachse U der zumindest einen Übertragungswelle 227 und die Rotationsachse E der zumindest einen Verstellwelle 228 relativ zueinander verstellend ausgebildet. Bevorzugt zusätzlich oder alternativ sind die Rotationsachse U der zumindest einen Übertragungswelle 227 und die Rotationsachse E der zumindest einen Verstellwelle 228 durch den zumindest einen Stellantrieb 231 relativ zueinander verstellt angeordnet. Weiter bevorzugt ist der zumindest eine Stellantrieb 231 die zumindest eine Verstellwelle 228 zumindest zeitweise um ihre Rotationsachse E schwenkend ausgebildet. Der zumindest eine Stellantrieb 231 schwenkt bevorzugt die zumindest eine Verstellwelle 228 zumindest zeitweise um ihre Rotationsachse E. Vorzugsweise ist der zumindest eine Stellantrieb 231 über zumindest einen Verstellhebel 232 mit der zumindest einen Verstellwelle 228 verbunden. Bevorzugt wird der zumindest eine Verstellhebel 232 durch den zumindest einen Stellantrieb 231 bewegt, wodurch vorzugsweise die zumindest eine Verstellwelle 228 zumindest teilweise um ihre Rotationsachse E schwenkt. Vorzugsweise wird durch die zumindest teilweise Schwenkbewegung der zumindest einen Verstellwelle 228 die zumindest eine Übertragungswelle 227 um die Rotationsachse E der zumindest einen Verstellwelle 228 zumindest teilweise geschwenkt. Vorzugsweise wird durch ein zumindest teilweises Schwenken der zumindest einen Übertragungswelle 227 um die Rotationsachse E der zumindest einen Verstellwelle 228 der zumindest eine mittlere Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207 eingestellt und/oder ist eingestellt.

Aufgrund eines zumindest teilweisen Schwenkens der zumindest einen Verstellwelle 228 um ihre Rotationsachse E ist bevorzugt das zumindest eine Abtastelement 224 des Abtasthebels 226, welches bevorzugt in direktem Kontakt zu der zumindest einen Kurvenscheibe 223 steht, um einen Drehwinkel von maximal 3° (drei Grad), bevorzugt von maximal 2° (zwei Grad), weiter bevorzugt von maximal 1° (einem Grad), entlang der Oberfläche der Kurvenscheibe 223 um die Rotationsachse D der zumindest einen Kurvenscheibe 223 relativ zu der ursprünglichen Position des zumindest einen Abtastelements 224 verschoben angeordnet. Bevorzugt ist aufgrund eines zumindest teilweisen Schwenkens der zumindest einen Verstellwelle 228 um ihre Rotationsachse E der zumindest eine mittlere Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207 einstellbar und/oder wird eingestellt. Bevorzugt ist und/oder wird die Rotationsachse U der zumindest einen Übertragungswelle 227 relativ zu der Rotationsachse E der zumindest einen Verstellwelle 228, bevorzugt unabhängig von einer Verstellung der Rotationsachse E der zumindest einen Verstellwelle 228 relativ zu der Rotationsachse U der zumindest einen Übertragungswelle 227, so angeordnet, dass die Rotationsachse U der zumindest einen Übertragungswelle 227 einen maximalen Abstand von vorzugsweise 50 mm (fünfzig Millimeter), bevorzugt von maximal 35 mm (fünfunddreißig Millimeter), weiter bevorzugt von maximal 10 mm (zehn Millimeter), zu einer Verbindungslinie der Rotationsachse E der zumindest einen Verstellwelle 228 mit einem Kontaktpunkt des zumindest einen Abtastelements 224 mit der zumindest einen zugeordneten Kurvenscheibe 223 aufweist. Weiter bevorzugt ist die Rotationsachse U der zumindest einen Übertragungswelle 227, bevorzugt unabhängig von einer Verstellung der Rotationsachse E der zumindest einen Verstellwelle 228 relativ zu der Rotationsachse U der zumindest einen Übertragungswelle 227, zumindest teilweise in der Verbindungslinie der Rotationsachse E der zumindest einen Verstellwelle 228 mit einem Kontaktpunkt des zumindest einen Abtastelements 224 mit der zumindest einen Kurvenscheibe 223 angeordnet. Vorzugsweise sind die Zeitpunkte, an welchen das zumindest eine Transportmittel 204 den maximal geschlossenen Zustand und den minimal geschlossenen Zustand und den zumindest einen mittleren Zustand aufweist, von einer Einstellung durch den zumindest einen Stellantrieb 231 nahezu unbeeinflusst, bevorzugt unabhängig.

Vorzugsweise weist das zumindest eine Zuführsystem 202 zumindest ein Kurvengetriebe auf. Bevorzugt weist das zumindest eine Zuführsystem 202 zumindest ein das zumindest eine Transportmittel 204 von der Ausrichtposition PA zu der Übergabeposition PU bewegende und/oder Bogen 02 ausrichtendes Kurvengetriebe auf. Bevorzugt zusätzlich oder alternativ weist das zumindest eine Zuführsystem 202 zumindest ein den Zustand des zumindest einen Transportmittels 204, vorzugsweise den Abstand der zumindest einen oberen Halterung 206 und der zumindest einen unteren Halterung 207 zueinander, einstellendes Kurvengetriebe auf. Vorzugsweise weist das zumindest eine Zuführsystem 202 der Bearbeitungsmaschine 01 jeweils zumindest ein Kurvengetriebe für zumindest einen Transport von der Ausrichtposition PA hin zu der Übergabeposition PU und/oder zumindest eine Ausrichtung von Bogen 02 und bevorzugt zusätzlich zumindest ein Kurvengetriebe für zumindest ein Einstellen des betreffenden Zustands des zumindest einen Transportmittels 204, insbesondere Haltemittel 204, auf. Bevorzugt weist das zumindest eine Zuführsystem 202 zumindest einen in die Bewegung des zumindest einen Transportmittels 204 von der Ausrichtposition PA zu der Übergabeposition PU eingreifenden, bevorzugt diese überlagernden, Stellantrieb 218 auf. Bevorzugt zusätzlich oder alternativ weist das zumindest eine Zuführsystem 202 zumindest einen den zumindest einen mittleren Zustand des zumindest einen Transportmittels 204 einstellenden, bevorzugt verstellenden, Stellantrieb 231 auf. Bevorzugt weist das zumindest eine Zuführsystem 202 zumindest einen Stellantrieb 218 insbesondere für die Ausrichtung von Bogen 02 und zumindest einen Stellantrieb 231 insbesondere für das Einstellen des jeweiligen Zustands des zumindest einen Transportmittels 204, insbesondere des zumindest einen Haltemittels 204, auf.

Bevorzugt weist die Bogenbearbeitungsmaschine 01 die zumindest eine Sensoreinrichtung 251 auf. Vorzugsweise ist die zumindest eine Sensoreinrichtung 251 innerhalb des zumindest einen Anlageaggregats 200 angeordnet und/oder dem zumindest einen Anlageaggregat 200 zugeordnet. Die Sensoreinrichtung 251 umfasst den zumindest einen Sensor 252, vorzugsweise die zumindest zwei Sensoren 252. Bevorzugt umfasst die Sensoreinrichtung 251 genau zwei Sensoren 252, alternativ umfasst die Sensoreinrichtung 251 zumindest drei Sensoren 252. Bevorzugt ist der jeweilige, bevorzugt der zumindest eine, bevorzugt die zumindest zwei, Sensor 252 auf den Transportweg von Bogen 02 gerichtet.

Vorzugsweise ist die zumindest eine Sensoreinrichtung 251 oberhalb oder unterhalb des Transportweges von Bogen 02 angeordnet. Alternativ ist vorzugsweise zumindest eine Sensoreinrichtung 251 oberhalb und zumindest eine weitere Sensoreinrichtung 151 unterhalb des Transportweges angeordnet. Beispielsweise ist der zumindest eine Sensor 252, bevorzugt die zumindest zwei Sensoren 252, weiter bevorzugt zumindest drei Sensoren 252, oberhalb oder unterhalb des Transportweges der Bogen 02 angeordnet. Beispielsweise ist sowohl zumindest ein Sensor 252, bevorzugt die zumindest zwei Sensoren 252, weiter bevorzugt zumindest drei Sensoren 252, oberhalb des Transportweges der Bogen 02 als auch zumindest ein Sensor 252, vorzugsweise zumindest ein weiterer Sensor 252, bevorzugt zumindest zwei weitere Sensoren 252, weiter bevorzugt zumindest drei weitere Sensoren 252, unterhalb des Transportweges angeordnet. Somit ist der, bevorzugt zumindest eine, Bogen 02 von oben und/oder von unten durch die Sensoreinrichtung 251, bevorzugt durch den zumindest einen Sensor 252, bevorzugt durch die zumindest zwei Sensoren 252, zumindest teilweise, bevorzugt in zumindest einem Erfassungsbereich 253 des jeweiligen, bevorzugt zumindest einen, Sensors 252, erfasst und/oder erfassbar.

Bevorzugt ist der jeweilige, bevorzugt der zumindest eine, weiter bevorzugt die zumindest zwei, Sensor 252 als Kamera 252, weiter bevorzugt als Farbkamera, weiter bevorzugt als Flächenkamera, weiter bevorzugt als zumindest ein CMOS-Sensor und/oder zumindest ein CCD-Sensor, ausgebildet. Die zumindest zwei Sensoren 252 sind vorzugsweise jeweils als Farbkamera und/oder als Flächenkamera und/oder als zumindest ein CMOS-Sensor und/oder als zumindest ein CCD-Sensor ausgebildet. In einer bevorzugten Ausführung sind die zumindest zwei Sensoren 252 bevorzugt jeweils als Flächenkameras ausgebildet. Bevorzugt ist dem jeweiligen, bevorzugt dem zumindest einen, bevorzugt den zumindest zwei, Sensor 252 zumindest eine als Beleuchtung ausgebildete Lichtquelle zugeordnet, beispielsweise eine LED-Lichtquelle, insbesondere eine Lichtquelle von weißem Licht. Vorzugsweise ist in Transportrichtung T direkt vor und/oder direkt nach einem Erfassungsbereich 253 des jeweiligen, bevorzugt zumindest einen, bevorzugt der zumindest zwei, Sensors 252 jeweils zumindest eine Beleuchtung angeordnet und auf den Erfassungsbereich 253 gerichtet. Vorzugsweise umfasst der zumindest eine, bevorzugt die zumindest zwei, Sensor 252 jeweils zumindest eine Optik, beispielsweise zumindest eine Linse, welche bevorzugt zwischen dem zumindest einen Sensor 252 und dem für den Transport von Bogen 02 vorgesehenen Transportweg angeordnet ist.

Bevorzugt ist der zumindest eine Sensor 252, bevorzugt die zumindest zwei Sensoren 252, der zumindest einen Sensoreinrichtung 251 wahlweise zumindest eine Kante 07; 08; 09, bevorzugt die Vorderkante 07, und/oder zumindest eine Druckmarke 11 von Bogen 02, bevorzugt des zumindest einen Bogens 02, erfassend ausgebildet und/oder erfassen diese. Vorzugsweise ist unabhängig von dem vorliegenden Format des zumindest einen Bogens 02 und/oder der Ausprägung der Vorderkante 07 des zumindest einen Bogens 02, beispielsweise durch Ausfransen oder einen ungeraden Schnitt, und/oder dem Vorliegen zumindest eines Druckbildes die Lage und/oder Ausrichtung des Bogens 02 bestimmt und/oder bestimmbar. Bevorzugt ist die zumindest eine Sensoreinrichtung 251 und/oder das zumindest eine mit der Sensoreinrichtung 251 verbundene Steuerungssystem 1100 wahlweise die zumindest eine erfasste Kante 07; 08; 09 und/oder die zumindest eine erfasste Druckmarke 11 vorzugsweise bezüglich Lageinformationen des zumindest einen Bogens 02 der Bogen 02 auswertend ausgebildet und/oder wertet diese aus. Vorzugsweise werden nach Erfassen der zumindest einen Kante 07; 08; 09 und/oder Druckmarke 11 die Lageinformationen ausgewertet. Weiter bevorzugt werden, beispielsweise durch die zumindest eine Sensoreinrichtung 251 und/oder durch das Steuerungssystem 1100, aus der Auswertung der Lageinformationen Informationen darüber abgeleitet, wie zumindest eine Einstellgröße der Bearbeitungsmaschine 01 zu verändern ist, bevorzugt wie der zumindest eine Stellantrieb 218; 231; 237 des Zuführsystems 202, weiter bevorzugt der zumindest eine die Bewegung des zumindest einen Transportmittels 204 von der Ausrichtposition PA zur Übergabeposition PU beeinflussende und/oder überlagernde Stellantrieb 218, anzusteuern ist. Die zumindest eine Sensoreinrichtung 251 und/oder das zumindest eine mit der Sensoreinrichtung 251 verbundene Steuerungssystem 1100 ist bevorzugt aus der Auswertung der Lageinformationen Informationen darüber ableitend ausgebildet und/oder leitet diese ab, wie zumindest eine Einstellgröße der Bearbeitungsmaschine 01 zu verändern ist, bevorzugt wie der zumindest eine Stellantrieb 218; 231; 237 des Zuführsystems 202 anzusteuern ist. Die zumindest eine Sensoreinrichtung 251 und/oder das zumindest eine mit der Sensoreinrichtung 251 verbundene Steuerungssystem 1100 ist bevorzugt aus der Auswertung der Lageinformationen Informationen darüber ableitend ausgebildet und/oder leitet diese ab, wie der zumindest eine eine Bewegung des zumindest einen Transportmittels 204 von der Ausrichtposition PA zu der Übergabeposition PU beeinflussende und/oder überlagernde Stellantrieb 218 anzusteuern ist. Vorteilhafterweise ist zwischen der Auswertung der Informationen der erfassten Kante 07; 08; 09 und/oder Druckmarke 11 wählbar, beispielsweise abhängig von der Qualität der erfassten Kante 07; 08; 09 und/oder Druckmarke 11 und/oder von der Vollständigkeit der erfassten Informationen. Weiter bevorzugt ist der zumindest eine, bevorzugt die zumindest zwei, Sensor 252 der Sensoreinrichtung 251 jeweils in einer unveränderten Position des betreffenden Sensors 252 wahlweise zumindest eine Kante 07; 08; 09 und/oder Druckmarke 11 von Bogen 02 erfassend ausgebildet. Bevorzugt ist der jeweilige, bevorzugt der zumindest eine, weiter bevorzugt die zumindest zwei, Sensor 252 so positioniert, dass bevorzugt zumindest eine Kante 07; 08; 09, bevorzugt die Vorderkante 07 und/oder zumindest eine Seitenkante 09 des jeweiligen, bevorzugt des zumindest einen, Bogens 02, und bevorzugt zusätzlich zumindest ein Bereich des Bogens 02 mit zumindest einer Druckmarke 11 insbesondere innerhalb einer Messung, bevorzugt gleichzeitig, und/oder bevorzugt in einer unveränderten Position des betreffenden, bevorzugt des zumindest einen, weiter bevorzugt der zumindest zwei, Sensors 252 bevorzugt innerhalb des einen Erfassungsbereichs 253 des jeweiligen, bevorzugt des zumindest einen, Sensors 252 erfassbar sind.

Bevorzugt umfasst die Bogenbearbeitungsmaschine 01 die zumindest eine Sensoreinrichtung 251 mit den zumindest zwei Sensoren 252, welche zumindest zwei Sensoren 252 jeweils ohne eine Positionsveränderung des jeweiligen Sensors 252 bevorzugt wahlweise zumindest eine Druckmarke 11 und/oder zumindest eine Kante 07; 08; 09 des jeweiligen Bogens 02 erfassend ausgebildet sind, wobei der Bogen 02 in der Ausrichtposition PA angeordnet ist. Bevorzugt umfasst die Bogenbearbeitungsmaschine 01 die zumindest eine Sensoreinrichtung 251 mit den zumindest zwei Sensoren 252, welche jeweils ohne eine Positionsveränderung des jeweiligen Sensors 252 bevorzugt wahlweise zumindest eine Druckmarke 11 und/oder zumindest eine Kante 07; 08; 09 des jeweiligen Bogens 02 erfassen, wobei der jeweilige Bogen 02 in der Ausrichtposition PA angeordnet ist. Die Bogenbearbeitungsmaschine 01 umfasst bevorzugt die zumindest eine Sensoreinrichtung 251 mit den zumindest zwei Sensoren 252, welche jeweils bevorzugt wahlweise zumindest eine Druckmarke 11 und/oder zumindest eine Kante 07; 08; 09 des jeweiligen Bogens 02, welcher in der Ausrichtposition PA angeordnet ist, ohne eine Positionsveränderung des jeweiligen Sensors 252 erfassen. Vorzugsweise weist zumindest der zumindest eine Sensor 252, bevorzugt die zumindest zwei Sensoren 252, welcher wahlweise eine Kante 07; 08; 09 und/oder eine Druckmarke 11 des zumindest einen Bogens 02 erfassend ausgebildet ist, zumindest zwei voneinander verschiedene Positionen auf, beispielsweise welche Positionen voneinander verschiedenen Formaten von Bogen 02 entsprechen. Beispielsweise bei einem Wechsel des Formats der Bogen 02 wird vorzugsweise der zumindest eine Sensor 252, bevorzugt die zumindest zwei Sensoren 252, mittels zumindest eines Positionsantriebs bewegt.

Bevorzugt sind die zumindest zwei Sensoren 252, insbesondere genau zwei Sensoren 252, in Transportrichtung T von Bogen 02 parallel nebeneinander angeordnet. Bevorzugt sind die zumindest zwei in Transportrichtung T parallel nebeneinander, also in Querrichtung A hintereinander, angeordneten Sensoren 252 mit einem Abstand größer null zueinander beabstandet angeordnet. Bevorzugt sind die zumindest zwei Sensoren 252 der Sensoreinrichtung 251 in Transportrichtung T an der Ausrichtposition PA nebeneinander angeordnet, wobei die Ausrichtposition PA durch zumindest zwei zu der Transportrichtung T horizontal und parallel nebeneinander angeordnete Vordermarken 203 des Zuführsystems 202 der Bogenbearbeitungsmaschine 01 festgelegt ist. Bevorzugt sind diese zumindest zwei Sensoren 252 zur bevorzugt wahlweisen Erfassung der Vorderkante 07 und/oder zumindest einer Druckmarke 11 eines jeweiligen Bogens 02 ausgebildet.

Vorzugsweise weist die zumindest eine Sensoreinrichtung 251 zumindest einen Positionsantrieb auf. Bevorzugt ist der zumindest eine Positionsantrieb zumindest einen Sensor 252 der zumindest zwei Sensoren 252 bewegend ausgebildet und/oder bewegt diesen. Bevorzugt weist der zumindest eine Sensor 252, bevorzugt die zumindest zwei Sensoren 252, zumindest einen Positionsantrieb, beispielsweise zumindest einen Linearmotor und/oder Elektromotor und/oder Motor mit Gewindespindel, auf. Bevorzugt wird die Position des zumindest einen Sensors 252, bevorzugt der zumindest zwei Sensoren 252, durch den zumindest einen Positionsantrieb auf die jeweilige Breite und/oder das jeweilige Format des zumindest einen Bogens 02, insbesondere orthogonal zu der Transportrichtung T, angepasst. Alternativ werden die zumindest zwei parallel zueinander angeordneten Sensoren 252 mechanisch verstellt. In einer bevorzugten Ausführung weisen die zumindest zwei in Transportrichtung T parallel nebeneinander angeordneten Sensoren 252 zumindest einen Positionsantrieb zumindest eines jeweiligen Sensors 252 auf. Vorzugsweise weisen die zumindest zwei in Transportrichtung T parallel nebeneinander, also in Querrichtung A hintereinander, angeordneten Sensoren 252 einen gemeinsamen Positionsantrieb oder jeweils einen eigenen Positionsantrieb auf. Vorzugsweise weisen die betreffenden zumindest zwei in Transportrichtung T parallel nebeneinander, also in Querrichtung A hintereinander, angeordneten Sensoren 252 einen gemeinsamen Positionsantrieb oder jeweils einen eigenen Positionsantrieb auf.

Die zumindest eine Sensoreinrichtung 251, bevorzugt die zumindest zwei Sensoren 252, vorzugsweise welche zumindest zwei Sensoren 252 bevorzugt in Transportrichtung T nebeneinander angeordnet sind, ist die Lage des zumindest einen Bogens 02 in Transportrichtung T und/oder, bevorzugt und, in Querrichtung A bestimmend ausgebildet. In einer bevorzugten Ausführung der Sensoreinrichtung 251 sind die zumindest zwei vorzugsweise in Transportrichtung T nebeneinander angeordneten Sensoren 252 durch eine Auswertung der vorzugsweise wahlweisen Erfassung der zumindest einen Druckmarke 11, bevorzugt zumindest zwei Druckmarken 11, weiter bevorzugt zumindest zwei in Transportrichtung T nebeneinander angeordnete Druckmarken 11, weiter bevorzugt zumindest eine Druckmarke 11 je Sensor 252, und/oder der zumindest einen Kante 07; 08; 09 die Lage des zumindest einen Bogens 02 in Transportrichtung T und/oder in Querrichtung A, bevorzugt sowohl in Transportrichtung T als auch in Querrichtung A, bestimmend ausgebildet. Vorzugsweise ist dadurch die Lage des zumindest einen Bogens 02 in Transportrichtung T und in Querrichtung A und eine Schieflage oder Schräglage des zumindest einen Bogens 02 durch die zumindest zwei in Transportrichtung T nebeneinander angeordneten Sensoren 252 bestimmt, vorzugsweise eindeutig bestimmt.

Vorzugsweise ist der zumindest eine Sensor 252, bevorzugt mindestens ein Sensor 252 der zumindest zwei Sensoren 252, wahlweise die zumindest eine Kante 07; 08; 09, bevorzugt Vorderkante 07, und/oder die zumindest eine Druckmarke 11 erfassend ausgebildet, vorzugsweise um die Lage des zumindest einen Bogens 02 zu bestimmen und/oder vorzugsweise um zumindest einen Lagefehler des zumindest einen Bogens 02 festzustellen. Der zumindest eine Sensor 252, bevorzugt mindestens ein Sensor 252 der zumindest zwei Sensoren 252, weiter bevorzugt die zumindest zwei Sensoren 252, ist bevorzugt die Position der vorzugsweise wahlweise erfassten zumindest einen Kante 07; 08; 09 und/oder Druckmarke 11 relativ zu einer Referenzposition und/oder beispielsweise den Ankunftszeitpunkt der vorzugsweise wahlweise erfassten zumindest einen Kante 07; 08; 09 und/oder Druckmarke 11 an der Ausrichtposition PA und/oder in dem zumindest einen Erfassungsbereich 253 relativ zu einer Referenz erfassend ausgebildet und/oder erfasst die Position und/oder den Ankunftszeitpunkt. Beispielsweise bei Verwendung der zumindest zwei Sensoren 252 ist die Bildung eines Mittelwerts und somit eine Erhöhung der Genauigkeit der Positionserfassung möglich.

Zur Bestimmung der Lage in Transportrichtung T des zumindest einen Bogens 02 und/oder eines Lagefehlers in Transportrichtung T des zumindest einen Bogens 02 ist der zumindest eine Sensor 252, bevorzugt mindestens ein Sensor 252 der zumindest zwei Sensoren 252, bevorzugt die Position, insbesondere in Transportrichtung T, der vorzugsweise wahlweise erfassten zumindest einen Kante 07; 08; 09, bevorzugt Vorderkante 07, und/oder Druckmarke 11 relativ zu einer Referenzposition erfassend ausgebildet. Beispielsweise alternativ ist der zumindest eine Sensor 252 den Ankunftszeitpunkt der vorzugsweise wahlweise erfassten zumindest einen Kante 07; 08; 09, bevorzugt Vorderkante 07, und/oder Druckmarke 11 an der Ausrichtposition PA erfassend ausgebildet. Die zumindest eine vorzugsweise wahlweise erfasste Kante 07; 08; 09 und/oder Druckmarke 11 weist bevorzugt mindestens einen Messpunkt, bevorzugt mindestens zwei Messpunkte, weiter bevorzugt mindestens vier Messpunkte, weiter bevorzugt eine Vielzahl von Messpunkten, zur Bestimmung eines Lagefehlers in Transportrichtung T auf. Die zumindest zwei Messpunkte sind bevorzugt in Transportrichtung T nebeneinander angeordnet. Die zumindest zwei Messpunkte werden bevorzugt zeitgleich erfasst und/oder ausgewertet. Bei einer Abweichung von einer Referenz, vorzugsweise der Sollposition, liegt vorzugsweise ein Lagefehler in Transportrichtung T des zumindest einen Bogens 02 vor.

Zur Bestimmung eines als eine Schieflage ausgebildeten Lagefehlers des zumindest einen Bogens 02 sind die zumindest zwei Sensoren 252 bevorzugt jeweils die Position, insbesondere in Transportrichtung T, der vorzugsweise wahlweise erfassten zumindest einen Kante 07; 08; 09, bevorzugt Vorderkante 07, und/oder Druckmarke 11 erfassend ausgebildet. Beispielsweise alternativ sind die zumindest zwei Sensoren 252 jeweils den Ankunftszeitpunkt der vorzugsweise wahlweise erfassten zumindest einen Kante 07; 08; 09, bevorzugt Vorderkante 07, und/oder Druckmarke 11 an der Ausrichtposition PA erfassend ausgebildet. Die zumindest zwei bestimmten Positionen und/oder Ankunftszeitpunkte werden vorzugsweise miteinander verglichen. Bei einer Abweichung voneinander liegt vorzugsweise eine Schieflage des zumindest einen Bogens 02 vor.

Zur Bestimmung der Lage in Querrichtung A des zumindest einen Bogens 02 und/oder eines Lagefehlers in Querrichtung A des zumindest einen Bogens 02 ist der zumindest eine Sensor 252, bevorzugt mindestens ein Sensor 252 der zumindest zwei Sensoren 252, beispielsweise lediglich ein Sensor 252 der zumindest zwei Sensoren 252, bevorzugt die Position, insbesondere in Querrichtung A, der vorzugsweise wahlweise erfassten zumindest einen Kante 07; 08; 09, beispielsweise Seitenkante 09, und/oder Druckmarke 11 relativ zu einer Referenzposition erfassend ausgebildet. Die zumindest eine vorzugsweise wahlweise erfasste Kante 07; 08; 09 und/oder Druckmarke 11 weist bevorzugt mindestens einen Messpunkt, bevorzugt mindestens zwei Messpunkte, weiter bevorzugt mindestens vier Messpunkte, weiter bevorzugt eine Vielzahl von Messpunkten, zur Bestimmung eines Lagefehlers in Querrichtung A auf. Die zumindest zwei Messpunkte sind bevorzugt in Querrichtung A nebeneinander, also in Transportrichtung T hintereinander, angeordnet. Die zumindest zwei Messpunkte werden bevorzugt zeitgleich erfasst und/oder ausgewertet. Bei einer Abweichung von einer Referenz, bevorzugt Sollposition, liegt vorzugsweise ein Lagefehler in Querrichtung A des zumindest einen Bogens 02 vor.

Die Position der zumindest einen Druckmarke 11, vorzugsweise somit die Lage des zumindest einen Bogens 02, wird bevorzugt zumindest über den Mittelpunkt, beispielsweise den Flächenschwerpunkt, der zumindest einen Druckmarke 11 bestimmt. Hierzu wird bevorzugt die der Druckmarke 11 entsprechende Form auf dem zumindest einen Bogen 02, beispielsweise zumindest der Umriss der zumindest einen Druckmarke 11, erfasst und daraus der Mittelpunkt, beispielsweise Flächenschwerpunkt, der zumindest einen Druckmarke 11 berechnet. Beispielsweise alternativ wird die Position der zumindest einen Druckmarke 11 in Transportrichtung T durch eine Seite und/oder Kante und/oder Achse der zumindest einen Druckmarke 11 bestimmt, welche vorzugsweise zur Querrichtung A parallel ist. Beispielsweise alternativ wird die Position der zumindest einen Druckmarke 11 in Querrichtung A durch eine Seite und/oder Kante und/oder Achse der zumindest einen Druckmarke 11 bestimmt, welche vorzugsweise zur Transportrichtung T parallel ist.

Der zumindest eine Sensor 252, bevorzugt mindestens ein Sensor 252 der zumindest zwei Sensoren 252, weiter bevorzugt die zumindest zwei Sensoren 252, ist vorzugsweise jeweils die Lage in Transportrichtung T des zumindest einen Bogens 02 und/oder, bevorzugt und, die Lage in Querrichtung A des zumindest einen Bogens 02 erfassend und/oder bestimmend ausgebildet und/oder erfasst die Lage und/oder bestimmt die Lage. Der zumindest eine Sensor 252, bevorzugt mindestens ein Sensor 252 der zumindest zwei Sensoren 252, weiter bevorzugt die zumindest zwei Sensoren 252, ist vorzugsweise jeweils einen Lagefehler in Transportrichtung T des zumindest einen Bogens 02 und/oder, bevorzugt und, einen Lagefehler in Querrichtung A des zumindest einen Bogens 02 erfassend und/oder bestimmend ausgebildet und/oder erfasst den Lagefehler und/oder bestimmt den Lagefehler. Insbesondere ist der zumindest eine Sensor 252, bevorzugt mindestens ein Sensor 252 der zumindest zwei Sensoren 252, sowohl einen Lagefehler in Transportrichtung T des zumindest einen Bogens 02 als auch einen Lagefehler in Querrichtung A des zumindest einen Bogens 02 erfassend und/oder bestimmend ausgebildet und/oder erfasst den Lagefehler und/oder bestimmt den Lagefehler. Vorzugsweise sind die zumindest zwei Sensoren 252 eine Schieflage des zumindest einen Bogens 02 erfassend und/oder bestimmend ausgebildet und/oder erfassen die Schieflage und/oder bestimmen die Schieflage.

Bevorzugt zusätzlich ist zumindest ein Sensor 252, beispielsweise zumindest ein Sensor 252 der zumindest zwei in Transportrichtung T nebeneinander angeordneten Sensoren 252 oder zumindest ein dritter Sensor 252, den zumindest einen Bogen 02 seitlich, beispielsweise vorzugsweise wahlweise an dessen zumindest einer Seitenkante 09 und/oder durch zumindest eine Druckmarke 11, erfassend ausgebildet. Bevorzugt ist der zumindest eine Sensor 252 die seitliche Positionierung in Querrichtung A des zumindest einen Bogens 02 bestimmend ausgebildet. Bei einer seitlichen Ausrichtung des zumindest einen Bogens 02 der Bogen 02 ist bevorzugt das Steuerungssystem 1100 und/oder die zumindest eine Sensoreinrichtung 251, bevorzugt die zumindest zwei vorzugsweise in Transportrichtung T nebeneinander angeordneten Sensoren 252, den zumindest einen Stellantrieb 237 der seitlichen Ausrichtung in Abhängigkeit von der Erfassung des Bogens 02, bevorzugt der wahlweise Erfassung der zumindest einen Kante 07; 08;09, bevorzugt Vorderkante 07, und/oder der zumindest einen Druckmarke 11, bevorzugt der zumindest einen Druckmarke 11 der zumindest zwei vorzugsweise in Transportrichtung T nebeneinander angeordneten Druckmarken 11, durch die zumindest eine Sensoreinrichtung 251, bevorzugt durch die zumindest zwei Sensoren 252, ansteuernd ausgebildet.

In einer bevorzugten Ausführung weist die Sensoreinrichtung 251 den zumindest einen, vorzugsweise dritten, Sensor 252 zur seitlichen Erfassung des zumindest einen Bogens 02 auf. Beispielsweise ist der zumindest eine dritte Sensor 252 in Transportrichtung T zu einer seitlichen Erfassung von Bogen 02 angeordnet. Bevorzugt ist der mindestens eine dritte Sensor 252 in Transportrichtung T zumindest einen Bogen 02, vorzugsweise den zumindest einen Bogen 02 der Bogen 02, seitlich erfassend angeordnet. Vorzugsweise weist der zumindest eine Sensor 252, bevorzugt der mindestens eine dritte Sensor 252, zumindest einen Positionsantrieb für eine Positionsveränderung zumindest des betreffenden Sensors 252 auf, beispielsweise zumindest einen Linearmotor und/oder Elektromotor und/oder Motor mit Gewindespindel. Bevorzugt ist der ihm zugeordnete Positionsantrieb die Position, bevorzugt zumindest in Querrichtung A, des zumindest einen Sensors 252, bevorzugt zumindest eines Sensors 252 der zumindest zwei Sensoren 252, verändernd ausgebildet. Bevorzugt ist der zumindest eine Positionsantrieb die Position, bevorzugt zumindest in Querrichtung A, des zumindest einen Sensors 252, bevorzugt zumindest eines Sensors 252 der zumindest zwei Sensoren 252, verändernd ausgebildet. Bevorzugt ist der zumindest eine, bevorzugt wahlweise, zumindest eine seitliche Druckmarke 11 und/oder zumindest eine Seitenkante 09 von Bogen 02 in Transportrichtung T vor der Ausrichtposition PA erfassende Sensor 252 so angeordnet, sodass ein Erfassungsbereich 253 des betreffenden Sensors 252 die zumindest eine seitliche Druckmarke 11 und/oder die zumindest eine Seitenkante 09 des, vorzugsweise zumindest einen, Bogens 02 der Bogen 02 zumindest zeitweise erfassend ausgebildet ist. Bevorzugt ist der zumindest eine Sensor 252, bevorzugt der zumindest eine dritte Sensor 252, zur bevorzugt wahlweisen Erfassung zumindest einer seitlichen Druckmarke 11 und/oder zumindest einer Seitenkante 09 von Bogen 02 in Transportrichtung T vor der Ausrichtposition PA so angeordnet, sodass der Erfassungsbereich 253 des betreffenden, bevorzugt des zumindest einen dritten, Sensors 252 die zumindest eine seitliche Druckmarke 11 und/oder die zumindest eine Seitenkante 09 des Bogens 02 zumindest zeitweise erfassend ausgebildet ist. Der zumindest eine, bevorzugt dritte, Sensor 252 für die seitliche Erfassung von Bogen 02 weist bevorzugt zumindest einen Positionsantrieb für eine Positionsveränderung zumindest des betreffenden, bevorzugt zumindest einen dritten, Sensors 252 auf. Bevorzugt wird die Position des betreffenden, bevorzugt des zumindest einen dritten, Sensors 252 durch den zumindest einen Positionsantrieb auf die jeweilige Breite und/oder das jeweilige Format des zu erfassenden Bogens 02, insbesondere orthogonal zu der Transportrichtung T, angepasst.

Bevorzugt befindet sich ein Bogen 02, bevorzugt der zumindest eine Bogen 02 der Bogen 02, in der Ausrichtposition PA während der Erfassung durch den zumindest einen Sensor 252, bevorzugt die zumindest zwei Sensoren 252, weiter bevorzugt die zumindest zwei parallel nebeneinander angeordneten Sensoren 252, der Sensoreinrichtung 251 in Ruhe. Die zumindest eine Sensoreinrichtung 251, bevorzugt die zumindest zwei Sensoren 252, ist vorzugsweise den zumindest einen Bogen 02 in der Ausrichtposition PA in Ruhe erfassend ausgebildet. Zusätzlich oder alternativ befindet sich ein Bogen 02, bevorzugt der zumindest eine Bogen 02 der Bogen 02, durch die zumindest eine Halterung 206; 207 des zumindest einen Transportmittels 204 des zumindest einen Zuführsystems 202 während der Erfassung durch den zumindest einen Sensor 252, bevorzugt die zumindest zwei Sensoren 252, weiter bevorzugt die zumindest zwei parallel nebeneinander angeordneten Sensoren 252, zumindest teilweise in seiner Lage fixiert. Vorzugsweise ist die zumindest eine Halterung 206; 207 des zumindest einen Transportmittels 204 des zumindest einen Zuführsystems 202 den zumindest einen Bogen 02 während der Erfassung durch den zumindest einen Sensor 252, bevorzugt die zumindest zwei Sensoren 252, weiter bevorzugt die zumindest zwei parallel nebeneinander angeordneten Sensoren 252, zumindest teilweise in seiner Lage fixierend ausgebildet.

Bevorzugt ist die zumindest eine Sensoreinrichtung 251, insbesondere der zumindest eine jeweilige Sensor 252 der Sensoreinrichtung 251, bevorzugt jeder Sensor 252 der Sensoreinrichtung 251, mit zumindest einer Steuerungseinheit des Steuerungssystems 1100 verbunden und/oder umfasst bevorzugt zumindest eine Steuerungseinheit des Steuerungssystems 1100. Bevorzugt erzeugt der jeweilige, bevorzugt zumindest eine, Sensor 252, bevorzugt die zumindest zwei Sensoren 252, zumindest ein Messsignal, welches vorzugsweise in der Steuerungseinheit verarbeitet wird und/oder welches mit einer in der Steuerungseinheit hinterlegten Referenz verglichen wird. Bevorzugt gibt die mindestens eine Steuerungseinheit zumindest ein Signal, insbesondere zumindest ein Steuersignal und/oder zumindest ein Regelsignal, an zumindest einen Bestandteil der Bogenbearbeitungsmaschine 01 ab. Bevorzugt ist die zumindest eine Sensoreinrichtung 251 in Abhängigkeit von der Erfassung des jeweiligen, bevorzugt zumindest einen, Bogens 02 durch den zumindest einen Sensor 252, bevorzugt die zumindest zwei Sensoren 252, den zumindest einen Stellantrieb 218; 231; 237 des Zuführsystems 202, insbesondere alle jeweiligen Stellantriebe 218; 231; 237 des Zuführsystems 202, steuernd und/oder regelnd ausgebildet und/oder steuert und/oder regelt den zumindest einen Stellantrieb 218; 231; 237.

Die zumindest eine Sensoreinrichtung 251, bevorzugt mindestens ein Sensor 252 der zumindest zwei Sensoren 252, weiter bevorzugt die zumindest zwei Sensoren 252, ist vorzugsweise die zumindest eine Druckmarke 11, bevorzugt zumindest zwei Druckmarken 11, weiter bevorzugt zwei Druckmarken 11, erfassend ausgebildet und/oder erfasst diese, welche zumindest eine Druckmarke 11 in dem zumindest einen Druckkontrollstreifen integriert ist. Die zumindest eine Sensoreinrichtung 251, bevorzugt mindestens ein Sensor 252 der zumindest zwei Sensoren 252, weiter bevorzugt die zumindest zwei Sensoren 252, ist vorzugsweise die zumindest eine Druckmarke 11, bevorzugt zumindest zwei Druckmarken 11, weiter bevorzugt zwei Druckmarken 11, erfassend ausgebildet und/oder erfasst diese, welche zumindest eine Druckmarke 11 als eine Marke zum Überprüfen eines Passers und/oder zum Überprüfen eines Registers und/oder zur Ausrichtung des zumindest einen Bogens 02 in Transportrichtung T und in Querrichtung A ausgebildet ist. Die zumindest eine Sensoreinrichtung 251, bevorzugt mindestens ein Sensor 252 der zumindest zwei Sensoren 252, weiter bevorzugt die zumindest zwei Sensoren 252, ist vorzugsweise die zumindest eine Druckmarke 11, bevorzugt zumindest zwei Druckmarken 11, weiter bevorzugt zwei Druckmarken 11, erfassend ausgebildet und/oder erfasst diese, wobei der zumindest eine Bogen 02 die zumindest eine Druckmarke 11 in einem Bereich außerhalb zumindest eines Druckbildes und/oder in einem Randbereich des zumindest einen Bogens 02 im Bereich der als Vorderkante 07 ausgebildeten Kante 07 des zumindest einen Bogens 02 und/oder bevorzugt zu der Vorderkante 07 beabstandet aufweist. Die zumindest eine Sensoreinrichtung 251, bevorzugt mindestens ein Sensor 252 der zumindest zwei Sensoren 252, weiter bevorzugt die zumindest zwei Sensoren 252, ist vorzugsweise die zumindest eine Druckmarke 11, bevorzugt zumindest zwei Druckmarken 11, weiter bevorzugt zwei Druckmarken 11, erfassend ausgebildet und/oder erfasst diese, welche zumindest eine Druckmarke 11 als Rechteck und/oder Quadrat ausgebildet ist. Die zumindest eine Sensoreinrichtung 251, bevorzugt mindestens ein Sensor 252 der zumindest zwei Sensoren 252, weiter bevorzugt die zumindest zwei Sensoren 252, ist vorzugsweise die zumindest eine Druckmarke 11, bevorzugt zumindest zwei Druckmarken 11, weiter bevorzugt zwei Druckmarken 11, erfassend ausgebildet und/oder erfasst diese, wobei zumindest eine Seite und/oder Achse der zumindest einen Druckmarke 11 parallel zu der Vorderkante 07 des zumindest einen Bogens 02 und/oder parallel zu der Querrichtung A angeordnet ist und/oder wobei zumindest eine Seite und/oder Achse der zumindest einen Druckmarke 11 parallel zu der Seitenkante 09 des zumindest einen Bogens 02 und/oder parallel zu der Transportrichtung T angeordnet ist. Die zumindest eine Sensoreinrichtung 251, bevorzugt die zumindest zwei Sensoren 252, ist vorzugsweise zumindest zwei Druckmarken 11 des zumindest einen Bogens 02, weiter bevorzugt zwei Druckmarken 11, erfassend ausgebildet und/oder erfasst diese, welche zumindest zwei Druckmarken 11 entlang der Vorderkante 07 des zumindest einen Bogens 02 parallel zueinander und zueinander beabstandet angeordnet sind. Die zumindest zwei Sensoren 252 sind vorzugsweise jeweils zumindest eine Druckmarke 11 der zumindest zwei Druckmarken 11 erfassend ausgebildet und/oder erfassen diese. Vorzugsweise erfolgt eine Zuführung von Bogen 02 zu dem zumindest einen bogenverarbeitenden Aggregat 300, insbesondere zu dem zumindest einen Stanzaggregat 300, durch eine Zuführung von Bogen 02 von dem zumindest einen Anleger 100 über das zumindest eine Anlageaggregat 200.

Das Anlegeraggregat 100 weist vorzugsweise zumindest einen Anlegerstapel 101 auf, welcher bevorzugt eine Vielzahl von Bogen 02 umfasst, wobei die Vielzahl von Bogen 02 vorzugsweise zumindest zeitweise gestapelt, in vertikaler Richtung V übereinander, vorliegen. Bevorzugt ist der Raumbereich des zumindest einen Anlegerstapels 101 durch zumindest einen Vorderanschlag in Transportrichtung T begrenzt. Vorzugsweise weist das Anlegeraggregat 100 zumindest eine Saugeinrichtung 102 auf, welche bevorzugt oberhalb, also in vertikaler Richtung V über dem zumindest einen Anlegerstapel 101, angeordnet ist. Bevorzugt weist das Anlegeraggregat 100 zumindest ein Transportmittel 103; 104 auf. Bevorzugt umfasst die zumindest eine Saugeinrichtung 102 das zumindest eine Transportmittel 103; 104 des Anlegeraggregates 100 um Bogen 02, bevorzugt den jeweils obersten Bogen 02 des Anlegerstapels 101, von dem Anlegerstapel 101 zu zumindest einem dem Anlegeraggregat 100 in Transportrichtung T nachgeordneten Aggregat 200; 300; 400; 500; 600; 650; 700; 800; 900 zu transportieren. Bevorzugt weist das Anlegeraggregat 100 das zumindest eine als vertikales Saugelement 103 ausgebildete Transportmittel 103 und/oder das zumindest eine als horizontales Saugelement 104 ausgebildete Transportmittel 104 auf.

Das zumindest eine vertikale Saugelement 103 ist bevorzugt Bogen 02, bevorzugt den jeweils obersten Bogen 02 des Anlegerstapels 101, in vertikaler Richtung V zumindest teilweise anhebend ausgebildet. Bevorzugt zusätzlich oder alternativ ist das zumindest eine vertikale Saugelement 103 Bogen 02, bevorzugt den jeweils obersten Bogen 02 des Anlegerstapels 101, zumindest teilweise innerhalb einer Ebene des Transportweges für einen Weitertransport innerhalb der Bearbeitungsmaschine 01 positionierend ausgebildet.

Die Ebene des Transportweges ist bevorzugt diejenige Ebene, welche durch die Transportrichtung T und die Querrichtung A an der betreffenden Stelle des Transportweges aufgespannt ist.

Das zumindest eine horizontale Saugelement 104 ist bevorzugt den jeweiligen Bogen 02, welcher vorzugsweise durch das vertikale Saugelement 103 zumindest teilweise angehoben wurde, zumindest teilweise, bevorzugt vollständig, innerhalb der Ebene des Transportweges in Transportrichtung T transportierend ausgebildet. Bevorzugt ist das zumindest eine Transportmittel 103; 104 des Anlegeraggregates 100, bevorzugt das zumindest eine horizontale Saugelement 104, den jeweiligen Bogen 02 an zumindest einen in Transportrichtung T nach dem Anlegerstapel 101 angeordneten Anlegertisch 107 zuführend ausgebildet.

Beispielsweise weist das zumindest eine Anlegeraggregat 100 zumindest eine Einrichtung, bevorzugt zumindest eine Blaseinrichtung, vorzugsweise zur Unterstützung des Transports von Bogen 02 innerhalb des zumindest einen Anlegeraggregates 100 auf. Bevorzugt ist die zumindest eine Blaseinrichtung zumindest einen Luftstrom erzeugend ausgebildet und/oder ist zumindest ein Luftstrom erzeugbar, welcher unterhalb, also auf eine in vertikaler Richtung V unterhalb liegender Position, einer Unterseite eines jeweiligen Bogens 02, welcher bevorzugt durch das zumindest eine vertikale Saugelement 103 von dem zumindest einen Anlegerstapel 101 angehoben wurde. Bevorzugt ist somit der vom zumindest einen Anlegerstapel 101 entfernte Bogen 02 zumindest zu einem Großteil, bevorzugt vollständig, innerhalb der Ebene des Transportweges der Bearbeitungsmaschine 01 auf zumindest einem Anlegertisch 107 des zumindest einen Anlegeraggregates 100 positioniert.

Bevorzugt zusätzlich oder alternativ ist das zumindest eine Transportmittel 103; 104 des zumindest einen Anlegeraggregates 100 zumindest einen vorzugsweise geschuppten Strom von Bogen 02 erzeugend ausgebildet.

Bevorzugt umfasst das zumindest eine Anlegeraggregat 100 zumindest ein Transportmittel 108 des zumindest einen Anlegeraggregates 100. Bevorzugt ist das zumindest eine Transportmittel 108 des zumindest einen Anlegeraggregates 100 als zumindest ein Transportband 108 ausgebildet. Bevorzugt werden Bogen 02 mittels des zumindest einen Transportmittels 108 des zumindest einen Anlegeraggregates 100 in Transportrichtung T von dem zumindest einen Anlegeraggregat 100 zu einem in Transportrichtung T nachgeordneten Aggregat 200; 300; 400; 500; 600; 650; 700; 800; 900 transportiert.

Bevorzugt ist der zumindest eine Anleger 100 mit dem zumindest einen Anlageaggregat 200 über den zumindest einen Anlegertisch 107 verbunden. Vorzugsweise ist das mindestens eine vorzugsweise als Transportband 108 ausgebildete Transportmittel 108 des Anlegers 100 in Transportrichtung T zwischen dem zumindest einen Anlegerstapel 101 und dem zumindest einem Anlageaggregat 200 angeordnet. Bevorzugt ist das zumindest eine Transportmittel 108 des Anlegers 100 an dem zumindest einen Anlegertisch 107 angeordnet. In einer bevorzugten Ausführung ist das zumindest eine Transportmittel 108 als zumindest ein Transportband 108 und/oder als zumindest ein Saugtransportband 108 ausgebildet. Beispielsweise umfasst das zumindest eine Transportmittel 108 mindestens zwei vorzugsweise zueinander parallel angeordnete Transportbänder 108, wobei bevorzugt zumindest eines der Transportbänder 108 als Saugtransportband 108 ausgebildet ist. Vorzugsweise werden Bogen 02 auf dem zumindest einen Transportmittel 108 transportiert und/oder liegen auf dem zumindest einen Transportmittel 108.

Vorzugsweise weist das zumindest eine Transportmittel 108 zumindest einen Antrieb 111 auf. Der zumindest eine Antrieb 111 des mindestens einen Transportmittels 108 ist bevorzugt als Einzelantrieb ausgebildet. Beispielsweise ist der zumindest eine Antrieb 111 als Elektromotor ausgebildet. Bevorzugt ist der zumindest eine Antrieb 111 unabhängig von dem zumindest einen Antrieb 1001 des Antriebssystems 1000 geregelt und/oder gesteuert.

Vorzugsweise umfasst das zumindest eine Anlageaggregat 200 zumindest einen als Erfassungssensor 261 ausgebildeten Sensor 261, bevorzugt genau einen Erfassungssensor 261, mit zumindest einem Erfassungsbereich 262. Bevorzugt ist der zumindest eine Erfassungssensor 261 als Reflextaster 261 oder Lichtschranke ausgebildet. Vorzugsweise ist der zumindest eine Erfassungssensor 261 oberhalb oder unterhalb des Transportweges angeordnet und auf diesen gerichtet. Bevorzugt ist der zumindest eine Erfassungssensor 261 zumindest ein Signal erzeugend ausgebildet, welches beispielsweise durch das zumindest eine Steuerungssystem 1100 verarbeitbar ist und/oder verarbeitet wird.

Der Erfassungsbereich 262 des zumindest einen Erfassungssensors 261 ist bevorzugt in Transportrichtung T nach dem zumindest einen insbesondere als Transportband 108 ausgebildeten Transportmittel 108 und bevorzugt zusätzlich vor der Ausrichtposition PA auf dem Transportweg von Bogen 02 angeordnet. Vorzugsweise ist der Erfassungsbereich 262 jener Bereich des Transportweges, welchen der jeweilige Erfassungssensor 261 erfasst. Vorzugsweise erfasst der zumindest eine Erfassungssensor 261 vorzugsweise jeweils einen Bogen 02 in dem Erfassungsbereich 262. Bevorzugt weist der Erfassungsbereich 262 des zumindest einen Erfassungssensors 261 auf dem Transportweg von Bogen 02 orthogonal zu der Transportrichtung T entlang der Arbeitsbreite der Bogenbearbeitungsmaschine 01 zumindest einen Abstand von mindestens einem Drittel der Arbeitsbreite, bevorzugt mindestens zwei Fünftel der Arbeitsbreite, zu jeder Begrenzung der Arbeitsbreite auf. Weiter bevorzugt ist der Erfassungsbereich 262 des zumindest einen Erfassungssensors 261, bevorzugt des genau einen Erfassungssensors 261, mittig entlang der Arbeitsbreite angeordnet.

Bevorzugt ist der zumindest eine Erfassungsbereich 262 vor der Ausrichtposition PA angeordnet. Weiter bevorzugt ist der zumindest eine Erfassungsbereich 262 zu der Ausrichtposition PA mit einem Abstand L262 beabstandet, insbesondere mit einem Abstand L262 größer Null. Bevorzugt ist der zumindest eine Erfassungsbereich 262 in Transportrichtung T vor der Greiferwelle 221 angeordnet, wenn sich das zumindest eine Haltemittel 204 in der Ausrichtposition PA befindet. Bevorzugt ist der Abstand L262 des zumindest einen Erfassungsbereichs 262 zu der Ausrichtposition PA zumindest so groß, dass wenigstens ein Signal des betreffenden Erfassungssensors 261 beispielsweise durch das zumindest eine Steuerungssystem 1100 verarbeitbar ist und/oder verarbeitet werden kann, bevor der das betreffende Signal erzeugende Bogen 02 die Ausrichtposition PA erreicht.

Bevorzugt umfasst die Bogenbearbeitungsmaschine 01, insbesondere das Anlageaggregat 200, zumindest die zumindest eine Sensoreinrichtung 251 mit den zumindest zwei Sensoren 252 und zusätzlich den zumindest einen Erfassungssensor 261. Bevorzugt sind die zumindest zwei Sensoren 252 der zumindest einen Sensoreinrichtung 251 in Transportrichtung T an der Ausrichtposition PA nebeneinander angeordnet. Vorzugsweise ist der zumindest eine Erfassungssensor 261 in Transportrichtung T vor den zumindest zwei Sensoren 251 der zumindest einen Sensoreinrichtung 251 angeordnet und/oder ist der zumindest eine Erfassungssensor 261 in Transportrichtung T zu den zumindest zwei Sensoren 251 der zumindest einen Sensoreinrichtung 251 beabstandet, insbesondere mit einem Abstand größer Null, angeordnet.

Bevorzugt ist der zumindest eine Erfassungssensor 261 zumindest mit dem mindestens einen vorzugsweise als Transportband 108 ausgebildeten Transportmittel 108 über das zumindest eine Steuerungssystem 1100 verbunden.

Bevorzugt erfasst der zumindest eine Erfassungssensor 261 vorzugsweise jeweils einen Bogen 02, welcher entlang des Transportweges transportiert wird, in dem zumindest einen Erfassungsbereich 262. Bevorzugt erfasst der zumindest eine Erfassungssensor 261 vorzugsweise jeweils einen Bogen 02 vor dessen Ankunft an der Ausrichtposition PA. Bevorzugt ist der zumindest eine Erfassungssensor 261 den jeweiligen zumindest einen Bogen 02 an dessen Vorderkante 07 erfassend ausgebildet und/oder erfasst der zumindest eine Erfassungssensor 261 den jeweiligen zumindest einen Bogen 02 an dessen Vorderkante 07. Weiter bevorzugt erfasst der zumindest eine Erfassungssensor 261 den jeweiligen zumindest einen Bogen 02 mit zumindest einem Drittel Abstand zu den jeweiligen Seitenkanten 09, bevorzugt mittig, an dessen Vorderkante 07. Bevorzugt erfasst der zumindest eine Erfassungssensor 261 zumindest einen Bogen 02, bevorzugt genau einen Bogen 02, pro Maschinenzyklus.

In einer bevorzugten Ausführung ist die Vorderkante 07 des durch den zumindest einen Erfassungssensor 261 erfassten Bogens 02 in Transportrichtung T zu der Hinterkante 08 eines jeweiligen vorausgehenden Bogens 02 zumindest an der Position des Transportweges, an welcher der zumindest eine Erfassungssensor 261 den betreffenden Bogen 02 erfassend ausgebildet ist und/oder erfasst wird, beabstandet. Bevorzugt weist die Vorderkante 07 des durch den zumindest einen Erfassungssensor 261 erfassten Bogens 02 einen als Bogenlücke L02 ausgebildeten Abstand L02 zu der Hinterkante 08 des jeweiligen vorausgehenden Bogens 02 auf. Bevorzugt wird die Vorderkante 07 eines Bogens 02 mit einer ihr vorausgehenden Bogenlücke L02 durch den zumindest einen Erfassungssensor 261 erfasst.

Bevorzugt zusätzlich oder alternativ ist das zumindest eine Transportmittel 103; 104 des zumindest einen Anlegeraggregates 100 zumindest einen vorzugsweise geschuppten Strom von Bogen 02 erzeugend ausgebildet. Alternativ ist zumindest das zumindest eine Transportmittel 103; 104 des zumindest einen Anlegeraggregates 100 zumindest einen Strom von vereinzelten Bogen 02 erzeugend ausgebildet.

Ein Maschinenzyklus beschreibt im Vorangegangenen und im Folgenden bevorzugt eine Summe derjenigen Prozessschritte und/oder Abläufe, welche innerhalb der Bearbeitungsmaschine 01 bevorzugt innerhalb eines Aggregates 100; 200; 300; 400; 500; 600; 650; 700; 800; 900 in einer gleichbleibenden Reihenfolge ablaufen. Bevorzugt wiederholen sich die betreffenden Prozessschritte und/oder Abläufe erst mit dem nächsten Maschinenzyklus in gleicher Reihenfolge. Beispielsweise vollzieht eine vorzugsweise taktgebende Antriebswelle 1002 eine vollständige Rotation um ihre Rotationsachse D innerhalb eines Maschinenzyklus. Beispielsweise umfasst ein Maschinenzyklus jeweils einen Bearbeitungsschritt eines Bogens 02 innerhalb eines Aggregates 300; 400; 500; 650, sowie der Transport des Bogens 02 hin zu einer jeweiligen Bearbeitungsstelle und/oder den Transport von der jeweiligen Bearbeitungsstelle zu einem nachfolgenden Aggregat 400; 500; 600; 700; 800; 900. Beispielsweise finden während eines Maschinenzyklus Stanzen, Ausbrechen und/oder Trennung von Nutzen 03 vorzugsweise gleichzeitig in voneinander verschiedenen Aggregaten 300; 400; 500; 650 an voneinander verschiedenen Bogen 02 statt.

Ein Maschinenzyklus umfasst bevorzugt zumindest einen Maschinentakt, insbesondere zumindest eine Mehrzahl von Maschinentakten. Ein Maschinentakt beschreibt im Vorangegangenen und im Folgenden bevorzugt einen jeweiligen Prozessschritt und/oder Ablauf, welcher zu einem Zeitpunkt des Maschinenzyklus erfolgt. Bevorzugt entspricht ein Maschinentakt zumindest einer Winkellage, bevorzugt genau einer Winkellage, des Antriebs 1001 des Antriebssystems 1000. Die Bogenbearbeitungsmaschine 01 umfasst bevorzugt zumindest ein taktgebendes Element 113, welches sich im Maschinentakt bewegend ausgebildet ist und/oder im Maschinentakt bewegt wird. Bevorzugt wird das zumindest eine taktgebende Element 113 zumindest einmal, bevorzugt genau einmal, pro Maschinenzyklus von seiner Ausgangsposition und/oder Ausgangslage in eine davon verschiedene Position und/oder Lage und wieder zurück in seine Ausgangsposition und/oder Ausgangslage bewegt.

Vorzugsweise, insbesondere im Falle einer Einzelbogenzuführung entlang des zumindest einen bevorzugt als Transportband 108 ausgebildeten Transportmittels 108, sind die Bogen 02 auf dem Transportmittel 108 jeweils zueinander mit der Bogenlücke L02 beabstandet angeordnet. Bevorzugt wird die jeweilige Bogenlücke L02 vor der Vorderkante 07 eines betreffenden Bogens 02 insbesondere im Falle einer Einzelbogenzuführung zumindest durch ein Beschleunigen des zumindest einen Transportmittels 108 und/oder zumindest einer Transportwalze 112 zumindest dann erzeugt, wenn vorzugsweise ein von einer Übergabe eines Bogens 02 von der zumindest einen bevorzugt als Trenneinrichtung 102 ausgebildeten Saugeinrichtung 102 an das zumindest eine Transportmittel 108 verschiedener Maschinentakt vorliegt, bevorzugt wenn sich das taktgebende Element 113 in der Ebene des Transportweges und/oder an der Ebene des Transportweges und/oder an seiner in vertikaler Richtung V betrachteten niedrigsten Position befindet. Bevorzugt zusätzlich oder alternativ, insbesondere im Falle einer geschuppten Zuführung von Bogen 02, wird die jeweilige Bogenlücke L02 vor der Vorderkante 07 eines betreffenden Bogens 02 zumindest durch den zumindest teilweisen Weitertransport des direkt vorangegangenen Bogens 02 an das Anlageaggregat 200 direkt nachgelagerte Aggregat 300 erzeugt. Bei einer geschuppten Zuführung von Bogen 02 sind Bogen 02 vorzugsweise auf dem zumindest einen Transportmittel 108 zumindest teilweise überlappend angeordnet.

Bevorzugt ist das Steuerungssystem 1100 einen Ankunftszeitpunkt eines durch den zumindest einen Erfassungssensor 261 zumindest zeitweise erfassten Bogens 02 an der Ausrichtposition PA durch eine Steuerung und/oder Regelung des zumindest einen Transportmittels 108 in Abhängigkeit von der Erfassung des betreffenden Bogens 02 durch den zumindest einen Erfassungssensor 261 steuernd und/oder regelnd ausgebildet. Bevorzugt wird der Ankunftszeitpunkt des durch den zumindest einen Erfassungssensor 261 erfassten Bogens 02 an der Ausrichtposition PA durch die Steuerung und/oder Regelung des zumindest einen Transportmittels 108 gesteuert und/oder geregelt. Weiter bevorzugt wird der Ankunftszeitpunkt des durch den zumindest einen Erfassungssensor 261 erfassten Bogens 02 an der Ausrichtposition PA in Abhängigkeit von der Maschinentaktung und/oder in Abhängigkeit von der Erfassung des betreffenden Bogens 02 durch den zumindest einen Erfassungssensor 261 gesteuert und/oder geregelt.

Bevorzugt wird ein Sollwert des Ankunftszeitpunkts des betreffenden Bogens 02 an der Ausrichtposition PA, insbesondere der Sollwert des Maschinentakts, mit einem Istwert des Ankunftszeitpunkts des betreffenden Bogens 02, insbesondere dem Istwert des Maschinentakts, verglichen. Das zumindest eine Steuerungssystem 1100 ist bevorzugt den Sollwert des Ankunftszeitpunkts des betreffenden Bogens 02 an der Ausrichtposition PA mit dem Istwert des Ankunftszeitpunkts des betreffenden Bogens 02 vergleichend ausgebildet.

Der Istwert wird bevorzugt durch die Erfassung des betreffenden Bogens 02 mittels des zumindest einen Erfassungssensors 261 bestimmt. Bevorzugt ist der Istwert des Ankunftszeitpunkts des betreffenden Bogens 02 an der Ausrichtposition PA durch die Erfassung des betreffenden Bogens 02 mittels des zumindest einen Erfassungssensors 261 festgelegt, insbesondere wobei der zumindest eine Erfassungssensor 261 zu der Ausrichtposition PA in Transportrichtung T beabstandet und/oder in Transportrichtung T vor der Ausrichtposition PA angeordnet ist. Weiter bevorzugt entspricht der Istwert demjenigen vorzugsweise berechneten Ankunftszeitpunkt des Bogens 02, insbesondere Maschinentakt, an der Ausrichtposition PA, zu welchem vorzugsweise berechneten Ankunftszeitpunkt der jeweilige Bogen 02 zum Zeitpunkt der Erfassung dieses Bogens 02 durch den zumindest einen Erfassungssensor 261 an der Ausrichtposition PA ankommen würde.

Der Sollwert des Ankunftszeitpunkts des betreffenden Bogens 02 an der Ausrichtposition PA ist bevorzugt einem insbesondere technisch vorgegebenen Maschinentakt des Maschinenzyklus zugeordnet. Bevorzugt wird der Sollwert des Ankunftszeitpunkts des betreffenden Bogens 02 an der Ausrichtposition PA zumindest durch den Abstand L262 des zumindest einen Erfassungsbereichs 262 des zumindest einen Erfassungssensors 261 zu der Ausrichtposition PA und/oder zumindest durch mindestens ein Bewegungsprofil des zumindest einen Antriebs 111 des zumindest einen Transportmittels 108 bestimmt und/oder ist bestimmbar. Bevorzugt wird der Sollwert des Ankunftszeitpunkts des betreffenden Bogens 02 an der Ausrichtposition PA aus zumindest dem Abstand L262 des zumindest einen Erfassungsbereichs 262 des zumindest einen Erfassungssensors 261 zu der Ausrichtposition PA und/oder aus zumindest dem mindestens einen Bewegungsprofil des zumindest einen Antriebs 111 des zumindest einen Transportmittels 108 berechnet, insbesondere durch das zumindest eine Steuerungssystem 1100.

Bevorzugt wird das zumindest eine Transportmittel 108 zumindest teilweise durch den zumindest einen Erfassungssensor 261 gesteuert und/oder geregelt. Der zumindest eine Antrieb 111 des zumindest einen Transportmittels 108 wird bevorzugt in Abhängigkeit von dem Vergleich des Sollwerts des Ankunftszeitpunkts des betreffenden Bogens 02 an der Ausrichtposition PA und dem Istwert des betreffenden Bogens 02 geregelt und/oder gesteuert. Bevorzugt ist das zumindest eine Steuerungssystem 1100 den zumindest einen Antrieb 111 des zumindest einen Transportmittels 108 in Abhängigkeit von dem Vergleich des Sollwerts des Ankunftszeitpunkts des betreffenden Bogens 02 an der Ausrichtposition PA und dem Istwert des betreffenden Bogens 02 regelnd und/oder steuernd ausgebildet. Bevorzugt zusätzlich oder alternativ ist der zumindest eine Antrieb 111 des mindestens einen Transportmittels 108 dynamisch in Abhängigkeit von einer Erfassung eines Bogens 02 durch den zumindest einen Erfassungssensor 261 geregelt und/oder gesteuert und/oder regelbar und/oder steuerbar ausgebildet.

Bevorzugt wird der betreffende Bogen 02, welcher durch den zumindest einen Erfassungssensor 261 erfasst wird, entlang des Transportweges zwischen dem zumindest einen Erfassungsbereich 262 des zumindest einen Erfassungssensors 261 und der Ausrichtposition PA in Abhängigkeit von dem Vergleich des Sollwerts des Ankunftszeitpunkts des betreffenden Bogens 02 an der Ausrichtposition PA und dem Istwert des betreffenden Bogens 02 beschleunigt. Das zumindest eine Transportmittel 108 ist bevorzugt zumindest einen jeweiligen Bogen 02, welchen Bogen 02 der zumindest eine Erfassungssensor 261 erfassend ausgebildet ist, entlang des Transportweges zwischen dem zumindest einen Erfassungsbereich 262 des zumindest einen Erfassungssensors 261 und der Ausrichtposition PA in Abhängigkeit von dem Vergleich des Sollwerts des Ankunftszeitpunkts des betreffenden Bogens 02 an der Ausrichtposition PA und dem Istwert des betreffenden Bogens 02 beschleunigend ausgebildet. Die Beschleunigung ist dabei entweder positiv, sodass zumindest der jeweilige Bogen 02 mit höherer Geschwindigkeit transportiert wird, oder negativ, sodass zumindest der jeweilige Bogen 02 mit geringerer Geschwindigkeit transportiert wird, oder gleich Null, sodass zumindest der jeweilige Bogen 02 mit vorzugsweise unveränderter Geschwindigkeit transportiert wird. Bevorzugt werden alle Bogen 02 in Abhängigkeit von dem Vergleich des Sollwerts des Ankunftszeitpunkts des zu diesem Zeitpunkt durch den zumindest einen Erfassungssensor 261 erfassten Bogens 02 an der Ausrichtposition PA und dem Istwert des zu diesem Zeitpunkt durch den zumindest einen Erfassungssensor 261 erfassten Bogens 02 beschleunigt, welche Bogen 02 jeweils zu diesem Zeitpunkt mit dem zumindest einen Transportmittel 108 in direktem oder indirekten Kontakt stehen, insbesondere zumindest teilweise auf dem zumindest einen Transportmittel 108 liegen und/oder durch das zumindest eine Transportmittel 108 transportiert werden. Bevorzugt wird zumindest der betreffende Bogen 02 so beschleunigt, dass sein tatsächlicher Ankunftszeitpunkt an der Ausrichtposition PA mit dem Sollwert, insbesondere dem technisch vorgegebenen Maschinentakt, übereinstimmt.

Bevorzugt umfasst der Anleger 100 das zumindest eine taktgebende Element 113. Bevorzugt ist das zumindest eine taktgebende Element 113 als zumindest eine Taktrolle 113 ausgebildet. Vorzugsweise ist das taktgebende Element 113 zumindest teilweise in vertikaler Richtung V bewegbar ausgebildet. Bevorzugt wird das taktgebende Element 113 entsprechend der Winkellage des Antriebs 1001 des Antriebssystems 1000 zumindest teilweise in vertikaler Richtung V bewegt. Bevorzugt wird das taktgebende Element 113 zumindest einmal pro Maschinenzyklus in vertikaler Richtung V außerhalb der Ebene des Transportweges von Bogen 02 bewegt. Bevorzugt zusätzlich oder alternativ wird das taktgebende Element 113 zumindest einmal pro Maschinenzyklus in vertikaler Richtung V in und/oder an die Ebene des Transportweges von Bogen 02 bewegt.

Bevorzugt erfasst der zumindest eine Erfassungssensor 261 den jeweiligen zumindest teilweise im Erfassungsbereich 262 angeordneten Bogen 02 sobald sich das zumindest eine insbesondere als Taktrolle 113 ausgebildete taktgebende Element 113 in und/oder an der Ebene des Transportweges von Bogen 02, insbesondere an seiner in vertikaler Richtung V betrachteten niedrigsten Position, befindet. Bevorzugt steht das zumindest eine taktgebende Element 113 an dessen in vertikaler Richtung V niedrigsten Position in Kontakt zu dem Transportweg von Bogen 02 und/oder einem Bogen 02 und/oder zumindest der vorzugsweise unterhalb des Transportweges von Bogen 02 angeordneten Transportwalze 112 und/oder dem zumindest einen insbesondere unterhalb des Transportweges von Bogen 02 angeordneten Transportmittel 108.

Bevorzugt ist zwischen dem zumindest einen Anlegerstapel 101 und dem mindestens einen Transportmittel 108 zumindest eine Transportwalze 112 angeordnet. Bevorzugt ist die zumindest eine Transportwalze 112 über den zumindest einen Antrieb 111 des mindestens einen Transportmittels 108 angetrieben. Zusätzlich oder alternativ ist bevorzugt die zumindest eine Transportwalze 112 zu dem zumindest einen taktgebenden Element 113 an der selben Position in Transportrichtung T von Bogen 02 durch den Transportweg von Bogen 02 voneinander getrennt angeordnet. Das zumindest eine taktgebende Element 113 ist bevorzugt in vertikaler Richtung V oberhalb des Transportweges und die zumindest eine Transportwalze 112 unterhalb des Transportweges angeordnet. Vorzugsweise ist die zumindest eine Transportwalze 112 in Transportrichtung T vor dem zumindest einen Transportelement 108 angeordnet. Bevorzugt weist zumindest zu dem Zeitpunkt einer Übergabe eines Bogens 02 von dem zumindest einen vorzugsweise als Transportelement 104, bevorzugt als horizontales Saugelement 104, ausgebildetes Transportmittel 104 der zumindest einen Trenneinrichtung 102 des Anlegers 100 an das zumindest eine Transportmittel 108 das zumindest eine Transportmittel 108 eine identische Geschwindigkeit zu der Bewegung des zumindest einen taktgebenden Elements 113 auf. Vorzugsweise wird zumindest zu dem Zeitpunkt einer Übergabe eines Bogens 02 von dem zumindest einen Transportelement 104 der zumindest einen Trenneinrichtung 102 des Anlegers 100 an das zumindest eine Transportmittel 108 das zumindest eine Transportmittel 108 mit einer aufeinander abgestimmten, bevorzugt identischen, Geschwindigkeit zu der Bewegung des zumindest einen taktgebenden Elements 113 angetrieben. Bevorzugt zusätzlich oder alternativ weist zumindest zu dem Zeitpunkt einer Übergabe eines Bogens 02 von dem zumindest einen Transportelement 104 an das zumindest eine Transportmittel 108 zumindest dieses eine Transportelement 104 der zumindest einen Trenneinrichtung 102 des Anlegers 100 eine aufeinander abgestimmte, bevorzugt identische, Geschwindigkeit zu der Bewegung des zumindest einen taktgebenden Elements 113 auf. Vorzugsweise wird zusätzlich oder alternativ zumindest zu dem Zeitpunkt einer Übergabe eines Bogens 02 von dem zumindest einen Transportelement 104 an das zumindest eine Transportmittel 108 zumindest dieses eine Transportelement 104 der zumindest einen Trenneinrichtung 102 des Anlegers 100 mit einer aufeinander abgestimmten Geschwindigkeit zu der Bewegung des zumindest einen taktgebenden Elements 113 bewegt. Weiter bevorzugt wird nach der Ankunft des durch den zumindest einen Erfassungssensor 261 erfassten Bogens 02 an der Ausrichtposition PA eine gegebenenfalls vorgenommene Verstellung des zumindest einen Transportmittels 108 von einer Geschwindigkeit, welche auf den Maschinentakt abgestimmt ist, hin zu einer davon abweichenden Geschwindigkeit bis zu einer vorzugsweise zumindest teilweisen vertikalen Bewegung des zumindest einen taktgebenden Elements 113, insbesondere einem Abheben des taktgebenden Elements 113 aus der Ebene des Transportweges an dieser Position, zurückgestellt. In einer bevorzugten Ausführung weist ein nachfolgender Bogen 02, welcher von der zumindest einen Trenneinrichtung 102 in Transportrichtung T hin zu dem zumindest einen insbesondere als Transportband 108 ausgebildeten Transportmittel 108 gefördert wird, zu dem Zeitpunkt, wenn dieser Bogen 02 in Kontakt zu dem zumindest einen Transportmittel 108 tritt, zu einem ihm direkt vorausgehenden Bogen 02 einen vorzugsweise identischen Abstand L02 auf wie zwei direkt aufeinanderfolgende Bogen 02, welche zu diesem Zeitpunkt bereits durch das zumindest eine Transportmittel 108 gefördert werden und/oder welche sich zu diesem Zeitpunkt auf dem zumindest einen Anlegertisch 107 befinden. Vorzugsweise weisen Bogen 02, insbesondere alle Bogen 02, welche durch das zumindest eine Transportmittel 108 gefördert werden, zumindest zu dem Zeitpunkt, wenn diese Bogen 02 durch das zumindest eine Transportmittel 108 gefördert werden, einen vorzugsweise identischen Abstand L02 zueinander, insbesondere zumindest zu dem jeweils direkt vorausgehenden und/oder direkt nachfolgenden Bogen 02, auf.

In einer bevorzugten Ausführung ist das zumindest eine Transportmittel 108 zumindest den durch den zumindest einen Erfassungssensor 261 erfassten Bogen 02 zumindest entsprechend der Transportrichtung T grobausrichtend ausgebildet. Vorzugsweise wird der durch den zumindest einen Erfassungssensor 261 erfasste Bogen 02 zumindest durch das zumindest eine Transportmittel 108 zumindest entsprechend der Transportrichtung T grob ausgerichtet. Vorzugsweise zusätzlich oder alternativ wird der durch den zumindest einen Erfassungssensor 261 erfasste Bogen 02 an der Ausrichtposition PA zumindest durch zumindest zwei Vordermarken 203 grobausgerichtet.

Bevorzugt zusätzlich oder alternativ umfasst das Zuführsystem 202 den zumindest einen Stellantrieb 218, welcher das zumindest eine Haltemittel 204 zumindest teilweise bewegt und/oder bewegend ausgebildet ist, wobei das zumindest eine Haltemittel 204 den zumindest einen Bogen 02 feinausrichtet und/oder feinausrichtend ausgebildet ist.

Ein Bogen 02 wird innerhalb der Bogenbearbeitungsmaschine 01 bevorzugt zumindest zeitweise transportiert. Die Bogenbearbeitungsmaschine 01 umfasst vorzugsweise zumindest das zumindest eine Zuführsystem 202 mit dem zumindest einen, bevorzugt als Greifer 204 ausgebildeten, Transportmittel 204 und das zumindest eine Transportsystem 1200 mit dem mindestens einen, bevorzugt als Greifer 1202 ausgebildeten, Halteelement 1202.

Bevorzugt umfasst ein Verfahren für einen zumindest zeitweisen Transport von Bogen 02, bevorzugt des zumindest einen Bogens 02, zumindest die folgenden Schritte.

Positionieren eines Bogens 02, bevorzugt des zumindest einen Bogens 02 der Bogen 02, in dem zumindest einen Zuführsystem 202 an der Ausrichtposition PA durch den Anschlag des Bogens 02 an den zumindest zwei orthogonal zu der Transportrichtung T von Bogen 02 und horizontal nebeneinander angeordneten Vordermarken 203, Halten des, bevorzugt zumindest einen, Bogens 02 mit dem zumindest einen Transportmittel 204 in der Ausrichtposition PA in dem maximal geschlossenen Zustand des zumindest einen Transportmittels 204, Erfassen des, bevorzugt zumindest einen, Bogens 02 durch die zumindest zwei Sensoren 252 der zumindest einen Sensoreinrichtung 251 in der Ausrichtposition PA in dem maximal geschlossenen Zustand des zumindest einen Transportmittels 204, Transport des, bevorzugt zumindest einen, Bogens 02 von der Ausrichtposition PA zu der der Ausrichtposition PA in Transportrichtung T nachgeordneten Übergabeposition PU, Übergabe des, bevorzugt zumindest einen, Bogens 02 von dem zumindest einen Transportmittel 204 an das zumindest eine Halteelement 1202 in der Übergabeposition PU, Rückführung des zumindest einen Transportmittels 204 an die Ausrichtposition PA.

Vorzugsweise wird ein Bogen 02, bevorzugt der zumindest eine Bogen 02, in der Ausrichtposition PA zumindest zeitweise positioniert. Bevorzugt wird der Bogen 02, bevorzugt der zumindest eine Bogen 02, durch das Positionieren in der Ausrichtposition PA grobausgerichtet. Bevorzugt wird der jeweilige Bogen 02 durch das Positionieren in der Ausrichtposition PA grobausgerichtet. Bevorzugt befindet sich das zumindest eine Transportmittel 204, insbesondere das zumindest eine Haltemittel 204, während der Positionierung des Bogens 02 in der Ausrichtposition PA in dem zumindest einen mittleren Zustand, welcher sich sowohl von dem maximal geschlossenen Zustand als auch von dem minimal geschlossenen Zustand des zumindest einen Transportmittels 204, insbesondere des zumindest einen Haltemittels 204, unterscheidet. Bevorzugt weist das zumindest eine Transportmittel 204 während der Positionieren des zumindest einen Bogens 02 in der Ausrichtposition PA den zumindest einen mittleren Zustand auf, vorzugsweise zumindest während der Grobausrichtung des zumindest einen Bogens 02. Für einen zumindest zeitweisen Transport wird bevorzugt zumindest ein Bogen 02, bevorzugt der zumindest eine Bogen 02, in der Ausrichtposition PA durch einen Anschlag des Bogens 02 an den zumindest zwei orthogonal zu der Transportrichtung T von Bogen 02 und horizontal nebeneinander angeordneten Vordermarken 203, bevorzugt an einer Vielzahl von Vordermarken 203, positioniert. Vorzugsweise wird der jeweilige, bevorzugt zumindest eine, Bogen 02 durch das Positionieren in der Ausrichtposition PA grobausgerichtet.

Vorzugsweise wird der, bevorzugt zumindest eine, Bogen 02 mit dem zumindest einen Transportmittel 204 in der Ausrichtposition PA in dem maximal geschlossenen Zustand des zumindest einen Transportmittels 204 gehalten. Bevorzugt wird der, bevorzugt zumindest eine, Bogen 02 nach dessen Positionierung in der Ausrichtposition PA durch das zumindest eine Transportmittel 204 in zumindest einem Randbereich und/oder außerhalb des zumindest einen Druckbildes des Bogens 02 in dem maximal geschlossenen Zustand des zumindest einen Transportmittels 204 gehalten. Während er in der Ausrichtposition PA gehalten wird, ist der jeweilige, bevorzugt der zumindest eine, Bogen 02, insbesondere die Vorderkante 07 des Bogens 02, bevorzugt zumindest teilweise, bevorzugt vollständig, in seiner Lage bezüglich der Transportrichtung T und/oder Querrichtung A und/oder vertikalen Richtung V fixiert.

Bevorzugt wird der Abstand der zumindest einer oberen Halterung 206 zu der zumindest einer unteren Halterung 207 des zumindest einen Transportmittels 204, insbesondere der jeweilige Abstand der zumindest oberen Haltefläche 233 zu der zumindest einen unteren Haltefläche 234, über das zumindest eine Kurvengetriebe des Zuführsystems 202 eingestellt, wobei vorzugsweise das betreffende Kurvengetriebe zum Einstellen des jeweiligen Zustands des zumindest einen Transportmittels 204 vorgesehen ist. Bevorzugt stellt das zumindest eine Kurvengetriebe den Zustand des zumindest einen Transportmittels 204, bevorzugt den Abstand der Halterungen 206; 207 zueinander, während eines andauernden Betriebes der Bearbeitungsmaschine 01 ein, bevorzugt entsprechend des vorliegenden Maschinentakts.

Bevorzugt wird der zumindest eine mittlere Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207 entsprechend einer maximalen Dicke von zu transportierenden Bogen 02, insbesondere zumindest einmal für jeden Bearbeitungsauftrag mit artgleichen Bogen 02, eingestellt. Zumindest eine Haltefläche 233; 234 der zumindest einen Halterung 206; 207 schwenkt bevorzugt zumindest zeitweise um die Schwenkachse 221 der betreffenden Halterung 206; 207 und/oder ist schwenkbar. Der maximal geschlossene Zustand entspricht vorzugsweise dem minimalen Abstand und der minimal geschlossene Zustand entspricht vorzugsweise dem maximalen Abstand und der zumindest eine mittlere Zustand entspricht vorzugsweise dem zumindest einen mittleren Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207. Bevorzugt steht die zumindest eine schwenkbare Haltefläche 233; 234 der mit zumindest einen Kurvenscheibe 223 über den zumindest einen Abtasthebel 226 in Wirkverbindung. Bevorzugt weist das zumindest eine Zuführsystem 202 zusätzlich den zumindest einen Stellantrieb 231 auf, welcher zumindest zeitweise in die Wirkverbindung zwischen der zumindest einen Kurvenscheibe 223 und der zumindest einen schwenkbaren Haltefläche 233; 234 eingreift. Bevorzugt stellt der zumindest eine Stellantrieb 231 den zumindest einen mittleren Zustand des zumindest einen Transportmittels 204 ein, bevorzugt verstellt diesen. Bevorzugt stellt der zumindest eine Stellantrieb 231 während einer aufrechterhaltenen Betriebssituation der Bearbeitungsmaschine 01 den zumindest einen mittleren Zustand des zumindest einen Transportmittels 204 ein. Bevorzugt wird der zumindest eine mittlere Zustand während des Betriebs der Bearbeitungsmaschine 01 eingestellt und/oder ist eingestellt. Bevorzugt ermöglicht dies eine Bearbeitung von Bogen 02 unterschiedlicher Dicken während einer aufrechterhaltenen Betriebssituation der Bearbeitungsmaschine 01, vorzugsweise ohne Unterbrechung der Produktion, weiter bevorzugt bei zwei aufeinanderfolgenden Bogen 02.

Der zumindest eine Stellantrieb 231 verstellt bevorzugt die Rotationsachse U der zumindest einen Übertragungswelle 227 und die Rotationsachse E der zumindest einen Verstellwelle 228 relativ zueinander. Bevorzugt zusätzlich oder alternativ sind die Rotationsachse U der zumindest einen Übertragungswelle 227 und die Rotationsachse E der zumindest einen Verstellwelle 228 durch den zumindest einen Stellantrieb 231 relativ zueinander verstellbar und/oder verstellt. Bevorzugt wird aufgrund des zumindest teilweisen Schwenkens der zumindest einen Verstellwelle 228 um ihre Rotationsachse E der zumindest eine mittlere Abstand zwischen der zumindest einen oberen Haltefläche 233 der zumindest einen jeweiligen oberen Halterung 206 und der zumindest einen unteren Haltefläche 234 der der jeweiligen oberen Halterung 206 zugeordneten unteren Halterung 207 eingestellt, welcher vorzugsweise dem zumindest einen mittleren Zustand des zumindest einen Transportmittels 204 entspricht.

Der zumindest eine Bogen 02 wird bevorzugt durch die zumindest zwei Sensoren 252 der zumindest einen Sensoreinrichtung 251 in der Ausrichtposition PA in dem maximal geschlossenen Zustand des zumindest einen Transportmittels 204 erfasst. Der zumindest eine Bogen 02 wird bevorzugt in der Ausrichtposition PA durch die zumindest zwei Sensoren 252 wahlweise an der Vorderkante 07 und/oder an der zumindest einen Druckmarke 11 des Bogens 02 in dem maximal geschlossenen Zustand des zumindest einen Transportmittels 204 erfasst. Der zumindest eine Bogen 02 wird weiter bevorzugt in der Ausrichtposition PA durch die zumindest zwei orthogonal zu der Transportrichtung T und horizontal nebeneinander angeordneten Sensoren 252 wahlweise an der Vorderkante 07 und/oder an der zumindest einen Druckmarke 11 des Bogens 02 in dem maximal geschlossenen Zustand des zumindest einen Transportmittels 204 erfasst. Der Bogen 02 wird weiter bevorzugt in der Ausrichtposition PA im Stillstand durch zumindest zwei orthogonal zu der Transportrichtung T und horizontal nebeneinander angeordnete Sensoren 252 wahlweise ohne jeweils neue Positionierung des betreffenden Sensors 252 jeweils an der Vorderkante 07 und/oder jeweils an zumindest einer Druckmarke 11 des Bogens 02 in dem maximal geschlossenen Zustand des zumindest einen Transportmittels 204 erfasst. Zusätzlich oder alternativ wird der Bogen 02 weiter bevorzugt in der Ausrichtposition PA im Stillstand durch zumindest einen Sensor 252, beispielsweise den zumindest einen dritten Sensor 252, wahlweise ohne jeweils neue Positionierung des betreffenden Sensors 252 an zumindest einer Seitenkante 09 und/oder an zumindest einer Druckmarke 11 des Bogens 02, vorzugsweise wobei die zumindest eine Druckmarke 11 zu der zumindest einen Seitenkante 09 bevorzugt einen kürzeren Abstand aufweist als zu der Vorderkante 07, in dem maximal geschlossenen Zustand des zumindest einen Transportmittels 204 erfasst.

Vorzugsweise wird der zumindest eine Bogen 02 von der Ausrichtposition PA zu der der Ausrichtposition PA in Transportrichtung T nachgeordneten Übergabeposition PU transportiert. Vor und/oder bevorzugt während des Transports des Bogens 02 von der Ausrichtposition PA zu der Übergabeposition PU werden vorzugsweise die zumindest zwei Vordermarken 203 von ihrer Positionierung innerhalb des Transportweges von Bogen 02 in eine Positionierung außerhalb des Transportweges von Bogen 02 verstellt. Bevorzugt werden die zumindest zwei Vordermarken 203 aus der Ebene des Transportweges in der Ausrichtposition PA insbesondere vollständig außerhalb der Ebene des Transportweges in der Ausrichtposition PA verstellt, bevorzugt geschwenkt.

Insbesondere während des Transports des, bevorzugt zumindest einen, Bogens 02 von der Ausrichtposition PA zu der Übergabeposition PU und/oder insbesondere während der Rückführung des zumindest einen Transportmittels 204 von der Übergabeposition PU zu der Ausrichtposition PA wird bevorzugt zumindest eine rotative Bewegung des zumindest einen Kurvengetriebes des Zuführsystems 202, insbesondere mindestens des zumindest einen dem Transport von Bogen 02 zugeordneten Kurvengetriebes, durch den zumindest einen Antriebshebel 214 in zumindest eine lineare Bewegung des zumindest einen Transportmittels 204 überführt. Weiter bevorzugt wird insbesondere während des Transports des Bogens 02 von der Ausrichtposition PA zu der Übergabeposition PU und/oder insbesondere während der Rückführung des zumindest einen Transportmittels 204 von der Übergabeposition PU zu der Ausrichtposition PA jeweils zumindest eine rotative Bewegung von zumindest zwei zu der Transportrichtung T horizontal nebeneinander angeordneten Kurvengetrieben, insbesondere mindestens zwei zumindest dem Transport von Bogen 02 zugeordneten Kurvengetrieben, durch jeweils den zumindest einen Antriebshebel 214 in zumindest eine lineare Bewegung des zumindest einen Transportmittels 204 überführt.

Bevorzugt wird das zumindest eine Kurvengetriebe, bevorzugt die zumindest zwei Kurvengetriebe, weiter bevorzugt alle Kurvengetriebe des Zuführsystems 202, von der zumindest einen Antriebswelle 1002 durch den zumindest einen Antrieb 1001 der Bogenbearbeitungsmaschine 01 bevorzugt kontinuierlich angetrieben. Bevorzugt ist die zumindest eine Kurvenscheibe 212; 223 jeweils mit der zumindest einen Antriebswelle 1002 verbunden und/oder an der zumindest einen Antriebswelle 1002 angeordnet. Bevorzugt entspricht die Bewegung der zumindest einen Kurvenscheibe 212; 223 der Bewegung der zumindest einen Antriebswelle 1002. Bevorzugt ist zumindest ein Kurvengetriebe des Zuführsystems 202, insbesondere mindestens das zumindest eine dem Transport von Bogen 02 zugeordnete Kurvengetriebe, als Doppelkurvengetriebe mit jeweils zumindest zwei Kurvenscheiben 212 ausgebildet.

Die zumindest eine Kurvenscheibe 212; 223 des Zuführsystems 202, insbesondere jede Kurvenscheibe 212; 223 jedes betreffenden Kurvengetriebes des Zuführsystems 202, vollführt bevorzugt während eines Maschinenzyklus genau eine vollständige Rotation um deren Rotationsachse D, wobei ein Maschinenzyklus zumindest die Schritte Positionieren des Bogens 02 in der Ausrichtposition PA, Halten des Bogens 02 mit dem zumindest einen Transportmittel 204 in der Ausrichtposition PA, Erfassen des Bogens 02 durch zumindest zwei Sensoren 252 der zumindest einen Sensoreinrichtung 251, Transport des Bogens 02 von der Ausrichtposition PA zu der Übergabeposition PU, Übergabe des Bogens 02 von dem zumindest einen Transportmittel 204 an das zumindest eine Halteelement 1202, Rückführung des zumindest einen Transportmittels 204 an die Ausrichtposition PA umfasst.

Vorzugsweise wird der Bogen 02, bevorzugt der zumindest eine Bogen 02, während des Transports von der Ausrichtposition PA zu der Übergabeposition PU durch das zumindest eine Zuführsystem 202 feinausgerichtet. Vorzugsweise wird der jeweilige Bogen 02 während des Transports von der Ausrichtposition PA zu der Übergabeposition PU durch das zumindest eine Zuführsystem 202 feinausgerichtet. Bevorzugt wird der Bogen 02 während des Transports des Bogens 02 von der Ausrichtposition PA zu der Übergabeposition PU in Abhängigkeit von der Erfassung des Bogens 02, insbesondere der bevorzugt wahlweisen Erfassung zumindest einer Druckmarke 11 und/oder zumindest einer Kante 07; 08; 09 des Bogens 02, bevorzugt der bevorzugt wahlweisen Erfassung von zumindest zwei Druckmarken 11 und/oder der Vorderkante 07 des Bogens 02 und/oder zumindest einer Seitenkante 09 des Bogens 02, durch die zumindest eine Sensoreinrichtung 251, insbesondere mittels des zumindest einen Zuführsystems 202, feinausgerichtet. Bevorzugt wird das zumindest eine Transportmittel 204, weiter bevorzugt der zumindest eine Bogen 02, in Abhängigkeit von der Erfassung durch die zumindest einen Sensoreinrichtung 251, bevorzugt den zumindest einen Sensor 252, weiter bevorzugt die zumindest zwei Sensoren 252, in Transportrichtung T und/oder Querrichtung A, bevorzugt zum Ausgleich zumindest eines Lagefehlers des zumindest einen Bogens 02, verstellt.

Bei einer seitlichen Feinausrichtung des Bogens 02 orthogonal zu der Transportrichtung T wird bevorzugt zumindest das zumindest eine Transportmittel 204 des Zuführsystems 202 den über zumindest einen Stellantrieb 237 der seitlichen Ausrichtung horizontal und orthogonal zu der Transportrichtung T verstellt.

Das Zuführsystem 202 umfasst bevorzugt das zumindest eine Kurvengetriebe mit der jeweils zumindest einen Kurvenscheibe 212 und der Rotationsachse D der zumindest einen Kurvenscheibe 212. An der zumindest einen Kurvenscheibe 212 liegt bevorzugt jeweils das zumindest eine Abtastelement 213 an. Das zumindest eine Abtastelement 213 ist bevorzugt über den zumindest einen Antriebshebel 214 mit dem zumindest einen Transportmittel 204 verbunden. Der zumindest eine Antriebshebel 214 weist bevorzugt jeweils den Lagerpunkt S auf. Der Lagerpunkt S und die Rotationsachse D sind bevorzugt relativ zueinander verstellbar und/oder verstellt ausgebildet und/oder werden relativ zueinander verstellt.

Die Ausrichtung in Transportrichtung T weist bevorzugt zumindest eine Positionsverlagerung des Lagerpunkts S des zumindest einen Antriebshebels 214 und der Rotationsachse D der zumindest einen betreffenden Kurvenscheibe 212 auf. Bevorzugt durch die Positionsverlagerung des Lagerpunkts S relativ zu der Rotationsachse D wird ein Lagefehler des zumindest einen Bogens 02 ausgeglichen, weiter bevorzugt wird der zumindest eine Bogen 02 feinausgerichtet, vorzugsweise zumindest in Transportrichtung T. Durch die zumindest eine Positionsverlagerung des Lagerpunkts S des zumindest einen Antriebshebels 214 und der Rotationsachse D der zumindest einen Kurvenscheibe 212 relativ zueinander zusätzlich zu dem Auslenken des zumindest einen Antriebshebels 214 aufgrund einer zumindest teilweisen Rotation der zumindest einen Kurvenscheibe 212 wird der betreffende Bogen 02 bevorzugt feinausgerichtet, insbesondere in Transportrichtung T. Vorzugsweise ist der zumindest eine Stellantrieb 218 bei einem Ausgleich zumindest eine Schieflage des Bogens 02 ansteuerbar und/oder angesteuert und/oder regelbar und/oder geregelt ausgebildet. Vorzugsweise zusätzlich sind zumindest zwei Stellantriebe 218 bei einem Ausgleich zumindest eines Lagefehlers in Transportrichtung T ansteuerbar und/oder angesteuert und/oder regelbar und/oder geregelt ausgebildet. Bevorzugt wird bei der Feinausrichtung des Bogens 02 in Transportrichtung T der zumindest eine Stellantrieb 218 zumindest für einen Ausgleich einer Schieflage des Bogens 02 angesteuert und/oder geregelt. Bevorzugt zusätzlich werden bei der Feinausrichtung des Bogens 02 in Transportrichtung T die zumindest zwei Stellantriebe 218 zumindest für einen Ausgleich eines Lagefehlers in Transportrichtung T angesteuert und/oder geregelt.

Bei der Feinausrichtung des Bogens 02 in Transportrichtung T gleicht bevorzugt die Steuerung und/oder Regelung des zumindest einen Stellantriebs 218 zumindest eine Schieflage des Bogens 02 aus. Bevorzugt zusätzlich gleicht bei der Feinausrichtung des Bogens 02 in Transportrichtung T die bevorzugt gleichzeitige Steuerung und/oder Regelung von zumindest zwei Stellantrieben 218 zumindest einen Lagefehler in Transportrichtung T aus.

Vorzugsweise wird der jeweilige Bogen 02 während des Transports von der Ausrichtposition PA zu der Übergabeposition PU sowohl in Transportrichtung T als auch seitlich, also in Querrichtung A, bevorzugt zeitgleich feinausgerichtet. Vorzugsweise wird durch das zumindest eine Steuerungssystem 1100 insbesondere in Abhängigkeit von der Erfassung des Bogens 02 durch den zumindest einen Sensor 252 der zumindest einen Sensoreinrichtung 251 zumindest ein Signal an den jeweiligen benötigten Stellantrieb 218; 237 gesandt. Bevorzugt sind die jeweiligen benötigten Stellantriebe 218; 237 bei der Feinausrichtung von Bogen 02 aufeinander abgestimmt gesteuert und/oder geregelt. Bevorzugt wird die jeweils andere Ausrichtung des Bogens 02 bei der Berechnung des zumindest einen Signals berücksichtigt, sodass bevorzugt die jeweiligen benötigten Stellantriebe 218; 237 bei der Feinausrichtung von Bogen 02 aufeinander abgestimmt gesteuert und/oder geregelt sind.

Vorzugsweise erfassen und/oder ermitteln die jeweiligen zumindest zwei, bevorzugt drei, Sensoren 252 eine Abweichung des Bogens 02, insbesondere der Vorderkante 07 und/oder der Seitenkante 09 und/oder der zumindest einen Druckmarke 11, von einem jeweiligen in der Steuerungseinheit 1100 hinterlegten Referenzwert. Bevorzugt wird zuerst aus den Messwerten der Vorderkante 07 und/oder an der Vorderkante 07 angebrachten Druckmarken 11 eine Abweichung zu dem Referenzwert ermittelt. Von der daraus ermittelten Schieflage des Bogens 02 wird vorzugsweise eine Abweichung der Position der Seitenkante 09 aufgrund des Formats des Bogens 02 abgezogen. Es folgt bevorzugt eine Ermittlung der Verkürzung des Weges, welchen der Bogen 02 zwischen der Ausrichtposition PA und der Übergabeposition PU zurücklegen muss. Vorzugsweise wird diese Verkürzung bei dem Signal für die jeweiligen Stellantriebe 218, welche den Transport des Bogens 02 in Transportrichtung T regeln und/oder steuern, abgezogen und/oder berücksichtigt.

Bevorzugt wird der zumindest eine Bogen 02 von dem zumindest einen Transportmittel 204 an das zumindest eine Halteelement 1202 in der Übergabeposition PU übergeben. Vorzugsweise transportiert das zumindest eine insbesondere als Greifer 1202 ausgebildete Halteelement 1202 den Bogen 02 zumindest innerhalb des mindestens einen dem Anlageaggregat 200 nachfolgenden Stanzaggregat 300.

Bei der Übergabe des Bogens 02 verweilt das zumindest eine Halteelement 1202 des Transportsystems 1200 bevorzugt an der Übergabeposition PU in Stillstand. Zuerst wird bevorzugt das zumindest eine an der Übergabeposition PU positionierte Halteelement 1202 des Transportsystems 1200 geschlossen, vorzugsweise bevor das zumindest eine Transportmittel 204 des Zuführsystems 202 den Bogen 02 in der Übergabeposition PU freigibt. Bevorzugt ist der Bogen 02 während der Übergabe von dem zumindest einen Transportmittel 204 an das zumindest eine Halteelement 1202 dauerhaft durch zumindest einen Bestandteil der Bogenbearbeitungsmaschine 01, bevorzugt zumindest entweder durch das zumindest eine Transportmittel 204 oder durch das zumindest eine Halteelement 1202 und/oder durch sowohl das zumindest eine Transportmittel 204 und das zumindest eine Halteelement 1202, gehalten, bevorzugt an zumindest einer Kante 07; 08; 09, weiter bevorzugt zumindest an der Vorderkante 07.

Bevorzugt ist das zumindest eine Halteelement 1202, bevorzugt der zumindest eine dem betreffenden zumindest einen Halteelement 1202 zugeordnete Greiferwagen 1201, an der Übergabeposition PU ausgerichtet angeordnet. Vorzugsweise wird das zumindest eine Halteelement 1202 durch zumindest ein Positionierelement, bevorzugt durch zumindest eine Registereinheit zur Ausrichtung des zumindest einen Halteelements 1202 an der Übergabeposition PU, ausgerichtet und/oder in seiner Position an der Übergabeposition PU fixiert. Somit ist eine Übergabe an das zumindest eine Halteelement 1202 und/oder ein passgenauer Weitertransport des ausgerichteten Bogens 02 mit dem zumindest einen Halteelement 1202 zumindest in dem mindestens einen dem Anlageaggregat 200 nachfolgenden Stanzaggregat 300 gewährleistet.

Das zumindest eine Transportmittel 204 wird bevorzugt an die Ausrichtposition PA rückgeführt, insbesondere nach der Übergabe des jeweiligen Bogens 02 an das zumindest eine Halteelement 1202 des Transportsystems 1200. Bevorzugt weist das zumindest eine Transportmittel 204, insbesondere das zumindest eine Haltemittel 204, den minimal geschlossenen Zustand während der Rückführung des zumindest einen Transportmittels 204 zu der Ausrichtposition PA auf. Vorzugsweise werden die zumindest zwei Vordermarken 203 während der Rückführung des zumindest einen Transportmittels 204 an die Ausrichtposition PA zumindest teilweise in die Ebene des Transportweges geschwenkt, insbesondere sobald das zumindest eine Transportmittel 204 in Transportrichtung T vor den zumindest zwei Vordermarken 203 angeordnet ist.

Vorzugsweise erfolgt während der Rückführung des zumindest einen Transportmittels 204 an die Ausrichtposition PA der Weitertransport des jeweiligen Bogens 02 durch das zumindest eine Halteelement 1202 des Transportsystems 1200.

Bevorzugt ist eine Möglichkeit zur Sperrung des Zuführsystems 202, bevorzugt dem Sperren des zumindest einen Transportmittels 204 in dem minimal geschlossenen Zustand vorgesehen. Vorzugsweise ist das Steuerungssystem 1100 die Sperre aktivierend ausgebildet. Vorzugsweise ist das Steuerungssystem 1100 das zumindest eine Transportmittel 204 in dem minimal geschlossenen Zustand zumindest zeitweise, bevorzugt im Falle einer Sperrung, feststellend ausgebildet. Vorzugsweise ist der zumindest eine Stellantrieb 231 den minimal geschlossenen Zustand im Falle der Sperrung einstellend, bevorzugt feststellend, ausgebildet. Bei einer Sperrung des Zuführsystems 202, bevorzugt dem Feststellen des zumindest einen Transportmittels 204 in dem minimal geschlossenen Zustand, wird das zumindest eine Transportmittel 204 in dem minimal geschlossenen Zustand zu der Übergabeposition PU, bevorzugt ohne einen Bogen 02, bewegt. Vorzugsweise wird die Bearbeitungsmaschine 01 gestoppt oder in einen Leerlauf heruntergefahren, woraufhin der nicht-transportierte Bogen 02 aus dem Zuführsystem 202 geleitet und/oder entfernt, beispielsweise händisch entfernt, wird. Bevorzugt erfolgt die Sperrung, bevorzugt das Feststellen des zumindest einen Transportmittels 204 in dem minimal geschlossenen Zustand, wenn der zumindest eine Bogen 02 einen Lagefehler aufweist, welcher die Ausrichtmöglichkeiten des Zuführsystems 202 übersteigt. Vorzugsweise übersteigt der Lagefehler die Ausrichtmöglichkeiten des Zuführsystems 202, wenn der vermessene Wert, bevorzugt die erfasste Position, in Querrichtung A um mindestens 10 mm (zehn Millimeter), bevorzugt mindestens 15 mm (fünfzehn Millimeter) von dessen Referenz abweicht und/oder wenn der vermessene Wert, bevorzugt die erfasste Position, in Transportrichtung T, bevorzugt nach erfolgter Grobausrichtung durch die zumindest zwei Vordermarken 203, um mindestens 3 mm (drei Millimeter), bevorzugt mindestens 4 mm (vier Millimeter), weiter bevorzugt mindestens 8 mm (acht Millimeter), von dessen Referenz abweicht.

Die als Stanzmaschine 01 ausgebildete Bearbeitungsmaschine 01 ist bevorzugt zumindest einen Bogen 02 aus Papier und/oder Wellpappe und/oder Pappe bearbeitend ausgebildet. Das Bearbeiten eines Substrates 02 beschreibt im Vorangegangenen und im Folgenden das Verändern zumindest einer Eigenschaft des betreffenden Substrates 02 bezüglich dessen physikalischer Eigenschaften und/oder Materialeigenschaften, insbesondere dessen Masse und/oder Form und/oder Aussehen. Durch zumindest einen Bearbeitungsvorgang ist das jeweilige Substrat 02 in zumindest ein weiterverarbeitbares Zwischenprodukt und/oder Endprodukt überführbar. Das Verarbeiten eines Substrates 02 beschreibt im Vorangegangenen und im Folgenden das Verändern zumindest einer Eigenschaft des betreffenden Substrates 02 wie beispielsweise dessen Lage und/oder physikalische Eigenschaften und/oder Materialeigenschaften. Das Zuführsystem 202 ist bevorzugt Bogen 02 zu einem in Transportrichtung T nachgeordneten Aggregat 300; 400; 500; 600; 650; 700; 800; 900, insbesondere dem Formgebungsaggregat 300, führend ausgebildet, in welchem nachgeordneten Aggregat 300; 400; 500; 600; 650; 700; 800; 900 jeweilige Bogen 02 vorzugsweise bearbeitet und/oder verarbeitet werden.

Das zumindest eine Ausbrechaggregat 400 weist zumindest ein Ausbrechwerk 401 auf. Das zumindest eine Ausbrechaggregat 400, insbesondere das Ausbrechwerk 401, umfasst zumindest eine Werkzeug 402; 403. Das zumindest eine Ausbrechwerk 401 umfasst bevorzugt zumindest ein als oberes Ausbrechwerkzeug 402 ausgebildetes Werkzeug 402 und/oder bevorzugt zumindest ein als unteres Ausbrechwerkzeug 403 ausgebildetes Werkzeug 403. Das zumindest eine Ausbrechwerk 401 umfasst bevorzugt zumindest ein als oberes Ausbrechwerkzeug 402 ausgebildetes Werkzeug 402 und/oder zumindest ein als unteres Ausbrechwerkzeug 403 ausgebildetes Werkzeug 403, wobei das jeweilige Ausbrechwerkzeug 402; 403 vorzugsweise jeweils in vertikaler Richtung V bewegbar und/oder sich in vertikaler Richtung V bewegend ausgebildet ist. Bevorzugt ist das obere Ausbrechwerkzeug 402 mit einer vertikalen Relativbewegung zu dem unteren Ausbrechwerkzeug 403 bewegbar und/oder bewegend ausgebildet. Bevorzugt sind das zumindest eine obere Ausbrechwerkzeug 402 und das zumindest eine untere Ausbrechwerkzeug 403 relativ zueinander aufeinander zu und/oder voneinander weg in vertikaler Richtung V bewegbar ausgebildet. Bevorzugt ist das zumindest eine obere Ausbrechwerkzeug 402 und das zumindest eine untere Ausbrechwerkzeug 403 aufeinander und insbesondere auf den Nutzen 03 abgestimmt. Bevorzugt steht das zumindest eine obere Ausbrechwerkzeug 402 zumindest zeitweise, bevorzugt zumindest einmal pro Maschinenzyklus, weiter bevorzugt in einer geschlossenen Position des zumindest einen Ausbrechwerks 401, in direktem Kontakt zu dem zumindest einen unteren Ausbrechwerkzeug 403. Bevorzugt ist das zumindest eine obere Ausbrechwerkzeug 402 zu dem zumindest einen unteren Ausbrechwerkzeug 403 in einer geöffneten Position des Ausbrechwerks 401 mit einem Abstand größer Null beabstandet.

Das jeweilige Ausbrechwerkzeug 402; 403 steht in Kontakt, bevorzugt in Wirkverbindung, zu dem zumindest einen Antriebssystem 1000 und/oder ist durch den zumindest einen Antrieb 1001 des Antriebssystems 1000 zumindest zeitweise, bevorzugt mit einer zyklischen Bewegung, antreibbar und/oder angetrieben. Bevorzugt ist die Bewegung der jeweiligen Ausbrechwerkzeuge 402; 403 bevorzugt zeitlich aufeinander abgestimmt und/oder abstimmbar.

Bevorzugt ist das zumindest eine erste Reststück 04 durch ein Schließen der jeweiligen Ausbrechwerkzeuge 402; 403, also eine Positionierung des betreffenden Ausbrechwerks 401 in der geschlossenen Position, zumindest teilweise, bevorzugt vollständig, von dem zumindest einen Nutzen 03 des Bogens 02 trennbar und/oder wird getrennt und/oder zumindest teilweise, bevorzugt vollständig, von dem zumindest einen Bogen 02 entfernbar und/oder wird entfernt.

Das Nutzentrennaggregat 500, insbesondere das Nutzentrennwerk 501, umfasst zumindest ein Werkzeug 502. Insbesondere umfasst das zumindest eine Nutzentrennwerk 501 des zumindest einen Nutzentrennaggregats 500 zumindest ein in der vertikalen Richtung V oberhalb angeordnetes als oberes Nutzentrennwerkzeug 502 ausgebildetes Werkzeug 502 und zumindest ein (in den Figuren nicht dargestelltes) darunter angeordnetes als unteres Nutzentrennwerkzeug ausgebildetes Werkzeug. Bevorzugt ist das zumindest eine obere Nutzentrennwerkzeug 502 und das zumindest eine untere Nutzentrennwerkzeug aufeinander und insbesondere auf den Nutzen 03 abgestimmt. Das untere Nutzentrennwerkzeug weist einen Raumbereich zur Stapelung und/oder Zwischenspeicherung der Nutzen 03 auf. Das zumindest eine obere Nutzentrennwerkzeug 502 umfasst bevorzugt zumindest eine Drückeinrichtung, insbesondere eine als Erhöhung des zumindest einen oberen Nutzentrennwerkzeugs 502 ausgebildete Drückeinrichtung. Die zumindest eine Drückeinrichtung ist in den Raumbereich, insbesondere in eine Aussparung, des zumindest einen unteren Nutzentrennwerkzeug hineinragbar und in einer geschlossenen Position des zumindest einen Nutzentrennwerks 501 hineinragend ausgebildet. Der durch das Transportsystem 1200, insbesondere durch das als Kettengreifersystem 1200 ausgebildete Transportsystem 1200, festgelegte Transportweg des Bogens 02 durch das zumindest eine Nutzentrennaggregat 500 ist bevorzugt in einer geöffneten Position des betreffenden Nutzentrennwerks 501 zwischen dem zumindest einen oberen Nutzentrennwerkzeug 502 und dem zumindest einen unteren Nutzentrennwerkzeug angeordnet. In einer geschlossenen Position des betreffenden Nutzentrennwerks 501 ist zumindest das obere Nutzentrennwerkzeug 502 in den Transportweg des Bogens 02 eindringend angeordnet. Durch die Änderung der Position des zumindest einen Nutzentrennwerks 501, bevorzugt nur des oberen Nutzentrennwerkzeugs 502, aus der offenen Position in die geschlossene Position werden die Nutzen 03 von dem zumindest einen verbleibenden Reststück 06 getrennt. Insbesondere ist ein Nutzen 03 so von einem Kontakt mit dem zumindest einen Transportsystem 1200 losgelöst angeordnet. Insbesondere wird dieser Vorgang zyklisch und/oder periodisch durch eine Kopplung mit dem zumindest einen Antriebsystem 1000 wiederholt. Insbesondere findet die Änderung der Position des zumindest einen Nutzentrennwerks 501 immer genau dann statt, wenn ein Bogen 02 sich im Transportweg unter dem zumindest einen oberen Nutzentrennwerkzeug 502 befindet.

Insbesondere ist in dieser bevorzugten Ausführungsform die zumindest eine Auslage 600 in der vertikalen Richtung V unter dem unteren Nutzentrennwerkzeug angeordnet. Bevorzugt werden die Nutzen 03 nach einer Zwischenspeicherung im unteren Nutzentrennwerkzeug auf zumindest einem Auslagestapel gestapelt. Bevorzugt umfasst der zumindest eine Auslagestapel zumindest zwei, bevorzugt eine Vielzahl, von Einzelstapeln von Nutzen 03 nebeneinander. Der zumindest eine Auslagestapel ist dabei bevorzugt mittels einer Hubvorrichtung in der vertikalen Richtung V bewegbar und/oder verstellbar angeordnet. Insbesondere ist so eine Anpassung der Höhe des zumindest einen Auslagestapels z. B. an das untere Nutzentrennwerkzeug und/oder an zumindest eine Bogenablageeinrichtung 701 möglich.

Die zumindest eine Bogenablageeinrichtung 701 ist zur Bogenablage bevorzugt zwischen das untere Nutzentrennwerkzeug und den zumindest einen Auslagestapel bewegbar und/oder einfahrbar und/oder bewegend und/oder einfahrend angeordnet. Insbesondere dann, wenn der zumindest eine Zwischenspeicher des zumindest einen unteren Nutzentrennwerkzeugs im zumindest einen Nutzentrennaggregat 500 zumindest teilweise bevorzugt vollständig mit Nutzen 03 gefüllt ist und/oder eine hinreichend große Instabilität, so dass ein Kippen zumindest eines Einzelstapels droht, aufweist. Insbesondere wird die zumindest eine Hubvorrichtung bevorzugt auf die zumindest eine Bogenablageeinrichtung 701 abgestimmt und insbesondere in der vertikalen Richtung V unter, bevorzugt ohne eine weitere Einrichtung dazwischen, der zumindest einen Bogenablageeinrichtung 701 angeordnet.

Insbesondere werden die Reststücke 06 in dem zumindest einen Reststückauslageaggregat 800 von zumindest einem Halteelement 1202, insbesondere zumindest einem Greifer 1202, des zumindest einen Transportsystems 1200 gelöst und mittels zumindest einer Sammeleinrichtung als Abfall gesammelt. Beispielsweise ist diese zumindest eine Sammeleinrichtung als zumindest ein Transportband mit zumindest einem Sammelbehälter ausgebildet.

Die bevorzugt als Bogenbearbeitungsmaschine 01 ausgebildete Bearbeitungsmaschine 01 umfasst das zumindest eine Antriebssystem 1000. Das zumindest eine Antriebssystem 1000 umfasst den zumindest einen, bevorzugt als einen Zentralantrieb ausgebildeten, Antrieb 1001. Bevorzugt ist der zumindest eine Antrieb 1001 außerhalb des Transportweges von Bogen 02 innerhalb der Bogenbearbeitungsmaschine 01 angeordnet. Vorzugsweise umfasst das zumindest eine Antriebssystem 1000 jene Bestandteile der verschiedenen Aggregate 100; 200; 300; 400; 500; 600; 650; 700; 800; 900, welche mit dem zumindest einen Antrieb 1001 verbunden sind und/oder mit dem zumindest einen Antrieb 1001 in Wirkverbindung stehen. Vorzugsweise sind die einzelnen Bestandteile des Antriebssystem 1000, welche das Antriebssystem 1000 umfasst, je nach ihrer Position innerhalb der Bearbeitungsmaschine 01 ebenfalls dem jeweiligen diese Position umfassenden Aggregat 100; 200; 300; 400; 500; 600; 650; 700; 800; 900 zugeordnet und/oder durch das jeweilige Aggregat 100; 200; 300; 400; 500; 600; 650; 700; 800; 900 umfasst.

Das zumindest eine Formgebungsaggregat 300 umfasst das zumindest eine Formgebungswerkzeug. Das zumindest eine Ausbrechaggregat 400 umfasst das zumindest eine Ausbrechwerkzeug 402; 403. Das zumindest eine Nutzentrennaggregat 500 umfasst das zumindest eine Nutzentrennwerkzeug 502. Vorzugsweise zusätzlich oder alternativ umfasst das Anlageaggregat 200 die zumindest eine Anlageantriebswelle 1002. Vorzugsweise zusätzlich oder alternativ umfasst die Bearbeitungsmaschine 01 das zumindest eine Transportsystem 1200, bevorzugt das zumindest eine Kettentransportsystem 1200 mit zumindest einem insbesondere als der zumindest eine Greiferwagen 1201 ausgebildeten Transportmittel 1201 und der zumindest einen Führungseinrichtung 1203. Der zumindest eine Antrieb 1001 ist zumindest zwei Bestandteile ausgewählt aus dem zumindest einen Formgebungswerkzeug 302; 303 und/oder dem zumindest einen Ausbrechwerkzeug 402; 403 und/oder dem zumindest einen Nutzentrennwerkzeug 502 und/oder dem zumindest einen Transportsystem 1200 und/oder der zumindest einen Anlageantriebswelle 1002 des Anlageaggregats 200 antreibend ausgebildet.

Bevorzugt weist die Bogenbearbeitungsmaschine 01 zusätzlich zu dem zumindest einen Antrieb 1001 zumindest einen Einzelantrieb auf, welcher jeweils zumindest einen Bestandteil zumindest eines Aggregates 100; 200; 300; 400; 500; 600; 650; 700; 800; 900 unabhängig von dem zumindest einen Antrieb 1001 antreibend ausgebildet ist.

Der zumindest eine Antrieb 1001 ist mit zumindest einem zumindest eine Kraft und/oder Drehmoment übertragendes Getriebe 1004; 1007 gekoppelt. Vorzugsweise ist der zumindest eine Antrieb 1001 mit zumindest einem Getriebe 1004, insbesondere zumindest ein Zugmittelgetriebe 1004, gekoppelt, vorzugsweise direkt gekoppelt. Das zumindest eine insbesondere direkt mit dem zumindest einen Antrieb 1001 gekoppelte übertragende Getriebe 1004, insbesondere das zumindest eine Zugmittelgetriebe 1004, ist bevorzugt als formschlüssiges Zugmittelgetriebe 1004, insbesondere als Zahnriemenantrieb, oder als kraftschlüssiges Zugmittelgetriebe 1004, insbesondere als Riemenantrieb, ausgebildet. Das zumindest eine Zugmittelgetriebe 1004 umfasst bevorzugt zumindest ein Zugmittel 1003, welches bevorzugt als Riemen 1003 oder Kette 1003 ausgebildet ist.

Ein Getriebe beschreibt im Vorangegangenen und im Folgenden ein System zum Wandeln und/oder Übertragen von Bewegungen und/oder Kräften. Ein Getriebe umfasst mindestens ein Antriebsglied und mindestens ein Abtriebsglied. Ein Getriebe umfasst bevorzugt mindestens ein Antriebsglied, mindestens ein Abtriebsglied und mindestens ein Gestell. In einem Getriebe sind vorzugsweise zumindest die Größe und/oder die Richtung einer Drehbewegung und/oder eines Drehmoments in einer oder mehreren Getriebestufen umformbar und/oder werden umgeformt.

Bevorzugt ist das zumindest eine insbesondere direkt mit dem zumindest einen Antrieb 1001 gekoppelte übertragende Getriebe 1004 mit zumindest einer, bevorzugt genau einer, insbesondere als Hauptantriebswelle 1006 ausgebildete Antriebswelle 1006 gekoppelt, insbesondere direkt gekoppelt.

Direkt gekoppelt bezeichnet im Vorangegangenen und im Folgenden bevorzugt zumindest eine Kupplung von zumindest zwei Bauteilen ohne weitere Verbindungsglieder und/oder Bauteile dazwischen.

Eine Kupplung bezeichnet im Vorangegangenen und im Folgenden bevorzugt ein Maschinenelement zur starren oder elastischen oder beweglichen oder lösbaren Verbindung zweier Bauteile miteinander. Vorzugsweise wird mittels der Kupplung mechanische Arbeit, beispielsweise Drehmoment, bevorzugt Bewegung, von dem einen Bauteil auf das andere Bauteil und/oder umgekehrt übertragen.

Die zumindest eine Hauptantriebswelle 1006 weist bevorzugt zumindest ein Gewinde, insbesondere zumindest ein Schraubengewinde auf. Vorzugsweise ist die zumindest eine Hauptantriebswelle 1006 über zumindest einen Abtrieb zumindest eines vorzugsweise als Schneckengetriebe ausgebildeten Getriebes mit zumindest einem als Antriebsgetriebe 1007 ausgebildeten Getriebe 1007 gekoppelt. Vorzugsweise ist die zumindest eine Hauptantriebswelle 1006 über den zumindest einen Abtrieb des zumindest einen vorzugsweise als Schneckengetriebe ausgebildeten Getriebes mit zumindest einer insbesondere als Stanzantriebswelle 1016 ausgebildeten Antriebswelle 1016 gekoppelt, welche bevorzugt das zumindest eine Formgebungswerkzeug bewegt. Vorzugsweise sind die zumindest eine Stanzantriebswelle 1016 und das zumindest eine Antriebsgetriebe 1007 über ein gemeinsames, vorzugsweise das zumindest eine als Schneckengetriebe ausgebildete, Getriebe mit der Hauptantriebswelle 1006 gekoppelt. Bevorzugt ist zumindest ein Stirnrad 1009 des Antriebsgetriebes 1007 an der zumindest einen Stanzantriebswelle 1016 angeordnet und/oder mit der Stanzantriebswelle 1016 vorzugsweise formschlüssig verbunden.

Vorzugsweise ist zumindest ein nachgelagertes Getriebe 1019 nach dem zumindest einen Getriebe 1007, insbesondere nach dem zumindest einen Antriebsgetriebe 1007, angeordnet. Vorzugsweise ist das zumindest eine nachgelagerte Getriebe 1019 innerhalb eines Antriebsstrangs der Bogenbearbeitungsmaschine 01 nach dem zumindest einen Getriebe 1007, insbesondere nach dem zumindest einen Antriebsgetriebe 1007, angeordnet. Der Antriebsstrang der Bearbeitungsmaschine 01 bezeichnet vorzugsweise im Vorangegangenen und im Folgenden die Verbindung der Elemente des Antriebssystems 1000. Vorzugsweise ist ein erstes Element des Antriebsstrangs als der zumindest eine Antrieb 1001 ausgebildet, welchem weitere Elemente in zumindest einer durch zumindest eine Kupplung festgelegten Reihenfolge nachfolgen. Das zumindest eine nachgelagerte Getriebe 1019 ist bevorzugt zumindest eine rotative Bewegung in zumindest eine wechselseitige Bewegung umwandelnd ausgebildet. Das zumindest eine nachgelagerte Getriebe 1019 ist bevorzugt innerhalb zumindest eines Gehäuses 1014 angeordnet. Vorzugsweise ist das zumindest eine nachgelagerte Getriebe 1019 als zumindest ein Kurvenscheibengetriebe 1019 ausgebildet. Zusätzlich oder alternativ umfasst bevorzugt das zumindest eine nachgelagerte Getriebe 1019 zumindest einen Abtasthebel 1024 und zumindest eine Kurvenscheibe 1023. Bevorzugt ist das zumindest eine vorzugsweise als Kurvenscheibengetriebe 1019 ausgebildete Getriebe 1019 zumindest eine rotative Bewegung in zumindest eine vorzugsweise wechselseitige Bewegung umwandelnd ausgebildet.

Bevorzugt ist das zumindest eine Getriebe 1007 und das zumindest eine nachgelagerte Getriebe 1019, insbesondere das zumindest eine Kurvenscheibengetriebe 1019, an der Antriebsseite der Bogenbearbeitungsmaschine 01 an dem zumindest einen Formgebungsaggregat 300 angeordnet. Das zumindest eine als Antriebsgetriebe 1007 ausgebildete Getriebe 1007 umfasst bevorzugt zumindest zwei, bevorzugt mindestens vier, weiter bevorzugt mindestens fünf, Stirnräder 1009; 1011; 1012; 1013; 1021. Bevorzugt sind die zumindest zwei Stirnräder 1009; 1011; 1012; 1013; 1021 des Antriebsgetriebes 1007 auf der Antriebsseite der Bogenbearbeitungsmaschine 01 in dem zumindest einen Gehäuse 1014 angeordnet. Vorzugsweise sind die zumindest zwei Stirnräder 1009; 1011; 1012; 1013; 1021 des zumindest einen Antriebsgetriebes 1007 auf der Antriebsseite der Bogenbearbeitungsmaschine 01 in dem zumindest einen Gehäuse 1014 in Transportrichtung T an dem zumindest einen Formgebungsaggregat 300 angeordnet. Das zumindest eine Gehäuse 1014 ist bevorzugt an der Antriebsseite der insbesondere als Stanzmaschine 01 ausgebildeten Bearbeitungsmaschine 01 an dem zumindest einen Formgebungsaggregat 300 angeordnet.

Bevorzugt ist das zumindest eine Getriebe 1007, insbesondere das zumindest eine Antriebsgetriebe 1007, und das zumindest eine nachgelagerte Getriebe 1019, insbesondere das zumindest eine Kurvenscheibengetriebe 1019, ölgeschmiert ausgebildet und/oder wird ölgeschmiert. Bevorzugt weist das zumindest eine Gehäuse 1014 zumindest ein Schmieröl auf. Vorzugsweise weist das zumindest eine Gehäuse 1014 zumindest ein Ölbad der zumindest zwei Stirnräder 1009; 1011; 1012; 1013; 1021 des zumindest einen Antriebsgetriebes 1007 und/oder des zumindest einen insbesondere als Kurvenscheibengetriebe 1019 ausgebildeten nachgelagerten Getriebes 1019 auf.

Bevorzugt ist jenes zumindest eine Stirnrad 1009, welches zu dem zumindest einen Abtrieb des bevorzugt als Schneckengetriebe ausgebildeten Getriebes bevorzugt in direktem Kontakt steht, als Stanzstirnrad 1009 ausgebildet. Bevorzugt steht das zumindest eine Stanzstirnrad 1009 in direktem Kontakt zu der zumindest einen Stanzantriebswelle 1016. Beispielsweise ist die zumindest eine Stanzantriebswelle 1016 als Kurbelwelle ausgebildet. Bevorzugt überträgt das zumindest eine Stanzstirnrad 1009 Kraft und/oder Drehmoment von dem zumindest einen Antrieb 1001 zumindest auf die weiteren Stirnräder 1011; 1012; 1013; 1021 des zumindest einen Antriebsgetriebes 1007. Bevorzugt steht das zumindest eine Stanzstirnrad 1009 in Kontakt zu zumindest einem als Anlagestirnrad 1012 ausgebildeten Stirnrad 1012 und/oder zu zumindest einem als Kettengreiferstirnrad 1013 ausgebildeten Stirnrad 1013 und/oder zu zumindest einem als Ausbrechstirnrad 1021 ausgebildeten Stirnrad 1021. Beispielsweise umfasst das zumindest eine Antriebsgetriebe 1007 zumindest ein als Übertragungsstirnrad 1011 ausgebildetes Stirnrad 1011, welches zwischen dem zumindest einen Stanzstirnrad 1009 und/oder dem zumindest einen Anlagestirnrad 1012 und/oder dem zumindest einen Kettengreiferstirnrad 1013 und/oder dem zumindest einen Ausbrechstirnrad 1021 angeordnet ist. Bevorzugt ist das zumindest eine Anlagestirnrad 1012 in, vorzugsweise direktem, Kontakt zu der zumindest einen Anlageantriebswelle 1002 angeordnet. Bevorzugt ist das zumindest eine Kettengreiferstirnrad 1013 in, vorzugsweise direktem, Kontakt zu zumindest einer als Kettengreiferantriebswelle 1017 ausgebildeten Antriebswelle 1017 des zumindest einen Kettentransportsystems 1200 angeordnet. Bevorzugt ist das zumindest eine Ausbrechstirnrad 1021 in, vorzugsweise direktem, Kontakt zu zumindest einer als Ausbrechantriebswelle 1022 ausgebildeten Antriebswelle 1022 angeordnet. Bevorzugt ist der zumindest eine Antrieb 1001 die zumindest eine Ausbrechantriebswelle 1022 antreibend ausgebildet.

Bevorzugt ist das zumindest eine insbesondere als Kurvenscheibengetriebe 1019 ausgebildete nachgelagerte Getriebe 1019 an der zumindest einen Ausbrechantriebswelle 1022 angeordnet. Beispielsweise ist das zumindest eine bevorzugt als Kurvenscheibengetriebe 1019 ausgebildete nachgelagerte Getriebe 1019 mit der zumindest einen Ausbrechantriebswelle 1022 vorzugsweise formschlüssig verbunden. Bevorzugt ist die zumindest eine Kurvenscheibe 1023 des zumindest einen insbesondere als Kurvenscheibengetriebe 1019 ausgebildeten nachgelagerten Getriebes 1019 von der zumindest einen Ausbrechantriebswelle 1022 angetrieben und/oder antreibbar ausgebildet.

Bevorzugt ist das zumindest eine Anlagestirnrad 1012 in vertikaler Richtung V unterhalb des zumindest einen Kettengreiferstirnrads 1013 und/oder in Transportrichtung T an der selben Koordinate der Transportrichtung T angeordnet.

Bevorzugt ist das zumindest eine Kettengreiferstirnrad 1013 über zumindest ein Getriebe so mit der zumindest einen Kettengreiferantriebswelle 1017 gekoppelt, dass die zumindest eine kontinuierliche Bewegung des zumindest einen Antriebs 1001 in die zumindest eine zyklische und/oder periodische und/oder diskontinuierliche Bewegung des zumindest einen Kettengreifersystems 1200 zum Bogentransport übersetzt wird und/oder übersetzbar ist. Vorzugsweise ist das zumindest eine Kettengreiferstirnrad 1013 mit zumindest einer Welle vorzugsweise formschlüssig verbunden. Vorzugsweise ist in der zumindest einen Welle, mit welcher das zumindest eine Kettengreiferstirnrad 1013 verbunden ist, zumindest eine weitere Welle, bevorzugt die zumindest eine Kettengreiferantriebswelle 1017, gelagert, wobei die zumindest zwei Wellen vorzugsweise zumindest teilweise unabhängig voneinander bewegbar gelagert sind. Vorzugsweise stehen die zumindest zwei Wellen bevorzugt über zumindest ein Zahnsegment in Wirkverbindung zueinander. Vorzugsweise ist das zumindest eine Kettengreiferstirnrad 1013 zumindest eine rotative Bewegung auf das zumindest eine Zahnsegment übertragend ausgebildet. Das zumindest eine Zahnsegment ist bevorzugt entlang zumindest einer Führungskurve zwangsgeführt ausgebildet. Vorzugsweise überträgt das zumindest eine Zahnsegment zumindest eine vorzugsweise zyklische und/oder periodische und/oder diskontinuierliche rotative Bewegung auf zumindest ein Getrieberad, welches vorzugsweise formschlüssig mit der zumindest einen Kettengreiferantriebswelle 1017 verbunden ist. Vorzugsweise ist die Bewegungsübertragung von dem zumindest einen Zahnsegment auf das zumindest eine Getrieberad abhängig von dem Bewegungsprofil, welches das zumindest eine Zahnsegment aufgrund der Führungskurve vollführt. Bevorzugt weist die zumindest eine Kettengreiferantriebswelle 1017 zumindest ein Zahnrad, insbesondere zumindest zwei Zahnräder auf, welche jeweils in direktem Kontakt zu der zumindest einen Kette 1203 des Kettengreifersystems 1200 stehen und/oder welche jeweils die zumindest eine Kette 1203 antreiben. Bevorzugt ist jeweils zumindest ein Zahnrad an der zumindest einen Kettengreiferantriebswelle 1017 in Querrichtung A vor dem Transportweg von Bogen 02 und jeweils zumindest ein Zahnrad an der zumindest einen Kettengreiferantriebswelle 1017 in Querrichtung A nach dem Transportweg von Bogen 02 angeordnet.

Bevorzugt ist zumindest eine Kurvenscheibe 1041 an der zumindest einen Stanzantriebswelle 1016 bevorzugt auf der Antriebsseite der Bearbeitungsmaschine 01 angeordnet. Bevorzugt ist die zumindest eine Kurvenscheibe 1041 der Stanzantriebswelle 1016 innerhalb des Gehäuses 1014 des Antriebsgetriebes 1007 angeordnet. Bevorzugt ist die zumindest eine Kurvenscheibe 1041 vorzugsweise formschlüssig mit der Stanzantriebswelle 1016 verbunden. Vorzugsweise ist die zumindest eine Kurvenscheibe 1041 der Stanzantriebswelle 1016 in Querrichtung A nach dem zumindest einen Stanzstirnrad 1009 angeordnet, das heißt vorzugsweise weiter von dem Transportweg von Bogen 02 entfernt angeordnet als das zumindest eine Stanzstirnrad 1009.

Vorzugsweise ist der zumindest einen Kurvenscheibe 1041 der Stanzantriebswelle 1016 zumindest ein Abgriffglied 1042 zugeordnet. Das zumindest eine Abgriffglied 1042 umfasst bevorzugt zumindest einen Abtaster, welcher in direktem Kontakt zu der zumindest einen Kurvenscheibe 1041 angeordnet ist. Vorzugsweise ist das zumindest eine Abgriffglied 1042 über zumindest ein Verbindungselement 1043 mit zumindest einer Hubvorrichtung 1044 verbunden. Die zumindest eine Hubvorrichtung 1044 steht bevorzugt in Kontakt zu der zumindest einen Führungseinrichtung 1203 des zumindest einen Kettentransportsystems 1200, insbesondere in Kontakt zu zumindest einer Schiene und/oder Auflage der zumindest einen Führungseinrichtung 1203. Vorzugsweise wird durch das Abtasten der zumindest einen Kurvenscheibe 1041 mittels des zumindest einen Abgriffglieds 1042 zumindest ein Bestandteil der zumindest einen Hubvorrichtung 1044 in vertikaler Richtung V zumindest zeitweise so bewegt, dass die zumindest eine insbesondere als Kette 1203 ausgebildete Führungseinrichtung 1203 entlang der vertikalen Richtung V zumindest zeitweise aus einem Führungsweg der Führungseinrichtung 1203 verschoben wird. Vorzugsweise wird insbesondere die zumindest eine Auflage und/oder Schiene der zumindest einen Führungseinrichtung 1203 in vertikaler Richtung V zumindest zeitweise bewegt, wodurch die zumindest eine Führungseinrichtung 1203 zumindest zeitweise in vertikaler Richtung V bewegt wird. Bevorzugt wird die zumindest eine Führungseinrichtung 1203 genau dann in vertikaler Richtung V aus ihrem Führungsweg verschoben, wenn ein Bogen 02 von zumindest einem den Bogen 02 bearbeitenden Aggregat 300; 400; 500; 650 zum nachfolgenden den Bogen 02, bevorzugt den zumindest einen Bogen 02, bearbeitenden Aggregat 400; 500; 650 transportiert wird.

Der Führungsweg der Führungseinrichtung 1203 ist bevorzugt jener Raumbereich, welchen die zumindest eine Führungseinrichtung 1203 zumindest zeitweise einnimmt. Die zumindest eine Führungseinrichtung 1203 ist vorzugsweise das zumindest eine Transportmittel 1201 zumindest zeitweise auf dem Führungsweg führend ausgebildet. Vorzugsweise ist der Führungsweg durch mehrere Bestandteile der Bogenbearbeitungsmaschine 01 festgelegt. Beispielsweise weist die zumindest eine Bogenbearbeitungsmaschine 01 verschiedene Führungselemente und/oder die zumindest eine Auflage der Führungseinrichtung 1203 und/oder die zumindest eine Schiene der Führungseinrichtung 1203 auf.

Der zumindest eine Antrieb 1001 treibt über das zumindest eine Getriebe 1007, bevorzugt das zumindest eine Antriebsgetriebe 1007, das zumindest eine als Ausbrechwerkzeug 402; 403 ausgebildete Werkzeug 402; 403 des zumindest einen Ausbrechwerks 401 des zumindest einen Ausbrechaggregats 400 und/oder zumindest ein als Nutzentrennwerkzeug 502 ausgebildetes Werkzeug 502 zumindest eines Nutzentrennwerks 501 des zumindest einen Nutzentrennaggregats 500 an.

Der zumindest eine Antrieb 1001 ist über das zumindest eine Getriebe 1007, bevorzugt Antriebsgetriebe 1007, das zumindest eine Ausbrechwerkzeug 402; 403 des zumindest einen Ausbrechwerks 401 des zumindest einen Ausbrechaggregats 400 und/oder das zumindest eine Nutzentrennwerkzeug 502 des zumindest einen Nutzentrennwerks 501 des zumindest einen Nutzentrennaggregats 500 antreibend ausgebildet. Bevorzugt ist der zumindest eine Antrieb 1001 über das zumindest eine, insbesondere als das zumindest eine Antriebsgetriebe 1007 ausgebildete, Getriebe 1007 mit der zumindest einen Ausbrechantriebswelle 1022 verbunden. Bevorzugt ist das zumindest eine Ausbrechstirnrad 1021 in, vorzugsweise direktem, Kontakt zu der zumindest einen Ausbrechantriebswelle 1022 angeordnet. Vorzugsweise ist das zumindest eine Ausbrechstirnrad 1021 vorzugsweise formschlüssig mit der zumindest einen Ausbrechantriebswelle 1022 verbunden. Bevorzugt ist die zumindest eine Ausbrechantriebswelle 1022 das zumindest eine als Ausbrechwerkzeug 402; 403 ausgebildete Werkzeug 402; 403 des zumindest einen Ausbrechwerks 401 des zumindest einen Ausbrechaggregats 400 und/oder das zumindest eine als Nutzentrennwerkzeug 502 ausgebildete Werkzeug 502 des zumindest einen Nutzentrennwerks 501 des zumindest einen Nutzentrennaggregats 500 antreibend ausgebildet.

Bevorzugt steht das zumindest eine nachgelagerte, insbesondere als Kurvenscheibengetriebe 1019 ausgebildete, Getriebe 1019 mit der zumindest einen Ausbrechantriebswelle 1022 in Kontakt. Vorzugsweise ist an der zumindest einen Ausbrechantriebswelle 1022 zumindest eine Kurvenscheibe 1023, bevorzugt zumindest zwei Kurvenscheiben 1023, weiter bevorzugt genau zwei Kurvenscheiben 1023, des zumindest einen, insbesondere als Kurvenscheibengetriebe 1019 ausgebildeten, dem zumindest einen Antriebsgetriebe 1007 nachgelagerten, Getriebes 1019 angeordnet. Bevorzugt ist das zumindest eine Kurvenscheibengetriebe 1019, bevorzugt die zumindest eine Kurvenscheibe 1023, innerhalb des zumindest einen Gehäuses 1014 des zumindest einen Antriebsgetriebes 1007 angeordnet. Bevorzugt ist die zumindest eine Kurvenscheibe 1023 in Querrichtung A nach dem zumindest einen Ausbrechstirnrad 1021 an der zumindest einen Ausbrechantriebswelle 1022, das heißt insbesondere von dem Transportweg weiter entfernt, angeordnet. Bevorzugt ist die zumindest eine Kurvenscheibe 1023, bevorzugt die zumindest zwei Kurvenscheiben 1023, vorzugsweise formschlüssig mit der zumindest einen Ausbrechantriebswelle 1022 verbunden.

Vorzugsweise ist das zumindest eine nachgelagerte insbesondere als Kurvenscheibengetriebe 1019 ausgebildete Getriebe 1019 mit dem zumindest einen Ausbrechwerkzeug 402; 403, bevorzugt dem zumindest einen oberen Ausbrechwerkzeug 402 und/oder bevorzugt dem zumindest einen unteren Ausbrechwerkzeug 403, des zumindest einen Ausbrechaggregats 400 und/oder mit dem zumindest einen Nutzentrennwerkzeug 502, bevorzugt dem zumindest einen oberen Nutzentrennwerkzeug 502, des zumindest einen Nutzentrennaggregats 500 gekoppelt. Bevorzugt wird das zumindest eine Ausbrechwerkzeug 402; 403, bevorzugt das zumindest eine obere Ausbrechwerkzeug 402 und/oder bevorzugt das zumindest eine untere Ausbrechwerkzeug 403, des zumindest einen Ausbrechaggregats 400 und/oder das zumindest eine Nutzentrennwerkzeug 502, bevorzugt das zumindest eine obere Nutzentrennwerkzeug 502, des zumindest einen Nutzentrennaggregats 500 durch das zumindest eine nachgeordnete Getriebe 1019 in und/oder entgegen einer vertikalen Richtung V bewegt und/oder ist bewegbar.

Bevorzugt ist zwischen dem zumindest einen nachgelagerten Getriebe 1019 und dem zumindest einen Ausbrechwerkzeug 402; 403 zumindest ein Übertragungselement 1026; 1027; 1028; 1029 angeordnet. Bevorzugt ist zwischen dem zumindest einen nachgelagerten Getriebe 1019 und dem zumindest einen Nutzentrennwerkzeug 502 zumindest ein Übertragungselement 1026; 1027; 1028; 1029 angeordnet. Das zumindest eine insbesondere als Kurvenscheibengetriebe 1019 ausgebildete, dem zumindest einen Antriebsgetriebe 1007 nachgelagerte, Getriebe 1019 ist bevorzugt mit zumindest einem Übertragungselement 1026; 1027; 1028; 1029 gekoppelt.

Bevorzugt ist der zumindest einen Kurvenscheibe 1023 jeweils zumindest ein, bevorzugt genau ein, insbesondere als Rollenhebel 1024 ausgebildeter Abtasthebel 1024 zugeordnet. Bevorzugt steht jeweils ein Abtasthebel 1024 mit der zumindest einen Kurvenscheibe 1023 der zumindest einen Ausbrechantriebswelle 1022 in Kontakt. Bevorzugt steht zumindest ein Element, beispielsweise zumindest eine Rolle, des Abtasthebels 1024 bevorzugt dauerhaft in direktem Kontakt zu der jeweiligen Kurvenscheibe 1023. Bevorzugt ist der zumindest eine Abtasthebel 1024 schwenkbar gelagert. Bevorzugt ist der zumindest eine Abtasthebel 1024 des zumindest einen nachgeordneten Getriebes 1019 zumindest wechselseitig bewegbar und/oder wechselseitig bewegend ausgebildet.

Bevorzugt ist der jeweils eine Abtasthebel 1024 mit dem zumindest einen Übertragungselement 1026; 1027; 1028; 1029 gekoppelt. Bevorzugt ist der zumindest eine Abtasthebel 1024 mit dem zumindest einen Übertragungselement 1026; 1027; 1028; 1029 gekoppelt. Insbesondere ist jeweils ein Abtasthebel 1024 mit jeweils zumindest einem Übertragungselement 1026; 1027; 1028; 1029 gekoppelt. Bevorzugt ist jenes Ende des zumindest einen Abtasthebels 1024, welches dem zumindest einen mit der zumindest einen Kurvenscheibe 1023 in Kontakt stehenden Element des Abtasthebels 1024 gegenübersteht, mit dem zumindest einen Übertragungselement 1026; 1027; 1028; 1029 gekoppelt. Bevorzugt ist das zumindest eine Übertragungselement 1026; 1027; 1028; 1029 mit dem zumindest einen Ausbrechwerkzeug 402; 403 des zumindest einen Ausbrechaggregats 400 und/oder mit dem zumindest einen Nutzentrennwerkzeug 502 des zumindest einen Nutzentrennaggregats 500 gekoppelt. Bevorzugt ist das zumindest eine Übertragungselement 1026; 1027; 1028; 1029 als Balken und/oder Stab ausgebildet.

Ein Balken beschreibt im Vorangegangenen und im Folgenden ein tragendes Element, welches zumindest entlang der Richtung seiner größten Ausdehnung um ein Vielfaches größer als orthogonal zu dieser Richtung ist. Ein Balken ist vorzugsweise quer und/oder entlang seiner Längsachse belastbar. Ein Stab beschreibt im Vorangegangenen und im Folgenden ein tragendes Element, welches entlang seines Querschnitts im Vergleich zu seiner Längsachse mit der größten Ausdehnung dünn ist. Ein Stab ist vorzugsweise zugbelastbar und/oder druckbelastbar.

Bevorzugt ist das zumindest eine Übertragungselement 1026; 1027; 1028; 1029 zumindest eine wechselseitige Bewegung ausführend ausgebildet. Die zumindest eine wechselseitige Bewegung des zumindest einen Übertragungselements 1026; 1027; 1028; 1029 entspricht bevorzugt zumindest einer Bewegung in zumindest eine Richtung, welche in einer Ebene aufgespannt durch die Transportrichtung T und die vertikale Richtung V angeordnet ist. Bevorzugt ist das zumindest eine Übertragungselement 1026; 1027; 1028; 1029 zumindest entlang seiner Längsachse, der Achse entlang der Richtung seiner größten Ausdehnung, sich in die zumindest eine Richtung bewegend und/oder bewegbar ausgebildet, welche Richtung in der Ebene aufgespannt durch die Transportrichtung T und die vertikale Richtung V angeordnet ist.

Eine wechselseitige Bewegung beschreibt im Vorangegangen und im Folgenden zumindest eine Bewegung von einer ersten Position, der Ausgangsposition, eines Bauteils hin zu zumindest einer zweiten Position, welcher vorzugsweise zumindest eine Bewegung in entgegengesetzter Richtung, also von der zumindest einen zweiten Position zurück in die Ausgangsposition, folgt. Ein Bauteil, welches wechselseitig bewegt wird, beschreibt bevorzugt zuerst zumindest eine Bewegung aus seiner Ausgangsposition heraus in zumindest eine zweite Position und im Anschluss zumindest eine Bewegung zurück in diese Ausgangsposition. Vorzugsweise findet eine wechselseitige Bewegung innerhalb einer zweidimensionalen Ebene statt.

Bevorzugt ist jeweils das zumindest eine Ausbrechwerkzeug 402; 403, vorzugsweise zumindest das zumindest eine obere Ausbrechwerkzeug 402 und/oder das zumindest eine untere Ausbrechwerkzeug 403, und/oder das zumindest eine Nutzentrennwerkzeug 502, bevorzugt zumindest das zumindest eine obere Nutzentrennwerkzeug 502, vorzugsweise linear in vertikaler Richtung V durch eine Übertragung und/oder durch eine Umwandlung zumindest einer wechselseitigen Bewegung zumindest eines Übertragungselements 1026; 1027; 1028; 1029 auf das zumindest eine Ausbrechwerkzeug 402; 403 und/oder auf das zumindest eine Nutzentrennwerkzeug 502 bewegbar angeordnet und/oder bewegt.

Bevorzugt umfasst die Bogenbearbeitungsmaschine 01 das zumindest eine Übertragungselement 1026; 1027; 1028; 1029, bevorzugt zumindest zwei Übertragungselemente 1026; 1027; 1028; 1029, weiter bevorzugt zumindest vier Übertragungselemente 1026; 1027; 1028; 1029. Bevorzugt ist das zumindest eine Übertragungselement 1026; 1027; 1028; 1029 wechselseitig bewegbar und/oder sich wechselseitig bewegend ausgebildet.

Bevorzugt umfasst die Bogenbearbeitungsmaschine 01 zumindest ein vertikales Übertragungselement 1026; 1027 und/oder zumindest ein horizontales Übertragungselement 1028; 1029. Bevorzugt umfasst die Bogenbearbeitungsmaschine 01 zumindest ein als vertikales Übertragungselement 1026; 1027 ausgebildetes Übertragungselement 1026; 1027 und/oder zumindest ein als horizontales Übertragungselement 1028; 1029 ausgebildetes Übertragungselement 1028; 1029. Das zumindest eine mit dem zumindest einen, insbesondere dem zumindest einen Antriebsgetriebe 1007, nachgelagerten Getriebe 1019, insbesondere dem zumindest einen Kurvenscheibengetriebe 1019, gekoppelte Übertragungselement 1026; 1027; 1028; 1029 ist vorzugsweise als zumindest ein vertikales Übertragungselement 1026; 1027 ausgebildet, welches zumindest in vertikaler Richtung V insbesondere wechselseitig bewegbar angeordnet ist. Das zumindest eine vertikale Übertragungselement 1026; 1027 wird bevorzugt zumindest in vertikaler Richtung V vorzugsweise wechselseitig bewegt. Das zumindest eine vertikale Übertragungselement 1026; 1027 ist bevorzugt zusätzlich zu dem zumindest einen nachgelagerten Getriebe 1019, insbesondere dem zumindest einen Kurvenscheibengetriebe 1019, mit zumindest einem horizontalen Übertragungselement 1028; 1029, welches zumindest in einer horizontalen Richtung, insbesondere mit zumindest einer Komponente entlang der Transportrichtung T, wechselseitig bewegbar und/oder sich wechselseitig bewegend angeordnet ist, gekoppelt. Das zumindest eine horizontale Übertragungselement 1028; 1029 wird bevorzugt zumindest in einer horizontalen Richtung, insbesondere mit zumindest einer Komponente entlang der Transportrichtung T, vorzugsweise wechselseitig bewegt.

Bevorzugt ist jeweils ein vertikales Übertragungselement 1026 und/oder jeweils ein horizontales Übertragungselement 1028 als jeweils zumindest ein oberes Übertragungselement 1026; 1028 ausgebildet. Bevorzugt ist jeweils ein vertikales Übertragungselement 1027 und/oder jeweils ein horizontales Übertragungselement 1029 als jeweils zumindest ein unteres Übertragungselement 1027; 1029 ausgebildet.

Vorzugsweise weist die Bogenbearbeitungsmaschine 01 das zumindest eine obere Übertragungselement 1026; 1028 auf. Bevorzugt ist das zumindest eine obere Übertragungselement 1026; 1028 mit jeweils dem zumindest einen oberen Ausbrechwerkzeug 402 und dem zumindest einen oberen Nutzentrennwerkzeug 502 gekoppelt. Bevorzugt ist zumindest eines der mit dem zumindest einen nachgelagerten Getriebe 1019 gekoppelten Übertragungselemente 1026; 1027; 1028; 1029 als das zumindest eine obere Übertragungselement 1026; 1028 ausgebildet, wobei das zumindest eine obere Übertragungselement 1026; 1028 mit jeweils dem zumindest einen oberen Ausbrechwerkzeug 402 und dem zumindest einen oberen Nutzentrennwerkzeug 502 gekoppelt ist.

Bevorzugt zusätzlich oder alternativ weist die Bogenbearbeitungsmaschine 01 das zumindest eine untere Übertragungselement 1027; 1029 auf. Bevorzugt ist das zumindest eine untere Übertragungselement 1027; 1029 mit dem zumindest einen unteren Ausbrechwerkzeug 403 gekoppelt. Bevorzugt ist zumindest eines der mit dem zumindest einen nachgelagerten Getriebe 1019 gekoppelten Übertragungselemente 1026; 1027; 1028; 1029 als das zumindest eine untere Übertragungselement 1027; 1029 ausgebildet, wobei das zumindest eine untere Übertragungselement 1027; 1029 mit dem zumindest einen unteren Ausbrechwerkzeug 403 gekoppelt ist.

Vorzugsweise umfasst die Bogenbearbeitungsmaschine 01 zumindest zwei, bevorzugt zumindest vier, weiter bevorzugt zumindest sechs, Übertragungselemente 1026; 1027; 1028; 1029. Bevorzugt ist jeweils zumindest eines der Übertragungselemente 1026; 1027; 1028; 1029 an der Bedienerseite der Bogenbearbeitungsmaschine 01 und zumindest eines der Übertragungselemente 1026; 1027; 1028; 1029 an der Antriebsseite der Bogenbearbeitungsmaschine 01 angeordnet. In einer bevorzugten Ausführung ist jeweils zumindest ein horizontales Übertragungselement 1028; 1029 auf der Bedienerseite der Bogenbearbeitungsmaschine 01 und jeweils zumindest ein horizontales Übertragungselement 1028; 1029 auf der Antriebsseite der Bogenbearbeitungsmaschine 01 angeordnet. Die Antriebsseite und die Bedienerseite sind vorzugsweise parallel zu der Transportrichtung T von Bogen 02 und zueinander bezüglich des Transportweges von Bogen 02 gegenüberliegend angeordnet. Bevorzugt ist das zumindest eine obere Ausbrechwerkzeug 402 mit zumindest zwei horizontalen Übertragungselementen 1028 gekoppelt, welche bevorzugt in Querrichtung A hintereinander und parallel zueinander angeordnet sind. Bevorzugt ist das zumindest eine obere Nutzentrennwerkzeug 502 mit zumindest zwei horizontalen Übertragungselementen 1028 gekoppelt, welche bevorzugt in Querrichtung A hintereinander und parallel zueinander angeordnet sind. Bevorzugt sind das zumindest eine obere Ausbrechwerkzeug 402 und das zumindest eine obere Nutzentrennwerkzeug 502 über dieselben vorzugsweise horizontalen Übertragungselemente 1028 gekoppelt. Bevorzugt ist das zumindest eine untere Ausbrechwerkzeug 403 mit zumindest zwei horizontalen Übertragungselementen 1029 gekoppelt, welche bevorzugt in Querrichtung A hintereinander und parallel zueinander angeordnet sind.

Die Bogenbearbeitungsmaschine 01 umfasst vorzugsweise zumindest zwei Übertragungselemente 1026; 1027; 1028; 1029. Bevorzugt stehen jeweils eine Kurvenscheibe 1023 und ein Abtasthebel 1024 mit jeweils einem der zumindest zwei Übertragungselemente 1026; 1027; 1028; 1029 in Wirkverbindung. Vorzugsweise weist das zumindest eine Kurvenscheibengetriebe 1019 zumindest zwei, bevorzugt genau zwei, Kurvenscheiben 1023 auf, welche jeweils mit einem Abtasthebel 1024 in Kontakt stehen, wobei der jeweilige Abtasthebel 1024 entweder mit dem zumindest einen oberen Übertragungselement 1026; 1028 oder mit dem zumindest einen unteren Übertragungselement 1027; 1029 gekoppelt ist.

Vorzugsweise ist das zumindest eine mit dem zumindest einen Abtasthebel 1024 gekoppelte Übertragungselement 1026; 1027; 1028; 1029 als das zumindest eine vertikale Übertragungselement 1026; 1027 ausgebildet, welches zumindest in vertikaler Richtung V linear bewegbar angeordnet ist. Vorzugsweise zusätzlich oder alternativ ist das zumindest eine vertikale Übertragungselement 1026; 1027 zusätzlich zu dem zumindest einen Abtasthebel 1024 mit dem zumindest einen horizontalen Übertragungselement 1028; 1029, welches zumindest in einer horizontalen Richtung, bevorzugt zumindest in und/oder entgegen der Transportrichtung T, linear bewegbar angeordnet ist, gekoppelt. Bevorzugt ist das zumindest eine vertikale Übertragungselement 1026; 1027 innerhalb des zumindest einen Gehäuses 1014 des zumindest einen Antriebsgetriebes 1007 angeordnet.

Das zumindest eine Antriebssystem 1000 und/oder das zumindest eine Ausbrechaggregat 400 und/oder das zumindest eine Nutzentrennaggregat 500 umfasst bevorzugt zumindest einen Bewegungswandler 1031; 1032. Bevorzugt ist der zumindest eine Bewegungswandler 1031; 1032 als oberer Bewegungswandler 1031 oder als unterer Bewegungswandler 1032 ausgebildet. Das zumindest eine Antriebssystem 1000 und/oder das zumindest eine Ausbrechaggregat 400 und/oder das zumindest eine Nutzentrennaggregat 500 umfasst bevorzugt den zumindest einen als oberen Bewegungswandler 1031 ausgebildeten Bewegungswandler 1031 und/oder den zumindest einen als unteren Bewegungswandler 1032 ausgebildeten Bewegungswandler 1032. Bevorzugt ist der zumindest eine Bewegungswandler 1031; 1032 über das zumindest eine Übertragungselement 1026; 1027; 1028; 1029 mit dem zumindest einen Antrieb 1001 gekoppelt. Bevorzugt ist das zumindest eine Ausbrechwerkzeug 402; 403 jeweils mit zumindest einem Übertragungselement 1026; 1027; 1028; 1029 über den zumindest einen Bewegungswandler 1031; 1032 gekoppelt. Bevorzugt ist das zumindest eine Nutzentrennwerkzeug 502 jeweils mit zumindest einem Übertragungselement 1026; 1027; 1028; 1029 über den zumindest einen Bewegungswandler 1031; 1032 gekoppelt. Vorzugsweise ist das zumindest eine Übertragungselement 1026; 1027; 1028; 1029 exzentrisch an dem zumindest einen Bewegungswandler 1031; 1032 angeordnet, bevorzugt gelagert.

Bevorzugt ist der zumindest eine Bewegungswandler 1031; 1032 als zumindest ein Getriebe ausgebildet. Bevorzugt ist der zumindest eine Bewegungswandler 1031; 1032 als zumindest ein Gelenk 1031; 1032 ausgebildet. Weiter bevorzugt ist der zumindest eine Bewegungswandler 1031; 1032 als zumindest ein Getriebe und/oder als zumindest ein Gelenk 1031; 1032 ausgebildet. Ein Gelenk bezeichnet im Vorangegangen und im Folgenden eine bewegliche Verbindung zwischen Maschinenteilen oder Teilen einer technischen Vorrichtung. Beispielsweise weist das Gelenk 1031; 1032 zumindest ein Lager auf.

Vorzugsweise weist das zumindest eine Übertragungselement 1026; 1027; 1028; 1029 zumindest eine bewegliche Verbindung zu dem zumindest einen jeweiligen Bewegungswandler 1031; 1032 auf. Das zumindest eine Übertragungselement 1026; 1027; 1028; 1029 ist bevorzugt um den jeweiligen zugeordneten zumindest einen Bewegungswandler 1031; 1032 schwenkbar und/oder schwenkend angeordnet. Vorzugsweise weist der zumindest eine Bewegungswandler 1031; 1032 zumindest eine Schwenkachse auf, um welche Schwenkachse das zumindest eine Übertragungselement 1026; 1027; 1028; 1029 um den jeweiligen zumindest einen Bewegungswandler 1031; 1032 schwenkbar und/oder schwenkend angeordnet ist. Vorzugsweise ist der zumindest eine Bewegungswandler 1031; 1032 die zumindest eine vorzugsweise wechselseitige Bewegung des zumindest einen mit ihm verbundenen Übertragungselements 1026; 1027; 1028; 1029 in zumindest eine zumindest teilweise rotative Bewegung überführend ausgebildet. Der zumindest eine Bewegungswandler 1031; 1032 ist bevorzugt die zumindest eine wechselseitige Bewegung des zumindest einen Übertragungselements 1026; 1027; 1028; 1029 in zumindest eine rotative Bewegung zumindest einer Übertragungswelle 1033 umwandelnd ausgebildet.

Bevorzugt ist das zumindest eine obere Ausbrechwerkzeug 402 mit zumindest dem zumindest einen Übertragungselement 1028 über den zumindest einen, bevorzugt über zumindest zwei, Bewegungswandler 1031 gekoppelt. Vorzugsweise ist das zumindest eine obere Ausbrechwerkzeug 402 mit zumindest dem zumindest einen horizontalen oberen Übertragungselement 1028 über den zumindest einen, bevorzugt über zumindest zwei, oberen Bewegungswandler 1031 gekoppelt. Vorzugsweise ist das zumindest eine obere Ausbrechwerkzeug 402 mit zumindest dem zumindest einen horizontalen oberen Übertragungselement 1028 über den zumindest einen, bevorzugt über zumindest zwei, als oberen Bewegungswandler 1031 ausgebildeten Bewegungswandler 1031 gekoppelt. Vorzugsweise ist das zumindest eine untere Ausbrechwerkzeug 403 mit zumindest dem zumindest einen Übertragungselement 1029 über den zumindest einen, bevorzugt über zumindest zwei, Bewegungswandler 1032 gekoppelt. Vorzugsweise ist das zumindest eine untere Ausbrechwerkzeug 403 mit zumindest dem zumindest einen horizontalen unteren Übertragungselement 1029 über den zumindest einen, bevorzugt über zumindest zwei, unteren Bewegungswandler 1032 gekoppelt. Vorzugsweise ist das zumindest eine untere Ausbrechwerkzeug 403 mit zumindest dem zumindest einen horizontalen unteren Übertragungselement 1029 über den zumindest einen, bevorzugt über zumindest zwei, als unteren Bewegungswandler 1032 ausgebildeten Bewegungswandler 1032 gekoppelt. Bevorzugt zusätzlich oder alternativ ist das zumindest eine Nutzentrennwerkzeug 502, bevorzugt das zumindest eine obere Nutzentrennwerkzeug 502, mit dem zumindest einen Übertragungselement 1028 über zumindest einen oberen Bewegungswandler 1031 gekoppelt. Vorzugsweise ist das zumindest eine obere Nutzentrennwerkzeug 502 mit zumindest dem zumindest einen horizontalen oberen Übertragungselement 1028 über den zumindest einen, bevorzugt über zumindest zwei, Bewegungswandler 1031 gekoppelt. Bevorzugt ist das zumindest eine Ausbrechwerkzeug 402 als oberes Ausbrechwerkzeug 402 ausgebildet. Bevorzugt zusätzlich ist das zumindest eine Nutzentrennwerkzeug 502 als oberes Nutzentrennwerkzeug 502 ausgebildet. Bevorzugt sind das zumindest eine obere Ausbrechwerkzeug 402 und das zumindest eine obere Nutzentrennwerkzeug 502 mit zumindest einem gemeinsamen Übertragungselement 1026; 1028 gekoppelt.

Das zumindest eine Ausbrechwerkzeug 402, insbesondere das obere Ausbrechwerkzeug 402, und das zumindest eine Nutzentrennwerkzeug 502, insbesondere das obere Nutzentrennwerkzeug 502, sind bevorzugt über zumindest ein gemeinsames Übertragungselement 1028 mit dem zumindest einen Antrieb 1001 gekoppelt. Das zumindest eine Ausbrechwerkzeug 402, insbesondere das obere Ausbrechwerkzeug 402, und das zumindest eine Nutzentrennwerkzeug 502, insbesondere das obere Nutzentrennwerkzeug 502, sind bevorzugt über zumindest ein gemeinsames Übertragungselement 1028 mit dem zumindest einen Antrieb 1001 durch die zumindest einen Ausbrechantriebswelle 1022 gekoppelt. Zwischen dem zumindest einen Antrieb 1001, bevorzugt zumindest zwischen der zumindest einen Ausbrechantriebswelle 1022, und dem zumindest einen Übertragungselement 1028 ist das zumindest eine Getriebe 1019, insbesondere das zumindest eine Kurvenscheibengetriebe 1019, angeordnet, welches zumindest eine rotative Bewegung in zumindest eine wechselseitige Bewegung überführend ausgebildet ist. Bevorzugt ist zwischen dem zumindest einen Übertragungselement 1028 und dem zumindest einen Ausbrechwerkzeug 402 und/oder dem zumindest einen Nutzentrennwerkzeug 502 der zumindest eine Bewegungswandler 1031; 1032 angeordnet, welcher zumindest eine wechselseitige Bewegung in zumindest eine rotative Bewegung überführend ausgebildet ist.

Bevorzugt ist der zumindest eine Bewegungswandler 1031; 1032 die zumindest eine vorzugsweise wechselseitige Bewegung des zumindest einen Übertragungselements 1026; 1027; 1028; 1029 in zumindest eine zumindest teilweise rotative Bewegung der zumindest einen Übertragungswelle 1033 wandelnd ausgebildet. Der zumindest eine Bewegungswandler 1031; 1032 ist bevorzugt jeweils über die zumindest eine Übertragungswelle 1033 mit dem zumindest einen Ausbrechwerkzeug 402; 403, vorzugsweise mit dem zumindest einen oberen Ausbrechwerkzeug 402 oder dem zumindest einen unteren Ausbrechwerkzeug 403, gekoppelt. Zusätzlich oder alternativ ist bevorzugt der zumindest eine Bewegungswandler 1031 jeweils über die zumindest eine Übertragungswelle 1033 mit dem zumindest einen Nutzentrennwerkzeug 502, bevorzugt oberen Nutzentrennwerkzeug 502, gekoppelt. Bevorzugt ist jeweils zumindest ein Bewegungswandler 1031; 1032 über die zumindest eine Übertragungswelle 1033 mit dem zumindest einen Ausbrechwerkzeug 402; 403, vorzugsweise mit dem zumindest einen oberen Ausbrechwerkzeug 402 oder dem zumindest einen unteren Ausbrechwerkzeug 403, gekoppelt. Bevorzugt zusätzlich oder alternativ ist jeweils zumindest ein Bewegungswandler 1031 über die zumindest eine Übertragungswelle 1033 mit dem zumindest einen Nutzentrennwerkzeug 502, vorzugsweise oberen Nutzentrennwerkzeug 502, gekoppelt. Vorzugsweise ist das zumindest eine Ausbrechwerkzeug 402; 403 und/oder das zumindest eine Nutzentrennwerkzeug 502 jeweils über zumindest zwei Übertragungswellen 1033 mit jeweils zumindest zwei Bewegungswandlern 1031; 1032 gekoppelt.

Bevorzugt ist die zumindest eine Schwenkachse des zumindest einen Bewegungswandlers 1031; 1032, um welche Schwenkachse das zumindest eine Übertragungselement 1026; 1027; 1028; 1029 schwenkbar und/oder schwenkend angeordnet ist, zumindest parallel zu einer Rotationsachse der zumindest einen Übertragungswelle 1033 angeordnet und/oder gerichtet. Die zumindest eine Schwenkachse des zumindest einen Bewegungswandlers 1031; 1032, um welche Schwenkachse das zumindest eine Übertragungselement 1028 schwenkbar und/oder schwenkend angeordnet ist, ist bevorzugt parallel zu der Querrichtung A angeordnet.

Vorzugsweise ist zumindest ein Pleuel vorzugsweise formschlüssig mit der zumindest einen Übertragungswelle 1033 verbunden. Vorzugsweise weist der zumindest eine Pleuel zumindest eine Pleuelstange 1034 auf. Vorzugsweise ist der zumindest eine Pleuel zumindest eine rotative Bewegung der betreffenden Übertragungswelle 1033 in zumindest eine wechselseitige Bewegung überführend ausgebildet. Vorzugsweise ist die zumindest eine Pleuelstange 1034 direkt mit dem zumindest einen Ausbrechwerkzeug 402; 403 oder dem zumindest einen Nutzentrennwerkzeug 502 gekoppelt. Bevorzugt steht das zumindest eine Ausbrechwerkzeug 402; 403 oder das zumindest eine Nutzentrennwerkzeug 502 über die zumindest eine Pleuelstange 1034 in Wirkverbindung zu der zumindest einen Übertragungswelle 1033. Ein Pleuel und/oder eine Pleuelstange beschreibt im Vorangegangenen und im Folgenden eine Verbindung zwischen zumindest einer Welle und einem an dieser Welle exzentrisch gelagerten, linear beweglichen Bauteil, wodurch zumindest eine rotative Bewegung in zumindest eine lineare Bewegung oder umgekehrt gewandelt wird und/oder wandelbar ist.

Das zumindest eine Ausbrechwerk 401 umfasst bevorzugt jeweils zumindest ein Führungselement 1037 des zumindest einen Ausbrechwerkzeugs 402; 403, bevorzugt zumindest zwei Führungselemente 1037. Weiter bevorzugt umfasst das zumindest eine Ausbrechwerk 401 zumindest vier Führungselemente 1037 pro Ausbrechwerkzeug 402; 403. Das zumindest eine Nutzentrennwerk 501 umfasst bevorzugt jeweils zumindest ein Führungselement 1037 des zumindest einen Nutzentrennwerkzeugs 502, bevorzugt zumindest zwei Führungselemente 1037. Weiter bevorzugt umfasst das zumindest eine Nutzentrennwerk 501 zumindest vier Führungselemente 1037 pro Nutzentrennwerkzeug 502. Bevorzugt ist das zumindest eine Führungselement 1037 als Linearführungselement 1037 ausgebildet. Bevorzugt ist das zumindest eine Führungselement 1037 das jeweilige Ausbrechwerkzeug 402; 403 oder das jeweilige Nutzentrennwerkzeug 502 linear, vorzugsweise in vertikaler Richtung V, führend ausgebildet.

Das zumindest eine Ausbrechwerk 401 und/oder das zumindest eine Nutzentrennwerk 501 umfasst jeweils vorzugsweise zumindest ein zumindest eine Druckspannung erzeugendes Spannelement 1036, bevorzugt zumindest eine Feder 1036, weiter bevorzugt zumindest eine Druckfeder. Bevorzugt umfasst das jeweilige Ausbrechwerk 401 jeweils mindestens vier Spannelemente 1036 je Ausbrechwerkzeug 402; 403. Bevorzugt umfasst das jeweilige Nutzentrennwerk 501 jeweils mindestens vier Spannelemente 1036 je Nutzentrennwerkzeug 502. Bevorzugt ist das zumindest eine Spannelement 1036 Druckspannung zumindest in und/oder entgegen der vertikalen Richtung V erzeugend ausgebildet. Bevorzugt ist das zumindest eine Spannelement 1036 den zumindest einen Abtasthebel 1024 an die zumindest eine Kurvenscheibe 1023 der zumindest einen Ausbrechantriebswelle 1022 andrückend ausgebildet.

Das jeweils zumindest eine Spannelement 1036 ist bevorzugt gespannt ausgebildet, wenn sich das zumindest eine Ausbrechwerkzeug 402; 403 und/oder das zumindest eine Nutzentrennwerkzeug 502 in jeweils einer ersten Position befindet. Das jeweils zumindest eine Spannelement 1036 ist bevorzugt entspannt ausgebildet, wenn sich das zumindest eine Ausbrechwerkzeug 402; 403 und/oder das zumindest eine Nutzentrennwerkzeug 502 in jeweils einer zweiten Position befindet.

Vorzugsweise ist das zumindest eine Ausbrechwerkzeug 402; 403 und/oder das zumindest eine Nutzentrennwerkzeug 502 in der ersten Position zu dem Transportweg von Bogen 02 mit einem Abstand größer Null beabstandet angeordnet. Vorzugsweise ist das zumindest eine Ausbrechwerkzeug 402; 403 und/oder das zumindest eine Nutzentrennwerkzeug 502 in der zweiten Position zu dem Transportweg von Bogen 02 in direktem Kontakt zu dem Transportweg und/oder zumindest teilweise innerhalb des Transportweges angeordnet. Bevorzugt ist das zumindest eine Ausbrechwerk 401 geschlossen, wenn sich das zumindest eine Ausbrechwerkzeug 402; 403 in der zweiten Position befindet.

Bevorzugt ist das zumindest eine Spannelement 1036 das jeweils ihm zugeordnete Ausbrechwerkzeug 402; 403 und/oder das jeweils ihm zugeordnete Nutzentrennwerkzeug 502 zumindest von dessen jeweiliger ersten Position in dessen zweite Position überführend ausgebildet. Vorzugsweise wird die zumindest eine wechselseitige Bewegung des zumindest einen Übertragungselements 1026; 1027; 1028; 1029 von der erzeugten Druckspannung des zumindest einen Spannelements 1036 überlagert. Vorzugsweise wird das zumindest eine Ausbrechwerkzeug 402; 403 und/oder das zumindest eine Nutzentrennwerkzeug 502, bevorzugt ausschließlich, durch die zumindest eine wechselseitige Bewegung des zumindest einen Übertragungselements 1026; 1027; 1028; 1029 von dessen jeweiliger zweiten Position in dessen jeweilige erste Position überführt.

Bevorzugt ist der zumindest eine Antrieb 1001 über das zumindest eine Zugmittelgetriebe 1004 die zumindest eine Hauptantriebswelle 1006 antreibend ausgebildet. Vorzugsweise ist die zumindest eine Hauptantriebswelle 1006 das zumindest eine Getriebe 1007 in Bewegung versetzend und/oder antreibend ausgebildet. Vorzugsweise ist die zumindest eine Hauptantriebswelle 1006 die zumindest eine Stanzantriebswelle 1016 antreibend ausgebildet. Vorzugsweise wird das zumindest eine Formgebungswerkzeug des zumindest einen Formgebungswerks 301 durch die zumindest eine Stanzantriebswelle 1016 angetrieben und/oder insbesondere in vertikaler Richtung V bewegt. Vorzugsweise treibt das zumindest eine Stanzstirnrad 1009 zumindest ein Übertragungsstirnrad 1011 an. Vorzugsweise treibt das zumindest eine Übertragungsstirnrad 1011 das zumindest eine Anlagestirnrad 1012 und bevorzugt zusätzlich oder alternativ das zumindest eine Ausbrechstirnrad 1021 an. Vorzugsweise treibt das zumindest eine Anlagestirnrad 1012 die zumindest eine Anlageantriebswelle 1002 an. Bevorzugt treibt das zumindest eine Anlagestirnrad 1012 das zumindest eine Kettengreiferstirnrad 1013 an. Beispielsweise alternativ treibt zumindest ein Übertragungsstirnrad 1011, beispielsweise ein zweites Übertragungsstirnrad 1011, das zumindest eine Kettengreiferstirnrad 1013 an. Vorzugsweise treibt das zumindest eine Kettengreiferstirnrad 1013 die zumindest eine Kettengreiferantriebswelle 1017 an.

Vorzugsweise umfasst das zumindest eine nachgelagerte Getriebe 1019 das zumindest eine Ausbrechstirnrad 1021. Vorzugsweise treibt das zumindest eine Ausbrechstirnrad 1021 die zumindest eine Ausbrechantriebswelle 1022 an. Vorzugsweise wird über die zumindest eine Ausbrechantriebswelle 1022 die zumindest eine Kurvenscheibe 1023, insbesondere die zumindest zwei Kurvenscheiben 1023, der Ausbrechantriebswelle 1022 rotiert und/oder angetrieben. Bevorzugt wird über die zumindest eine Ausbrechantriebswelle 1022 die zumindest eine Kurvenscheibe 1023, insbesondere die zumindest zwei Kurvenscheiben 1023, des zumindest einen bevorzugt als Kurvenscheibengetriebe 1019 ausgebildeten nachgelagerten Getriebes 1019 rotiert und/oder angetrieben. Vorzugsweise steht die zumindest eine Kurvenscheibe 1023 der zumindest einen Ausbrechantriebswelle 1022 in Wirkverbindung zu dem zumindest einen jeweiligen Abtasthebel 1024. Vorzugsweise schwenkt der zumindest eine Abtasthebel 1024 entsprechend der Bewegung der ihm zugeordneten Kurvenscheibe 1023. Bevorzugt ist der zumindest eine Abtasthebel 1024 direkt mit dem zumindest einen insbesondere als vertikales Übertragungselement 1026; 1027 ausgebildeten Übertragungselement 1026; 1027 gekoppelt, welches bevorzugt durch die Schwenkbewegung des zumindest einen Abtasthebels 1024 wechselseitig bewegt wird. Vorzugsweise wird das zumindest eine vertikale Übertragungselement 1026; 1027 zumindest mit einer Komponente in vertikaler Richtung V wechselseitig bewegt.

Bevorzugt steht das zumindest eine vertikale Übertragungselement 1026; 1027 jeweils in direktem Kontakt zu dem zumindest einen Bewegungswandler 1031; 1032. Vorzugsweise schwenkt der zumindest eine Bewegungswandler 1031; 1032, welcher mit dem zumindest einen vertikalen Übertragungselement 1026; 1027 direkt gekoppelt ist, um die Rotationsachse der mit ihm verbundenen Übertragungswelle 1033. Vorzugsweise wird die zumindest eine mit dem zumindest einen Bewegungswandler 1031; 1032 verbundene Übertragungswelle 1033 durch das Schwenken des zumindest einen Bewegungswandlers 1031; 1032 um deren Rotationsachse rotiert und/oder geschwenkt. Bevorzugt ist das zumindest eine horizontale Übertragungselement 1028; 1029 direkt mit dem zumindest einen Bewegungswandler 1031; 1032 gekoppelt. Bevorzugt ist das zumindest eine horizontale Übertragungselement 1028; 1029 über den zumindest einen Bewegungswandler 1031; 1032 mit dem zumindest einen vertikalen Übertragungselement 1026; 1027 gekoppelt. Durch die wechselseitige Bewegung des zumindest einen vertikalen Übertragungselements 1026; 1027 und/oder durch das zumindest eine Schwenken des zumindest einen Bewegungswandlers 1031; 1032, welcher bevorzugt mit dem zumindest einen vertikalen Übertragungselement 1026; 1027 verbunden ist und/oder mit dem zumindest einen Abtasthebel 1024 verbunden ist, wird das zumindest eine horizontale Übertragungselement 1028; 1029 wechselseitig in der zumindest einen Richtung, welche Richtung in der Ebene aufgespannt durch die Transportrichtung T und die vertikale Richtung V angeordnet ist, bewegt.

Der zumindest eine Bewegungswandler 1031; 1032, welcher mit dem zumindest einen horizontalen Übertragungselement 1028; 1029 verbunden ist, wird bevorzugt durch die zumindest eine wechselseitige Bewegung des jeweiligen horizontalen Übertragungselements 1028; 1029 geschwenkt und/oder bewegt. Vorzugsweise wird die jeweilige Übertragungswelle 1033, welche über den zumindest einen Bewegungswandler 1031; 1032 mit dem jeweiligen horizontalen Übertragungselement 1028; 1029 in Wirkverbindung steht, um ihre Rotationsachse zumindest teilweise schwenkend und/oder zumindest zum Teil rotierend bewegt. Durch das zumindest teilweise Schwenken der zumindest einen Übertragungswelle 1033 wird bevorzugt die zumindest eine mit dieser jeweiligen Übertragungswelle 1033 verbundene Pleuelstange 1034 zumindest mit mindestens einer Komponente in vertikaler Richtung V bewegt.

Bevorzugt steht das zumindest eine obere Ausbrechwerkzeug 402 und/oder das zumindest eine obere Nutzentrennwerkzeug 502 mit dem zumindest einen oberen horizontalen Übertragungselement 1028 in Wirkverbindung. Aufgrund des zumindest einen Führungselements 1037 wird das zumindest eine obere Ausbrechwerkzeug 402 und/oder das zumindest eine obere Nutzentrennwerkzeug 502, insbesondere durch die Bewegung der zumindest einen Pleuelstange 1034 und/oder durch die Bewegung der zumindest einen Übertragungswelle 1033 und/oder bevorzugt durch die Bewegung des zumindest einen oberen horizontalen Übertragungselements 1028, bevorzugt in und/oder entgegen der vertikalen Richtung V bewegt.

Bevorzugt steht das zumindest eine untere Ausbrechwerkzeug 403 mit dem zumindest einen unteren horizontalen Übertragungselement 1029 in Wirkverbindung. Aufgrund des zumindest einen Führungselements 1037 wird das zumindest eine untere Ausbrechwerkzeug 403, insbesondere durch die Bewegung der zumindest einen Pleuelstange 1034 und/oder durch die Bewegung der zumindest einen Übertragungswelle 1033 und/oder bevorzugt durch die Bewegung des zumindest einen unteren horizontalen Übertragungselements 1029, bevorzugt in und/oder entgegen der vertikalen Richtung V bewegt.

Bevorzugt wird das zumindest eine untere Ausbrechwerkzeug 403 gegengleich zu dem zumindest einen oberen Ausbrechwerkzeug 402 bewegt, sodass sich diese beiden in vertikaler Richtung V aufeinander zu und/oder voneinander weg bewegen. Durch das Schließen des Ausbrechwerks 401, also dem Aufeinanderzubewegen des oberen Ausbrechwerkzeugs 402 und des unteren Ausbrechwerkzeugs 403, werden insbesondere als Abfallstücke 04 ausgebildete Reststücke 04 von dem jeweiligen, bevorzugt zumindest einen, Bogen 02 entfernt.

Die zumindest eine als Stanzmaschine 01 ausgebildete Bogenbearbeitungsmaschine 01 weist zumindest ein zentrales Schmiermittelsystem auf. Das zumindest eine zentrale Schmiermittelsystem ist als Zentralschmieranlage
ausgebildet, welche eine Einrichtung zur Versorgung einer und/oder mehrerer Schmierstellen innerhalb der Bearbeitungsmaschine 01 mit Schmiermittel ist. Das zumindest eine Schmiermittelsystem ist Bestandteile, bevorzugt zumindest einen Bestandteil, weiter bevorzugt mindestens zwei Bestandteile, der einzelnen Aggregate 100; 200; 300; 400; 500; 600; 650; 700; 800; 900 schmierend ausgebildet. Es sind zumindest zwei Aggregate 100; 200; 300; 400; 500; 600; 650; 700; 800; 900 der Aggregate 100; 200; 300; 400; 500; 600; 650; 700; 800; 900 mit dem zumindest einen zentralen Schmiermittelsystem verbunden. Das zumindest eine Schmiermittelsystem ist zumindest ein Schmiermittel von zumindest einer Quelle von Schmiermittel und/oder von zumindest einem Vorrat an Schmiermittel zu zumindest zwei Aggregaten 200; 300; 400; 500 der Aggregate 200; 300; 400; 500 führend ausgebildet. Dabei umfasst die Stanzmaschine 01 mindestens das zumindest eine als Anlageaggregat 200 ausgebildete Aggregat 200 und das zumindest eine als Formgebungsaggregat 300 ausgebildete Aggregat 300 und das zumindest eine als Ausbrechaggregat 400 ausgebildete Aggregat 400 und das zumindest eine als Nutzentrennaggregat 500 ausgebildete Aggregat 500.

Ein Schmierstoff und/oder Schmiermittel beschreibt im Vorangegangenen und im Folgenden einen Stoff, welcher zumindest einen beweglichen Bestandteil gegenüber zumindest eines weiteren Bestandteils der Bearbeitungsmaschine 01 schmierend ausgebildet ist. Der Schmierstoff ist Reibung und/oder Verschleiß verringernd ausgebildet und zusätzlich oder alternativ den zumindest einen beweglichen Bestandteil zumindest teilweise innerhalb eines Kontaktbereichs zwischen dem Schmierstoff und dem betreffenden Bestandteil kühlend ausgebildet. Bevorzugt zusätzlich ist der zumindest eine Schmierstoff vorzugsweise schwingungsdämpfend ausgebildet und/oder den betreffenden Bestandteil zumindest teilweise vor Korrosion schützend ausgebildet. Zusätzlich oder alternativ ist der zumindest eine Schmierstoff zumindest innerhalb des Kontaktbereichs den zumindest einen beweglichen Bestandteil der Bearbeitungsmaschine 01 abdichtend ausgebildet. Bevorzugt weist das zumindest eine Schmiermittel zumindest ein Schmieröl oder zumindest ein Schmierfett auf. Schmieröle sind vorzugsweise flüssige, insbesondere niederviskose, Schmierstoffe. Schmierfette sind vorzugsweise zumindest halbflüssige Schmierstoffe mit einer höheren Viskosität als Schmieröle. Schmierfette umfassen vorzugsweise neben zumindest einem Schmieröl zumindest einen Eindicker und/oder zumindest ein Additiv. Vorzugsweise weist ein Schmierfett zumindest 60% Schmieröl, bevorzugt zumindest 70% Schmieröl, und zusätzlich zu dem zumindest einen Schmieröl zumindest 2,5% Eindicker, bevorzugt zumindest 5% Eindicker, und/oder zusätzlich zu dem zumindest einen Schmieröl zumindest 8% an mindestens einem Additiv, bevorzugt zumindest 12% an mindestens einem Additiv, auf. Beispielsweise umfasst das zumindest eine Schmiermittel zumindest ein Mineralöl und/oder zumindest ein synthetisches Öl. Beispielsweise umfasst der zumindest eine Eindicker Lithiumseifenlösung.

Beispielsweise umfasst das zumindest eine Schmiermittelsystem zumindest eine Pumpe 1046. Bevorzugt umfasst das zumindest eine Schmiermittelsystem genau eine Pumpe 1046, alternativ zumindest zwei Pumpen 1046. Bevorzugt ist die zumindest eine Pumpe 1046 mit zumindest einer ersten Hauptleitung 1047 verbunden. Beispielsweise weist der zumindest eine Vorrat an Schmiermittel und/oder die zumindest eine Quelle von Schmiermittel die zumindest eine Pumpe 1046 auf. Bevorzugt ist die zumindest eine Pumpe 1046 Schmiermittel von der zumindest einen Quelle von Schmiermittel und/oder von dem zumindest einen Vorrat an Schmiermittel zu dem jeweiligen Aggregat 100; 200; 300; 400; 500; 600; 650; 700; 800; 900 und/oder zu zumindest einer Schmierstelle innerhalb eines jeweiligen Aggregates 100; 200; 300; 400; 500; 600; 650; 700; 800; 900 pumpend ausgebildet. Bevorzugt ist die zumindest eine Pumpe 1046 an der zumindest einen Quelle von Schmiermittel und/oder an dem zumindest einen Vorrat an Schmiermittel, beispielsweise in Transportrichtung T nach dem Auslageaggregat 600, angeordnet.

Das Schmiermittelsystem umfasst bevorzugt die zumindest eine erste Hauptleitung 1047. Bevorzugt ist die zumindest eine erste Hauptleitung 1047 mit der zumindest einen Quelle von Schmiermittel und/oder dem zumindest einen Vorrat an Schmiermittel verbunden. Die zumindest eine erste Hauptleitung 1047 ist bevorzugt Schmiermittel von der zumindest einen Quelle von Schmiermittel und/oder von dem zumindest einen Vorrat an Schmiermittel jeweils hin zu zumindest einem der zumindest zwei Aggregate 200; 300; 400; 500, insbesondere zu dem zumindest einen Anlageaggregat 200 und/oder dem zumindest einen Formgebungsaggregat 300 und/oder dem zumindest einen Ausbrechaggregat 400 und/oder dem zumindest einen Nutzentrennaggregat 500, führend ausgebildet.

Beispielsweise ist die erste Hauptleitung 1047 Schmiermittel direkt an die zumindest zwei Aggregate 200; 300; 400; 500 führend ausgebildet. Alternativ ist die erste Hauptleitung 1047 mit zumindest einer zweiten Hauptleitung 1048, bevorzugt mit zumindest zwei zweiten Hauptleitungen 1048, verbunden, beispielsweise über zumindest einen Verteiler 1049. Die zumindest eine zweite Hauptleitung 1048 ist bevorzugt zwischen der zumindest einen ersten Hauptleitung 1047 und den zumindest zwei Aggregaten 200; 300; 400; 500, insbesondere dem zumindest einen Anlageaggregat 200 und/oder dem zumindest einen Formgebungsaggregat 300 und/oder dem zumindest einen Ausbrechaggregat 400 und/oder dem zumindest einen Nutzentrennaggregat 500, angeordnet. Die zumindest eine zweite Hauptleitung 1048 ist bevorzugt Schmiermittel zu zumindest einem der Aggregate 200; 300; 400; 500, insbesondere zu dem zumindest einen Anlageaggregat 200 und/oder dem zumindest einen Formgebungsaggregat 300 und/oder dem zumindest einen Ausbrechaggregat 400 und/oder dem zumindest einen Nutzentrennaggregat 500, führend ausgebildet. Weiter bevorzugt ist jeweils eine zweite Hauptleitung 1048 Schmiermittel zu jeweils einem Aggregat 200; 300; 400; 500, insbesondere zu dem zumindest einen Anlageaggregat 200 oder dem zumindest einen Formgebungsaggregat 300 oder dem zumindest einen Ausbrechaggregat 400 oder dem zumindest einen Nutzentrennaggregat 500, führend ausgebildet. Bevorzugt umfasst das zumindest eine Schmiermittelsystem für jedes mit dem Schmiermittelsystem verbundene Aggregat 200; 300; 400; 500, insbesondere das zumindest eine Anlageaggregat 200 und/oder das zumindest eine Formgebungsaggregat 300 und/oder das zumindest eine Ausbrechaggregat 400 und/oder das zumindest eine Nutzentrennaggregat 500, zumindest eine insbesondere als zweite Hauptleitung 1048 ausgebildete Hauptleitung 1048. Bevorzugt ist die zumindest eine zweite Hauptleitung 1048 Schmiermittel direkt an die zumindest zwei Aggregate 200; 300; 400; 500, bevorzugt an jeweils zumindest eines der zumindest zwei Aggregate 200; 300; 400; 500, führend ausgebildet.

Das zumindest eine Schmiermittelsystem umfasst bevorzugt zumindest einen insbesondere als ersten Verteiler 1049 ausgebildeten Verteiler 1049. Bevorzugt ist der zumindest eine erste Verteiler 1049 mit der zumindest einen ersten Hauptleitung 1047 verbunden und/oder an der zumindest einen ersten Hauptleitung 1047 angeordnet. Bevorzugt ist der zumindest eine erste Verteiler 1049 zwischen der zumindest einen ersten Hauptleitung 1047 und der zumindest einen zweiten Hauptleitung 1048 angeordnet. Bevorzugt umfasst der zumindest eine erste Verteiler 1049 zumindest eine Drossel, durch welche vorzugsweise Schmiermittel dosiert wird und/oder dosierbar ist. Bevorzugt ist der zumindest eine erste Verteiler 1049 als Progressivverteiler 1049 ausgebildet. Bevorzugt umfasst das zumindest eine Schmiermittelsystem den zumindest einen als ersten Verteiler 1049 ausgebildeten Verteiler 1049, welcher Schmiermittel an die zumindest zwei Aggregate 200; 300; 400; 500 verteilend und/oder dosierend ausgebildet ist. Bevorzugt ist der zumindest eine erste Verteiler 1049 Schmiermittel progressiv an die zumindest zwei Aggregate 200; 300; 400; 500, insbesondere an das zumindest eine Anlageaggregat 200 und/oder das zumindest eine Formgebungsaggregat 300 und/oder das zumindest eine Ausbrechaggregat 400 und/oder das zumindest eine Nutzentrennaggregat 500, verteilend und/oder dosierend ausgebildet. Bevorzugt ist der zumindest eine erste Verteiler 1049 Schmiermittel fortlaufend an die zumindest zwei Aggregate 200; 300; 400; 500 verteilend und/oder dosierend ausgebildet. Vorzugsweise ist der zumindest eine insbesondere als Progressivverteiler 1049 ausgebildete erste Verteiler 1049 das zumindest eine Schmiermittel entsprechend des Bedarfs an die jeweiligen Aggregate 200; 300; 400; 500 verteilend und/oder dosierend ausgebildet.

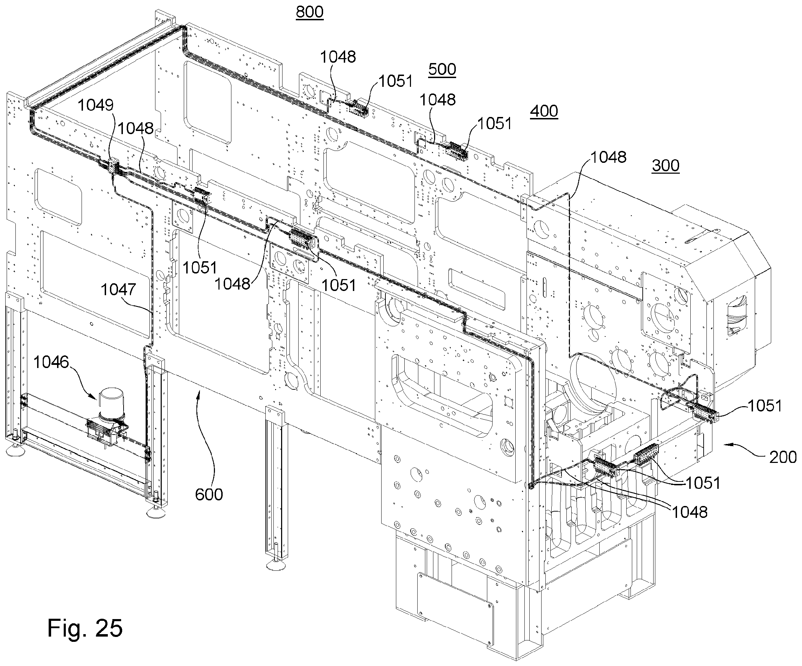

Zur Verdeutlichung einer möglichen Ausführung zeigt Figur 25 einen Teil des zentralen Schmiermittelsystems. Es sind insbesondere die zumindest eine Pumpe 1046, die zumindest eine erste Hauptleitung 1047, der zumindest eine erste Verteiler 1049, beispielsweise mehrere zweite Hauptleitungen 1048 sowie beispielsweise mehrere zweite Verteiler 1051 in einem Teil der Stanzmaschine 01 gezeigt. Insbesondere innerhalb des Gehäuses der Stanzmaschine 01, insbesondere im Bereich des Anlageaggregats 200, sind die jeweiligen zweiten Hauptleitungen 1048 und die jeweiligen zweiten Verteiler 1051 außerhalb des Transportweges von Bogen 02 anzuordnen. Auf eine strichlierte Darstellung der Hauptleitungen 1047; 1048 sowie der Verteiler 1049; 1051, insbesondere wenn diese, wie beispielsweise im Bereich des Anlageaggregats 200, eigentlich durch weitere Bestandteile oder dem Gehäuse der Stanzmaschine 01 zumindest teilweise verdeckt sind, wird aus Gründen der Übersichtlichkeit verzichtet.

Innerhalb des jeweiligen Aggregates 200; 300; 400; 500, insbesondere dem zumindest einen Anlageaggregat 200 und/oder dem zumindest einen Formgebungsaggregat 300 und/oder dem zumindest einen Ausbrechaggregat 400 und/oder dem zumindest einen Nutzentrennaggregat 500, ist das zumindest eine Schmiermittelsystem Schmiermittel zu der zumindest einen Schmierstelle führend ausgebildet. Insbesondere innerhalb eines Aggregates 200; 300; 400; 500, insbesondere dem zumindest einen Anlageaggregat 200 und/oder dem zumindest einen Formgebungsaggregat 300 und/oder dem zumindest einen Ausbrechaggregat 400 und/oder dem zumindest einen Nutzentrennaggregat 500, umfasst das zumindest eine Schmiermittelsystem bevorzugt zumindest eine Leitung, insbesondere zumindest zwei Leitungen, welche innerhalb des Schmiermittelsystems vorzugsweise der zumindest einen Hauptleitung 1047; 1048 nachgeordnet angeordnet sind. Vorzugsweise ist die zumindest eine Leitung, bevorzugt die zumindest zwei Leitungen, Schmiermittel innerhalb des jeweiligen Aggregats 200; 300; 400; 500, insbesondere dem zumindest einen Anlageaggregat 200 und/oder dem zumindest einen Formgebungsaggregat 300 und/oder dem zumindest einen
Ausbrechaggregat 400 und/oder dem zumindest einen Nutzentrennaggregat 500, jeweils zu der zumindest einen Schmierstelle führend ausgebildet.

Eine Schmierstelle beschreibt im Vorangegangenen und im Folgenden einen Kontaktbereich von zumindest einem beweglichen Bestandteil der Bearbeitungsmaschine 01 mit zumindest einem weiteren beweglichen oder unbeweglichen Bestandteil der Bearbeitungsmaschine 01. An diesem Kontaktbereich ist vorzugsweise zumindest ein Schmiermittel angebracht und/oder wird angebracht, sodass der zumindest eine bewegliche Bestandteil sich vorzugsweise reibungsarm und/oder verschleißarm bewegend und/oder bewegbar ausgebildet ist. Beispielsweise weist ein Getriebe 1004; 1007; 1019 zumindest eine Schmierstelle auf. Bevorzugt ist die jeweilige Leitung insbesondere innerhalb eines Aggregates 200; 300; 400; 500, insbesondere des zumindest einen Anlageaggregats 200 und/oder des zumindest einen Formgebungsaggregats 300 und/oder des zumindest einen Ausbrechaggregats 400 und/oder des zumindest einen Nutzentrennaggregats 500, Schmiermittel an die zumindest eine Schmierstelle führend ausgebildet. Bevorzugt ist die zumindest eine Leitung innerhalb des jeweiligen Aggregates 200; 300; 400; 500 jeweils Schmiermittel an genau eine Schmierstelle führend ausgebildet. Bevorzugt weist die zumindest eine Leitung an der zumindest einen Schmierstelle, zu welcher diese Leitung führt, zumindest eine Düse auf. Bevorzugt ist das zumindest eine zentrale Schmiermittelsystem die zumindest eine Schmierstelle mit zumindest einem Schmiermittel schmierend ausgebildet. Bevorzugt wird Schmiermittel durch die zumindest eine Düse tropfenweise an die Schmierstelle abgegeben.

Bevorzugt umfasst das zumindest eine Schmiermittelsystem zumindest einen zweiten Verteiler 1051, bevorzugt zumindest zwei zweite Verteiler 1051. Das zumindest eine Schmiermittelsystem umfasst vorzugsweise den zumindest einen als zweiten Verteiler 1051 ausgebildeten Verteiler 1051, welcher Schmiermittel innerhalb des jeweiligen Aggregats 200; 300; 400; 500 verteilend und/oder dosierend ausgebildet ist. Bevorzugt umfasst das zumindest eine Schmiermittelsystem für jedes mit ihm verbundene Aggregat 100; 200; 300; 400; 500; 600; 650; 700; 800; 900 zumindest einen zweiten Verteiler 1051, insbesondere zumindest zwei zweite Verteiler 1051. Bevorzugt umfasst der zumindest eine zweite Verteiler 1051 zumindest eine Drossel, durch welche vorzugsweise Schmiermittel dosiert wird und/oder dosierbar ist. Bevorzugt umfasst das zumindest eine Schmiermittelsystem zumindest einen zweiten Verteiler 1051 auf der Antriebsseite und zumindest einen zweiten Verteiler 1051 auf der Bedienerseite der Bearbeitungsmaschine 01. Bevorzugt umfasst das jeweilige Aggregat 200; 300; 400; 500, insbesondere das zumindest eine Anlageaggregat 200 und/oder das zumindest eine Formgebungsaggregat 300 und/oder das zumindest eine Ausbrechaggregat 400 und/oder das zumindest eine Nutzentrennaggregat 500, jeweils zumindest einen zweiten Verteiler 1051, bevorzugt jeweils zumindest einen zweiten Verteiler 1051 auf der Antriebsseite und zumindest einen zweiten Verteiler 1051 auf der Bedienerseite der Bearbeitungsmaschine 01. Bevorzugt ist der zumindest eine zweite Verteiler 1051 als Progressivverteiler 1051 ausgebildet. Vorzugsweise ist der zumindest eine zweite Verteiler 1051 zwischen der zumindest einen Hauptleitung 1047; 1048 und den zumindest zwei Leitungen innerhalb eines Aggregates 200; 300; 400; 500, insbesondere dem zumindest einen Anlageaggregat 200 und/oder dem zumindest einen Formgebungsaggregat 300 und/oder dem zumindest einen Ausbrechaggregat 400 und/oder dem zumindest einen Nutzentrennaggregat 500, angeordnet. Vorzugsweise ist der zumindest eine zweite Verteiler 1051 Schmiermittel bevorzugt progressiv und/oder fortlaufend an die zumindest eine Schmierstelle, bevorzugt an zumindest zwei Schmierstellen, innerhalb des jeweiligen Aggregates 200; 300; 400; 500, insbesondere des zumindest einen Anlageaggregats 200 und/oder des zumindest einen Formgebungsaggregats 300 und/oder des zumindest einen Ausbrechaggregats 400 und/oder des zumindest einen Nutzentrennaggregats 500, verteilend und/oder dosierend ausgebildet. Vorzugsweise ist der zumindest eine zweite Verteiler 1051 Schmiermittel entsprechend des Bedarfs an die zumindest eine Schmierstelle innerhalb des jeweiligen Aggregates 200; 300; 400; 500 verteilend und/oder dosierend ausgebildet. Vorzugsweise zusätzlich zu dem zumindest einen Anlageaggregat 200 und dem zumindest einen Formgebungsaggregat 300 und dem zumindest einen Ausbrechaggregat 400 und dem zumindest einen Nutzentrennaggregat 500 umfasst die Stanzmaschine 01 das zumindest eine als Anlegeraggregat 100 ausgebildete Aggregat 100 und/oder das zumindest eine als Auslageaggregat 600 ausgebildete Aggregat 600 und/oder zumindest ein gemeinsames Aggregat 650, welches das zumindest eine Nutzentrennaggregat 500 und das zumindest eine Auslageaggregat 600 umfasst, und/oder das zumindest eine als Bogeneinlageaggregat 700 ausgebildete Aggregat 700 und/oder das zumindest eine als Reststückauslageaggregat 800 ausgebildete Aggregat 800 und/oder zumindest ein gemeinsames Aggregat 900, welches das zumindest eine Bogeneinlageaggregat 700 und das zumindest eine Reststückauslageaggregat 800 umfasst. Bevorzugt ist das zumindest eine Schmiermittelsystem zusätzlich zu den zumindest zwei Aggregaten 200; 300; 400; 500 Schmiermittel zu zumindest einem der als Anlegeraggregat 100 und/oder als Auslageaggregat 600 und/oder als zumindest ein gemeinsames Aggregat 650; 900 und/oder als Bogeneinlageaggregat 700 und/oder als Reststückauslageaggregat 800 ausgebildeten Aggregate 100; 600; 650; 700; 800; 900 führend ausgebildet. Insbesondere ist das zumindest eine Schmiermittelsystem Schmiermittel zu zumindest einer Schmierstelle des Anlegeraggregats 100 und/oder des Auslageaggregats 600 und/oder des Bogeneinlageaggregats 700 und/oder des Reststückauslageaggregats 800 und/oder des zumindest einen gemeinsamen Aggregats 650; 900 führend ausgebildet.
Die Stanzmaschine 01 umfasst bevorzugt das zumindest eine Halteelement 1202 des zumindest einen Transportsystems 1200, welches bevorzugt Bogen 02 mindestens durch das zumindest eine Formgebungsaggregat 300 und/oder das zumindest eine Ausbrechaggregat 400 und/oder das zumindest eine Nutzentrennaggregat 500 führend und/oder transportierend ausgebildet ist. Bevorzugt ist das zumindest eine Schmiermittelsystem zusätzlich zu den zumindest zwei Aggregaten 200; 300; 400; 500 Schmiermittel zu der zumindest einen Führungseinrichtung 1203 des zumindest einen Halteelements 1202 und/oder zu zumindest einem Klemmelement der zumindest einen Führungseinrichtung 1203 des zumindest einen Halteelements 1202 und/oder zu zumindest einem Öffnungselement des zumindest einen Halteelements 1202 und/oder zu zumindest einem Stützelement des zumindest einen Halteelements 1202 und/oder zu dem zumindest einen Zahnrad der zumindest einen Kettengreiferantriebswelle 1017 führend ausgebildet.

Bevorzugt ist das zumindest eine Anlageaggregat 200 Bogen 02 an das zumindest eine Formgebungsaggregat 300 übergebend ausgebildet. Bevorzugt ist das zumindest eine Schmiermittelsystem Schmiermittel zu der zumindest einen Geradführung und/oder Linearführung des zumindest einen Transportmittels 204 des zumindest einen Zuführsystems 202 des zumindest einen Anlageaggregats 200 führend ausgebildet und/oder ist die zumindest eine Geradführung und/oder Linearführung mit Schmiermittel schmierend ausgebildet. Bevorzugt ist das zumindest eine Schmiermittelsystem zumindest eine Lagerung der zumindest einen Greiferwelle 221 des zumindest einen Zuführsystems 202 schmierend ausgebildet.

Bevorzugt weist das zumindest eine Formgebungswerk 301 des Formgebungsaggregats 300 zumindest ein Spannelement auf. Bevorzugt ist das zumindest eine Schmiermittelsystem Schmiermittel zu dem zumindest einen Spannelement des zumindest einen Formgebungswerks 301 führend ausgebildet und/oder ist das zumindest eine Spannelement mit Schmiermittel schmierend ausgebildet. Bevorzugt ist die zumindest eine Hauptantriebswelle 1006 und/oder die zumindest eine Stanzantriebswelle 1016 vorzugsweise unabhängig von dem zumindest einen Schmiermittelsystem mit Schmiermittel, insbesondere Schmieröl beaufschlagt. Bevorzugt ist die zumindest eine Hauptantriebswelle 1006 und/oder die zumindest eine Stanzantriebswelle 1016 innerhalb eines Ölbades angeordnet.

Bevorzugt umfasst das zumindest eine Formgebungsaggregat 300 zumindest eine Registereinheit. Bevorzugt zusätzlich oder alternativ umfasst das zumindest eine Ausbrechaggregat 400 zumindest eine Registereinheit. Bevorzugt zusätzlich oder alternativ umfasst das zumindest eine Anlageaggregat 200 zumindest eine Registereinheit. Bevorzugt ist die zumindest eine Registereinheit jeweils zumindest einen Greiferwagen 1201 jeweils in einer Position zumindest zeitweise fixierend ausgebildet. Vorzugsweise weist die Bearbeitungsmaschine 01 zumindest eine Registereinheit in Transportrichtung T zu Beginn des zumindest einen Formgebungsaggregats 300 und/oder zumindest eine Registereinheit in Transportrichtung T am Ende des zumindest einen Formgebungsaggregats 300 und/oder zumindest eine Registereinheit in Transportrichtung T am Ende des zumindest einen Ausbrechaggregats 400 auf. Das zumindest eine Schmiermittelsystem ist bevorzugt die zumindest eine jeweilige Registereinheit, insbesondere jede jeweilige Registereinheit, mit Schmiermittel schmierend ausgebildet und/oder Schmiermittel zu der zumindest einen jeweiligen Registereinheit führend ausgebildet.

Vorzugsweise ist das zumindest eine Schmiermittelsystem Schmiermittel zu dem zumindest einen Bewegungswandler 1031; 1032, insbesondere zu dem zumindest einen Bewegungswandler 1031; 1032 des zumindest einen Ausbrechaggregats 400 und/oder des zumindest einen Nutzentrennaggregats 500, führend ausgebildet. Bevorzugt umfasst das zumindest eine Ausbrechaggregat 400 zumindest einen Bestandteil, insbesondere den zumindest einen Bewegungswandler 1031; 1032, des zumindest einen Antriebssystems 1000 und/oder es ist zumindest ein Bestandteil des Antriebssystems 1000 innerhalb des zumindest einen Ausbrechaggregats 400 angeordnet. Bevorzugt umfasst das zumindest eine Nutzentrennaggregat 500 zumindest einen Bestandteil, insbesondere den zumindest einen Bewegungswandler 1031, des zumindest einen Antriebssystems 1000 und/oder es ist zumindest ein Bestandteil des Antriebssystems 1000 innerhalb des zumindest einen Nutzentrennaggregats 500 angeordnet.

Bevorzugt ist eine Verbindung des zumindest einen Bewegungswandlers 1031; 1032 mit der zumindest einen Übertragungswelle 1033 als Schmierstelle ausgebildet. Vorzugsweise ist das zumindest eine Schmiermittelsystem Schmiermittel zu der zumindest einen Schmierstelle zwischen dem zumindest einen Bewegungswandler 1031; 1032 und der zumindest einen Übertragungswelle 1033 führend ausgebildet.

Bevorzugt weist das zumindest eine Übertragungselement 1026; 1027; 1028; 1029 zumindest eine bewegliche Verbindung zu dem zumindest einen jeweiligen Bewegungswandler 1031; 1032 auf, mit welchem das betreffende Übertragungselement 1026; 1027; 1028; 1029 bevorzugt in Kontakt steht und/oder verbunden ist. Vorzugsweise weist die zumindest eine bewegliche Verbindung, insbesondere die bewegliche Verbindung des zumindest einen Übertragungselements 1026; 1027; 1028; 1029 zu dem jeweiligen mit ihm in Kontakt stehenden und/oder verbundenen Bewegungswandler 1031; 1032, eine geschlossene Bauform auf, welche jeweils zumindest ein dauerhaft verschlossenes Lager umfasst. Das zumindest eine insbesondere dauerhaft verschlossene Lager ist bevorzugt dauerhaft, insbesondere unabhängig von dem zumindest einen zentralen Schmiermittelsystem und/oder ohne zusätzliche Schmierung während des Betriebs der Bearbeitungsmaschine 01, mit Schmiermittel geschmiert ausgebildet.

Bevorzugt ist das zumindest eine Schmiermittelsystem Schmiermittel zu zumindest einer Verbindung, welche bevorzugt als Schmierstelle ausgebildet ist, der zumindest einen Übertragungswelle 1033 und der zumindest einen der jeweiligen Übertragungswelle 1033 zugeordneten Pleuelstange 1034 führend ausgebildet. Vorzugsweise umfasst das zumindest eine Ausbrechaggregat 400 und/oder das zumindest eine Nutzentrennaggregat 500 jeweils die zumindest eine Übertragungswelle 1033 und jeweils die zumindest eine der jeweiligen Übertragungswelle 1033 zugeordnete Pleuelstange 1034.

Das zumindest eine Getriebe 1007, bevorzugt das zumindest eine Antriebsgetriebe 1007, ist innerhalb des zumindest einen Gehäuses 1014 angeordnet. Das zumindest eine Schmiermittelsystem ist Schmiermittel lediglich zu der zumindest einen Schmierstelle innerhalb des jeweiligen Aggregats 200; 300; 400; 500 außerhalb des zumindest einen Gehäuses 1014 des zumindest einen Getriebes 1007, bevorzugt des Antriebsgetriebes 1007, führend ausgebildet. Bevorzugt weist das zumindest eine Gehäuse 1014 Schmieröl und/oder ein Ölbad auf. Vorzugsweise sind Schmierstellen innerhalb des zumindest einen Gehäuses 1014 durch ein von dem zumindest einen zentralen Schmiermittelsystem verschiedenen System, insbesondere unabhängig von dem zumindest einen zentralen Schmiermittelsystem, mit Schmiermittel geschmiert ausgebildet.

### Bezugszeichenliste

- 01: Bearbeitungsmaschine, Bogenbearbeitungsmaschine, Stanzmaschine, Flachbettstanzmaschine
- 02: Substrat, Bogen
- 03: Nutzen
- 04: Reststück, erstes, Abfallstück
- 05: Reststück, Steg
- 06: Reststück, zweites, Greiferkante
- 07: Kante, Vorderkante
- 08: Kante, Hinterkante
- 09: Kante, Seitenkante
- 10: ―
- 11: Druckmarke

- 100: Aggregat, Anlegeraggregat, Anleger, Bogenanleger, Bogenanlegeraggregat
- 101: Anlegerstapel
- 102: Saugeinrichtung, Trenneinrichtung
- 103: Transportmittel, Saugelement, vertikal (100)
- 104: Transportmittel, Transportelement, Saugelement, horizontal (100)
- 105: -
- 106: -
- 107: Anlegertisch
- 108: Transportmittel, Transportband, Saugtransportband (100)
- 109: Antriebswalze (108)
- 110: -
- 111: Antrieb (108)
- 112: Transportwalze
- 113: Element, taktgebend; Taktrolle
- 200: Aggregat, Anlageaggregat
- 201: -
- 202: Zuführsystem
- 203: Anschlag, Vordermarke
- 204: Transportmittel, Übergabemittel, Haltemittel, Greifer (202)
- 205: -
- 206: Halterung, Übergabeelement, obere
- 207: Halterung, Übergabeelement, untere
- 208: Rollenhebel (203)
- 209: Profilkurve (203)
- 210: -
- 211: -
- 212: Kurvenscheibe
- 213: Abtastelement (214)
- 214: Antriebshebel
- 215: -
- 216: Koppel
- 217: Schwenkhebel
- 218: Stellantrieb
- 219: Verbindungspunkt
- 220: -
- 221: Welle, Greiferwelle, Schwenkachse (204)
- 222: Koppel
- 223: Öffnungselement, Kurvenscheibe
- 224: Abtastelement (226)
- 225: -
- 226: Abtasthebel
- 227: Übertragungswelle
- 228: Verstellwelle
- 229: Übertragungshebel
- 230: -
- 231: Stellantrieb (204)
- 232: Verstellhebel
- 233: Haltefläche, obere (206)
- 234: Haltefläche, untere (207)
- 235: -
- 236: Verbindungshebel
- 237: Stellantrieb der seitlichen Ausrichtung
- 238: Zieheinrichtung

- 251: Sensoreinrichtung
- 252: Sensor, Kamera
- 253: Erfassungsbereich (252)

- 261: Sensor, Erfassungssensor, Reflextaster
- 262: Erfassungsbereich (261)

- 272: Seitenanschlag
- 273: Saugplatte

- 300: Aggregat, Formgebungsaggregat, Stanzaggregat, Rillaggregat, Schneidaggregat, Stanze, Flachbettstanzaggregat, Flachbettstanze
- 301: Formgebungswerk, Stanzwerk, Flachbettstanzwerk

- 400: Aggregat, Ausbrechaggregat
- 401: Ausbrechwerk
- 402: Werkzeug, Ausbrechwerkzeug, oberes
- 403: Werkzeug, Ausbrechwerkzeug, unteres

- 500: Aggregat, Nutzentrennaggregat
- 501: Nutzentrennwerk
- 502: Werkzeug, Nutzentrennwerkzeug, oberes

- 600: Aggregat, Auslageaggregat, Auslage

- 650: Aggregat, gemeinsam (500; 600)

- 700: Aggregat, Bogeneinlageaggregat
- 701: Bogenablageeinrichtung
- 702: Bogenkassette, Zwischenbogenkassette

- 800: Aggregat, Reststückauslageaggregat

- 900: Aggregat, gemeinsam (700; 800)

- 1000: System, Antriebssystem
- 1001: Antrieb
- 1002: Antriebswelle, Anlageantriebswelle, Eintourenwelle (200)
- 1003: Zugmittel, Riemen, Kette
- 1004: Getriebe, Zugmittelgetriebe
- 1005: -
- 1006: Antriebswelle, Hauptantriebswelle
- 1007: Getriebe, Antriebsgetriebe
- 1008: -
- 1009: Stirnrad, Stanzstirnrad
- 1010: -
- 1011: Stirnrad, Übertragungsstirnrad
- 1012: Stirnrad, Anlagestirnrad
- 1013: Stirnrad, Kettengreiferstirnrad
- 1014: Gehäuse
- 1015: -
- 1016: Antriebswelle, Stanzantriebswelle
- 1017: Antriebswelle, Kettengreiferantriebswelle
- 1018: -
- 1019: Getriebe, Kurvenscheibengetriebe, nachgelagertes
- 1020: -
- 1021: Stirnrad, Ausbrechstirnrad
- 1022: Antriebswelle, Ausbrechantriebswelle
- 1023: Kurvenscheibe (1022)
- 1024: Abtasthebel, Rollenhebel (1023)
- 1025: -
- 1026: Übertragungselement, vertikal, oberes
- 1027: Übertragungselement, vertikal, unteres
- 1028: Übertragungselement, horizontal, oberes
- 1029: Übertragungselement, horizontal, unteres
- 1030: -
- 1031: Bewegungswandler, Gelenk, oberer
- 1032: Bewegungswandler, Gelenk, unterer
- 1033: Übertragungswelle
- 1034: Pleuelstange
- 1035: -
- 1036: Spannelement, Feder
- 1037: Führungselement, Linearführungselement
- 1038: -
- 1039: -
- 1040: -
- 1041: Kurvenscheibe (1016)
- 1042: Abgriffglied (1041)
- 1043: Verbindungselement
- 1044: Hubvorrichtung, Kettenheber
- 1045: -
- 1046: Pumpe
- 1047: Hauptleitung, erste
- 1048: Hauptleitung, zweite
- 1049: Verteiler, Progressivverteiler, erster
- 1050: -
- 1051: Verteiler, Progressivverteiler, zweiter

- 1100: System, Steuerungssystem

- 1200: System, Transportsystem, Kettentransportsystem, Kettengreifersystem
- 1201: Wagen, Greiferwagen, Kettengreiferwagen, Transportmittel
- 1202: Halteelement, Greifer
- 1203: Führungseinrichtung, Kette

- A: Richtung, Querrichtung, horizontal
- D: Rotationsachse (1002; 212; 223)
- E: Rotationsachse (228)
- S: Lagerpunkt, Schwenkpunkt, Schwenkachse (214)
- T: Richtung, Transportrichtung, horizontal
- U: Rotationsachse (227)
- V: Richtung, vertikal

- PA: Ausrichtposition
- PU: Übergabeposition

- L02: Abstand, Bogenlücke
- L213: Abstand (213 zu D)
- L262: Abstand (262 zu PA)

## Patentansprüche

1. Stanzmaschine (01) umfassend zumindest ein als Anlageaggregat (200) ausgebildetes Aggregat (200) und zumindest ein als Formgebungsaggregat (300) ausgebildetes Aggregat (300) und zumindest ein als Ausbrechaggregat (400) ausgebildetes Aggregat (400) und zumindest ein als Nutzentrennaggregat (500) ausgebildetes Aggregat (500), wobei die Stanzmaschine (01) zumindest ein Antriebssystem (1000) mit zumindest einem Antrieb (1001) aufweist, wobei der zumindest eine Antrieb (1001) zumindest ein Formgebungswerkzeug zumindest eines Formgebungswerks (301) des zumindest einen Formgebungsaggregats (300) antreibend ausgebildet ist, wobei der zumindest eine Antrieb (1001) über zumindest ein Getriebe (1007) zumindest ein Ausbrechwerkzeug (402; 403) zumindest eines Ausbrechwerks (401) des zumindest einen Ausbrechaggregats (400) und/oder zumindest ein Nutzentrennwerkzeug (502) zumindest eines Nutzentrennwerks (501) des zumindest einen Nutzentrennaggregats (500) antreibend ausgebildet ist, wobei das zumindest eine Getriebe (1007) innerhalb zumindest eines Gehäuses (1014) angeordnet ist, **dadurch gekennzeichnet, dass** die Stanzmaschine (01) zumindest ein zentrales Schmiermittelsystem aufweist, dass das zumindest eine Schmiermittelsystem zumindest ein Schmiermittel von zumindest einer Quelle von Schmiermittel und/oder von zumindest einem Vorrat an Schmiermittel zu zumindest zwei Aggregaten (200; 300; 400; 500) der Aggregate (200; 300; 400; 500) führend ausgebildet ist, dass innerhalb des jeweiligen Aggregats (200; 300; 400; 500) das zumindest eine Schmiermittelsystem Schmiermittel zu zumindest einer Schmierstelle führend ausgebildet ist, dass das zumindest eine Schmiermittelsystem Schmiermittel lediglich zu der zumindest einen Schmierstelle innerhalb des jeweiligen Aggregats (200; 300; 400; 500) außerhalb des zumindest einen Gehäuses (1014) des zumindest einen Getriebes (1007) führend ausgebildet ist.

2. Stanzmaschine nach Anspruch 1, **dadurch gekennzeichnet, dass** das zumindest eine Schmiermittelsystem zumindest einen als ersten Verteiler (1049) ausgebildeten Verteiler (1049) umfasst, welcher Schmiermittel an die zumindest zwei Aggregate (200; 300; 400; 500) verteilend und/oder dosierend ausgebildet ist, und/oder dass das zumindest eine Schmiermittelsystem zumindest einen als zweiten Verteiler (1051) ausgebildeten Verteiler (1051) umfasst, welcher Schmiermittel innerhalb des jeweiligen Aggregats (200; 300; 400; 500) verteilend und/oder dosierend ausgebildet ist.

3. Stanzmaschine nach Anspruch 1 oder 2, **dadurch gekennzeichnet, dass** innerhalb des jeweiligen Aggregats (200; 300; 400; 500) das zumindest eine Schmiermittelsystem zumindest zwei Leitungen umfasst, dass die zumindest zwei Leitungen Schmiermittel innerhalb des jeweiligen Aggregats (200; 300; 400; 500) jeweils zu der zumindest einen Schmierstelle führend ausgebildet sind.

4. Stanzmaschine nach Anspruch 1 oder 2 oder 3, **dadurch gekennzeichnet, dass** die Stanzmaschine (01) zumindest ein Halteelement (1202) zumindest eines Transportsystems (1200) umfasst, dass das zumindest eine Schmiermittelsystem zusätzlich zu den zumindest zwei Aggregaten (200; 300; 400; 500) Schmiermittel zu zumindest einer Führungseinrichtung (1203) des zumindest einen Halteelements (1202) und/oder zu zumindest einem Klemmelement der zumindest einen Führungseinrichtung (1203) des zumindest einen Halteelements (1202) und/oder zu zumindest einem Öffnungselement des zumindest einen Halteelements (1202) und/oder zu zumindest einem Stützelement des zumindest einen Halteelements (1202) und/oder zu zumindest einem Zahnrad zumindest einer Kettengreiferantriebswelle (1017) führend ausgebildet ist.

5. Stanzmaschine nach Anspruch 1 oder 2 oder 3 oder 4, **dadurch gekennzeichnet, dass** das zumindest eine Formgebungsaggregat (300) zumindest eine Registereinheit umfasst und/oder dass das zumindest eine Ausbrechaggregat (400) zumindest eine Registereinheit umfasst und/oder dass das zumindest eine Anlageaggregat (200) zumindest eine Registereinheit umfasst, dass das zumindest eine Schmiermittelsystem die zumindest eine jeweilige Registereinheit mit Schmiermittel schmierend ausgebildet ist und/oder Schmiermittel zu der zumindest einen jeweiligen Registereinheit führend ausgebildet ist.

6. Stanzmaschine nach Anspruch 1 oder 2 oder 3 oder 4 oder 5, **dadurch gekennzeichnet, dass** das zumindest eine Ausbrechaggregat (400) zumindest einen Bewegungswandler (1031; 1032) umfasst und/oder dass das zumindest eine Nutzentrennaggregat (500) zumindest einen Bewegungswandler (1031; 1032) umfasst, dass das zumindest eine Schmiermittelsystem Schmiermittel zu dem zumindest einen Bewegungswandler (1031; 1032) führend ausgebildet ist.

7. Stanzmaschine nach Anspruch 6, **dadurch gekennzeichnet, dass** der zumindest eine Bewegungswandler (1031; 1032) zumindest eine wechselseitige Bewegung zumindest eines Übertragungselements (1026; 1027; 1028; 1029) in zumindest eine rotative Bewegung zumindest einer Übertragungswelle (1033) umwandelnd ausgebildet ist.

8. Stanzmaschine nach Anspruch 7, **dadurch gekennzeichnet, dass** der zumindest eine Bewegungswandler (1031; 1032) über das zumindest eine Übertragungselement (1026; 1027; 1028; 1029) mit dem zumindest einen Antrieb (1001) gekoppelt ist und/oder dass der zumindest eine Bewegungswandler (1031; 1032) jeweils über die zumindest eine Übertragungswelle (1033) mit dem zumindest einen Ausbrechwerkzeug (402) gekoppelt ist und/oder dass der zumindest eine Bewegungswandler (1031) jeweils über die zumindest eine Übertragungswelle (1033) mit dem zumindest einen Nutzentrennwerkzeug (502) gekoppelt ist.

9. Stanzmaschine nach Anspruch 7 oder 8, **dadurch gekennzeichnet, dass** das zumindest eine Übertragungselement (1026; 1027; 1028; 1029) zumindest eine bewegliche Verbindung zu dem zumindest einen jeweiligen Bewegungswandler (1031; 1032) aufweist, dass die zumindest eine bewegliche Verbindung eine geschlossene Bauform aufweist, welche jeweils zumindest ein dauerhaft verschlossenes Lager umfasst.

10. Stanzmaschine nach Anspruch 7 oder 8 oder 9, **dadurch gekennzeichnet, dass** eine Verbindung des zumindest einen Bewegungswandlers (1031; 1032) mit der zumindest einen Übertragungswelle (1033) als Schmierstelle ausgebildet ist, dass das zumindest eine Schmiermittelsystem Schmiermittel zu der zumindest einen Schmierstelle zwischen dem zumindest einen Bewegungswandler (1031; 1032) und der zumindest einen Übertragungswelle (1033) führend ausgebildet ist.

11. Stanzmaschine nach Anspruch 1 oder 2 oder 3 oder 4 oder 5 oder 6 oder 7 oder 8 oder 9 oder 10, **dadurch gekennzeichnet, dass** die Stanzmaschine (01) als Flachbettstanzmaschine (01) ausgebildet ist und/oder dass das Schmiermittel Schmieröl oder Schmierfett aufweist.

12. Stanzmaschine nach Anspruch 1 oder 2 oder 3 oder 4 oder 5 oder 6 oder 7 oder 8 oder 9 oder 10 oder 11, **dadurch gekennzeichnet, dass** das zumindest eine Gehäuse (1014) an einer Antriebsseite der Stanzmaschine (01) an dem zumindest einen Formgebungsaggregat (300) angeordnet ist.

13. Stanzmaschine nach Anspruch 1 oder 2 oder 3 oder 4 oder 5 oder 6 oder 7 oder 8 oder 9 oder 10 oder 11 oder 12, **dadurch gekennzeichnet, dass** die Stanzmaschine (01) zumindest ein als Anlegeraggregat (100) ausgebildetes Aggregat (100) und/oder zumindest ein als Auslageaggregat (600) ausgebildetes Aggregat (600) und/oder zumindest ein gemeinsames Aggregat (650), welches das zumindest eine Nutzentrennaggregat (500) und das zumindest eine Auslageaggregat (600) umfasst, und/oder zumindest ein als Bogeneinlageaggregat (700) ausgebildetes Aggregat (700) und/oder zumindest ein als Reststückauslageaggregat (800) ausgebildetes Aggregat (800) und/oder zumindest ein gemeinsames Aggregat (900), welches das zumindest eine Bogeneinlageaggregat (700) und das zumindest eine Reststückauslageaggregat (800) umfasst, umfasst, dass das zumindest eine Schmiermittelsystem zusätzlich zu den zumindest zwei Aggregaten (200; 300; 400; 500) Schmiermittel zu zumindest einem der als Anlegeraggregat (100) und/oder als Auslageaggregat (600) und/oder als zumindest ein gemeinsames Aggregat (650; 900) und/oder als Bogeneinlageaggregat (700) und/oder als Reststückauslageaggregat (800) ausgebildeten Aggregate (100; 600; 650; 700; 800; 900) führend ausgebildet ist.

## Claims

1. A die-cutting machine (01) comprising at least one unit (200) designed as a contact unit (200) and at least one unit (300) designed as a shaping unit (300) and at least one unit (400) designed as a stripping unit (400) and at least one unit (500) designed as a blanking unit (500), wherein the die-cutting machine (01) has at least one drive system (1000) with at least one drive (1001), wherein the at least one drive (1001) is designed to drive at least one shaping tool of at least one shaping unit (301) of the at least one shaping unit (300), wherein the at least one drive (1001) is designed to drive at least one stripping tool (402; 403) of at least one stripping unit (401) of the at least one stripping unit (400) and/or at least one blanking tool (502) of at least one blanking unit (501) of the at least one blanking unit (500) via at least one transmission (1007), wherein the at least one transmission (1007) is arranged within at least one housing (1014), **characterized in that** the die-cutting machine (01) has at least one central lubricating system, **in that** the at least one lubricating system is designed to guide at least one lubricant of at least one source of a lubricant and/or of a supply of lubricant for at least two units (200; 300; 400; 500) of the units (200; 300; 400; 500), that within the respective unit (200; 300; 400; 500) the at least one lubricant system is designed to guide lubricant to at least one lubrication point, **in that** the at least one lubricant system is designed to guide lubricant only to the at least one lubrication point within the respective unit (200; 300; 400; 500) outside of the at least one housing (1014) of the at least one transmission (1007).

2. The die-cutting machine according to claim 1, **characterized in that** the at least one lubricant system comprises at least one distributor (1049) designed as a first distributor (1049), which is designed to distribute and/or dispense lubricant to the at least two units (200; 300; 400; 500), and/or **in that** the at least one lubricant system comprises at least one distributor (1051) designed as a second distributor (1051), which is designed to distribute and/or dispense lubricant within the respective aggregate (200; 300; 400; 500).

3. The die-cutting machine according to claim 1 or 2, **characterized in that** within the respective unit (200; 300; 400; 500) the at least one lubricant system comprises at least two lines, **in that** the at least two lines are designed to guide lubricant within the respective unit (200; 300; 400; 500) in each case to the at least one lubrication point.

4. The die-cutting machine according to claim 1 or 2 or 3, **characterized in that** the die-cutting machine (01) comprises at least one holding element (1202) of at least one transport system (1200), **in that**, in addition to guide lubricant to the at least two units (200; 300; 400; 500), the at least one lubricant system is designed to guide lubricant to at least one guiding device (1203) of the at least one holding element (1202) and/or to at least one clamping element of the at least one guiding device (1203) of the at least one holding element (1202) and/or to at least one opening element of the at least one holding element (1202) and/or to at least one support element of the at least one holding element (1202) and/or to at least one gear wheel of at least one gripper carriage drive shaft (1017) .

5. The die-cutting machine according to claim 1 or 2 or 3 or 4, **characterized in that** at least one shaping unit (300) comprises at least one register unit and/or **in that** the at least one stripping unit (400) comprises at least one register unit and/or **in that** the at least one contact unit (200) comprises at least one register unit, that the at least one lubricant system is designed to lubricate the at least one respective register unit with lubricant and/or is designed to guide lubricant to the at least one respective register unit.

6. The die-cutting machine according to claim 1 or 2 or 3 or 4 or 5, **characterized in that** the at least one stripping unit (400) comprises at least one movement converter (1031; 1032) and/or **in that** the at least one blanking unit (500) comprises at least one movement converter (1031; 1032), **in that** the at least one lubricant system is designed to guide lubricant to the at least one movement converter (1031; 1032).

7. The die-cutting device according to claim 6, **characterized in that** the at least one movement converter (1031; 1032) is designed to convert at least one reciprocal movement of at least one transmission element (1026; 1027; 1028; 1029) into at least one rotative movement of at least one transmission shaft (1033).

8. The die-cutting device according to claim 7, **characterized in that** the at least one movement converter (1031; 1032) is coupled to the at least one drive (1001) via the at least one transmission element (1026; 1027; 1028; 1029) and/or that the at least one movement converter (1031; 1032) is coupled to the at least one stripping tool (402) in each case via the at least one transmission shaft (1033) and/or **in that** the at least one movement converter (1031) is coupled in each case to the at least one blanking tool (502) via the at least one transmission shaft (1033).

9. The die-cutting machine according to claim 7 or 8, **characterized in that** the at least one transmission element (1026; 1027; 1028; 1029) has at least one movable connection to the at least one respective movement converter (1031; 1032), that the at least one movable connection has a closed design, which comprises at least one permanently closed bearing.

10. The die-cutting machine according to claim 7 or 8 or 9, **characterized in that** a connection of the at least one movement converter (1031; 1032) is designed with the at least one transmission shaft (1033) as a lubrication point, **in that** the at least one lubricant system is designed to guide lubricant to the at least one lubrication point between the at least one movement converter (1031; 1032) and the at least one transmission shaft (1033).

11. The die-cutting machine according to claim 1 or 2 or 3 or 4 or 5 or 6 or 7 or 8 or 9 or 10, **characterized in that** the die-cutting machine (01) is configured as a flat-bed die-cutting machine (01) and/or that the lubricant has lubricating oil or lubricating grease.

12. The die-cutting machine according to claim 1 or 2 or 3 or 4 or 5 or 6 or 7 or 8 or 9 or 10 or 11, **characterized in that** the at least one housing (1014) is arranged at a drive side of the die-cutting machine (01) at the at least one shaping unit (300) .

13. The die-cutting machine according to claim 1 or 2 or 3 or 4 or 5 or 6 or 7 or 8 or 9 or 10 or 11 or 12, **characterized in that** the die-cutting machine (01) comprises at least one unit (100) designed as a feeder unit (100) and/or at least one unit (600) designed as a delivery unit (600) and/or at least one common unit (650), which comprises the at least one blanking unit (500) and the at least one delivery unit (600), and/or at least one unit (700) configured as a sheet insert unit (700) and/or at least one unit (800) designed as a remnant delivery unit (800), and/or at least one common unit (900), which comprises the at least one sheet insert unit (700) and the at least one remnant delivery unit (800), **in that**, in addition to guide lubricant to at least two units (200; 300; 400; 500), the at least one lubricant system guides lubricant to at least one of the units (100; 600; 650; 700; 800; 900) designed as a feeder unit (100) and/or as a delivery unit (600) and/or at least one common unit (650; 900) and/or as a sheet insert unit (700) and/or as a remnant delivery (800).

## Revendications

1. Machine de découpage (01) comprenant au moins un groupe (200) réalisé sous la forme d'un groupe de contact (200) et au moins un groupe (300) réalisé sous la forme d'un groupe de façonnage (300) et au moins un groupe (400) réalisé sous la forme d'un groupe de détachement (400) et au moins un groupe (500) réalisé sous la forme d'un groupe de séparation de flanc (500), dans laquelle la machine de découpage (01) présente au moins un système d'entraînement (1000) avec au moins un entraînement (1001), dans laquelle le au moins un entraînement (1001) est réalisé de manière à entraîner au moins un outil de façonnage d'au moins un mécanisme de façonnage (301) du au moins un groupe de façonnage (300), dans laquelle le au moins un entraînement (1001) est réalisé de manière à entraîner, par l'intermédiaire d'au moins une transmission (1007), au moins un outil de détachement (402 ; 403) d'au moins un mécanisme de détachement (401) du au moins un groupe de détachement (400) et/ou au moins un outil de séparation de flanc (502) d'au moins un mécanisme de séparation de flanc (501) du au moins un groupe de séparation de flanc (500), dans laquelle la au moins une transmission (1007) est disposée à l'intérieur d'au moins un carter (1014), **caractérisée en ce que** la machine de découpage (01) présente au moins un système de lubrifiant central, que le au moins un système de lubrifiant central est réalisé de manière à guider au moins un lubrifiant à partir d'au moins une source de lubrifiant et/ou à partir d'au moins une réserve de lubrifiant vers au moins deux groupes (200 ; 300 ; 400 ; 500) des groupes (200 ; 300 ; 400 ; 500), qu'à l'intérieur du groupe (200 ; 300 ; 400 ; 500) respectif le au moins un système de lubrifiant est réalisé de manière à guider le lubrifiant vers au moins un point de lubrification, que le au moins un système de lubrifiant est réalisé de manière à guider le lubrifiant uniquement vers le au moins un point de lubrification à l'intérieur du groupe (200 ; 300 ; 400 ; 500) respectif à l'extérieur du au moins un carter (1014) de la au moins une transmission (1007).

2. Machine de découpage selon la revendication 1, **caractérisée en ce que** le au moins un système de lubrifiant comprend au moins un répartiteur (1049) réalisé sous la forme d'un premier répartiteur (1049), lequel est réalisé de manière à répartir et/ou doser le lubrifiant sur les au moins deux groupes (200 ; 300 ; 400 ; 500), et/ou que le au moins un système de lubrifiant comprend au moins un répartiteur (1051) réalisé sous la forme d'un deuxième répartiteur (1051), lequel lubrifiant est réalisé de manière à répartir et/ou doser le lubrifiant à l'intérieur du groupe (200 ; 300 ; 400 ; 500) respectif.

3. Machine de découpage selon la revendication 1 ou 2, **caractérisée en ce qu'**à l'intérieur du groupe (200 ; 300 ; 400 ; 500) respectif, le au moins un système de lubrifiant comprend au moins deux conduites, que les au moins deux conduites sont réalisées de manière à guider le lubrifiant à l'intérieur du groupe (200 ; 300 ; 400 ; 500) respectif respectivement vers le au moins un point de lubrification.

4. Machine de découpage selon la revendication 1 ou 2 ou 3, **caractérisée en ce que** la machine de découpage (01) comprend au moins un élément de retenue (1202) d'au moins un système de transport (1200), que le au moins un système de lubrifiant est réalisé de manière à guider le lubrifiant, outre vers les au moins deux groupes (200 ; 300 ; 400 ; 500), vers au moins un système de guidage (1203) du au moins un élément de retenue (1202) et/ou vers au moins un élément de serrage du au moins un dispositif de guidage (1203) du au moins un élément de retenue (1202) et/ou vers au moins un élément d'ouverture du au moins un élément de retenue (1202) et/ou vers au moins un élément d'appui du au moins un élément de retenue (1202) et/ou vers au moins une roue dentée d'au moins un arbre d'entraînement de dispositif de préhension à chaînes (1017).

5. Machine de découpage selon la revendication 1 ou 2 ou 3 ou 4, **caractérisée en ce que** le au moins un groupe de façonnage (300) comprend au moins une unité à registre, et/ou que le au moins un groupe d'enlèvement (400) comprend au moins une unité à registre et/ou que le au moins un groupe d'application (200) comprend au moins une unité à registre, que le au moins un système de lubrifiant est réalisé de manière à lubrifier la au moins une unité à registre respective avec le lubrifiant et/ou est réalisé de manière à guider le lubrifiant vers la au moins une unité à registre respective.

6. Machine de découpage selon la revendication 1 ou 2 ou 3 ou 4 ou 5, **caractérisée en ce que** le au moins un groupe de détachement (400) comprend au moins un convertisseur de mouvement (1031 ; 1032) et/ou que le au moins un groupe de séparation de flanc (500) comprend au moins un convertisseur de mouvement (1031 ; 1032), que le au moins un système de lubrifiant est réalisé de manière à guider le lubrifiant vers le au moins un convertisseur de mouvement (1031 ; 1032).

7. Machine de découpage selon la revendication 6, **caractérisée en ce que** le au moins un convertisseur de mouvement (1031 ; 1032) est réalisé de manière à convertir au moins un mouvement alternatif d'au moins un élément de transmission (1026 ; 1027 ; 1028 ; 1029) en au moins un mouvement rotatif d'au moins un arbre de transmission (1033).

8. Machine de découpage selon la revendication 7, **caractérisée en ce que** le au moins un convertisseur de mouvement (1031 ; 1032) est accouplé au au moins un entraînement (1001) par l'intermédiaire du au moins un élément de transmission (1026 ; 1027 ; 1028 ; 1029) et/ou que le au moins un convertisseur de mouvement (1031 ; 1032) est accouplé au au moins un outil de détachement (402) respectivement par l'intermédiaire du au moins un arbre de transmission (1033) et/ou que le au moins un convertisseur de mouvement (1031) est accouplé au au moins un outil de séparation de flanc (502) respectivement par l'intermédiaire du au moins un arbre de transmission (1033).

9. Machine de découpage selon la revendication 7 ou 8, **caractérisée en ce que** le au moins un élément de transmission (1026 ; 1027 ; 1028 ; 1029) présente au moins une liaison mobile par rapport au au moins un convertisseur de mouvement (1031 ; 1032) respectif, que la au moins une liaison mobile présente une forme de construction fermée, laquelle comprend respectivement au moins un palier fermé de manière permanente.

10. Machine de découpage selon la revendication 7 ou 8 ou 9, **caractérisée en ce qu'**une liaison du au moins un convertisseur de mouvement (1031 ; 1032) au au moins un arbre de transmission (1033) est réalisée sous la forme d'un point de lubrification, que le au moins un système de lubrifiant est réalisé de manière à guider le lubrifiant vers le au moins un point de lubrification entre le au moins un convertisseur de mouvement (1031 ; 1032) et le au moins un arbre de transmission (1033).

11. Machine de découpage selon la revendication 1 ou 2 ou 3 ou 4 ou 5 ou 6 ou 7 ou 8 ou 9 ou 10, **caractérisée en ce que** la machine de découpage (01) est réalisée sous la forme d'une machine de découpage à plat (01) et/ou que le lubrifiant présente de l'huile lubrifiante ou de la graisse lubrifiante.

12. Machine de découpage selon la revendication 1 ou 2 ou 3 ou 4 ou 5 ou 6 ou 7 ou 8 ou 9 ou 10 ou 11, **caractérisée en ce que** le au moins un carter (1014) est disposé sur un côté d'entraînement de la machine de découpage (01) sur le au moins un groupe de façonnage (300).

13. Machine de découpage selon la revendication 1 ou 2 ou 3 ou 4 ou 5 ou 6 ou 7 ou 8 ou 9 ou 10 ou 11 ou 12, **caractérisée en ce que** la machine de découpage (01) comprend au moins un groupe (100) réalisé sous la forme d'un groupe d'application (100) et/ou au moins un groupe (600) réalisé sous la forme d'un groupe de sortie (600) et/ou au moins un groupe (650) commun, lequel comprend le au moins un groupe de séparation de flanc (500) et le au moins un groupe de sortie (600), et/ou au moins un groupe (700) réalisé sous la forme d'un groupe d'insertion de feuille (700) et/ou au moins un groupe (800) réalisé sous la forme d'un groupe de sortie de pièce restante (800) et/ou au moins un groupe (900) commun, lequel comprend le au moins un groupe d'insertion de feuille (700) et le au moins un groupe de sortie de pièce restante (800), que le au moins un système de lubrifiant est réalisé de manière à guider le lubrifiant, outre vers les au moins deux groupes (200 ; 300 ; 400 ; 500), vers au moins un des groupes (100 ; 600 ; 650 ; 700 ; 800 ; 900) réalisés sous la forme d'un groupe d'application (100) et/ou sous la forme d'un groupe de sortie (600) et/ou sous la forme d'au moins un groupe (650 ; 900) commun et/ou sous la forme d'un groupe d'insertion de feuille (700) et/ou sous la forme d'un groupe de sortie de pièce restante (800).
